# EUROPÄISCHE PATENTSCHRIFT

(11) **EP 1 033 371 B1**
(45) Veröffentlichungstag und Bekanntmachung des Hinweises auf die Patenterteilung: **28.01.2004**
(21) Anmeldenummer: 00103299.4
(22) Anmeldetag: 18.02.2000
(51) Int. Cl.: C07F 17/00, C08F 4/74, C08F 10/00, C08F 4/622, C08F 4/642

(54) **Übergangsmetallverbindung, Katalysatorsystem, Verfahren zu seiner Herstellung und seine Verwendung zur Polymerisation von Olefinen**
Transition metal compound, catalyst system, process for the preparation thereof and its use for the polymerization of olefins
Complexe de métaux de transition, système catalyseur, procédé de préparation et son utilisation pour la polymérisation de polyoléfines

(30) Priorität: 02.03.1999 DE 19908938
(43) Veröffentlichungstag der Anmeldung: 06.09.2000
(73) Patentinhaber: Basell Polyolefine GmbH, 50389 Wesseling (DE)
(72) Erfinder: Schottek, Jörg, Dr., 60486 Frankfurt (DE); Kratzer, Roland, Dr., 65830 Kriftel (DE); Erker Gerhard, Prof. Dr., 48159 Münster (DE); Dreier Thorsten, 48151 Münster (DE)
(74) Vertreter: Seelert, Stefan, Dr.

(56) Entgegenhaltungen:
- EP-A- 0 685 485
- EP-A- 0 685 495
- EP-A- 0 839 822
- WO-A-94/11406
- WO-A-96/20225
- DE-A- 4 125 135
- US-A- 4 874 880
- US-A- 5 594 080
- MÜLHAUPT R ET AL: "Novel Elastomers and Blends via Catalytic and Controlled Polymerization Processes" KAUTSCHUK GUMMI KUNSTSTOFFE, Nr. 4, April 1998 (1998-04), Seiten 286-293, XP002901027 51. Jahrgang
- KRAVCHENKO R L ET AL: "Ligand Effects in Propylene and Ethylene Polymerization with 2-Arylindene Zirconocene Catalysts" POLYMER PREPRINTS, Bd. 37, Nr. 2, August 1996 (1996-08), Seite 475 XP002901028
- HALTERMAN R L ET AL: "Electronic effects of bis(2-aryl-4,5,6,7-tetrahydroindenyl)tital acene dichlorides on the catalytic epoxidation of trans-3-hexene" J. OF ORGANOMETALLIC CHEM., Bd. 465, 1994, Seiten 175-179, XP002901029

## Beschreibung

Die vorliegende Erfindung betrifft Übergangsmetallverbindungen, Katalysatorsysteme, ein Verfahren zu ihrer Herstellung und ihre Verwendung in der Polymerisation von Olefinen.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Herstellung von Metallocenen ist an sich bekannt (US-A-4,752,597; US-A-5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium und Hafnium umgesetzt werden.

Kristallines, amorphes und elastisches Polypropylen sind bekannt. Kristallines Polypropylen besteht meistens aus einem dominierenden isotaktischen oder syndiontaktischen Anteil. Amorphes Polypropylen hingegen besitzt dominierend ataktische Strukturelemente. (US-A-3,112,300 und US-A-3,112,301). Die Herstellung von elastomerem Polyproplylen ist in US-A-3,175,199 beschrieben es, wird aus einem Polymergemisch aus isotaktischem und ataktischem Polypropylen gewonnen. Die elastomeren Eigenschaften dieses Polypropylens werden durch alternierende isotaktische und ataktische Stereoblocksequenzen hervorgerufen.

Metallocen Katalysatoren sind in der Lage je nach den geometrischen Gegebenheiten am Metallocen ataktisches, isotaktisches oder syndiotaktisches Polyproplylen zu liefern. Hierfür sind vor allem die beiden Stereoisomere (rac-Isomer und meso-Isomer), die bei der Synthese zumeist in gleichen Teilen entstehen verantwortlich. Die meso Form liefert ataktisches Polypropylen und ihre Polymerisationsaktivitäten sind meistens geringer als die der rac-Form, die isotaktisches oder je nach Substitutionsform auch syndiotaktisches Polypropylen liefert (J. Am. Chem. Soc. 1984, 106, 6355-6364).

Metallocene, die Polypropylen mit elastomeren Eigenschaften liefern werden von Chien et al (J. Polymer Science, Part A: Polymer Chemistry, **1992,** *30*, 2601-2617), sowie von Babu et al. (Macromolecules, **1992,** *25*, 6980-6987) und Dong et al. (Macromolecules, **1992,** *25*, 1242-1253) beschrieben. Diese Metallocene zeichnen sich aber durch geringe Aktivitäten und niedrige Molmassen aus M_{W} = 200.000.

Ein erster Durchbruch gelang Waymouth et al. (US-A-5,994,080) durch die Verwendung von unverbrückten Indenylsystemen, die in Position 2 am Indenylring ein aromatisches Ringsystem, wie Phenyl und substituierte Phenylringe, tragen. Diese Systeme bieten die Möglichkeit während des Kettenwachstums durch eine Drehung des Indenylsystems zwischen chiraler und achiraler Anordnung zu isomerisieren. Daraus ergibt sich ein ataktisches-isotaktisches Stereoblock-Polypropylen mit elastomeren Eigenschaften.

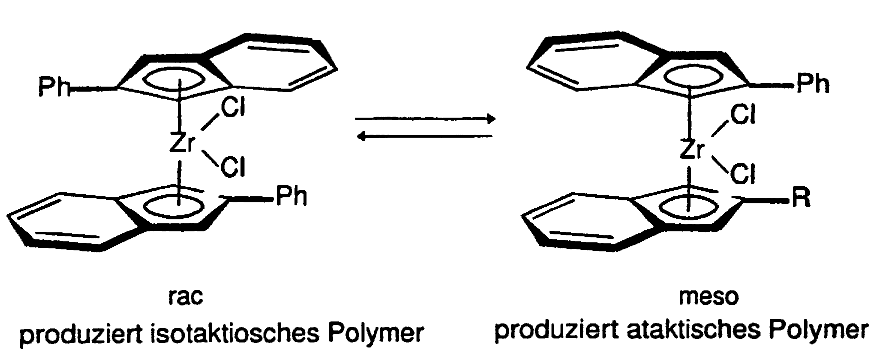

Diese Metallocene weisen zwar eine höhere Aktivität auf als die bis dahin beschriebenen Systeme, für eine kostengünstige industrielle Nutzung reichen diese Aktivitäten jedoch nicht aus. Daher ist es wünschenswert Metallocen-Katalysatoren für die Darstellung von Polyproplylen mit elastomeren Eigenschaften zu entwickeln, die hier eine deutlich höhere Aktivität als die bisher bekannten Systeme liefern.

Es bestand somit die Aufgabe Metallocene zu finden, die nach Umwandlung in die polymerisationsaktive Spezies, die oben genannte Polymerisationseigenschaften zeigen.

Es wurde nun überraschenderweise gefunden, daß spezielle Beteroaromaten in Position 2 oder 3 am Indenylsystem Metallocene liefern, die die der Erfindung zugrunde liegende Aufgabe lösen.

Gegenstand der vorliegenden Erfindung sind Verbindungen der Formel (II), 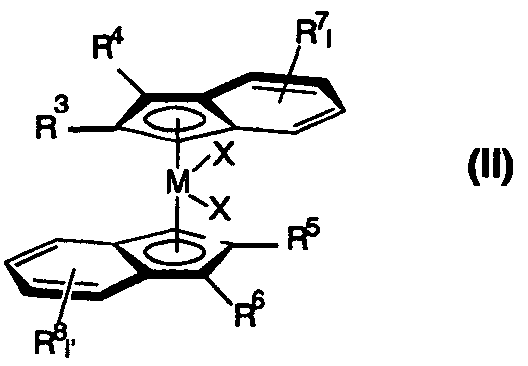 worin
- M: gleich Ti, Zr oder Hf ist, besonders bevorzugt Zirkonium,
- R³ und R⁵ oder R⁴ und R⁶: gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist; mit der Maßgabe, daß R³ und R⁵, oder R⁴ und R⁶ C₄-C₂₄-Heteroaryl oder C₄-C₂₄-Alkylheteroaryl sind, wie, 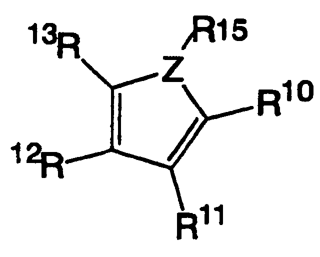
- R¹⁰, R¹¹, R¹², R¹³: gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist
- R¹⁵: wenn Z = Sauerstoff oder Schwefel ist R¹⁵ nicht vorhanden ist, bei Z = Stickstoff ist R¹⁵ ein Wasserstoffatom, eine C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl,
oder 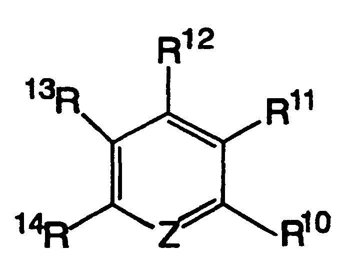 worin,
- R¹⁰, R¹¹, R¹², R¹³,R¹⁴: gleich oder verschieden sind und ein Wasserstoffatom, eine C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist,
- Z: ein Heteroatom aus der V-Hauptgruppe ist,
- R⁷ , R⁸: gleich oder verschieden sind und ein Wasserstoffatom, Halogenatom oder eine C₁-C₂₀ - kohlenstoffhaltige Gruppe bedeuteten, bevorzugt eine lineare oder verzweigte C₁-C₁₈-Alkylgruppe, wie Methyl, Ethyl, tert.-Butyl, Cyclohexyl oder Octyl, C₂-C₁₀-Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl sind, und zwei Reste R⁸ oder R⁹ ein mono- oder polycyclisches Ringssystem bilden können, das seinerseits gegebenenfalls substituiert sein kann,
- X: ein Halogenatom, insbesondere Chlor, ist,
- l, l': gleich oder verschieden eine ganze Zahl zwischen Null und 4, bevorzugt 1 oder 2, besonders bevorzugt gleich 1 sind.

Ganz besonders bevorzugt sind unverbrückte Metallocenverbindungen der Formel (II), worin
- M: gleich Zirkonium ist,
- R³ und R⁵, oder R⁴, und R⁶: eine C₄-C₂₄-Heteroaryl oder C₄-C₂₄-Alkylheteroaryl sind, wie, 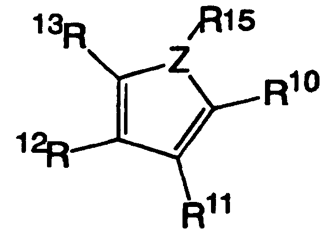
worin
- R¹⁰: ein Wasserstoffatom, ein C₁-C₁₈-Alkyl, wie Methyl, Ethyl, n-Butyl, n-Hexyl, Cyclohexyl oder Octyl, Phenyl ist,
- R¹¹, R¹²: ein Wasserstoffatom ist,
- R¹³: das am Metall gebundene Indenylsystem ist,
- Z: Sauerstoff, Stickstoff oder Schwefel ist,
- R¹⁵: wenn Z = Sauerstoff und Schwefel ist R¹⁵ nicht vorhanden, bei Z = Stickstoff ist R¹⁵ ein Wasserstoffatom, Methyl, Ethyl, n-Butyl, n-Hexyl, Cyclohexyl und Phenyl. oder 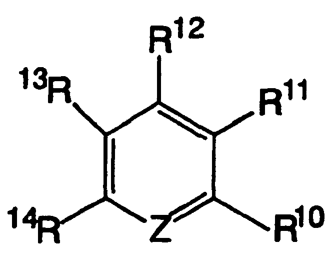
worin,
- R¹⁰: ein Wasserstoffatom, ein C₁-C₁₈-Alkyl, wie Methyl, Ethyl, n-Butyl, n-Hexyl, Cyclohexyl oder Octyl, Phenyl ist,
- R¹¹, R¹², R¹³: ein Wasserstoffatom ist,
- R¹⁴: das am Metall gebundene Indenylsystem ist,
- Z: Stickstoff ist.

Statt der reinen chiralen verbrückten Metallocenverbindungen der Formel (II) (rac) können bei der Katalysatorherstellung auch Gemische aus den Metallocenen der Formel (II) und den entsprechenden meso Metallocenen der Formel (IIa) zur Katalysatorherstellung eingesetzt werden.

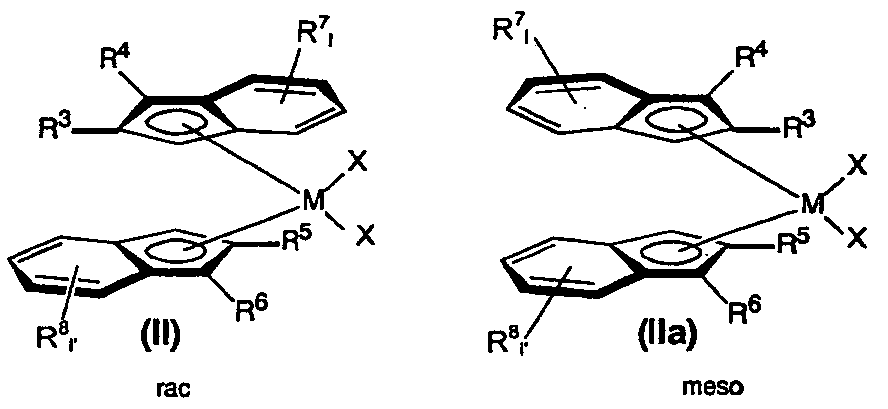

Erläuternde, jedoch nicht einschränkende Beispiele für die erfindungsgemäßen Metallocene sind:
Bis(2-(5'-methyl-2'-furyl)-indenyl)zirkoniumdichlorid,
Bis(2-(5'-methyl-2'-furyl)-(4,5-benzoindenyl))hafniumdichlorid,
Bis(2-(5'-methyl-2'-furyl)-(4-isopropyl)indenyl)zirkoniumdichlorid,
Bis(2-(5'-methyl-2'-furyl)-benzo-indenyl)zirkoniumdichlorid
Bis(2-(5'-methyl-2'-furyl)-4-(1-naphthyl)-indenyl)zirkoniumdichlorid
Bis(2-(5'-methyl-2'-furyl)-4-(2-naphthyl)-indenyl)zirkoniumdichlorid
Bis(2-(5'-methyl-2'-furyl)-4-phenyl-indenyl)zirkoniumdichlorid
Bis(2-(5'-methyl-2'-furyl)-4-t-butyl-indenyl)zirkoniumdichlorid
Bis(2-(5'-methyl-2'-furyl)-4-isopropyl-indenyl)zirkoniumdichlorid
Bis(2-(5'-methyl-2'-furyl)-4-ethyl-indenyl)zirkoniumdichlorid
Bis(2-(5'-methyl-2'-furyl)-4- -acenaphth-indenyl)zirkoniumdichlorid
Bis(2-(5'-methyl-2'-furyl)-4-dimethyl-indenyl)zirkoniumdichlorid
Bis(2-(5'-methyl-2'-furyl)-4-(tert-butyl-phenyl-indenyl)-zirkoniumdichlorid
Bis(2-(5'-methyl-2'-furyl)-4-(4-methyl-phenyl-indenyl)zirkoniumdichlorid
Bis(2-(5'-methyl-2'-furyl)-4-(4-ethyl-phenyl-indenyl)zirkoniumdichlorid
Bis(2-(5'-methyl-2'-furyl)-4-(4-trifluormethyl-phenyl-indenyl) zirkoniumdichlorid
Bis(2-(5'-methyl-2'-furyl)-4-(4-methoxy-phenyl-indenyl)zirkoniumdichlorid
Bis(2-(5'-methyl-2'-furyl)-4-(4-tert-butyl-phenyl-indenyl) zirkoniumdimethyl
Bis(2-(5'-methyl-2'-furyl)-4-(4-methyl-phenyl-indenyl)zirkoniumdimethyl
Bis(2-(5'-methyl-2'-furyl)-4-(4-ethyl-phenyl-indenyl)zirkoniumdimethyl
Bis(2-(5'-methyl-2'-furyl)-4-(4-trifluormethyl-phenyl-indenyl) zirkoniumdimethyl
Bis(2-(5'-methyl-2'-furyl)-4-(4-methoxy-phenyl-indenyl)zirkoniumdimethyl
Bis(2-(5'-methyl-2'-furyl)-4-(4'-tert.-butyl-phenyl)-indenyl) zirkoniumdichlorid
Bis(2-(5'-methyl-2'-furyl)-4-(4'-tert.-butyl-phenyl)-indenyl) hafnuimdichlorid
Bis(2-(5'-methyl-2'-furyl)-4-(4'-tert.-butyl-phenyl)-indenyl) titandichlorid
Bis(2-(5'-methyl-2'-furyl)-4-(4'-methyl-phenyl)-indenyl) zirkoniumdichlorid
Bis(2-(5'-methyl-2'-furyl)-4-(4'-ethyl-phenyl)-indenyl)zirkoniumdichlorid
Bis(2-(5'-methyl-2'-furyl)-4-(4'-n-propyl-phenyl)-indenyl) zirkoniumdichlorid
Bis(2-(5'-methyl-2'-furyl)-4-(4'-iso-propyl-phenyl)-indenyl) zirkoniumdichlorid
Bis(2-(5'-methyl-2'-furyl)-4-(4'-n-butyl-phenyl)-indenyl) zirkoniumdichlorid
Bis(2-(5'-methyl-2'-furyl)-4-(4'-hexyl-phenyl)-indenyl)zirkoniumdichlorid
Bis(2-(5'-methyl-2'-furyl)-4-(4'-sec-butyl-phenyl)-indenyl) zirkoniumdichlorid
Bis(2-(5'-methyl-2'-furyl)-4-(4'-trimethylsilyl-phenyl)-indenyl) zirkoniumdichlorid
Bis(2-(5'-methyl-2'-thiophen)-indenyl)zirkoniumdichlorid,
Bis(2-(5'-methyl-2'-thiophen)-(4,5-benzoindenyl))hafniumdichlorid,
Bis(2-(5'-methyl-2'-thiophen)-(4-isopropyl)indenyl)zirkoniumdichlorid,
Bis(2-(5'-methyl-2'-thiophen)-benzo-indenyl)zirkoniumdichlorid
Bis(2-(5'-methyl-2'-thiophen)-4-(1-naphthyl)-indenyl)zirkoniumdichlorid
Bis(2-(5'-methyl-2'-thiophen)-4-(2-naphthyl)-indenyl)zirkoniumdichlorid
Bis(2-(5'-methyl-2'-thiophen)-4-phenyl-indenyl)zirkoniumdichlorid
Bis(2-(5'-methyl-2'-thiophen)-4-t-butyl-indenyl)zirkoniumdichlorid
Bis(2-(5'-methyl-2'-thiophen)-4-isopropyl-indenyl)zirkoniumdichlorid
Bis (2-(5'-methyl-2'-thiophen)-4-ethyl-indenyl)zirkoniumdichlorid
Bis(2-(5'-methyl-2'-thiophen)-4- -acenaphth-indenyl)zirkoniumdichlorid
Bis(2-(5'-methyl-2'-thiophen)-4-dimethyl-indenyl)zirkoniumdichlorid
Bis(2-(5'-methyl-2'-thiophen)-4-(tert-butyl-phenyl-indenyl)-zirkoniumdichlorid
Bis(2-(5'-methyl-2'-thiophen)-4-(4-methyl-phenyl-indenyl) zirkoniumdichlorid
Bis (2-(5'-methyl-2'-thiophen)-4-(4-ethyl-phenyl-indenyl) zirkoniumdichlorid
Bis(2-(5'-methyl-2'-thiophen)-4-(4-trifluormethyl-phenyl-indenyl) zirkoniumdichlorid
Bis (2-(5'-methyl-2'-thiophen)-4-(4-methoxy-phenyl-indenyl) zirkoniumdichlorid
Bis(2-(5'-methyl-2'-thiophen)-4-(4-tert-butyl-phenyl-indenyl) zirkoniumdimethyl
Bis(2-(5'-methyl-2'-thiophen)-4-(4-methyl-phenyl-indenyl) zirkoniumdimethyl
Bis(2-(5'-methyl-2'-thiophen)-4-(4-ethyl-phenyl-indenyl) zirkoniumdimethyl
Bis(2-(5'-methyl-2'-thiophen)-4-(4-trifluormethyl-phenyl-indenyl) zirkoniumdimethyl
Bis(2-(5'-methyl-2'-thiophen)-4-(4-methoxy-phenyl-indenyl) zirkoniumdimethyl
Bis(2-(5'-methyl-2'-thiophen)-4-(4'-tert.-butyl-phenyl)-indenyl) zirkoniumdichlorid
Bis(2-(5'-methyl-2'-thiophen)-4-(4'-tert.-butyl-phenyl)-indenyl) hafnuimdichlorid
Bis(2-(5'-methyl-2'-thiophen)-4-(4'-tert.-butyl-phenyl)-indenyl) titandichlorid
Bis(2-(5'-methyl-2'-thiophen)-4-(4'-methyl-phenyl)-indenyl) zirkoniumdichlorid
Bis(2-(5'-methyl-2'-thiophen)-4-(4'-ethyl-phenyl)-indenyl) zirkoniumdichlorid
Bis(2-(5'-methyl-2'-thiophen)-4-(4'-n-propyl-phenyl)-indenyl) zirkoniumdichlorid
Bis(2-(5'-methyl-2'-thiophen)-4-(4'-iso-propyl-phenyl)-indenyl)zirkoniumdichlorid
Bis(2-(5'-methyl-2'-thiophen)-4-(4'-n-butyl-phenyl)-indenyl) zirkoniumdichlorid
Bis(2-(5'-methyl-2'-thiophen)-4-(4'-hexyl-phenyl)-indenyl) zirkoniumdichlorid
Bis(2-(5'-methyl-2'-thiophen)-4-(4'-sec-butyl-phenyl)-indenyl) zirkoniumdichlorid
Bis(2-(5'-methyl-2'-thiophen)-4-(4'-trimethylsilyl-phenyl)-indenyl)zirkoniumdichlorid
Bis(2-(5'-methyl-2'-N-methylpyrrol)-indenyl)zirkoniumdichlorid,
Bis(2-(5'-methyl-2'-N-methylpyrrol)-(4,5-benzoindenyl))hafniumdichlorid,
Bis(2-(5'-methyl-2'-N-methylpyrrol)-(4-isopropyl)indenyl) zirkoniumdichlorid,
Bis(2-(5'-methyl-2'-N-methylpyrrol)-benzo-indenyl)zirkoniumdichlorid
Bis(2-(5'-methyl-2'-N-methylpyrrol)-4-(1-naphthyl)-indenyl) zirkoniumdichlorid
Bis(2-(5'-methyl-2'-N-methylpyrrol)-4-(2-naphthyl)-indenyl) zirkoniumdichlorid
Bis(2-(5'-methyl-2'-N-methylpyrrol)-4-phenyl-indenyl)zirkoniumdichlorid
Bis(2-(5'-methyl-2'-N-methylpyrrol)-4-t-butyl-indenyl)zirkoniumdichlorid
Bis(2-(5'-methyl-2'-N-methylpyrrol)-4-isopropyl-indenyl) zirkoniumdichlorid
Bis(2-(5'-methyl-2'-N-methylpyrrol)-4-ethyl-indenyl)zirkoniumdichlorid
Bis(2-(5'-methyl-2'-N-methylpyrrol)-4- -acenaphth-indenyl) zirkoniumdichlorid
Bis(2-(5'-methyl-2'-N-methylpyrrol)-4-dimethyl-indenyl)zirkoniumdichlorid
Bis(2-(5'-methyl-2'-N-methylpyrrol)-4-(tert-butyl-phenyl-indenyl) zirkoniumdichlorid
Bis(2-(5'-methyl-2'-N-methylpyrrol)-4-(4-methyl-phenyl-indenyl) zirkoniumdichlorid
Bis(2-(5'-methyl-2'-N-methylpyrrol)-4-(4-ethyl-phenyl-indenyl) zirkoniumdichlorid
Bis(2-(5'-methyl-2'-N-methylpyrrol)-4-(4-trifluormethyl-phenylindenyl)zirkoniumdichlorid
Bis(2-(5'-methyl-2'-N-methylpyrrol)-4-(4-methoxy-phenyl-indenyl) zirkoniumdichlorid
Bis(2-(5'-methyl-2'-N-methylpyrrol)-4-(4-tert-butyl-phenyl-indenyl)zirkoniumdimethyl
Bis(2-(5'-methyl-2'-N-methylpyrrol)-4-(4-methyl-phenyl-indenyl) zirkoniumdimethyl
Bis(2-(5'-methyl-2'-N-methylpyrrol)-4-(4-ethyl-phenyl-indenyl) zirkoniumdimethyl
Bis(2-(5'-methyl-2'-N-methylpyrrol)-4-(4-trifluormethyl-phenylindenyl)zirkoniumdimethyl
Bis(2-(5'-methyl-2'-N-methylpyrrol)-4-(4-methoxy-phenyl-indenyl) zirkoniumdimethyl
Bis(2-(5'-methyl-2'-N-methylpyrrol)-4-(4'-tert.-butyl-phenyl)-indenyl)zirkoniumdichlorid
Bis(2-(5'-methyl-2'-N-methylpyrrol)-4-(4'-tert.-butyl-phenyl)-indenyl)hafnuimdichlorid
Bis(2-(5'-methyl-2'-N-methylpyrrol)-4-(4'-tert.-butyl-phenyl)-indenyl)titandichlorid
Bis(2-(5'-methyl-2'-N-methylpyrrol)-4-(4'-methyl-phenyl)-indenyl) zirkoniumdichlorid
Bis(2-(5'-methyl-2'-N-methylpyrrol)-4-(4'-ethyl-phenyl)-indenyl) zirkoniumdichlorid
Bis(2-(5'-methyl-2'-N-methylpyrrol)-4-(4'-n-propyl-phenyl)-indenyl)zirkoniumdichlorid
Bis(2-(5'-methyl-2'-N-methylpyrrol)-4-(4'-iso-propyl-phenyl)-indenyl)zirkoniumdichlorid
Bis(2-(5'-methyl-2'-N-methylpyrrol)-4-(4'-n-butyl-phenyl)-indenyl)zirkoniumdichlorid
Bis(2-(5'-methyl-2'-N-methylpyrrol)-4-(4'-hexyl-phenyl)-indenyl) zirkoniumdichlorid
Bis(2-(5'-methyl-2'-N-methylpyrrol)-4-(4'-sec-butyl-phenyl)-indenyl)zirkoniumdichlorid
Bis(2-(5'-methyl-2'-N-methylpyrrol)-4-(4'-trimethylsilyl-phenyl)-indenyl)zirkoniumdichlorid
Bis(1-(5'-methyl-2'-furyl)-indenyl)zirkoniumdichlorid,
Bis(1-(5'-methyl-2'-furyl)-(4,5-benzoindenyl))hafniumdichlorid,
Bis(1-(5'-methyl-2'-furyl)-(4-isopropyl)indenyl)zirkoniumdichlorid,
Bis(1-(5'-methyl-2'-furyl)-benzo-indenyl)zirkoniumdichlorid
Bis(1-(5'-methyl-2'-furyl)-4-(1-naphthyl)-indenyl)zirkoniumdichlorid
Bis(1-(5'-methyl-2'-furyl)-4-(2-naphthyl)-indenyl)zirkoniumdichlorid
Bis(1-(5'-methyl-2'-furyl)-4-phenyl-indenyl)zirkoniumdichlorid
Bis(1-(5'-methyl-2'-furyl)-4-t-butyl-indenyl)zirkoniumdichlorid
Bis(1-(5'-methyl-2'-furyl)-4-isopropyl-indenyl)zirkoniumdichlorid
Bis(1-(5'-methyl-2'-furyl)-4-ethyl-indenyl)zirkoniumdichlorid
Bis(1-(5'-methyl-2'-furyl)-4- -acenaphth-indenyl)zirkoniumdichlorid
Bis(1-(5'-methyl-2'-furyl)-4-dimethyl-indenyl)zirkoniumdichlorid
Bis(1-(5'-methyl-2'-furyl)-4-(tert-butyl-phenyl-indenyl)-zirkoniumdichlorid
Bis(1-(5'-methyl-2'-furyl)-4-(4-methyl-phenyl-indenyl)zirkoniumdichlorid
Bis(1-(5'-methyl-2'-furyl)-4-(4-ethyl-phenyl-indenyl)zirkoniumdichlorid
Bis(1-(5'-methyl-2'-furyl)-4-(4-trifluormethyl-phenyl-indenyl) zirkoniumdichlorid
Bis(1-(5'-methyl-2'-furyl)-4-(4-methoxy-phenyl-indenyl)zirkoniumdichlorid
Bis(1-(5'-methyl-2'-furyl)-4-(4-tert-butyl-phenyl-indenyl) zirkoniumdimethyl
Bis(1-(5'-methyl-2'-furyl)-4-(4-methyl-phenyl-indenyl)zirkoniumdimethyl
Bis(1-(5'-methyl-2'-furyl)-4-(4-ethyl-phenyl-indenyl)zirkoniumdimethyl
Bis(1-(5'-methyl-2'-furyl)-4-(4-trifluormethyl-phenyl-indenyl) zirkoniumdimethyl
Bis(1-(5'-methyl-2'-furyl)-4-(4-methoxy-phenyl-indenyl)zirkoniumdimethyl
Bis(1-(5'-methyl-2'-furyl)-4-(4'-tert.-butyl-phenyl)-indenyl) zirkoniumdichlorid
Bis(1-(5'-methyl-2'-furyl)-4-(4'-tert.-butyl-phenyl)-indenyl) hafnuimdichlorid
Bis(1-(5'-methyl-2'-furyl)-4-(4'-tert.-butyl-phenyl)-indenyl) titandichlorid
Bis(1-(5'-methyl-2'-furyl)-4-(4'-methyl-phenyl)-indenyl)zirkoniumdichlorid
Bis(1-(5'-methyl-2'-furyl)-4-(4'-ethyl-phenyl)-indenyl)zirkoniumdichlorid
Bis(1-(5'-methyl-2'-furyl)-4-(4'-n-propyl-phenyl)-indenyl)-zirkoniumdichlorid
Bis(1-(5'-methyl-2'-furyl)-4-(4'-iso-propyl-phenyl)-indenyl) zirkoniumdichlorid
Bis(1-(5'-methyl-2'-furyl)-4-(4'-n-butyl-phenyl)-indenyl)-zirkoniumdichlorid
Bis(1-(5'-methyl-2'-furyl)-4-(4'-hexyl-phenyl)-indenyl)zirkoniumdichlorid
Bis(1-(5'-methyl-2'-furyl)-4-(4'-sec-butyl-phenyl)-indenyl) zirkoniumdichlorid
Bis(1-(5'-methyl-2'-furyl)-4-(4'-trimethylsilyl-phenyl)-indenyl) zirkoniumdichlorid
Bis(1-(5'-methyl-2'-thiophen)-indenyl)zirkoniumdichlorid,
Bis(1-(5'-methyl-2'-thiophen)-(4,5-benzoindenyl))hafniumdichlorid,
Bis(1-(5'-methyl-2'-thiophen)-(4-isopropyl)indenyl)zirkoniumdichlorid,
Bis(1-(5'-methyl-2'-thiophen)-benzo-indenyl)zirkoniumdichlorid
Bis(1-(5'-methyl-2'-thiophen)-4-(1-naphthyl)-indenyl)zirkoniumdichlorid
Bis(1-(5'-methyl-2'-thiophen)-4-(2-naphthyl)-indenyl)zirkoniumdichlorid
Bis(1-(5'-methyl-2'-thiophen)-4-phenyl-indenyl)zirkoniumdichlorid
Bis(1-(5'-methyl-2'-thiophen)-4-t-butyl-indenyl)zirkoniumdichlorid
Bis(1-(5'-methyl-2'-thiophen)-4-isopropyl-indenyl)zirkoniumdichlorid
Bis(1-(5'-methyl-2'-thiophen)-4-ethyl-indenyl)zirkoniumdichlorid
Bis (1-(5'-methyl-2'-thiophen)-4- -acenaphth-indenyl) zirkoniumdichlorid
Bis(1-(5'-methyl-2'-thiophen)-4-dimethyl-indenyl)zirkoniumdichlorid
Bis(1-(5'-methyl-2'-thiophen)-4-(tert-butyl-phenyl-indenyl)-zirkoniumdichlorid
Bis(1-(5'-methyl-2'-thiophen)-4-(4-methyl-phenyl-indenyl)zirkoniumdichlorid
Bis(1-(5'-methyl-2'-thiophen)-4-(4-ethyl-phenyl-indenyl)zirkoniumdichlorid
Bis(1-(5'-methyl-2'-thiophen)-4-(4-trifluormethyl-phenyl-indenyl) zirkoniumdichlorid
Bis(1-(5'-methyl-2'-thiophen)-4-(4-methoxy-phenyl-indenyl)zirkoniumdichlorid
Bis(1-(5'-methyl-2'-thiophen)-4-(4-tert-butyl-phenyl-indenyl)-zirkoniumdimethyl
Bis(1-(5'-methyl-2'-thiophen)-4-(4-methyl-phenyl-indenyl)-zirkoniumdimethyl
Bis(1-(5'-methyl-2'-thiophen)-4-(4-ethyl-phenyl-indenyl)-zirkoniumdimethyl
Bis(1-(5'-methyl-2'-thiophen)-4-(4-trifluormethyl-phenyl-indenyl)zirkoniumdimethyl
Bis(1-(5'-methyl-2'-thiophen)-4-(4-methoxy-phenyl-indenyl)zirkoniumdimethyl
Bis(1-(5'-methyl-2'-thiophen)-4-(4'-tert.-butyl-phenyl)-indenyl) zirkoniumdichlorid
Bis(1-(5'-methyl-2'-thiophen)-4-(4'-tert.-butyl-phenyl)-indenyl) hafnuimdichlorid
Bis(1-(5'-methyl-2'-thiophen)-4-(4'-tert.-butyl-phenyl)-indenyl) titandichlorid
Bis(1-(5'-methyl-2'-thiophen)-4-(4'-methyl-phenyl)-indenyl) zirkoniumdichlorid
Bis(1-(5'-methyl-2'-thiophen)-4-(4'-ethyl-phenyl)-indenyl) zirkoniumdichlorid
Bis(1-(5'-methyl-2'-thiophen)-4-(4'-n-propyl-phenyl)-indenyl) zirkoniumdichlorid
Bis(1-(5'-methyl-2'-thiophen)-4-(4'-iso-propyl-phenyl)-indenyl) zirkoniumdichlorid
Bis(1-(5'-methyl-2'-thiophen)-4-(4'-n-butyl-phenyl)-indenyl) zirkoniumdichlorid
Bis(1-(5'-methyl-2'-thiophen)-4-(4'-hexyl-phenyl)-indenyl) zirkoniumdichlorid
Bis(1-(5'-methyl-2'-thiophen)-4-(4'-sec-butyl-phenyl)-indenyl) zirkoniumdichlorid
Bis(1-(5'-methyl-2'-thiophen)-4-(4'-trimethylsilyl-phenyl)-indenyl)zirkoniumdichlorid
Bis(1-(5'-methyl-2'-N-methylpyrrol)-indenyl)zirkoniumdichlorid,
Bis(1-(5'-methyl-2'-N-methylpyrrol)-(4,5-benzoindenyl))hafniumdichlorid,
Bis(1-(5'-methyl-2'-N-methylpyrrol)-(4-isopropyl)indenyl) zirkoniumdichlorid,
Bis(1-(5'-methyl-2'-N-methylpyrrol)-benzo-indenyl)zirkoniumdichlorid
Bis(1-(5'-methyl-2'-N-methylpyrrol)-4-(1-naphthyl)-indenyl) zirkoniumdichlorid
Bis(1-(5'-methyl-2'-N-methylpyrrol)-4-(2-naphthyl)-indenyl) zirkoniumdichlorid
Bis(1-(5'-methyl-2'-N-methylpyrrol)-4-phenyl-indenyl)zirkoniumdichlorid
Bis(1-(5'-methyl-2'-N-methylpyrrol)-4-t-butyl-indenyl)zirkoniumdichlorid
Bis(1-(5'-methyl-2'-N-methylpyrrol)-4-isopropyl-indenyl) zirkoniumdichlorid
Bis(1-(5'-methyl-2'-N-methylpyrrol)-4-ethyl-indenyl)zirkoniumdichlorid
Bis(1-(5'-methyl-2'-N-methylpyrrol)-4- -acenaphth-indenyl) zirkoniumdichlorid
Bis(1-(5'-methyl-2'-N-methylpyrrol)-4-dimethyl-indenyl)zirkoniumdichlorid
Bis(1-(5'-methyl-2'-N-methylpyrrol)-4-(tert-butyl-phenyl-indenyl) zirkoniumdichlorid
Bis(1-(5'-methyl-2'-N-methylpyrrol)-4-(4-methyl-phenyl-indenyl) zirkoniumdichlorid
Bis(1-(5'-methyl-2'-N-methylpyrrol)-4-(4-ethyl-phenyl-indenyl) zirkoniumdichlorid
Bis(1-(5'-methyl-2'-N-methylpyrrol)-4-(4-trifluormethyl-phenylindenyl)zirkoniumdichlorid
Bis(1-(5'-methyl-2'-N-methylpyrrol)-4-(4-methoxy-phenyl-indenyl) zirkoniumdichlorid
Bis(1-(5'-methyl-2'-N-methylpyrrol)-4-(4-tert-butyl-phenylindenyl)zirkoniumdimethyl
Bis(1-(5'-methyl-2'-N-methylpyrrol)-4-(4-methyl-phenyl-indenyl) zirkoniumdimethyl
Bis(1-(5'-methyl-2'-N-methylpyrrol)-4-(4-ethyl-phenyl-indenyl) zirkoniumdimethyl
Bis(1-(5'-methyl-2'-N-methylpyrrol)-4-(4-trifluormethyl-phenylindenyl)zirkoniumdimethyl
Bis(1-(5'-methyl-2'-N-methylpyrrol)-4-(4-methoxy-phenyl-indenyl) zirkoniumdimethyl
Bis(1-(5'-methyl-2'-N-methylpyrrol)-4-(4'-tert.-butyl-phenyl)-indenyl)zirkoniumdichlorid
Bis(1-(5'-methyl-2'-N-methylpyrrol)-4-(4'-tert.-butyl-phenyl)-indenyl)hafnuimdichlorid
Bis(1-(5'-methyl-2'-N-methylpyrrol)-4-(4'-tert.-butyl-phenyl)-indenyl)titandichlorid
Bis(1-(5'-methyl-2'-N-methylpyrrol)-4-(4'-methyl-phenyl)-indenyl) zirkoniumdichlorid
Bis(1-(5'-methyl-2'-N-methylpyrrol)-4-(4'-ethyl-phenyl)-indenyl) zirkoniumdichlorid
Bis(1-(5'-methyl-2'-N-methylpyrrol)-4-(4'-n-propyl-phenyl)-indenyl)zirkoniumdichlorid
Bis(1-(5'-methyl-2'-N-methylpyrrol)-4-(4'-iso-propyl-phenyl)-indenyl)zirkoniumdichlorid
Bis(1-(5'-methyl-2'-N-methylpyrrol)-4-(4'-n-butyl-phenyl)-indenyl)zirkoniumdichlorid
Bis(1-(5'-methyl-2'-N-methylpyrrol)-4-(4'-hexyl-phenyl)-indenyl) zirkoniumdichlorid
Bis(1-(5'-methyl-2'-N-methylpyrrol)-4-(4'-sec-butyl-phenyl)-indenyl)zirkoniumdichlorid
Bis(1-(5'-methyl-2'-N-methylpyrrol)-4-(4'-trimethylsilyl-phenyl)-indenyl)zirkoniumdichlorid
Bis(2-(5'-ethyl-2'-furyl)-indenyl)zirkoniumdichlorid,
Bis(2-(5'-ethyl-2'-furyl)-(4,5-benzoindenyl))hafniumdichlorid,
Bis(2-(5'-ethyl-2'-furyl)-(4-isopropyl)indenyl)zirkoniumdichlorid,
Bis(2-(5'-ethyl-2'-furyl)-benzo-indenyl)zirkoniumdichlorid
Bis(2-(5'-ethyl-2'-furyl)-4-(1-naphthyl)-indenyl)zirkoniumdichlorid
Bis(2-(5'-ethyl-2'-furyl)-4-(2-naphthyl)-indenyl)zirkoniumdichlorid
Bis(2-(5'-ethyl -2'-furyl)-4-phenyl-indenyl)zirkoniumdichlorid
Bis(2-(5'-ethyl-2'-furyl)-4-t-butyl-indenyl)zirkoniumdichlorid
Bis(2-(5'-ethyl-2'-furyl)-4-isopropyl-indenyl)zirkoniumdichlorid
Bis(2-(5'-ethyl-2'-furyl)-4-ethyl-indenyl)zirkoniumdichlorid
Bis(2-(5'-ethyl-2'-furyl)-4- -acenaphth-indenyl)zirkoniumdichlorid
Bis(2-(5'-ethyl-2'-furyl)-4-dimethyl-indenyl)zirkoniumdichlorid
Bis(2-(5'-ethyl-2'-furyl)-4-(tert-butyl-phenyl-indenyl)-zirkoniumdichlorid
Bis(2-(5'-ethyl-2'-furyl)-4-(4-methyl-phenyl-indenyl)zirkoniumdichlorid
Bis(2-(5'-ethyl-2'-furyl)-4-(4-ethyl-phenyl-indenyl)zirkoniumdichlorid
Bis(2-(5'-ethyl-2'-furyl)-4-(4-trifluormethyl-phenyl-indenyl) zirkoniumdichlorid
Bis(2-(5'-ethyl-2'-furyl)-4-(4-methoxy-phenyl-indenyl)zirkoniumdichlorid
Bis(2-(5'-ethyl-2'-furyl)-4-(4-tert-butyl-phenyl-indenyl) zirkoniumdimethyl
Bis(2-(5'-ethyl-2'-furyl)-4-(4-methyl-phenyl-indenyl)zirkoniumdimethyl
Bis(2-(5'-ethyl-2'-furyl)-4-(4-ethyl-phenyl-indenyl)zirkoniumdimethyl
Bis(2-(5'-ethyl-2'-furyl)-4-(4-trifluormethyl-phenyl-indenyl) zirkoniumdimethyl
Bis(2-(5'-ethyl-2'-furyl)-4-(4-methoxy-phenyl-indenyl)zirkoniumdimethyl
Bis(2-(5'-ethyl-2'-furyl)-4-(4'-tert.-butyl-phenyl)-indenyl) zirkoniumdichlorid
Bis(2-(5'-ethyl-2'-furyl)-4-(4'-tert.-butyl-phenyl)-indenyl) hafnuimdichlorid
Bis(2-(5'-ethyl-2'-furyl)-4-(4'-tert.-butyl-phenyl)-indenyl) titandichlorid
Bis(2-(5'-ethyl-2'-furyl)-4-(4'-methyl-phenyl)-indenyl)zirkoniumdichlorid
Bis(2-(5'-ethyl-2'-furyl)-4-(4'-ethyl-phenyl)-indenyl)zirkoniumdichlorid
Bis(2-(5'-ethyl-2'-furyl)-4-(4'-n-propyl-phenyl)-indenyl) zirkoniumdichlorid
Bis(2-(5'-ethyl-2'-furyl)-4-(4'-iso-propyl-phenyl)-indenyl) zirkoniumdichlorid
Bis(2-(5'-ethyl-2'-furyl)-4-(4'-n-butyl-phenyl)-indenyl) zirkoniumdichlorid
Bis(2-(5'-ethyl-2'-furyl)-4-(4'-hexyl-phenyl)-indenyl)zirkoniumdichlorid
Bis(2-(5'-ethyl-2'-furyl)-4-(4'-sec-butyl-phenyl)-indenyl) zirkoniumdichlorid
Bis(2-(5'-ethyl-2'-furyl)-4-(4'-trimethylsilyl-phenyl)-indenyl) zirkoniumdichlorid
Bis(2-(5'-ethyl-2'-thiophen)-indenyl)zirkoniumdichlorid,
Bis(2-(5'-ethyl-2'-thiophen)-(4,5-benzoindenyl))hafniumdichlorid,
Bis(2-(5'-ethyl-2'-thiophen)-(4-isopropyl)indenyl)zirkoniumdichlorid,
Bis(2-(5'-ethyl-2'-thiophen)-benzo-indenyl)zirkoniumdichlorid
Bis(2-(5'-ethyl-2'-thiophen)-4-(1-naphthyl)-indenyl)zirkoniumdichlorid
Bis(2-(5'-ethyl-2'-thiophen)-4-(2-naphthyl)-indenyl)zirkoniumdichlorid
Bis(2-(5'-ethyl-2'-thiophen)-4-phenyl-indenyl)zirkoniumdichlorid
Bis(2-(5'-ethyl-2'-thiophen)-4-t-butyl-indenyl)zirkoniumdichlorid
Bis(2-(5'-ethyl-2'-thiophen)-4-isopropyl-indenyl)zirkoniumdichlorid
Bis(2-(5'-ethyl-2'-thiophen)-4-ethyl-indenyl)zirkoniumdichlorid
Bis(2-(5'-ethyl-2'-thiophen)-4- -acenaphth-indenyl)zirkoniumdichlorid
Bis(2-(5'-ethyl-2'-thiophen)-4-dimethyl-indenyl)zirkoniumdichlorid
Bis(2-(5'-ethyl-2'-thiophen)-4-(tert-butyl-phenyl-indenyl)-zirkoniumdichlorid
Bis(2-(5'-ethyl-2'-thiophen)-4-(4-methyl-phenyl-indenyl)zirkonium dichlorid
Bis(2-(5'-ethyl-2'-thiophen)-4-(4-ethyl-phenyl-indenyl)zirkoniumdichlorid
Bis(2-(5'-ethyl-2'-thiophen)-4-(4-trifluormethyl-phenyl-indenyl) zirkoniumdichlorid
Bis(2-(5'-ethyl-2'-thiophen)-4-(4-methoxy-phenyl-indenyl) zirkoniumdichlorid
Bis(2-(5'-ethyl-2'-thiophen)-4-(4-tert-butyl-phenyl-indenyl) zirkoniumdimethyl
Bis(2-(5'-ethyl-2'-thiophen)-4-(4-methyl-phenyl-indenyl) zirkoniumdimethyl
Bis(2-(5'-ethyl-2'-thiophen)-4-(4-ethyl-phenyl-indenyl)zirkoniumdimethyl
Bis(2-(5'-ethyl-2'-thiophen)-4-(4-trifluormethyl-phenyl-indenyl) zirkoniumdimethyl
Bis(2-(5'-ethyl-2'-thiophen)-4-(4-methoxy-phenyl-indenyl) zirkoniumdimethyl
Bis(2-(5'-ethyl-2'-thiophen)-4-(4'-tert.-butyl-phenyl)-indenyl) zirkoniumdichlorid
Bis(2-(5'-ethyl-2'-thiophen)-4-(4'-tert.-butyl-phenyl)-indenyl) hafnuimdichlorid
Bis(2-(5'-ethyl-2'-thiophen)-4-(4'-tert.-butyl-phenyl)-indenyl) titandichlorid
Bis(2-(5'-ethyl-2'-thiophen)-4-(4'-methyl-phenyl)-indenyl)zirkoniumdichlorid
Bis(2-(5'-ethyl-2'-thiophen)-4-(4'-ethyl-phenyl)-indenyl) zirkoniumdichlorid
Bis(2-(5'-ethyl-2'-thiophen)-4-(4'-n-propyl-phenyl)-indenyl) zirkoniumdichlorid
Bis(2-(5'-ethyl-2'-thiophen)-4-(4'-iso-propyl-phenyl)-indenyl) zirkoniumdichlorid
Bis(2-(5'-ethyl-2'-thiophen)-4-(4'-n-butyl-phenyl)-indenyl) zirkoniumdichlorid
Bis(2-(5'-ethyl-2'-thiophen)-4-(4'-hexyl-phenyl)-indenyl) zirkoniumdichlorid
Bis(2-(5'-ethyl-2'-thiophen)-4-(4'-sec-butyl-phenyl)-indenyl) zirkoniumdichlorid
Bis(2-(5'-ethyl-2'-thiophen)-4-(4'-trimethylsilyl-phenyl)-indenyl)zirkoniumdichlorid
Bis(2-(5'-ethyl-2'-N-methylpyrrol)-indenyl)zirkoniumdichlorid,
Bis(2-(5'-ethyl-2'-N-methylpyrrol)-(4,5-benzoindenyl))hafniumdichlorid,
Bis(2-(5'-ethyl-2'-N-methylpyrrol)-(4-isopropyl)indenyl) zirkoniumdichlorid,
Bis(2-(5'-ethyl-2'-N-methylpyrrol)-benzo-indenyl)zirkoniumdichlorid
Bis(2-(5'-ethyl-2'-N-methylpyrrol)-4-(1-naphthyl)-indenyl) zirkoniumdichlorid
Bis(2-(5'-ethyl-2'-N-methylpyrrol)-4-(2-naphthyl)-indenyl) zirkoniumdichlorid
Bis(2-(5'-ethyl-2'-N-methylpyrrol)-4-phenyl-indenyl)zirkoniumdichlorid
Bis(2-(5'-ethyl-2'-N-methylpyrrol)-4-t-butyl-indenyl)zirkoniumdichlorid
Bis(2-(5'-ethyl-2'-N-methylpyrrol)-4-isopropyl-indenyl)zirkoniumdichlorid
Bis(2-(5'-ethyl-2'-N-methylpyrrol)-4-ethyl-indenyl)zirkoniumdichlorid
Bis(2-(5'-ethyl-2'-N-methylpyrrol)-4- -acenaphth-indenyl) zirkoniumdichlorid
Bis(2-(5'-ethyl-2'-N-methylpyrrol)-4-dimethyl-indenyl)zirkoniumdichlorid
Bis(2-(5'-ethyl-2'-N-methylpyrrol)-4-(tert-butyl-phenyl-indenyl)-zirkoniumdichlorid
Bis(2-(5'-ethyl-2'-N-methylpyrrol)-4-(4-methyl-phenyl-indenyl) zirkoniumdichlorid
Bis(2-(5'-ethyl-2'-N-methylpyrrol)-4-(4-ethyl-phenyl-indenyl) zirkoniumdichlorid
Bis(2-(5'-ethyl-2'-N-methylpyrrol)-4-(4-trifluormethyl-phenylindenyl)zirkoniumdichlorid
Bis(2-(5'-ethyl-2'-N-methylpyrrol)-4-(4-methoxy-phenyl-indenyl) zirkoniumdichlorid
Bis(2-(5'-ethyl-2'-N-methylpyrrol)-4-(4-tert-butyl-phenylindenyl)zirkoniumdimethyl
Bis(2-(5'-ethyl-2'-N-methylpyrrol)-4-(4-methyl-phenyl-indenyl) zirkoniumdimethyl
Bis(2-(5'-ethyl-2'-N-methylpyrrol)-4-(4-ethyl-phenyl-indenyl) zirkoniumdimethyl
Bis(2-(5'-ethyl-2'-N-methylpyrrol)-4-(4-trifluormethyl-phenylindenyl)zirkoniumdimethyl
Bis(2-(5'-ethyl-2'-N-methylpyrrol)-4-(4-methoxy-phenyl-indenyl) zirkoniumdimethyl
Bis(2-(5'-ethyl-2'-N-methylpyrrol)-4-(4'-tert.-butyl-phenyl)-indenyl)zirkoniumdichlorid
Bis(2-(5'-ethyl-2'-N-methylpyrrol)-4-(4'-tert.-butyl-phenyl)-indenyl)hafnuimdichlorid
Bis(2-(5'-ethyl-2'-N-methylpyrrol)-4-(4'-tert.-butyl-phenyl)-indenyl)titandichlorid
Bis(2-(5'-ethyl-2'-N-methylpyrrol)-4-(4'-methyl-phenyl)-indenyl) zirkoniumdichlorid
Bis(2-(5'-ethyl-2'-N-methylpyrrol)-4-(4'-ethyl-phenyl)-indenyl) zirkoniumdichlorid
Bis(2-(5'-ethyl-2'-N-methylpyrrol)-4-(4'-n-propyl-phenyl)-indenyl)zirkoniumdichlorid
Bis(2-(5'-ethyl-2'-N-methylpyrrol)-4-(4'-iso-propyl-phenyl)-indenyl)zirkoniumdichlorid
Bis(2-(5'-ethyl-2'-N-methylpyrrol)-4-(4'-n-butyl-phenyl)-indenyl) zirkoniumdichlorid
Bis(2-(5'-ethyl-2'-N-methylpyrrol)-4-(4'-hexyl-phenyl)-indenyl) zirkoniumdichlorid
Bis(2-(5'-ethyl-2'-N-methylpyrrol)-4-(4'-sec-butyl-phenyl)-indenyl)zirkoniumdichlorid
Bis(2-(5'-ethyl-2'-N-methylpyrrol)-4-(4'-trimethylsilyl-phenyl)-indenyl)zirkoniumdichlorid
Bis(2-(5'-propyl-2'-furyl)-indenyl)zirkoniumdichlorid,
Bis(2-(5'-propyl-2'-furyl)-(4,5-benzoindenyl))hafniumdichlorid,
Bis(2-(5'-propyl-2'-furyl)-(4-isopropyl)indenyl)zirkoniumdichlorid,
Bis(2-(5'-propyl-2'-furyl)-benzo-indenyl)zirkoniumdichlorid
Bis(2-(5'-propyl-2'-furyl)-4-(1-naphthyl)-indenyl)zirkoniumdichlorid
Bis(2-(5'-propyl-2'-furyl)-4-(2-naphthyl)-indenyl)zirkoniumdichlorid
Bis(2-(5'-propyl-2'-furyl)-4-phenyl-indenyl)zirkoniumdichlorid
Bis(2-(5'-propyl-2'-furyl)-4-t-butyl-indenyl)zirkoniumdichlorid
Bis(2-(5'-propyl-2'-furyl)-4-isopropyl-indenyl)zirkoniumdichlorid
Bis(2-(5'-propyl-2'-furyl)-4-ethyl-indenyl)zirkoniumdichlorid
Bis(2-(5'-propyl-2'-furyl)-4- -acenaphth-indenyl)zirkoniumdichlorid
Bis(2-(5'-propyl-2'-furyl)-4-dimethyl-indenyl)zirkoniumdichlorid
Bie(2-(5'-propyl-2'-furyl)-4-(tert-butyl-phenyl-indenyl)-zirkoniumdichlorid
Bis(2-(5'-propyl-2'-furyl)-4-(4-methyl-phenyl-indenyl)zirkoniumdichlorid
Bis(2-(5'-propyl-2'-furyl)-4-(4-ethyl-phenyl-indenyl)zirkoniumdichlorid
Bis(2-(5'-propyl-2'-furyl)-4-(4-trifluormethyl-phenyl-indenyl) zirkoniumdichlorid
Bis(2-(5'-propyl-2'-furyl)-4-(4-methoxy-phenyl-indenyl)zirkoniumdichlorid
Bis(2-(5'-propyl-2'-furyl)-4-(4-tert-butyl-phenyl-indenyl) zirkoniumdimethyl
Bis(2-(5'-propyl-2'-furyl)-4-(4-methyl-phenyl-indenyl)zirkoniumdimethyl
Bis(2-(5'-propyl-2'-furyl)-4-(4-ethyl-phenyl-indenyl)zirkoniumdimethyl
Bis(2-(5'-propyl-2'-furyl)-4-(4-trifluormethyl-phenyl-indenyl) zirkoniumdimethyl
Bis(2-(5'-propyl-2'-furyl)-4-(4-methoxy-phenyl-indenyl)zirkoniumdimethyl
Bis(2-(5'-propyl-2'-furyl)-4-(4'-tert.-butyl-phenyl)-indenyl) zirkoniumdichlorid
Bis(2-(5'-propyl-2'-furyl)-4-(4'-tert.-butyl-phenyl)-indenyl) hafnuimdichlorid
Bis(2-(5'-propyl-2'-furyl)-4-(4'-tert.-butyl-phenyl)-indenyl) titandichlorid
Bis(2-(5'-propyl-2'-furyl)-4-(4'-methyl-phenyl)-indenyl)zirkoniumdichlorid
Bis(2-(5'-propyl-2'-furyl)-4-(4'-ethyl-phenyl)-indenyl)zirkoniumdichlorid
Bis(2-(5'-propyl-2'-furyl)-4-(4'-n-propyl-phenyl)-indenyl) zirkoniumdichlorid
Bis(2-(5'-propyl-2'-furyl)-4-(4'-iso-propyl-phenyl)-indenyl) zirkoniumdichlorid
Bis(2-(5'-propyl-2'-furyl)-4-(4'-n-butyl-phenyl)-indenyl) zirkoniumdichlorid
Bis(2-(5'-propyl-2'-furyl)-4-(4'-hexyl-phenyl)-indenyl) zirkoniumdichlorid
Bis(2-(5'-propyl-2'-furyl)-4-(4'-sec-butyl-phenyl)-indenyl) zirkoniumdichlorid
Bis(2-(5'-propyl-2'-furyl)-4-(4'-trimethylsilyl-phenyl)-indenyl)zirkoniumdichlorid
Bis(2-(5'-propyl-2'-thiophen)-indenyl)zirkoniumdichlorid,
Bis(2-(5'-propyl-2'-thiophen)-(4,5-benzoindenyl))hafniumdichlorid,
Bis(2-(5'-propyl-2'-thiophen)-(4-isopropyl)indenyl)zirkoniumdichlorid,
Bis(2-(5'-propyl-2'-thiophen)-benzo-indenyl)zirkoniumdichlorid
Bis(2-(5'-propyl-2'-thiophen)-4-(1-naphthyl)-indenyl)zirkoniumdichlorid
Bis(2-(5'-propyl-2'-thiophen)-4-(2-naphthyl)-indenyl)zirkoniumdichlorid
Bis(2-(5'-propyl-2'-thiophen)-4-phenyl-indenyl)zirkoniumdichlorid
Bis(2-(5'-propyl-2'-thiophen)-4-t-butyl-indenyl)zirkoniumdichlorid
Bis(2-(5'-propyl-2'-thiophen)-4-isopropyl-indenyl)zirkoniumdichlorid
Bis(2-(5'-propyl-2'-thiophen)-4-ethyl-indenyl)zirkoniumdichlorid
Bis(2-(5'-propyl-2'-thiophen)-4- -acenaphth-indenyl) zirkoniumdichlorid
Bis(2-(5'-propyl-2'-thiophen)-4-dimethyl-indenyl)zirkoniumdichlorid
Bis(2-(5'-propyl-2'-thiophen)-4-(tert-butyl-phenyl-indenyl)zirkoniumdichlorid
Bis(2-(5'-propyl-2'-thiophen)-4-(4-methyl-phenyl-indenyl) zirkoniumdichlorid
Bis(2-(5'-propyl-2'-thiophen)-4-(4-ethyl-phenyl-indenyl) zirkoniumdichlorid
Bis(2-(5'-propyl-2'-thiophen)-4-(4-trifluormethyl-phenylindenyl)zirkoniumdichlorid
Bis(2-(5'-propyl-2'-thiophen)-4-(4-methoxy-phenyl-indenyl) zirkoniumdichlorid
Bis(2-(5'-propyl-2'-thiophen)-4-(4-tert-butyl-phenyl-indenyl) zirkoniumdimethyl
Bis(2-(5'-propyl-2'-thiophen)-4-(4-methyl-phenyl-indenyl) zirkoniumdimethyl
Bis(2-(5'-propyl-2'-thiophen)-4-(4-ethyl-phenyl-indenyl) zirkoniumdimethyl
Bis(2-(5'-propyl-2'-thiophen)-4-(4-trifluormethyl-phenyl-indenyl) zirkoniumdimethyl
Bis(2-(5'-propyl-2'-thiophen)-4-(4-methoxy-phenyl-indenyl) zirkoniumdimethyl
Bis(2-(5'-propyl-2'-thiophen)-4-(4'-tert.-butyl-phenyl)-indenyl) zirkoniumdichlorid
Bis(2-(5'-propyl-2'-thiophen)-4-(4'-tert.-butyl-phenyl)-indenyl) hafnuimdichlorid
Bis(2-(5'-propyl-2'-thiophen)-4-(4'-tert.-butyl-phenyl)-indenyl) titandichlorid
Bis(2-(5'-propyl-2'-thiophen)-4-(4'-methyl-phenyl)-indenyl) zirkoniumdichlorid
Bis(2-(5'-propyl-2'-thiophen)-4-(4'-ethyl-phenyl)-indenyl) zirkoniumdichlorid
Bis(2-(5'-propyl-2'-thiophen)-4-(4'-n-propyl-phenyl)-indenyl) zirkoniumdichlorid
Bis(2-(5'-propyl-2'-thiophen)-4-(4'-iso-propyl-phenyl)-indenyl) zirkoniumdichlorid
Bis(2-(5'-propyl-2'-thiophen)-4-(4'-n-butyl-phenyl)-indenyl) zirkoniumdichlorid
Bis(2-(5'-propyl-2'-thiophen)-4-(4'-hexyl-phenyl)-indenyl) zirkoniumdichlorid
Bis(2-(5'-propyl-2'-thiophen)-4-(4'-sec-butyl-phenyl)-indenyl) zirkoniumdichlorid
Bis(2-(5'-propyl-2'-thiophen)-4-(4'-trimethylsilyl-phenyl)-indenyl)zirkoniumdichlorid
Bis(2-(5'-propyl-2'-N-methylpyrrol)-indenyl)zirkoniumdichlorid,
Bis(2-(5'-propyl-2'-N-methylpyrrol)-(4,5-benzoindenyl))hafniumdichlorid,
Bis(2-(5'-propyl-2'-N-methylpyrrol)-(4-isopropyl)indenyl) zirkoniumdichlorid,
Bis(2-(5'-propyl-2'-N-methylpyrrol)-benzo-indenyl)zirkoniumdichlorid
Bis(2-(5'-propyl-2'-N-methylpyrrol)-4-(1-naphthyl)-indenyl) zirkoniumdichlorid
Bis(2-(5'-propyl-2'-N-methylpyrrol)-4-(2-naphthyl)-indenyl) zirkoniumdichlorid
Bis(2-(5'-propyl-2'-N-methylpyrrol)-4-phenyl-indenyl)zirkoniumdichlorid
Bis(2-(5'-propyl-2'-N-methylpyrrol)-4-t-butyl-indenyl)zirkoniumdichlorid
Bis(2-(5'-propyl-2'-N-methylpyrrol)-4-isopropyl-indenyl) zirkoniumdichlorid
Bis(2-(5'-propyl-2'-N-methylpyrrol)-4-ethyl-indenyl)zirkoniumdichlorid
Bis(2-(5'-propyl-2'-N-methylpyrrol)-4- -acenaphth-indenyl) zirkoniumdichlorid
Bis(2-(5'-propyl-2'-N-methylpyrrol)-4-dimethyl-indenyl)zirkoniumdichlorid
Bis(2-(5'-propyl-2'-N-methylpyrrol)-4-(tert-butyl-phenylindenyl)-zirkoniumdichlorid
Bis(2-(5'-propyl-2'-N-methylpyrrol)-4-(4-methyl-phenyl-indenyl) zirkoniumdichlorid
Bis(2-(5'-propyl-2'-N-methylpyrrol)-4-(4-ethyl-phenyl-indenyl) zirkoniumdichlorid
Bis(2-(5'-propyl-2'-N-methylpyrrol)-4-(4-trifluormethyl-phenylindenyl)zirkoniumdichlorid
Bis(2-(5'-propyl-2'-N-methylpyrrol)-4-(4-methoxy-phenyl-indenyl) zirkoniumdichlorid
Bis(2-(5'-propyl-2'-N-methylpyrrol)-4-(4-tert-butyl-phenylindenyl)zirkoniumdimethyl
Bis(2-(5'-propyl-2'-N-methylpyrrol)-4-(4-methyl-phenyl-indenyl) zirkoniumdimethyl
Bis(2-(5'-propyl-2'-N-methylpyrrol)-4-(4-ethyl-phenyl-indenyl) zirkoniumdimethyl
Bis(2-(5'-propyl-2'-N-methylpyrrol)-4-(4-trifluormethyl-phenyl-indenyl)zirkoniumdimethyl
Bis(2-(5'-propyl-2'-N-methylpyrrol)-4-(4-methoxy-phenyl-indenyl) zirkoniumdimethyl
Bis(2-(5'-propyl-2'-N-methylpyrrol)-4-(4'-tert.-butyl-phenyl)-indenyl)zirkoniumdichlorid
Bis(2-(5'-propyl-2'-N-methylpyrrol)-4-(4'-tert.-butyl-phenyl)-indenyl)hafnuimdichlorid
Bis(2-(5'-propyl-2'-N-methylpyrrol)-4-(4'-tert.-butyl-phenyl)-indenyl)titandichlorid
Bis(2-(5'-propyl-2'-N-methylpyrrol)-4-(4'-methyl-phenyl)-indenyl)zirkoniumdichlorid
Bis(2-(5'-propyl-2'-N-methylpyrrol)-4-(4'-ethyl-phenyl)-indenyl)zirkoniumdichlorid
Bis(2-(5'-propyl-2'-N-methylpyrrol)-4-(4'-n-propyl-phenyl)-indenyl)zirkoniumdichlorid
Bis(2-(5'-propyl-2'-N-methylpyrrol)-4-(4'-iso-propyl-phenyl)-indenyl)zirkoniumdichlorid
Bis(2-(5'-propyl-2'-N-methylpyrrol)-4-(4'-n-butyl-phenyl)-indenyl)zirkoniumdichlorid
Bis(2-(5'-propyl-2'-N-methylpyrrol)-4-(4'-hexyl-phenyl)-indenyl)zirkoniumdichlorid
Bis(2-(5'-propyl-2'-N-methylpyrrol)-4-(4'-sec-butyl-phenyl)-indenyl)zirkoniumdichlorid
Bis(2-(5'-propyl-2'-N-methylpyrrol)-4-(4'-trimethylsilyl-phenyl)-indenyl)zirkoniumdichlorid
Bis(2-(5'-phenyl-2'-furyl)-indenyl)zirkoniumdichlorid,
Bis(2-(5'-phenyl-2'-furyl)-(4,5-benzoindenyl))hafniumdichlorid,
Bis(2-(5'-phenyl-2'-furyl)-(4-isopropyl)indenyl)zirkoniumdichlorid,
Bis(2-(5'-phenyl-2'-furyl)-benzo-indenyl)zirkoniumdichlorid
Bis(2-(5'-phenyl-2'-furyl)-4-(1-naphthyl)-indenyl)zirkoniumdichlorid
Bis(2-(5'-phenyl-2'-furyl)-4-(2-naphthyl)-indenyl)zirkoniumdichlorid
Bis(2-(5'-pheayl-2'-furyl)-4-phenyl-indenyl)zirkoniumdichlorid
Bis(2-(5'-phenyl-2'-furyl)-4-t-butyl-indenyl)zirkoniumdichlorid
Bis(2-(5'-phenyl-2'-furyl)-4-isopropyl-indenyl)zirkoniumdichlorid
Bis(2-(5'-phenyl-2'-furyl)-4-ethyl-indenyl)zirkoniumdichlorid
Bis(2-(5'-phenyl-2'-furyl)-4- -acenaphth-indenyl)zirkoniumdichlorid
Bis(2-(5'-phenyl-2'-furyl)-4-dimethyl-indenyl)zirkoniumdichlorid
Bis(2-(5'-phenyl-2'-furyl)-4-(tert-butyl-phenyl-indenyl)-zirkoniumdichlorid
Bis(2-(5'-phenyl-2'-furyl)-4-(4-methyl-phenyl-indenyl)zirkoniumdichlorid
Bis(2-(5'-phenyl-2'-furyl)-4-(4-ethyl-phenyl-indenyl)zirkoniumdichlorid
Bis(2-(5'-phenyl-2'-furyl)-4-(4-trifluormethyl-phenyl-indenyl) zirkoniumdichlorid
Bis(2-(5'-phenyl-2'-furyl)-4-(4-methoxy-phenyl-indenyl)zirkoniumdichlorid
Bis(2-(5'-phenyl-2'-furyl)-4-(4-tert-butyl-phenyl-indenyl) zirkoniumdimethyl
Bis(2-(5'-phenyl-2'-furyl)-4-(4-methyl-phenyl-indenyl)zirkoniumdimethyl
Bis(2-(5'-phenyl-2'-furyl)-4-(4-ethyl-phenyl-indenyl)zirkonium dimethyl
Bis(2-(5'-phenyl-2'-furyl)-4-(4-trifluormethyl-phenyl-indenyl) zirkoniumdimethyl
Bis(2-(5'-phenyl-2'-furyl)-4-(4-methoxy-phenyl-indenyl)zirkoniumdimethyl
Bis(2-(5'-phenyl-2'-furyl)-4-(4'-tert.-butyl-phenyl)-indenyl) zirkoniumdichlorid
Bis(2-(5'-phenyl-2'-furyl)-4-(4'-tert.-butyl-phenyl)-indenyl) hafnuimdichlorid
Bis(2-(5'-phenyl-2'-furyl)-4-(4'-tert.-butyl-phenyl)-indenyl) titandichlorid
Bis(2-(5'-phenyl-2'-furyl)-4-(4'-methyl-phenyl)-indenyl) zirkoniumdichlorid
Bis(2-(5'-phenyl-2'-furyl)-4-(4'-ethyl-phenyl)-indenyl)zirkoniumdichlorid
Bis(2-(5'-phenyl-2'-furyl)-4-(4'-n-propyl-phenyl)-indenyl) zirkoniumdichlorid
Bis(2-(5'-phenyl-2'-furyl)-4-(4'-iso-propyl-phenyl)-indenyl) zirkoniumdichlorid
Bis(2-(5'-phenyl-2'-furyl)-4-(4'-n-butyl-phenyl)-indenyl) zirkoniumdichlorid
Bis(2-(5'-phenyl-2'-furyl)-4-(4'-hexyl-phenyl)-indenyl)zirkoniumdichlorid
Bis(2-(5'-phenyl-2'-furyl)-4-(4'-sec-butyl-phenyl)-indenyl) zirkoniumdichlorid
Bis(2-(5'-phenyl-2'-furyl)-4-(4'-trimethylsilyl-phenyl)-indenyl) zirkoniumdichlorid
Bis(2-(5'-phenyl-2'-thiophen)-indenyl)zirkoniumdichlorid,
Bis(2-(5'-phenyl-2'-thiophen)-(4,5-benzoindenyl))hafniumdichlorid,
Bis(2-(5'-phenyl-2'-thiophen)-(4-isopropyl)indenyl)zirkoniumdichlorid,
Bis(2-(5'-phenyl-2'-thiophen)-benzo-indenyl)zirkoniumdichlorid
Bis(2-(5'-phenyl-2'-thiophen)-4-(1-naphthyl)-indenyl)zirkoniumdichlorid
Bis(2-(5'-phenyl-2'-thiophen)-4-(2-naphthyl)-indenyl)zirkoniumdichlorid
Bis(2-(5'-phenyl-2'-thiophen)-4-phenyl-indenyl)zirkoniumdichlorid
Bis(2-(5'-phenyl-2'-thiophen)-4-t-butyl-indenyl)zirkoniumdichlorid
Bis(2-(5'-phenyl-2'-thiophen)-4-isopropyl-indenyl)zirkoniumdichlorid
Bis(2-(5'-phenyl-2'-thiophen)-4-ethyl-indenyl)zirkoniumdichlorid
Bis(2-(5'-ethyl-2'-thiophen)-4- -acenaphth-indenyl)zirkoniumdichlorid.
Bis(2-(5'-phenyl-2'-thiophen)-4-dimethyl-indenyl)zirkoniumdichlorid
Bis(2-(5'-phenyl-2'-thiophen)-4-(tert-butyl-phenyl-indenyl)zirkoniumdichlorid
Bis(2-(5'-phenyl-2'-thiophen)-4-(4-methyl-phenyl-indenyl) zirkoniumdichlorid
Bis(2-(5'-phenyl-2'-thiophen)-4-(4-ethyl-phenyl-indenyl) zirkoniumdichlorid
Bis(2-(5'-phenyl-2'-thiophen)-4-(4-trifluormethyl-phenyl-indenyl) zirkoniumdichlorid
Bis(2-(5'-phenyl-2'-thiophen)-4-(4-methoxy-phenyl-indenyl) zirkoniumdichlorid
Bis(2-(5'-phenyl-2'-thiophen)-4-(4-tert-butyl-phenyl-indenyl) zirkoniumdimethyl
Bis(2-(5'-phenyl-2'-thiophen)-4-(4-methyl-phenyl-indenyl) zirkoniumdimethyl
Bis(2-(5'-phenyl-2'-thiophen)-4-(4-ethyl-phenyl-indenyl) zirkoniumdimethyl
Bis(2-(5'-phenyl-2'-thiophen)-4-(4-trifluormethyl-phenylindenyl)zirkoniumdimethyl
Bis(2-(5'-phenyl-2'-thiophen)-4-(4-methoxy-phenyl-indenyl) zirkoniumdimethyl
Bis(2-(5'-phenyl-2'-thiophen)-4-(4'-tert.-butyl-phenyl)-indenyl)zirkoniumdichlorid
Bis(2-(5'-phenyl-2'-thiophen)-4-(4'-tert.-butyl-phenyl)-indenyl)hafnuimdichlorid
Bis(2-(5'-phenyl-2'-thiophen)-4-(4'-tert.-butyl-phenyl)-indenyl)titandichlorid
Bis(2-(5'-phenyl-2'-thiophen)-4-(4'-methyl-phenyl)-indenyl) zirkoniumdichlorid
Bis(2-(5'-phenyl-2'-thiophen)-4-(4'-ethyl-phenyl)-indenyl) zirkoniumdichlorid
Bis(2-(5'-phenyl-2'-thiophen)-4-(4'-n-propyl-phenyl)-indenyl) zirkoniumdichlorid
Bis(2-(5'-phenyl-2'-thiophen)-4-(4'-iso-propyl-phenyl)-indenyl)zirkoniumdichlorid
Bis(2-(5'-phenyl-2'-thiophen)-4-(4'-n-butyl-phenyl)-indenyl) zirkoniumdichlorid
Bis(2-(5'-phenyl-2'-thiophen)-4-(4'-hexyl-phenyl)-indenyl) zirkoniumdichlorid
Bis(2-(5'-phenyl-2'-thiophen)-4-(4'-sec-butyl-phenyl)-indenyl) zirkoniumdichlorid
Bis(2-(5'-phenyl-2'-thiophen)-4-(4'-trimethylsilyl-phenyl)-indenyl)zirkoniumdichlorid
Bis(2-(5'-phenyl-2'-N-methylpyrrol)-indenyl)zirkoniumdichlorid,
Bis(2-(5'-phenyl-2'-N-methylpyrrol)-(4,5-benzoindenyl))hafniumdichlorid,
Bis(2-(5'-phenyl-2'-N-methylpyrrol)-(4-isopropyl)indenyl) zirkoniumdichlorid,
Bis(2-(5'-phenyl-2'-N-methylpyrrol)-benzo-indenyl)zirkoniumdichlorid
Bis(2-(5'-phenyl-2'-N-methylpyrrol)-4-(1-naphthyl)-indenyl) zirkoniumdichlorid
Bis(2-(5'-phenyl-2'-N-methylpyrrol)-4-(2-naphthyl)-indenyl) zirkoniumdichlorid
Bis(2-(5'-phenyl-2'-N-methylpyrrol)-4-phenyl-indenyl)zirkoniumdichlorid
Bis(2-(5'-phenyl-2'-N-methylpyrrol)-4-t-butyl-indenyl)zirkoniumdichlorid
Bis(2-(5'-phenyl-2'-N-methylpyrrol)-4-isopropyl-indenyl) zirkoniumdichlorid
Bis(2-(5'-phenyl-2'-N-methylpyrrol)-4-ethyl-indenyl)zirkoniumdichlorid
Bis(2-(5'-phenyl-2'-N-methylpyrrol)-4- -acenaphth-indenyl) zirkoniumdichlorid
Bis(2-(5'-phenyl-2'-N-methylpyrrol)-4-dimethyl-indenyl)zirkoniumdichlorid
Bis(2-(5'-phenyl-2'-N-methylpyrrol)-4-(tert-butyl-phenylindenyl)-zirkoniumdichlorid
Bis(2-(5'-phenyl-2'-N-methylpyrrol)-4-(4-methyl-phenylindenyl)zirkoniumdichlorid
Bis(2-(5'-phenyl-2'-N-methylpyrrol)-4-(4-ethyl-phenylindenyl)zirkoniumdichlorid
Bis(2-(5'-phenyl-2'-N-methylpyrrol)-4-(4-trifluormethyl-phenylindenyl)zirkoniumdichlorid
Bis(2-(5'-phenyl-2'-N-methylpyrrol)-4-(4-methoxy-phenylindenyl)zirkoniumdichlorid
Bis(2-(5'-phenyl-2'-N-methylpyrrol)-4-(4-tert-butyl-phenylindenyl)zirkoniumdimethyl
Bis(2-(5'-phenyl-2'-N-methylpyrrol)-4-(4-methyl-phenylindenyl)zirkoniumdimethyl
Bis(2-(5'-phenyl-2'-N-methylpyrrol)-4-(4-ethyl-phenylindenyl)zirkoniumdimethyl
Bis(2-(5'-phenyl-2'-N-methylpyrrol)-4-(4-trifluormethyl-phenylindenyl)zirkoniumdimethyl
Bis(2-(5'-phenyl-2'-N-methylpyrrol)-4-(4-methoxy-phenyl-indenyl) zirkoniumdimethyl
Bis(2-(5'-phenyl-2'-N-methylpyrrol)-4-(4'-tert.-butyl-phenyl)-indenyl)zirkoniumdichlorid
Bis(2-(5'-phenyl-2'-N-methylpyrrol)-4-(4'-tert.-butyl-phenyl)-indenyl)hafnuimdichlorid
Bis(2-(5'-phenyl-2'-N-methylpyrrol)-4-(4'-tert.-butyl-phenyl)-indenyl)titandichlorid
Bis(2-(5'-phenyl-2'-N-methylpyrrol)-4-(4'-methyl-phenyl)-indenyl)zirkoniumdichlorid
Bis(2-(5'-phenyl-2'-N-methylpyrrol)-4-(4'-ethyl-phenyl)-indenyl)zirkoniumdichlorid
Bis(2-(5'-phenyl-2'-N-methylpyrrol)-4-(4'-n-propyl-phenyl)-indenyl)zirkoniumdichlorid
Bis(2-(5'-phenyl-2'-N-methylpyrrol)-4-(4'-iso-propyl-phenyl)-indenyl)zirkoniumdichlorid
Bis(2-(5'-phenyl-2'-N-methylpyrrol)-4-(4'-n-butyl-phenyl)-indenyl)zirkoniumdichlorid
Bis(2-(5'-phenyl-2'-N-methylpyrrol)-4-(4'-hexyl-phenyl)-indenyl)zirkoniumdichlorid
Bis(2-(5'-phenyl-2'-N-methylpyrrol)-4-(4'-sec-butyl-phenyl)-indenyl)zirkoniumdichlorid
Bis(2-(5'-phenyl-2'-N-methylpyrrol)-4-(4'-trimethylsilylphenyl)-indenyl)zirkoniumdichlorid
Bis(2-(2'-pyridyl)-indenyl)zirkoniumdichlorid,
Bis(2-(2'-pyridyl)-(4,5-benzoindenyl))hafniumdichlorid,
Bis(2-(2'-pyridyl)-(4-isopropyl)indenyl)zirkoniumdichlorid,
Bis(2-(2'-pyridyl)-benzo-indenyl)zirkoniumdichlorid
Bis(2-(2'-pyridyl)-4-(1-naphthyl)-indenyl)zirkoniumdichlorid
Bis(2-(2'-pyridyl)-4-(2-naphthyl)-indenyl)zirkoniumdichlorid
Bis(2-(2'-pyridyl)-4-phenyl-indenyl)zirkoniumdichlorid
Bis(2-(2'-pyridyl)-4-t-butyl-indenyl)zirkoniumdichlorid
Bis(2-(2'-pyridyl)-4-isopropyl-indenyl)zirkoniumdichlorid
Bis(2-(2'-pyridyl)-4-ethyl-indenyl)zirkoniumdichlorid
Bis(2-(2'-pyridyl)-4- -acenaphth-indenyl)zirkoniumdichlorid
Bis(2-(2'-pyridyl)-4-dimethyl-indenyl)zirkoniumdichlorid
Bis(2-(2'-pyridyl)-4-(tert-butyl-phenyl-indenyl)-zirkoniumdichlorid
Bis(2-(2'-pyridyl)-4-(4-methyl-phenyl-indenyl)zirkoniumdichlorid
Bis(2-(2'-pyridyl)-4-(4-ethyl-phenyl-indenyl)zirkoniumdichlorid
Bis(2-(2'-pyridyl)-4-(4-trifluormethyl-phenyl-indenyl)zirkoniumdichlorid
Bis(2-(2'-pyridyl)-4-(4-methoxy-phenyl-indenyl)zirkoniumdichlorid
Bis(2-(2'-pyridyl)-4-(4-tert-butyl-phenyl-indenyl)zirkoniumdimethyl
Bis(2-(2'-pyridyl)-4-(4-methyl-phenyl-indenyl)zirkoniumdimethyl
Bis(2-(2'-pyridyl)-4-(4-ethyl-phenyl-indenyl)zirkoniumdimethyl
Bis(2-(2'-pyridyl)-4-(4-trifluortaethyl-phenyl-indenyl)zirkoniumdimethyl
Bis(2-(2'-pyridyl)-4-(4-methoxy-phenyl-indenyl)zirkoniumdimethyl
Bis(2-(2'-pyridyl)-4-(4'-tert.-butyl-phenyl)-indenyl)zirkoniumdichlorid
Bis(2-(2'-pyridyl)-4-(4'-tert.-butyl-phenyl)-indenyl)hafnuimdichlorid
Bis(2-(2'-pyridyl)-4-(4'-tert.-butyl-phenyl)-indenyl)titandichlorid
Bis(2-(2'-pyridyl)-4-(4'-methyl-phenyl)-indenyl)zirkoniumdichlorid
Bis(2-(2'-pyridyl)-4-(4'-ethyl-phenyl)-indenyl)zirkoniumdichlorid
Bis(2-(2'-pyridyl)-4-(4'-n-propyl-phenyl)-indenyl)zirkoniumdichlorid
Bis(2-(2'-pyridyl)-4-(4'-iso-propyl-phenyl)-indenyl)zirkoniumdichlorid
Bis(2-(2'-pyridyl)-4-(4'-n-butyl-phenyl)-indenyl)zirkoniumdichlorid
Bis(2-(2'-pyridyl)-4-(4'-hexyl-phenyl)-indenyl)zirkoniumdichlorid
Bis(2-(2'-pyridyl)-4-(4'-sec-butyl-phenyl)-indenyl)zirkoniumdichlorid
Bis(2-(2'-pyridyl)-4-(4'-trimethylsilyl-phenyl)-indenyl) zirkoniumdichlorid
Bis(2-(5'-methyl-2'-pyridyl)-indenyl)zirkoniumdichlorid,
Bis(2-(5'-methyl-2'-pyridyl)-(4,5-benzoindenyl))hafniumdichlorid,
Bis(2-(5'-methyl-2'-pyridyl)-(4-isopropyl)indenyl)zirkoniumdichlorid,
Bis(2-(5'-methyl-2'-pyridyl)-benzo-indenyl)zirkoniumdichlorid
Bis(2-(5'-methyl-2'-pyridyl)-4-(1-naphthyl)-indenyl)zirkoniumdichlorid
Bis(2-(5'-methyl-2'-pyridyl)-4-(2-naphthyl)-indenyl)zirkoniumdichlorid
Bis(2-(5'-methyl-2'-pyridyl)-4-phenyl-indenyl)zirkoniumdichlorid
Bis(2-(5'-methyl-2'-pyridyl)-4-t-butyl-indenyl)zirkoniumdichlorid
Bis(2-(5'-methyl-2'-pyridyl)-4-isopropyl-indenyl)zirkoniumdichlorid
Bis(2-(5'-methyl-2'-pyridyl)-4-ethyl-indenyl)zirkoniumdichlorid
Bis(2-(5'-methyl-2'-pyridyl)-4- -acenaphth-indenyl)zirkoniumdichlorid
Bis(2-(5'-methyl-2'-pyridyl)-4-dimethyl-indenyl)zirkoniumdichlorid
Bis(2-(5'-methyl-2'-pyridyl)-4-(tert-butyl-phenyl-indenyl)-zirkoniumdichlorid
Bis(2-(5'-methyl-2'-pyridyl)-4-(4-methyl-phenyl-indenyl)zirkonium dichlorid
Bis(2-(5'-methyl-2'-pyridyl)-4-(4-ethyl-phenyl-indenyl)zirkoniumdichlorid
Bis(2-(5'-methyl-2'-pyridyl)-4-(4-trifluormethyl-phenyl-indenyl) zirkoniumdichlorid
Bis(2-(5'-methyl-2'-pyridyl)-4-(4-methoxy-phenyl-indenyl) zirkoniumdichlorid
Bis(2-(5'-methyl-2'-pyridyl)-4-(4-tert-butyl-phenyl-indenyl) zirkoniumdimethyl
Bis(2-(5'-methyl-2'-pyridyl)-4-(4-methyl-phenyl-indenyl) zirkonium-dimethyl
Bis(2-(5'-methyl-2'-pyridyl)-4-(4-ethyl-phenyl-indenyl)zirkoniumdimethyl
Bis(2-(5'-methyl-2'-pyridyl)-4-(4-trifluormethyl-phenyl-indenyl) zirkoniumdimethyl
Bis(2-(5'-methyl-2'-pyridyl)-4-(4-methoxy-phenyl-indenyl) zirkoniumdimethyl
Bis(2-(5'-methyl-2'-pyridyl)-4-(4'-tert.-butyl-phenyl)-indenyl) zirkoniumdichlorid
Bis(2-(5'-methyl-2'-pyridyl)-4-(4'-tert.-butyl-phenyl)-indenyl) hafnuimdichlorid
Bis(2-(5'-methyl-2'-pyridyl)-4-(4'-tert.-butyl-phenyl)-indenyl) titandichlorid
Bis(2-(5'-methyl-2'-pyridyl)-4-(4'-methyl-phenyl)-indenyl) zirkoniumdichlorid
Bis(2-(5'-methyl-2'-pyridyl)-4-(4'-ethyl-phenyl)-indenyl) zirkoniumdichlorid
Bis(2-(5'-methyl-2'-pyridyl)-4-(4'-n-propyl-phenyl)-indenyl) zirkoniumdichlorid
Bis(2-(5'-methyl-2'-pyridyl)-4-(4'-iso-propyl-phenyl)-indenyl) zirkoniumdichlorid
Bis(2-(5'-methyl-2'-pyridyl)-4-(4'-n-butyl-phenyl)-indenyl) zirkoniumdichlorid
Bis(2-(5'-methyl-2'-pyridyl)-4-(4'-hexyl-phenyl)-indenyl) zirkoniumdichlorid
Bis(2-(5'-methyl-2'-pyridyl)-4-(4'-sec-butyl-phenyl)-indenyl) zirkoniumdichlorid
Bis(2-(5'-methyl-2'-pyridyl)-4-(4'-trimethylsilyl-phenyl)-indenyl)zirkoniumdichlorid
Bis(1-(2'-pyridyl)-indenyl)zirkoniumdichlorid,
Bis(1-(2'-pyridyl)-(4,5-benzoindenyl))hafniumdichlorid,
Bis(1-(2'-pyridyl)-(4-isopropyl)indenyl)zirkoniumdichlorid,
Bis(1-(2'-pyridyl)-benzo-indenyl)zirkoniumdichlorid
Bis(1-(2'-pyridyl)-4-(1-naphthyl)-indenyl)zirkoniumdichlorid
Bis(1-(2'-pyridyl)-4-(2-naphthyl)-indenyl)zirkoniumdichlorid
Bis(1-(2'-pyridyl)-4-phenyl-indenyl)zirkoniumdichlorid
Bis(1-(2'-pyridyl)-4-t-butyl-indenyl)zirkoniumdichlorid
Bis(1-(2'-pyridyl)-4-isopropyl-indenyl)zirkoniumdichlorid
Bis(1-(2'-pyridyl)-4-ethyl-indenyl)zirkoniumdichlorid
Bis(1-(2'-pyridyl)-4--acenaphth-indenyl)zirkoniumdichlorid
Bis(1-(2'-pyridyl)-4-dimethyl-indenyl)zirkoniumdichlorid
Bis(1-(2'-pyridyl)-4-(tert-butyl-phenyl-indenyl)-zirkoniumdichlorid
Bis(1-(2'-pyridyl)-4-(4-methyl-phenyl-indenyl)zirkoniumdichlorid
Bis(1-(2'-pyridyl)-4-(4-ethyl-phenyl-indenyl)zirkoniumdichlorid
Bis(1-(2'-pyridyl)-4-(4-trifluormethyl-phenyl-indenyl)zirkoniumdichlorid
Bis(1-(2'-pyridyl)-4-(4-methoxy-phenyl-indenyl)zirkoniumdichlorid
Bis(1-(2'-pyridyl)-4-(4-tert-butyl-phenyl-indenyl)zirkoniumdimethyl
Bis(1-(2'-pyridyl)-4-(4-methyl-phenyl-indenyl)zirkoniumdimethyl
Bis(1-(2'-pyridyl)-4-(4-ethyl-phenyl-indenyl)zirkoniumdimethyl
Bis(1-(2'-pyridyl)-4-(4-trifluormethyl-phenyl-indenyl)zirkonlumdimethyl
Bis(1-(2'-pyridyl)-4-(4-methoxy-phenyl-indenyl)zirkoniumdimethyl
Bis(1-(2'-pyridyl)-4-(4'-tert.-butyl-phenyl)-indenyl)zirkoniumdichlorid
Bis(1-(2'-pyridyl)-4-(4'-tert.-butyl-phenyl)-indenyl)hafnuimdichlorid
Bis(1-(2'-pyridyl)-4-(4'-tert.-butyl-phenyl)-indenyl)titandichlorid
Bis(1-(2'-pyridyl)-4-(4'-methyl-phenyl)-indenyl)zirkoniumdichlorid
Bis(1-(2'-pyridyl)-4-(4'-ethyl-phenyl)-indenyl)zirkoniumdichlorid
Bis(1-(2'-pyridyl)-4-(4'-n-propyl-phenyl)-indenyl)zirkoniumdichlorid
Bis(1-(2'-pyridyl)-4-(4'-iso-propyl-phenyl)-indenyl)zirkoniumdichlorid
Bis(1-(2'-pyridyl)-4-(4'-n-butyl-phenyl)-indenyl)zirkoniumdichlorid
Bis(1-(2'-pyridyl)-4-(4'-hexyl-phenyl)-indenyl)zirkoniumdichlorid
Bis(1-(2'-pyridyl)-4-(4'-sec-butyl-phenyl)-indenyl)zirkoniumdichlorid
Bis(1-(2'-pyridyl)-4-(4'-trimethylsilyl-phenyl)-indenyl) zirkoniumdichlorid

Die erfindungsgemäßen Metallocene der Formel (II) sind hochaktive Katalysatorkomponenten für die Olefinpolymerisation. Je nach Substitutionsmuster der Liganden können die Metallocene als Isomerengemisch anfallen. Die Metallocene können für die Polymerisation isomerenrein eingesetzt werden. Es können aber auch die Isomerengemische eingestzt werden.

Die erfindungsgemäßen Metallocene der Formel (II) eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält. Unter dem Begriff Polymerisation wird ein Homopolymerisation wie auch eine Copolymerisation verstanden.

Die erfindungsgemäßen Metallocene der Formel (II) können zur Polymerisation eines oder mehrerer Olefine der Formel R^{a}-CH=CH-R^{b} verwendet werden, worin R^{a} und R^{b} gleich oder verschieden sind und ein Wasserstoffatom oder einen Kohlenwasserstoff mit 1 bis 20 C-Atomen, insbesondere 1 bis 10 C-Atomen, bedeuten, und R^{a} und R^{b} zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen. Bevorzugt werden Ethylen oder Propylen homopolymerisiert, oder Ethylen mit einem oder mehreren cyclischen Olefinen, wie Norbornen , und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/1,4-Heydien-Copolymere. Besonders bevorzugt ist die Polymerisation von Propylen zu Polymer mit ataktischem-isotaktischem Stereoblock mit elastomeren Eigenschaften.

Die Polymerisation wird bei einer Temperatur von - 60 bis 300 °C , bevorzugt 50 bis 200 °C, ganz besonders bevorzugt -20 - 50 °C durchgeführt. Der Druck beträgt 0,5 bis 2000 bar, bevorzugt 2 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungform ist die Gasphasen- und Lösungspolymerisation.

Bevorzugt enthält der eingesetzte Katalysator eine der erfindungsgemäßen Metallocenverbindungen. Es können auch Mischungen zweier oder mehrerer Metallocenverbindungen eingesetzt werden, z. B. zur Herstellung von Polyolefinen mit breiter oder multimodaler Molmassenverteilung.

Der Cokatalysator, der zusammen mit einem erfindungsgemäßen Metallocene der Formel (II) das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (III)

(R AlO)ₙ (III)

verwendet.

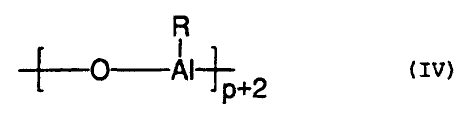

Weitere geeignete Aluminoxane können z.B. cyclisch wie in Formel (IV) oder linear wie in Formel (V) 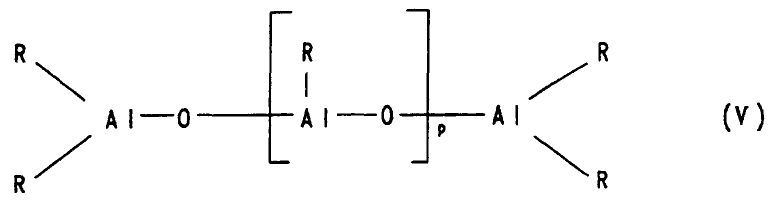 oder vom Cluster-Typ wie in Formel (VI) 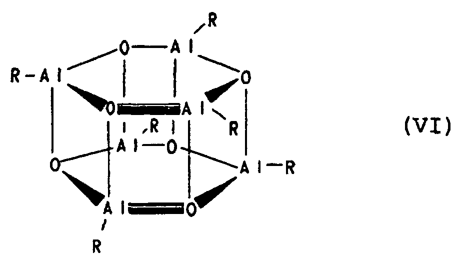 sein. Derartige Aluminoxane werden beispielsweise in JACS 117 (1995), 6465-74, Organometallics 13 (1994), 2957-2969, beschrieben.

Die Reste R in den Formeln (III), (IV), (V) und (VI) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,

Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis (pentafluorophenyl)borate, Tetraphenylborate, SbF₆⁻, CF₃SO₃⁻ oder ClO₄⁻. Als kationisches Gegenion werden Lewis-Basen wie z.B. Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl) aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.
Es können auch Gemische mindestens einer Lewis-Säure und mindestens einer ionischen Verbindung eingesetzt werden.
Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri (butyl)ammonium-1-carbadodecaborate,
Tri(butyl)ammonium-1-trimethylsilyl-1-carbadecaborate,
Tri(buyl)ammoniumbis(nonahydrid-1,3-dicarbonnonaborat) cobaltate(III),
Tri(butyl)ammoniumbis(undecahydrid-7,8-dicarbaundecaborat) ferrat(III)
von Bedeutung.

Bei heterogener Reaktionsführung kann die Trägerkomponente des erfindungsgemäßen Katalysatorsystems ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂ , TiO₂ oder B₂O₃ ,um nur einige zu nennen.

Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Das Katalysatorsystem wird erfindungsgemäß hergestellt, indem mindestens ein Metallocen als rac-meso-Isomerengemisch, mindestens ein Cokatalysator und mindestens ein inertisierter Träger gemischt werden.

Zur Darstellung des geträgerten Katalysatorsystems wird mindestens eine der oben beschriebenen Metallocen-Komponenten in einem geeigneten Lösemittel mit mindestens einer Cokatalysatorkomponente in Kontakt gebracht, wobei bevorzugt ein lösliches Reaktionsprodukt, ein Addukt oder ein Gemisch erhalten wird. Die so erhaltene Zubereitung wird dann mit dem dehydratisierten oder inertisierten Trägermaterial vermischt, das Lösemittel entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:
a) Herstellung einer Metallocen/Cokatalysator-Mischung in einem geeigneten Löse- oder Suspensionsmittel, wobei die Metallocen-Komponente eine der zuvor beschriebenen Strukturen besitzt.
b) Aufbringen der Metallocen/Cokatalysatormischung auf einen porösen, bevorzugt anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösemittel aufgelöst. Es ist auch möglich, das Metallocen getrennt in einem geeigneten Lösemittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Metallocen-Cokatalysator-Gemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist.

Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins bevorzugt eines α-Olefins (beispielsweise Styrol oder Phenyldimethylvinylsilan) als aktivitätssteigernde Komponente oder beispielsweise eines Antistatikums zugesetzt werden.

Als Antistatikum wird üblicherweise eine Mischung aus einem Metallsalz der Medialansäure, einem Metallsalz der Anthranilsäure und einem Polyamin eingesetzt. Derartige Antistatika werden beispielsweise in EP-A-0,636,636 beschrieben.

Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation einer oder mehrerer Olefine in Gegenwart des Katalysatorsystems, enthaltend mindestens eine Übergangsmetallkomponente der erfindungsgemäßen Metallocene der Formel (II). Unter dem Begriff Polymerisaton wird eine Homopolymerisation wie auch eine Copolymerisation verstanden.

Das dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Bei der Polymerisation kann das Antistatikum zusammen mit oder getrennt von dem eingesetzten Katalysatorsystem in das Polymerisationssystem eindosiert werden.

Die mit dem Katalysatorsystem, das mindestens eines der erfindungsgemäßen Metallocene enthält, dargestellten Polymere, zeigen eine gleichmäßige Kornmorphologie und weisen keine Feinkornanteile auf. Bei der Polymerisation mit dem Katalysatorsystem treten keine Beläge oder Verbackungen auf.

Mit dem Katalysatorsystem werden Polymere, wie Polypropylen mit außerordentlich hoher Stereo- und Regiospezifität erhalten, die aufgrund ihres ataktischen-isotaktischen Stereoblock-Anteils elastomere Eigenschaften besitzt.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luf t und Feuchtigkeit unter Argon-Schutzgas (Schlenk-Technik bzw. Glove-Box). Alle benötigten Lösemittel wurden vor Gebrauch mit Argon gespült und über Molsieb absolutiert.

### Beispiel 1: 1-(2'-Pyridyl)-indan-1-ol (1)

In einem Schlenkkolben werden 48.0 ml (81.0 mmol) einer 1.6 molaren n-Butyllithium-Lösung in n-Hexan vorgelegt. Man kühlt man auf -60°C und tropft 12.8 g (81.0mmol) 2-Brompyridin, in 50 ml Diethylether gelöst, langsam hinzu. Die Reaktionslösung wird 20 Minuten bei dieser Temperatur gerührt. Im Folgenden werden 10.0 g (81.0 mmol) 1-Indanon in 70 ml Diethylether gelöst und über einen Zeitraum von 20 Minuten zu der entstandenen Mischung getropft. Während der Reaktionszeit von zwei Stunden wird die Temperatur zwischen -40° und -60°C gehalten. Anschließend entfernt man das Kältebad und läßt auf Raumtemperatur erwärmen. Durch Zugabe von 50 ml gesättigter Ammoniumchlorid-Lösung wird hydrolysiert. Die wäßrige Phase wird je dreimal mit 50 ml Diethylether extrahiert, und die vereinigten Etherphasen werden über Magnesiumsulfat getrocknet. Das Lösungsmittel wird am Rotationsverdampfer eingeengt bis etwa 50 ml Lösung verbleiben, und das gewünschte Produkt kristallisiert über Nacht bei 8°C aus. Durch Umkristallisation aus Diethylether erhält man 12.4 g (58 mmol, 72 %) eines leicht gelben kristallinen Feststoffes. 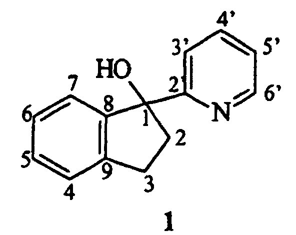 1H-NMR ([D₁-Chloroform, 599.9 MHz): δ (ppm) = 8.54 (ddd, 1H, 6'-H, 3*J* = 4.8 Hz, 4*J* = 1.2 Hz, 5*J* = 0.6 Hz) , 7.57 (ddd, 1H, 4'-H, 3*J* = 7.8 Hz, 3*J* = 7.8 Hz, 4*J* = 1.2 Hz), 7.31 (d, 1H, 7-H, 3*J* = 7.2 Hz), 7.26 (ddd, 1H, 6-H, 3*J* = 7.8 Hz, 3*J* = 7.2 Hz, 4*J* = 1.2 Hz), 7.16 (je m, je 1H, 5-H, 5'-H) 7.02 (dd, 1H, 4-H, 3*J* = 8.4 Hz, 4*J* = 1.2 Hz), 7.01 (dd, 1H, 3'-H, 3*J* = 7.8 Hz, 4*J* = 1.2 Hz), 5.94 (b, 1H, OH), 3.24, 3.03 (m, je 1H, 3-H), 2.52 (m, 2H, 2-H).

13C-NMR ([D₁]-Chloroform, 150.8 MHz): δ (ppm) = 164.2 (C, C-2'), 147.6 (C, C-9), 147.3 (CH, C-6'), 143.9 (C, C-8), 137.1 (CH, C-4'), 128.5 (CH, C-6), 127.2 (CH, C-5), 125.0 (CH, C-7), 124.2 (CH, C-4), 122.3 (CH, C-5'), 120.4 (CH, C-3'), 84.4 (C, C-1), 43.0 (CH₂, C-2) , 30.4 (CH₂, C-3) .

| | | | | |
|---|---|---|---|---|
| Schmelzpunkt | 80°C | | | |
| Elementaranalyse | ber.: | C: 79.59 % | H: 6.20 % | N: 6.63 % |
| C₁₄H₁₃NO | gef.: | C: 79.42 % | H: 6.27 % | N: 6.68 % |

### Beispiel 2: 3-(2'-Pyridyl)-inden (2)

Nach einer abgewandelten Literaturvorschrift (J. Chem. Soc. 1958, 325-337) werden 10.0 g (47.0 mmol) 1-(2'-Pyridyl)-indan-1-ol **(1)** bei 0°C tropfenweise mit 100 ml 85 prozentiger Schwefelsäure versetzt. Die entstehende tiefrote Lösung wird dann zwei Stunden bei 0°C gerührt und anschließend auf 150 g Eis gegeben. Diese Reaktionsmischung wird nun vorsichtig mit festem Natriumhydroxid neutralisiert. Die wäßrige Phase wird dreimal mit je 70 ml Diethylether ausgeschüttelt und die vereinigten organischen Phasen über Magnesiumsulfat getrocknet. Das Lösungsmittel wird am Rotationsverdampfer eingeengt, bis etwa 100 ml Lösung verbleiben. Das gewünschte Produkt kristallisiert über Nacht als gelber Feststoff aus. Durch Umkristallisation aus Diethylether werden 7.08 g (36.6 mmol, 78 %) eines weißen Feststoffes erhalten. 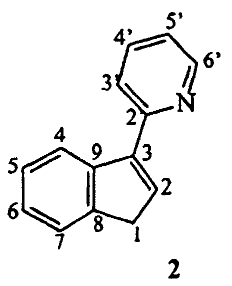 1H-NMR ([D₂-Dichlormethan, 200.13 MHz): δ (ppm) = 8.72 (d, 1H, 6'-H, 3*J* = 4.6 Hz), 8.23 (d, 1H, 4-H, 3*J* = 6.6 Hz), 7.75 (m, 2H, 5-H,
3'-H), 7.53 (d, 1H, 7-H, 3*J* = 7.2 Hz), 7.38-7.18 (m, 3H, 4'-H, 5'-H,
6-H), 7.01 (m, 1H, 2-H), 3.56 (d, 2H, 1-H, 3*J* = 2.2 Hz).

1H-NMR ([D₆]-Benzol, 599.9 MHz): δ (ppm) = 8.71 (d, 1H, 4-H, 3*J* = 7.8 Hz), 8.60 (ddd, 1H, 6'-H, 3*J* = 4.8 Hz, 4*J* = 1.2 Hz, 5*J* = 0.6 Hz), 7.36 (ddd, 1H, 5-H, 3*J* = 7.8 Hz, 3*J* = 7.8 Hz, 4*J* = 1.2 Hz,), 7.34 (ddd, 1-H, 3'-H, 3*J* = 8.4 Hz, 4*J* = 1.2 Hz, 5*J* = 0.6 Hz), 7.32 (ddd, 1H, 7-H, 3*J* = 7.2 Hz, 4*J* = 1.2 Hz, 5*J* = 0.6 Hz), 7.20 (ddd, 1H, 6-H, 3*J* = 7.8 Hz, 3*J* = 7.2 Hz, 4*J* = 1.2 Hz), 7.11 (ddd, 1H, 4'-H, 3*J* = 8.4 Hz, 3*J* = 7.2 Hz, 4*J* = 1.2 Hz), 6.67 (ddd, 1H, 5'-H, 3*J* = 7.2 Hz, 3*J* = 4.8 Hz, 4*J* = 1.2 Hz), 6.65 (t, 1H, 2-H, 3*J* = 1.8 Hz), 3.11 (d, 2H, 1-H, 3*J* = 1.8 Hz).

13C-NMR ([D₆]-Benzol, 150.8 MHz): δ (ppm) = 155.6 (C, C-2'), 149.5 (CH, C-6'), 145.0 (C, C-8), 144.5 (C, C-3), 143.6 (C, C-9), 135.9 (CH, C-4'), 133.5 (CH, C-2), 126.6 (CH, C-5), 125.4 (CH, C-6), 124.0 (CH, C-7), 123.7 (CH, C-4), 121.9 (CH, C-5'), 121.7 (CH, C-3'), 38.2 (CH₂, C-1).

15N-NMR ([D₆]-Benzol, 60.0 MHz): δ (ppm) = -69.5 (Pyridyl-N).

| | | | | |
|---|---|---|---|---|
| Schmelzpunkt | 80°C | | | |
| | | | | |
| Elementaranalyse | ber.: | C: 87.01 **%** | H: 5.74 **%** | N: 7.25 % |
| | | | | |
| C₁₄H₁₁N | gef.: | C: 86.03 % | H: 5.62 % | N: 7.20 % |

### Beispiel 3: 2-(2'-Pyridyl)-indan-2-ol (3)

Zu 24.0 ml (40.0 mmol) einer 1.60 molaren n-Butyllithium-Lösung in n-Hexan werden bei -40°C 6.40 g (40.0 mmol) 2-Brompyridin, in 50 ml Diethylether, hinzugetropft. Die Reaktionslösung wird weitere 20 Minuten bei dieser Temperatur gerührt.

Über einen Zeitraum von 20 Minuten werden 14.0 g (105 mmol) 2-Indanon, die in 50 ml Diethylether gelöst sind, zu der zuvor dargestellten Lösung gegeben. Während der Reaktionszeit von vier Stunden wird die Temperatur bei -40°C bis -25°C gehalten. Anschließend wird mit 50 ml gesättigter Ammoniumchlorid-Lösung hydrolysiert, das Kältebad entfernt und auf Raumtemperatur erwärmt.

Nach Trennung der Phasen wird die wäßrige Phase je dreimal mit 50 ml Diethylether extrahiert, und die vereinigten Etherphasen werden über Magnesiumsulfat getrocknet. Das Lösungsmittel wird am Rotationsverdampfer eingeengt, bis etwa 50 ml Lösung verbleiben, und das gewünschte Produkt kristallisiert über Nacht bei 8°C aus. Durch Umkristallisation aus Diethylether werden weiße Nadeln erhalten. Eine komplette Kristallisation des Produktes gelingt allerdings nicht, so daß eine säulenchromatographische Auf reinigung der verbleibenden Lösung an Kieselgel mit dem Laufmittel Isohexan/Diethylether 1:1 den weißen Feststoff ergibt. Durch beide Aufreinigungsschritte werden 5.80 g (27.5 mmol, 26 %) des gewünschten Produktes erhalten. Der R_{f}-Wert in Isohexan/Diethylether 1:1 beträgt 0.3. 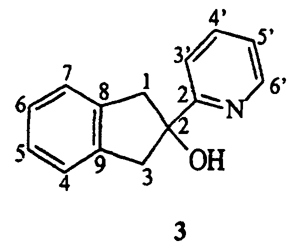 1H-NMR ([D₁-Chloroform, 599.9 MHz): δ (ppm) = 8.53 (ddd, 1H, 6'-H, 3*J* = 4. 8 Hz, 4*J* = 1.2 Hz, 5*J* = 0.6 Hz), 7. 63 (ddd, 1H, 4' -H, 3*J* = 7.8 Hz, 3*J* = 7.2 Hz, 4*J* = 1.2 Hz), 7.30 (ddd, 1H, 3'-H, 3*J* = 7.8 Hz, 4*J* = 1.2 Hz, 5*J* = 0.6 Hz), 7.24-7.20 (m, 5H, 4-H, 5-H, 6-H, 7-H, 5'-H), 5.29 (b, 1H, OH), 3.39 (m, 4H, 1-H, 3-H).

13C-NMR ([D₁]-Chloroform, 150.8 MHz): δ (ppm) = 164.2 (C, C-2'), 147.3 (CH, C-6'), 141.1 (2C, C-8, C-9), 137.1 (CH, C-4'), 126.8 (2CH, C-5, C-6), 124.6 (2CH, C-4, C-7), 122.2 (CH, C-5'), 118.9 (CH, C-3'), 82.4 (C, C-2), 49.0 (2CH₂, C-1, C-3).

| | | | | |
|---|---|---|---|---|
| Schmelzpunkt | 119°C | | | |
| | | | | |
| Elementaranalyse | ber.: | C: 79.59 % | H: 6.20 % | N: 6.63 % |
| C₁₄H₁₃NO | gef.: | C: 79.44 % | H: 6.03 % | N: 6.67 % |

### Beispiel 4: 2-(2'-Pyridyl)-inden (4)

In einem 100 ml Rundkolben werden 1.4 g (6.6 mmol) 2-(2'-Pyridyl)-indan-2-ol (3) vorgelegt. Dazu werden bei 0°C langsam 20 ml 85 prozentige Schwefelsäure getropft, die zuvor auf 0°C im Eis/Wasser Bad abgekühlt wurde. Bei Zugabe weniger Tropfen Schwefelsäure ist eine sofort auftretende Rotfärbung zu erkennen. Nach einer Reaktionszeit von 2 Stunden wird die Lösung auf 50 g Eis gegeben und mit Natriumhydroxid-Plätzchen neutralisiert. Anschließend extrahiert man dreimal mit 50 ml Diethylether und trocknet die vereinigten organischen Phasen über Natriumsulfat. Eine Aufreinigung des Produktes gelingt säulenchromatographisch an Kieselgel mit dem Laufmittel Isohexan/Diethylether im Verhältnis 2:1. Man erhält 500 mg (2.6 mmol) eines leicht gelblichen Feststoffes. Die Ausbeute liegt somit bei 39 %. Der R_{f}-Wert in Isohexan/Diethylether 1:1 beträgt 0.45.

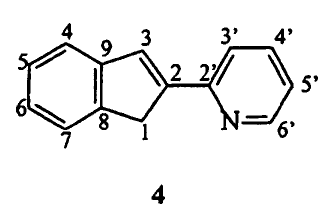

1H-NMR ([D₆-Benzol, 599.9 MHz): δ (ppm) = 8.52 (ddd, 1H, 6'-H, 3*J* = 4.8 Hz, 4*J* = 1.2 Hz, 5*J* = 0.6 Hz), 7.49 (s, 1H, 3-H), 7.31 (d, 1H, 4-H, 3*J* = 7.2 Hz), 7.26 (dd, 1H, 7-H, 3*J* = 7.8 Hz, 4*J* = 1.2 Hz), 7.18 (ddd, 1H, 5-H, 3*J* = 7.8 Hz, 3*J* = 7.2 Hz, 4*J* = 1.2 Hz), 7.14 (ddd, 1H, 3'-H, 3*J* = 7.8 Hz , 4*J* = 1.2 Hz, 5*J* = 0.6 Hz), 7.10 (ddd, 1H, 6-H, 3*J* = 7.8 Hz, 3*J* = 7.8 Hz, 4*J* = 1.2 Hz), 7.07 (ddd, 1H, 4'-H, 3*J* = 7.8 Hz, 3*J* = 7.2 Hz, 4*J* = 1.2 Hz), 6.59 (ddd, 1H, 5'-H, 3*J* = 7.2 Hz, 3*J* = 4. 8 Hz, 4*J* = 1.2 Hz), 3.77 (s, 2H, 3-H).

13C-NMR ([D₆]-Benzol, 150.8 MHz): δ (ppm) = 154.6 (C, C-2'), 149.6 (CH, C-6'), 147.2 (C, C-2), 145.1 (C, C-9), 144.1 (C, C-8), 135.5 (CH, C-4'), 130.3 (CH, C-3), 126.6 (CH, C-5), 125.5 (CH, C-6), 124.0 (CH, C-7), 121.8 (CH, C-4), 121.4 (CH, C-5'), 119.8 (CH, C-3'), 38.8 (CH₂, C-1).

IR (KBr): 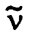 (cm⁻¹) = 3045 (m) , 2997 (w), 2881 (w), 1592 (s), 1555 (s), 1476 (s), 1428 (s), 1211 (m) 1147 (s), 914 (m) 871 (m), 776 (vs), 739 (vs), 718 (vs).

| | | | | |
|---|---|---|---|---|
| Schmelzpunkt | 110°C | | | |
| | | | | |
| Elementaranalyse | ber.: | C: 87.01 % | H: 5.74 % | N: 7.25 % |
| | | | | |
| C₁₄H₁₁N | gef.: | C: 86.86 % | H: 5.95 % | N: 7.29 % |

### Beispiel 5: 5-Lithio-2-methylfuran (5)

In einem Schlenkkolben werden bei 0°C 8.00 g (97.4 mmol) 2-Methylfuran in 70 ml Diethylether vorgelegt und langsam 60.9 ml (97.4 mmol) einer 1.60 molaren Lösung von n-Butyllithium in n-Hexan hinzugetropft. Eine anfänglich eintretende Orangefärbung der zuvor gelben Lösung verschwindet nach kurzer Zeit. Nach fünf Stunden hat die Reaktionslösung, die auf Raumtemperatur erwärmt wurde, eine bräunliche Farbe. Das Lösungsmittel wird im Ölpumpenvakuum entfernt. Das ¹H- NMR- und das ¹³C-NMR-Spektrum der Verbindung werden ohne weitere Aufreinigung aufgenommen und die Verbindung zur Weitereaktion zum 3-(5'-Methyl-2'-furyl)-inden eingesetzt.

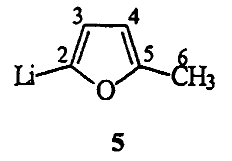

1H-NMR ([D₆]-Benzol / [D₈]-Tetrahydrofuran, (10:1) , 200.13 MHz):δ (ppm) = 6.72 (s, 1H, 4-H), 6.07 (s, 1H, 3-H), 2.36 (s, 3H, 6-H).

13C-NMR ([D₆]-Benzol / [D₈]-Tetrahydrofuran, (10:1) , 50.3 MHz): δ (ppm) = 154.5 (C, C-5), 125.7 (CH, C-4), 121.2 (C, C-2), 105.1 (CH, C-3), 13.9 (CH₃, C-6).

### Beispiel 6: 3-(5'-Methyl-2'-furyl)-inden (6)

Zu einer Lösung von 8.60 g (97.6 mmol) 5-Lithio-2-methylfuran **(5)** in 100 ml Diethylether werden bei -60°C 12.9 g (97.6 mmol) 1-Indanon, in 100 ml Diethylether gelöst, langsam hinzugetropft. Die resultierende dunkelgelbe Reaktionsmischung wird zwei Stunden bei einer Temperatur von -60°C bis -40°C gerührt. In weiteren 30 Minuten erwärmt man die Temperatur bis -25°C und hydrolysiert mit 75 ml 2 molarer Salzsäure. Nach Trennung der Phasen wird die wäßrige Phase dreimal mit 70 ml Diethylether extrahiert und die vereinigten organischen Phasen über Magnesiumsulfat getrocknet. Man engt die organischen Phasen am Rotationsverdampfer ein, bis ein orange-braunes Öl vorliegt. Die Auf reinigung des Rohproduktes erfolgt säulenchromatographisch an Kieselgel mit dem Laufmittel Isohexan/Diethylether 4:1, wobei zusätzlich 5 % Triethylamin dem Laufmittel zugemischt werden. Es werden 15.0 g (76.4 mmol, 79 %)eines gelben Öls erhalten, das bei -20°C und unter Argon gelagert werden muß, da sonst eine langsame Zersetzung des Produktes erfolgt.

R_{f}-Wert in Isohexan/Diethylether 1:1:0.63

1H-NMR ([D₁-Chloroform, 200.13 MHz) : δ (ppm) = 7.78 (d, 1H, 4-H, 3*J* = 7.8 Hz), 7.49 (dd, 1H, 7-H, 3*J* = 7.2 Hz, 4*J* = 0.7 Hz), 7.35 (ddd, 1H, 5-H, 3*J* = 7.8 Hz, 3*J* = 7.4 Hz, 4*J* = 0.7 Hz) , 7.24 (ddd, 1H, 6-H, 3*J* = 7.4 Hz, 3*J* = 7.2 Hz, 4*J* = 1.7 Hz), 6.75 (t, 1H, 2-H, 3*J* = 2.4 Hz), 6.62 (d, 1H, 3'-H, 3*J* = 3.2 Hz), 6.08 (dq, 1H, 4'-H, 3*J* = 3.2 Hz, 4*J* = 1.0 Hz), 3.51 (d, 2H, 1-H, 3*J* = 2.4 Hz), 2.39 (dd, 3H, 6'-H, 4*J* = 1.0 Hz, 5*J* = 0.4 Hz).

13C-NMR ([D₁]-Chloroform, 50.3 MHz): δ (ppm) = 151.6 (C, C-2'), 148.9 (C, C-5'), 144.5 (C, C-9), 141.8 (C, C-8), 134.3 (C, C-3), 127.5, 126.2 (je CH, C-4, C-7), 124.9, 123.9 (je CH, C-5, C-6), 120.8 (CH, C-2), 107.6, (CH, C3'), 107.2 (CH, C-4'), 38.1 (CH₂, C-1), 13.7 (CH₃, C-6').

IR (KBr): 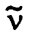 (cm⁻¹) = 3067 (m), 3031 (m) , 2925 (s), 2890 (m), 2878 (m), 1725 (vs), 1664(s), 1603 (m), 1460 (s), 1392 (s), 1380 (w), 1223 (s), 1221 (vs), 1090 (vs), 975 (s), 920(m),913 (m).

GC-MS (30 eV) m/z = 196 (100) [M⁺], 181 (12) [M⁺-CH₃], 165 (12) [M⁺-CH₃O], 153 (73) [M⁺-C₂H₃O], 115 (10) [M⁺-C₅H₅O], 89 (7) [M⁺-C₇H₇O].

### Darstellung der Indenyllithium-Verbindungen

### Allgemeine Arbeitsvorschrift

Zu einer Lösung von 30.0 mmol des entsprechend substituierten Indens in 150 ml Diethylether werden bei 0°C 18.8 ml (30.0 mmol) einer 1.60 molaren Lösung von n-Butyllithium in n-Hexan getropft. Man rührt eine Stunde bei dieser Temperatur und eine weitere bei Raumtemperatur. Das Lösungsmittel wird im Ölpumpenvakuum entfernt und der Rückstand über Nacht in 100 ml Pentan suspendiert. Die Suspension wird über eine Fritte filtriert und der Rückstand mit wenig Pentan gewaschen. Das Produkt wird im Ölpumpenvakuum getrocknet.

### Beispiel 7: 1-(2'-Pyridyl)-indenyllithium (7)

Durch Deprotonierung von 2.00 g (10.3 mmol) 3-(2'-Pyridyl)-inden **(2)** mit 6.45 ml (10.3 mmol) einer 1.6 molaren Lösung von n-Butyllithium in n-Hexan erhält man nach Aufarbeitung 1.5 g (7.54 mmol, 73 %) 1-(2'-Pyridyl)-indenyllithium als tief rotes Pulver.

1H-NMR ([D₆-Benzol / [D₈]-Tetrahydrofuran, (10:1), 599.9 MHz) : δ (ppm) = 8.11 (d, 1H, 7-H, 3*J* = 7.2 Hz), 7.86 (d, 1H, 6'-H, 3*J* = 4.2 Hz), 7.82 (dd, 1H, 4-H, 3*J* = 6.6 Hz, 4*J* = 1.2 Hz), 7.55 (d, 1H, 3'-H, 3*J* = 8.4 Hz), 7.26 (d, 1H, 2-H, 3*J* = 4.2 Hz) , 7.16 (ddd, 1H, 4'-H, 3*J* = 8.4 Hz, 3*J* = 7.2 Hz, 4*J* = 1.2 Hz), 7.02 (m, 2H, 5-H, 6-H), 6.72 (d, 1H, 3-H, 3*J* = 4.2 Hz), 6.33 (dd, 1H, 5'-H, 3*J* = 7.2 Hz, 3*J* = 4.2 Hz).

13C-NMR ([D₆]-Benzol / [D₈]-Tetrahydrofuran, (10:1) , 150.8 MHz): δ (ppm) = 161.2 (C, C-2'), 148. 0 (CH, C-6'), 136.4 (CH, C-4'), 129.0 (C, C-8 oder C-9), 127.1 (C, C-8 oder C-9), 121.2 (CH, C-4), 120.3 (CH, C-3'), 120.2 (CH, C-2), 118.2 (CH, C-5 oder C-6), 116.1 (CH, C-5 oder C-6), 114.3 (CH, C-7), 113.3 (CH, C-5'), 108.0 (C, C-1), 103.8 (CH, C-3).

15N-NMR ([D₆]-Benzol / [D₈]-Tetrahydrofuran, (10:1), 36.50 MHz): δ (ppm) = -122.5
(Pyridyl-N).

### Beispiel 8: 2-(2'-Pyridyl)-indenyllithium (8)

Durch Umsetzung von 2.00 g (10.00 mmol) 2-(2'-Pyridyl)inden **(4)** mit 6.4 ml (10.00 mmol) einer 1.6 molaren Lösung von n-Butyllithium in n-Hexan erhält man 2.00 g (9.90mmol, 99 %) 2-(2'-Pyridyl)-indenyllithium als leuchtend gelben Feststoff.

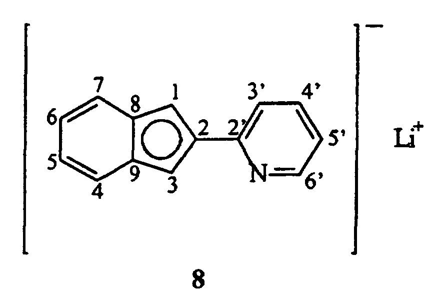

1H-NMR ([D₆-Benzol / [D₈]-Tetrahydrofuran, (10:1) , 599.9 MHz) : δ (ppm) = 8.13 (d, 1H, 6'-H, 3*J* = 3.6 Hz) , 7.60 (d, 1H, 3'-H, 3*J* = 8.4 Hz), 7.46 (ddd, 1H, 4'-H, 3*J* = 8.4 Hz, 3*J* = 7.8 Hz, 4*J* = 1.2 Hz), 7.23 (dd, 2H, 4-H, 7-H, 3*J* = 5.4 Hz, 4*J* = 2.4 Hz), 6.74 (dd, 1H, 5'-H, 3*J* = 7.8 Hz, 3*J* = 3.6 Hz), 6.37 (dd, 2H, 5-H, 6-H, 3*J* = 5.4 Hz, 4*J* = 2.4 Hz), 6.28 (s, 2H, 1-H, 3-H).

13C-NMR ([D₆]-Benzol / [D₈]-Tetrahydrofuran, (10:1) , 150.8 MHz): δ (ppm) = 162.3 (C, C-2'), 148.4 (CH, C-6'), 135.6 (CH, C-4'), 132.7 (2C, C-8, C-9), 130.2 (C, C-2), 120.5 (CH, C-3'), 119.2 (2CH, C-4, C-7), 116.8 (CH, C-5'), 113.5 (2CH, C-5, C-6), 92.2 (2CH, C-1, C-3).

15N-NMR ([D₆]-Benzol / [D₈]-Tetrahydrofuran, (10:1), 36.50 MHz): δ (ppm) = -102.6 (Pyridyl-N).

### Beispiel 9: 1-(5'-Methyl-2'-furyl)-indenyllithium (9)

Durch die Umsetzung von 7.22 g (36.0 mmol) 3-(5'-Methyl-2'-furyl)-inden **(6)** mit 23 ml 1.60 n-Butyllithium-Lösung in n-Hexan erhält man 9.31 g eines hellbeigen Feststoff es. Das ¹H-NMR- Spektrum zeigt, daß die Verbindung noch ein Äquivalent Diethylether enthält und somit die Ausbeute mit 33 mmol bei 93.6 % liegt.

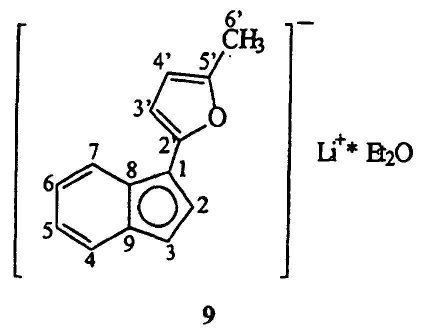

1H-NMR ([D₆-Benzol / [D₈]-Tetrahydrofuran, (10:1), 599.9 MHz): δ (ppm) = 8.16 (ddd, 1H, 7-H, 3*J* = 7.8 Hz, 4*J* = 1.2 Hz, 5*J* = 0.6 Hz),7.69 (ddd, 1H, 4-H, 3*J* = 7.8 Hz, 4*J* = 1.2 Hz, 5*J* = 0.6 Hz), 7.24 (d, 1H, 2-H, 3*J* = 3.6 Hz), 7.06 (ddd, 1H, 6-H, 3*J* = 7.8 Hz, 3*J* = 6.6 Hz, 4*J* = 1.2 Hz) , 6.97 (ddd, 1H, 5-H, 3*J* = 7.8 Hz, 3*J* = 6.6 Hz, 4*J* = 1.2 Hz), 6.27 (dd, 1H, 3-H, 3*J* = 3. 6 Hz, 5*J* = 0.6 Hz), 6.22 (d, 1H, 3'-H, 3*J* = 3.0 Hz), 6.05 (dq, 1H, 4'-H, 3*J* = 3.0 Hz, 4*J* = 1.2 Hz), 3 . 25 (q, 4H, (CH₃CH₂)₂O, 3*J* = 6.6 Hz), 2.27 (d, 3H, 6'-H, 4*J* = 1.2 Hz), 1.07 (t, 6H, (CH₃CH₂)₂O, 3*J* = 6.6 Hz).

13C-NMR ([D₆]-Benzol / [D₈]-Tetrahydrofuran, (10:1) , 150.8 MHz): δ (ppm) = 157.2 (C, C-2'), 144.6 (C, C-5'), 130.9 (C, C-9), 126.1 (C, C-8), 120.1 (CH, C-4), 119.6 (CH, C-7), 116.2 (CH, C-6), 115.4 (CH, C-5), 114.3 (CH, C-2), 107.4 (CH, C-4'), 100.4 (C, C-1) , 96.6 (CH, C-3'), 93.1 (CH, C-3), 65.9 (CH₂, (CH₃CH₂)₂O), 15.5 (CH₃, (CH₃CH₂)₂O), 13.9 (CH₃, C-6').

### Darstellung der Metallocene

### Beispiel 10: Dichlorobis(1-(5'-methyl-2'-furyl)indenyl)zirconium (10)

Zu einer Suspension von 3.00 g (10.8 mmol) 1-(5'-Methyl-2'-furyl)-indenyllithium **(9)** in 100 ml Toluol werden bei -78°C 1.26 g (5.40 mmol) Zirconiumtetrachlorid gegeben. Man läßt die Reaktionsmischung über Nacht auf Raumtemperatur erwärmen und filtriert das entstandene Lithiumchlorid über Muschelkalk ab. Der verbleibende Rückstand wird dreimal mit je 10 ml Toluol gewaschen und das Filtrat im Ölpumpenvakuum eingeengt, bis etwa 40 ml Lösung verbleiben. Anschließend wird diese Lösung bei -20°C zum Auskristallisieren über Nacht in den Tiefkühlschrank gestellt. Man filtriert den ausgefallenen orangen Feststoff ab und wäscht diesen mit 20 ml Toluol. Durch die Aufnahme eines ¹H-NMR-Spektrums stellt man das entstandene Diasteremerenverhältnis fest. Die Gesamtausbeute des 1:1 Isomerengemisches liegt bei 2.00 g (3.60 mmol, 67 %). Nach zweimaligem Umkristallisieren von 0.80 g (1.77 mmol) Rohprodukt aus Toluol werden 0.23 g (0.41 mmol) eines Isomers rein erhalten. Man filtriert den ausgefallenen orangen Feststoff ab, wäscht diesen nacheinander mit 20 ml Toluol und 20 ml Pentan und trocknet das Produkt im Vakuum.

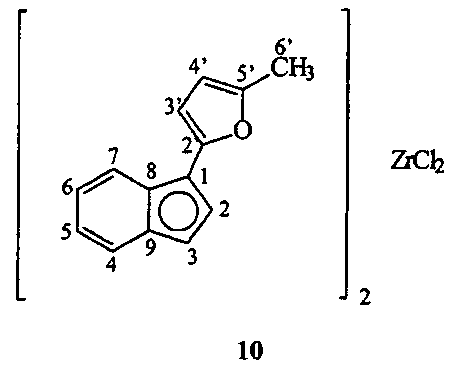

1H-NMR ([D₂-Dichlormethan, 599.9 MHz, Isomer A): δ (ppm) = 8.03 (dd, 1H, 7-H, 3*J* = 8.4 Hz, 5*J* = 0.6 Hz), 7.43 (ddd, 1H, 4-H, 3*J* = 8.4 Hz, 4*J* = 1.2 Hz, 5*J* = 0.6 Hz), 7.37 (ddd, 1H, 6-H, 3*J* = 8.4 Hz, 3*J* = 6.6 Hz, 4*J* = 1.2 Hz) , 7.23 (ddd, 1H, 5-H, 3*J* = 8.4 Hz, 3*J* = 6.6 Hz, 4*J* = 1.2 Hz), 6.76 (d, 1H, 2-H, 3*J* = 3.0 Hz), 6.45 (d, 1H, 3'-H, 3*J* = 3.6 Hz), 6.14 (dq, 1H, 4'-H, 3*J* = 3.6 Hz, 4*J* = 1.2 Hz), 5.82 (dd, 1H, 3-H, 3*J* = 3.0 Hz, 5*J* = 0.6 Hz), 2.45 (d, 3H, 6' -H, 4*J* = 1.2 Hz).

Die Isomerenreine Verbindung konnte durch fraktionierte Kristallisation aus Toluol gewonnen werden.

13C-NMR ([D₂]-Dichlormethan, 150.8 MHz): δ (ppm) = 152.4 (C, C-5'), 147.7 (C, C-2'), 127.5 (C, C-9), 127.4 (CH, C-6), 126.6 (CH, C-5), 126.4 (CH, C-4), 125.1 (CH, C-7), 124.1 (C, C-8), 116.2 (CH, C-2), 111.0 (C, C-1), 108.5 (CH, C-3'), 108.0 (CH, C-4'), 103.5 (CH, C-3), 13.9 (CH₃, C-6').

1H-NMR ([D₂]-Dichlormethan, 599.9 MHz, Isomer B): δ (ppm) = 8.01 (dd, 1H, 7-H, 3*J* = 8.4 Hz, 5*J* = 0.6 Hz), 7.48 (ddd, 1H, 4-H, 3*J* = 8.4 Hz, 4*J* = 1.2 Hz, 5*J* = 0.6 Hz), 7.35 (ddd, 1H, 6-H, 3*J* = 8.4 Hz, 3*J* = 6.6 Hz, 4*J* = 1.2 Hz), 7.25 (ddd, 1H, 5-H, 3*J*= 8.4 Hz, 3*J*= 6.6 Hz, 4*J* = 1.2 Hz), 6.51 (d, 1H, 2-H, 3*J* = 3.0 Hz), 6.50 (d, 1H, 3'-H, 3*J* = 3.0 Hz), 6.14 (dq, 1H, 4'-H, 3*J* = 3.0 Hz, 4*J* = 1.2 Hz), 6.08 (dd, 1H, 3-H, 3*J* = 3.0 Hz, 5*J* = 0.6 Hz), 2.46 (d, 3H, 6'-H, 4*J* = 1.2 Hz).

Die Isomerenmischung beträgt 60:40

13C-NMR ([D₂]-Dichlormethan, 150.8 MHz): δ (ppm) = 152.5 (C, C-5'), 147.8 (C, C-2'), 127.1 (CH, C-6), 126.8 (C, C-9), 126.5 (CH, C-5), 126.1 (CH, C-4), 125.1 (CH, C-7), 124.0 (C, C-8), 116.6 (CH, C-2), 111.8 (C, C-1), 108.6 (CH, C-3'), 107.9 (CH, C-4'), 102.2 (CH, C-3), 13.8 (CH₃, C-6').

IR (KBr) : 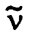 (cm⁻¹) = 3102 (s), 2919 (w), 1821 (w), 1705 (w), 1630 (m), 1567 (s), 1439 (s), 1382 (s), 1029 (s), 809 (vs), 748 (vs).

| | | | |
|---|---|---|---|
| Schmelzpunkt | 246.3°C | | |
| | | | |
| Elementaranalyse | ber.: | C: 60.86 % | H: 4.01 % |
| C₂₈H₂₂Cl₂O₂Zr | gef.: | C: 59.20 % | H: 4.01 % |

Die Elementar-, IR-Analyse und der Schmelzpunkt wurde mit dem abgetrennten Isomer A der Verbindung 10 durchgeführt.

### Beispiel 11: Dichlorobis1-(2'-Pyridyl)-indenyl)zirconium (11)

Zu einer Suspension von 3.00 g (15.1 mmol) 1-(2'-Pyridyl)-indenyllithium (7) in 100 ml Toluol werden bei -78°C 1.76 g (5.40 mmol) Zirconiumtetrachlorid gegeben. Man läßt die Reaktionsmischung über Nacht auf Raumtemperatur erwärmen und filtriert das entstandene Lithiumchlorid über Muschelkalk ab. Der verbleibende Rückstand wird dreimal mit je 10 ml Toluol gewaschen und das Filtrat im Ölpumpenvakuum eingeengt, bis etwa 40 ml Lösung verbleiben. Anschließend wird diese Lösung bei -20°C zum Auskristallisieren über Nacht in den Tiefkühlschrank gestellt. Man filtriert den ausgefallenen orangen Feststoff ab und wäscht diesen mit 20 ml Toluol. Durch die Aufnahme eines ¹H-NMR-Spektrums stellt man das entstandene Diastereomerenverhältnis fest. Die Gesamtausbeute des 1:1 Isomerengemisches liegt bei 1.80 g (3.20 mmol, 43 %). Die beiden Isomere werden nicht voneinander getrennt.

H-NMR ([D₆]-Benzol / [D₈]-Tetrahydrofuran, (10:1), 599.9 MHz): δ (ppm) = 8.01 (d, 1H, 7-H, ³*J* = 7.4 Hz), 7.76 (d, 1H, 6'-H, ³*J* = 4.3 Hz), 7.62 (dd, 1H, 4-H, ³*J* = 6.6 Hz, ⁴*J* = 1.2 Hz), 7.35 (d, 1H, 3'-H, ³*J* = 8.4 Hz), 7.06 (d, 1H, 2-H, ³*J* = 4.3 Hz), 6.88 (ddd, 1H, 4'-H, ³*J* = 8.4 Hz, ³*J* = 7.4 Hz, ⁴*J* = 1.2 Hz), 6.80 (m, 2H, 5-H, 6-H), 6.72 (d, 1H, 3-H, ³*J* = 4.3 Hz), 6.03 (dd, 1H, 5'-H, ³*J* = 7.4 Hz, ³*J* = 4.3 Hz).

13C-NMR ([D₆]-Benzol / [D₈]-Tetrahydrofuran, (10:1), 150.8 MHz): δ (ppm) = 160.2 (C, C-2'), 138.0 (CH, C-6'), 126.4 (CH, C-4'), 121.0 (C, C-8 oder C-9), 125.1 (C, C-8 oder C-9), 120.2 (CH, C-4), 119.3 (CH, C-3'), 118.2 (CH, C-2), 116.2 (CH, C-5 oder C-6), 114.1 (CH, C-5 oder C-6), 112.3 (CH, C-7), 111.3 (CH, C-5'), 107.0 (C, C-1), 101.8 (CH, C-3).

15N-NMR ([D₆]-Benzol / [D₈]-Tetrahydrofuran, (10:1), 36.50 MHz): δ (ppm) = -123.5
(Pyridyl-N).

IR (KBr): 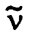 (cm⁻¹) = 3101 (s), 2915 (w) , 1819 (w) , 1701 (w) , 1610 (m) , 1547 (s) , 1419 (s), 1362 (s) , 1019 (s), 819 (vs) , 758 (vs) .

| | |
|---|---|
| Schmelzpunkt | 226.3°C |

Die IR-Analyse und der Schmelzpunkt wurde mit dem abgetrennten Isomer A der Verbindung 11 durchgeführt.

### Beispiel 12: Dichlorobis(2-(2'-Pyridyl)-indenyll)zirconium (12)

Zu einer Suspension von 2.0 g (9.9 mmol) 2-(2'-Pyridyl)-indenyllithium **(8)** in 100 ml Toluol werden bei -78°C 1.61 g (4.95 mmol) Zirconiumtetrachlorid gegeben. Man läßt die Reaktionsmischung über Nacht auf Raumtemperatur erwärmen und filtriert das entstandene Lithiumchlorid über Muschelkalk ab. Der verbleibende Rückstand wird dreimal mit je 10 ml Toluol gewaschen und das Filtrat im Ölpumpenvakuum eingeengt, bis etwa 45 ml Lösung verbleiben. Anschließend wird diese Lösung bei -20°C zum Auskristallisieren über Nacht in den Tiefkühlschrank gestellt. Man filtriert den ausgefallenen orangen Feststoff ab und wäscht diesen mit 30 ml Toluol. Durch die Aufnahme eines ¹H-NMR-Spektrums stellt man das entstandene Diasteremerenverhältnis fest. Die Gesamtausbeute des 1:1 Isomerengemisches liegt bei 2.40 g (3.7 mmol, 81 %). Die beiden Isomere werden nicht voneinander getrennt.

1H-NMR ([D₆-Benzol / [D₈]-Tetrahydrofuran, (10:1) , 599.9 MHz): δ (ppm) = 8.33 (d, 1H, 6'-H, 3*J* = 3.8 Hz), 7.80 (d, 1H, 3'-H, 3*J* = 8.5 Hz), 7.56 (ddd, 1H, 4'-H, 3*J* = 8.5 Hz, 3*J* = 7.8 Hz, 4*J* = 1.2 Hz), 7.03 (dd, 2H, 4-H, 7-H, 3*J* = 5.4 Hz, 4*J* = 2.4 Hz), 6.84 (dd, 1H, 5'-H, 3*J* = 7.8 Hz, 3*J* = 3.8 Hz), 6.57 (dd, 2H, 5-H, 6-H, 3*J* = 5.4 Hz, 4*J* = 2.4 Hz), 6.48 (s, 2H, 1-H, 3-H). 13C-NMR ([D₆]-Benzol / [D₈]-Tetrahydrofuran, (10:1), 150.8 MHz): δ (ppm) = 165.3 (C, C-2'), 147.4 (CH, C-6'), 131.6 (CH, C-4'), 130.7 (2C, C-8, C-9), 129.2 (C, C-2), 121.5 (CH, C-3'), 117.2 (2CH, C-4, C-7), 114.8 (CH, C-5'), 112.5 (2CH, C-5, C-6) , 90.2 (2CH, C-1, C-3).

15N-NMR ([D₆]-Benzol / [D₈]-Tetrahydrofuran, (10:1), 36.50 MHz): δ (ppm) = -102.6
(Pyridyl-N).

| | |
|---|---|
| Schmelzpunkt | 206.3°C |

### Beispiel 13: 2-(5'-Methyl-2'-furyl)-inden (13)

Zu einer Lösung von 5.29 g (60.4 mmol) 5-Lithio-2-methylfuran **(5)** in 100 ml Diethylether werden bei -60°C 8.00 g (60.4 mmol) 2-Indanon, in 100 ml Diethylether gelöst, langsam hinzugetropft. Die resultierende dunkelgelbe Reaktionsmischung wird sechs Stunden bei einer Temperatur von -60°C bis -40°C gerührt. In weiteren 30 Minuten läßt man die Lösung auf -25°C erwärmen und hydrolysiert mit 75 ml 2 molarer Salzsäure. Nach Trennung der Phasen wird die wäßrige Phase dreimal mit 70 ml Diethylether extrahiert und die vereinigten organischen Phasen über Magnesiumsulfat getrocknet. Man engt die organischen Phasen am Rotationsverdampfer ein, bis ein braunes Öl vorliegt. Die Aufreinigung des Rohproduktes erfolgt säulenchromatographisch an Kieselgel mit dem Laufmittel Isohexan/Diethylether 4:1. Es werden 6.90 g (35.2 mmol, 58 %) eines weißen Feststoffes erhalten, der bei 4°C gelagert wird.

R_{f}-Wert in Isohexan/Diethylether 1:1:0.61

1H-NMR ([D₆]-Benzol, 200.13 MHz): δ (ppm) = 7.21-7.04 (m, 5H, 3-H, 4-H, 5-H, 6-H, 7-H), 6.14 (d, 1H, 3'-H, 3*J* = 3.2 Hz), 5.83 (dq, 1H, 4'-H, 3*J* = 3.2 Hz, 4*J* = 0.9 Hz), 3.36 (s, 2H, 1-H), 2.34 (d, 3H, 6'-H, 4*J* = 0.9 Hz).

1H-NMR ([D₁]-Chloroform, 200.13 MHz): δ (ppm) = 7.39 (d, 1H, 4-H, 3*J* = 7.2 Hz), 7.33 (d, 1H, 7-H, 3*J* = 7.4 Hz), 7.25 (dd, 1H, 5-H, 3*J* = 7.2 Hz, 3*J* = 8.4 Hz), 7.12 (dd, 1H, 6-H, 3*J* = 7.4 Hz, 3*J* = 8.4 Hz), 6.98 (s, 1H, 3-H), 6.33 (d, 1H, 3'-H, 3*J* = 3.2 Hz), 6.01 (dq, 1H, 4'-H, 3*J* = 3.2 Hz, 4*J* = 0.4 Hz), 3.67 (s, 2H, 1-H), 2.34 (d, 3-H, 6'-H, 4*J* = 0.4 Hz).

| | | | |
|---|---|---|---|
| Schmelzpunkt | 61°C | | |
| | | | |
| Elementaranalyse | ber.: | C: 85.68 % | H: 6.18 % |
| | | | |
| C₁₄H₁₂O | gef.: | C: 85.49 % | H: 5.98 % |

### Beispiel 14: 5-Lithio-2-methylthiophen (14)

In einem Schlenkkolben werden bei Raumtemperatur 2.97 g (30.3 mmol) 2-Methylthiophen in 70 ml Diethylether vorgelegt und langsam 18.8 ml (30.3 mmol) einer 1.60 molaren Lösung von n-Butyllithium in n-Hexan hinzugetropft. Nach zwölf Stunden hat die Reaktionslösung eine bräunliche Farbe. Das Lösungsmittel wird im Ölpumpenvakuum entfernt. Das ¹H-NMR-Spektrum der Verbindung wird ohne weitere Aufreinigung aufgenommen und die Verbindung zur Weiterreaktion zum 2-(5'-Methyl-2'-thiophen)-inden eingesetzt.

1H-NMR ([D₆]-Benzol / [D₈]-Tetrahydrofuran, (10:1), 200.13 MHz) : δ (ppm) = 7.48 (d, 1H, 3-H, 3*J* = 2.6 Hz), 7.17 (m, 1H, 4-H), 2.71 (s, 3H, 6-H).

### Beispiel 15: 2-(5'-Methyl-2'-thiophen)-inden (15)

Zu einer Lösung von 3.15 g (30.3 mmol) 5-Lithio-2-methylfuran (5) in 100 ml Diethylether werden bei -60°C 4.00 g (30.3 mmol) 2-Indanon, in 100 ml Diethylether gelöst, langsam hinzugetropft. Die resultierende dunkelgelbe Reaktionsmischung wird sechs Stunden bei einer Temperatur von -60°C bis -40°C gerührt. In weiteren 30 Minuten läßt man die Lösung auf -25°C erwärmen und hydrolysiert mit 75 ml 2 molarer Salzsäure. Nach Trennung der Phasen wird die wäßrige Phase dreimal mit 70 ml Diethylether extrahiert und die vereinigten organischen Phasen über Magnesiumsulfat getrocknet. Man engt die organischen Phasen am Rotationsverdampfer ein und läßt bei 4°C das Produkt auskristallisieren. Nach Trocknen im Ölpumpenvakuum werden 2.94 g (13.8 mmol, 46 %) eines gelblich weißen Feststoffes erhalten.

1H-NMR ([D₆]-Benzol, 200.13 MHz) : δ (ppm) = 7.22-7.02 (m, 4H, 4-H, 5-H, 6-H, 7-H), 6.84 (s, 1H, 3-H), 6.72 (d, 1H, 3'-H, 3*J* = 3.6 Hz), 6.44 (dq, 1H, 4'-H, 3*J* = 3.6 Hz, 4*J* = 1.2 Hz), 3.37 (s, 2H, 1-H), 2.13 (d, 3H, 6'-H, 4*J* = 1.2 Hz).

| | | | |
|---|---|---|---|
| Schmelzpunkt | 154°C | | |
| | | | |
| Elementaranalyse | ber.: | C: 79.20 % | H: 5.70 % |
| C₁₄H₁₂S | gef.: | C: 79.20 % | H: 5.81 % |

### Beispiel 16: 2-(4'-Oxopentanoyl)-inden (16)

4.00 g (20.4 mmol) 2-(5'-Methyl-2'-furyl)-inden (13) werden in 40 ml Eisessig gelöst, mit 20 ml H₂O und 1.6 ml 20%iger H₂SO₄ versetzt und fünf Stunden bei einer Badtemperatur von 120°C unter Rückfluß erhitzt. Die abgekühlte Lösung wird auf Eiswasser gegossen und der ausgefallene Feststoff wird abgesaugt. Das Produkt wird in Diethylether/Essigester gelöst (zunächst Zugabe von Diethylether, anschließend Essigester), mit Magnesiumsulfat getrocknet und dann aus dem Filtrat bei -20°C auskristallisiert. Nach der Trocknung im Ölpumpenvakuum werden 2.80 g (13.1 mmol, 64 %) eines beigen plättchenförmigen Feststoffes erhalten.

1H-NMR ([D₆]-Benzol, 200.13 MHz): δ (ppm) = 7.25-7.06 (m, 5H, 3-H, 4-H, 5-H, 6-H, 7-H), 3.43 (d, 2H, 1-H, *J* = 1.8 Hz), 2.76 (t, 2H, 2'-H, 3*J* = 6.6 Hz), 2.40 (t, 2H, 3'-H, 3*J* = 6.6 Hz), 1.76 (s, 3H, 5'-H).

| | | | |
|---|---|---|---|
| Schmelzpunkt | 85°C | | |
| | | | |
| Elementaranalyse | ber.: | C: 78.48 % | H: 6.59 % |
| C₁₄H₁₄O₂ | gef.: | C: 78.41 % | H: 6.81 % |

### Beispiel 17: 2-(5'-Methyl-2'-N-methylpyrrol)-inden (17)

In 40 ml Ethanol werden 2.2 g (10.3 mmol) 2-(4'-Oxopentanoyl)-inden (16) gelöst und ein zweifacher Überschuß von 1.77 ml (20.6 mmol, 40 %ige Lösung in Wasser, d = 0.899 g/ml) Methylamin hinzugefügt. Die Reaktionslösung wird 14 Stunden unter Rückfluß erhitzt. Nach dem Abkühlen wird der ausgefallene Feststoff durch Zugabe von Diethylether gelöst und über Magnesiumsulfat getrocknet. Nach Einengen des Lösungsmittels am Rotationsverdampfer fällt das Produkt im Tiefkühlschrank bei -20°C aus. Nach dem Trocknen im Ölpumpenvakuum werden 1.00 g (4.77 mmol, 47 %) eines braunen Feststoffes erhalten.

1H-NMR ([D₆]-Benzol, 200.13 MHz): δ (ppm) = 7.34-7.05 (m, 4H, 4-H, 5-H, 6-H, 7-H), 6.56 (s, 1H, 3-H), 6.36 (d, 1H, 3'-H, 3*J* = 3.6 Hz), 6.03 (dq, 1H, 4'-H, 3*J* = 3.6 Hz, 4*J* = 0.8 Hz), 3.60 (s, 2-H, 1-H), 2.99 (s, 3H, N-CH₃), 1.88 (d, 3H, 6'-H, 4*J* = 0.8 Hz).

| | | | | |
|---|---|---|---|---|
| Schmelzpunkt | 120°C | | | |
| | | | | |
| Elementaranalyse | ber.: | C: 86.08 % | H: 7.22 % | N: 6.69 % |
| C₁₅H₁₅N | gef.: | C: 85.52 % | H: 7.37 % | N. 6.20 % |

### Darstellung der Indenyllithium-Verbindungen

### Allgemeine Arbeitsvorschrift für die Synthese der Furyl- und Thiophensubstituierten Indene:

Zu einer Lösung von 30.0 mmol des entsprechend substituierten Indens in 150 ml Diethylether werden bei Raumtemperatur 18.8 ml (30.0 mmol) einer 1.60 molaren Lösung von n-Butyllithium in n-Hexan getropft. Man rührt zwei Stunden bei dieser Temperatur. Das Lösungsmittel wird im Ölpumpenvakuum entfernt und der Rückstand über Nacht in 100 ml Pentan suspendiert. Die Suspension wird über eine Fritte filtriert und der Rückstand mit wenig Pentan gewaschen. Das Produkt wird im Ölpumpenvakuum getrocknet.

### Beispiel 18: 2-(5'-Methyl-2'-furyl)-indenyllithium (18)

Durch Deprotonierung von 2.50 g (12.7 mmol) 2-(5'-Methyl-2'furyl)-inden (13) mit 7.96 ml (12.7 mmol) einer 1.6 molaren Lösung von n-Butyllithium in n-Hexan erhält man nach Aufarbeitung 2.32 g (11.5 mmol, 90 %) 2-(5'-Methyl-2'-furyl)-indenyllithium als beigen Feststoff.

1H-NMR ([D₆]-Benzol / [D₈]-Tetrahydrofuran, (10:1) , 200.13 MHz) : δ (ppm) = 7.68 (m, 2H, 4-H, 7-H), 6.91 (m, 2H, 5-H, 6-H), 6.63 (s, 2H, 1-H, 3-H), 6.34 (d, 1H, 3'-H, 3*J* = 3.0 Hz), 5.95 (dq, 1H, 4'-H, 3*J* = 3.0 Hz, 4*J* = 1.0 Hz), 2.19 (d, 3H, 6'-H, 4*J* = 1.0 Hz).

13C-NMR ([D₆]-Benzol / [D₈]-Tetrahydrofuran, (10:1) , 50.3 MHz) δ (ppm) = 156.5 (C, C-2'), 147,6 (C, C-5'), 129.8 (2C, C-8, C-9), 122.4 (C, C-2), 119.9 (2CH, C-4, C-7), 115.4 (2CH, C-5, C-6), 107.4 (CH, C-4'), 101.2 (CH, C-3'), 89.0 (2CH, C-1, C-3), 13.7 (CH₃, C-6').

### Beispiel 19: 2-(5'-Methyl-2'-thiophen)-indenyllithium (19)

Durch Umsetzung von 2.84 g (13.4 mmol) 2-(5'-Methyl-2'-thiophen)-inden (15) mit 8.36 ml (13.4 mmol) einer 1.6 molaren Lösung von n-Butyllithium in n-Hexan erhält man 2.78 g (12.7 mmol, 95 %) 2-(5'-Methyl-2'-thiophen)-indenyllithium als bräunlichen Feststoff.

1H-NMR ([D₆]-Benzol / [D₈]-Tetrahydrofuran, (10:1), 200.13 MHz) : δ (ppm) = 7.64 (m, 2H, 4-H, 7-H), 7.04 (d, 1H, 3'-H, ³*J* = 3.2 Hz), 6.91 (m, 2H, 5-H, 6-H), 6.57 (dq, 1H, 4'-H, ³*J* = 3.2 Hz, ⁴*J* = 1.2 Hz), 6.55 (s, 2H, 1-H, 3-H), 2.28 (d, 3H, 6'-H, ⁴*J* = 1.2 Hz).

### Beispiel 20: 2-(5'-Methyl-2'-N-methylpyrrol)-indenyllithium (20)

0.50 g (2.89 mmol) 2-(5'-Methyl-2'-N-methylpyrrol)-inden **17** werden in Diethylether gelöst und langsam 1.19 ml (2.89 mmol) einer 2.0 molaren Lösung von Methyllithium in Diethylether hinzugetropft. Nach einer Reaktionszeit von vier Stunden wird das Lösungsmittel im Ölpumpenvakuum entfernt und das Produkt ohne weitere Aufreinigung ¹H-NMR-spektroskopisch untersucht.

1H-NMR ([D₆]-Benzol / [D₈]-Tetrahydrofuran, (10:1), 200.13 MHz): δ (ppm) = 7.61 (m, 2H, 4-H, 7-H), 6.84 (m, 2H, 5-H, 6-H), 6.32 (s, 2H, 1-H, 3-H, 6.22 ( d, 1H, 3'-H, 3*J* = 3.4 Hz), 5.98 (d, 1H, 4'-H, 3*J* = 3.4 Hz), 3.50 (s, 3H, N-CH₃), 2.10 (s, 3H, 6'-H).

### Darstellung der Dichlorozirconocen-Komplexe

### Allgemeine Arbeitsvorschrift:

Zu einer Suspension von 10.0 mmol der Indenyllithiumverbindungen in 100 ml Toluol werden bei -78°C 1.17 g (5.00 mmol) Zirconiumtetrachlorid gegeben. Man läßt die Reaktionsmischung über Nacht auf Raumtemperatur erwärmen und filtriert das entstandene Lithiumchlorid über Muschelkalk ab. Der verbleibende Rückstand wird dreimal mit je 10 ml Toluol gewaschen und das Filtrat im Ölpumpenvakuum eingeengt, bis etwa 40 ml Lösung verbleiben. Anschließend wird diese Lösung bei -20°C zum Auskristallisieren des Produktes über Nacht in den Tiefkühlschrank gestellt. Man filtriert den ausgefallenen Feststoff ab und wäscht diesen mit 10 ml Toluol. Nach Trocknen im Ölpumpenvakuum werden die entsprechenden Metallocene erhalten.

### Beispiel 21: Dichlorobis(2-(5'-methyl-2'-furyl)indenyl)zirconium (21)

0.50 g (2.47 mmol) 2-(5'-Methyl-2'-furyl)-indenyllithium (16) werden in 80 ml Toluol suspendiert und bei -78°C werden 0.29 g (1.24 mmol) Zirconiumtetrachlorid hinzugefügt. Nach Aufarbeitung werden 0.35 g (0.63 mmol, 51 %) eines gelben Pulvers erhalten.

1H-NMR ([D₂]-Dichlormethan, 599.9 MHz) : δ (ppm) = 7.30 (m, 4H, 4-H, 7-H), 7.12 (m, 4H, 5-H, 6-H), 6.55 (s, 4H, 1-H, 3-H), 6.47 (d, 2H, 3'-H, 3*J* = 3.6 Hz), 6.16 (dq, 2H, 4'-H, 3*J* = 3.6 Hz, 4 *J* = 0.6 Hz), 2.48 (d, 6H, 6'-H, 4 *J* = 0.6 Hz).

13C-NMR ([D₂]-Dichlormethan, 150.1 MHz): δ (ppm) = 153.6 (2C, C-2'), 147.3 (2C, C-2), 126.7 (4C, C-8, C-9), 126.6 (4CH, C-4, C-7), 125.4 (2C, C-5'), 124.9 (4CH, C-5, C-6), 110.6 (2CH, C-3'), 108.6 (2CH, C-4'), 100.6 (4CH, C-1, C-3), 13.9 (2CH₃, C-6').

| | | | |
|---|---|---|---|
| Schmelzpunkt | 190°C | | |
| | | | |
| Elementaranalyse | ber.: | C: 60.86 % | H: 4.01 % |
| C₂₈H₂₂Cl₂O₂Zr | gef.: | C: 60.72 % | H: 4.12 % |

### Beispiel 22: Dichlorobis(2-(5'-methyl-2'-thiophen)indenyl) zirkonium (22)

Umsetzung von 2.00 g (9.16 mmol) 2-(5'-Methyl-2'-thiophen)-indenyllithium **(17)** mit 1.07 g (4.58 mmol) Zirconiumtetrachlorid in 80 ml Toluol bei -78°C und anschließender Aufarbeitung führt zu 0.90 g (1.54 mmol, 34 %) eines gelben Feststoffes.

1H-NMR ([D₂]-Dichlormethan, 599.9 MHz) : δ (ppm) = 7.26 (m, 4H, 4-H, 7-H), 7.12 (m, 4H, 5-H, 6-H), 7.00 (d, 2H, 3'-H, 3*J* = 3.0 Hz), 6.78 (dq, 2H, 4'-H, 3*J* = 3.0 Hz, 4*J* = 1.2 Hz), 6.49 (s, 4H, 1-H, 3-H) , 2.57 (d, 6H, 6'-H, 4*J* = 1.2 Hz).

13C-NMR ([D₂]-Dichlormethan, 150.1 MHz): δ (ppm) = 142.1 (2C, C-2'), 134.7 (2C, C-2), 129.1 (2C, C-5'), 126.7 (4CH, C-4, C-7), 126.6 (2CH, C-3'), 124.9 (4CH, C-5, C-6), 126.6 (2CH, C-3'), 102.7 (4CH, C-1, C-3), 15.6 (2CH₃, C-6').

| | | | |
|---|---|---|---|
| Schmelzpunkt | 183°C | | |
| | | | |
| Elementaranalyse | ber.: | C: 57.51 % | H: 3.79 % |
| C₂₈H₂₂Cl₂S₂Zr | gef.: | C: 57.08 % | H: 4.07 % |

### Beispiel 23: Dichlorobis(2-(5'-methyl-2'-N-methylpyrrol) indenyl)zirconium (23)

Durch Zugabe von 0.26 g (1.11 mmol) Zirconiumtetrachlorid zu einer Suspension von 0.51 g (2.36 mmol) 2-(5'-Methyl-2'-N-methylpyrrol)-indenyllithium **(18)** in 40 ml Toluol bei -78°C werden nach Aufreinigung 0.10 g (0.18 mmol, 16 %) eines leuchtend gelben Feststoffes erhalten.

1H-NMR ([D₂]-Dichlormethan, 599.9 MHz): δ (ppm) = 7.28 (m, 4H, 4-H, 7-H), 7.13 (m, 4H, 5-H, 6-H), 6.35 (d, 2H, 3'-H, 3*J* = 3.6 Hz), 6.33 (s, 4H, 1-H, 3-H), 6.02 (d, 2H, 4'-H, 3*J* = 3.6 Hz), 3.60 (s, 6H, N-CH₃), 2.33 (s, 6H, 6'-H).

13C-NMR ([D₂]-Dichlormethan, 150.1 MHz): δ (ppm) = 133.6 (2C, C-2'), 129.6 (2C, C-2), 126.9 (2C, C-5'), 126.6 (4C, C-8, C-9), 126.4 (4CH, C-4, C-7), 124.9 (4CH, C-5, C-6), 110.9 (2CH, C-3'), 107.8 (2CH, C-4'), 101.8 (4CH, C-1, C-3), 33.1 (2CH₃, N-CH₃, 13.1 (2CH₃, C-6').

| | | | |
|---|---|---|---|
| Schmelzpunkt | 229°C | | |
| | | | |
| Elementaranalyse | ber.: | C: 62.27 % | H: 4.88 % |
| C₃₀H₂₈Cl₂N₂Zr | gef.: | C: 60.29 % | H: 5.49 % |

### Katalytische Polymerisation von Propen

### Arbeitstechnik:

Die Propenpolymerisationen mit den Zirconiumkatalysatoren **21** und **22** werden in einem Büchi-Glasautoklaven durchgeführt. Die ausgeheizte Apparatur wird mit 200 ml Toluol und 20 ml einer 10.5 gew.-prozentigen Lösung von Methylalumoxan in Toluol befüllt und mit Hilfe eines Kryostaten auf die entsprechende Temperatur eingestellt. Bei der gewünschten Temperatur wird dann ein Druck von 2 bar Propen auf die Lösung geleitet und 30 Minuten kräftig gerührt. Anschließend werden 10 mg -12 mg (18 µmol- 21.7 µmol) des Katalysators in 20 ml Lösungsmittel (3 ml Methylen-chlorid zum Lösen der Verbindungen und 10 ml Toluol) in den Glasautoklaven gebracht. Nach 30 Minuten Reaktionszeit werden vorsichtig 20 ml einer 1:1 Mischung 2 N Salzsäure und Methanol zugegeben. Dabei wird sowohl die katalytisch aktive Spezies als auch überschüssiges Methylalumoxan vernichtet. Man rührt weitere 30 min bei Raumtemperatur bei offenem System, um noch gelöstes, nicht umgesetztes Propen entweichen zu lassen. Nachfolgend wird die Reaktionsmischung in einem Schütteltrichter mit 30 ml 4 N Salzsäure versetzt, damit eventuell unlösliches Aluminiumoxid in Lösung gebracht wird. Bevor die wäßrige Phase abgetrennt werden kann, muß im Wasserbad auf 60°C erhitzt werden, um eine Phasentrennung deutlich erkennbar zu machen. Anschließend wird die wäßrige Phase mit 100 ml Toluol gewaschen. Nach dem Entfernen des Lösungsmittels am Rotationsverdampfer werden die entstanden Polymere im Ölpumpenvakuum über Nacht getrocknet.

Es werden bei der jeweiligen Temperatur zwei Polymerisation durchgeführt, um die Reproduzierbarkeit der Ergebnisse sicherzustellen.

Die Polymerisationsergebnisse mit Komplex **21** sind in der folgenden Tabelle zusammengefaßt:

| Temperatur | 20°C | | 0°C | | -20°C | |
|---|---|---|---|---|---|---|
| Polymer | PP 1 | PP 2 | PP 3 | PP 4 | PP 5 | PP 6 |
| Kat. (mg) | 10 | 10 | 12 | 12 | 12 | 12 |
| Kat. (µmol) | 18.1 | 18.1 | 21.7 | 21.7 | 21.7 | 21.7 |
| Cokat. (ml) | 20 | 20 | 20 | 20 | 20 | 20 |
| Cokat. (mmol) | 34.5 | 34.5 | 34.5 | 34.5 | 34.5 | 34.5 |
| Al/Zr ¹⁾ | 1906 | 1906 | 1589 | 1589 | 1589 | 1273 |
| Dauer (h) | 0,5 | 0,5 | 0,5 | 0,5 | 0,5 | 0,5 |
| PP (g) | 18.0 | 18.5 | 23.1 | 29 | 45 | 49 |
| Aktivität ²⁾ | 9.9 | 10.3 | 10.5 | 13.2 | 20.5 | 22.3 |

| | | | | | | |
|---|---|---|---|---|---|---|
| 1) Al/Zr: mmol (AlMeO) / mmol (Zr) | | | | | | |
| 2) Aktivität: g (Polymer) / mol (Zr).h.bar * 105 | | | | | | |

Die Polymerisationsergebnisse mit Komplex **22** sind in der folgenden Tabelle zusammengefaßt :

| Temperatur | 20°C | | 0°C | | -20°C | |
|---|---|---|---|---|---|---|
| Polymer | PP 1 | PP 2 | PP 3 | PP 4 | PP 5 | PP 6 |
| Kat. (mg) | 12 | 12 | 12 | 12 | 12 | |
| Kat. (µmol) | 20.5 | 20.5 | 20.5 | 20.5 | 20.5 | |
| Cokat. (ml) | 20 | 20 | 20 | 20 | 20 | |
| Cokat. (mmol) | 34.5 | 34.5 | 34.5 | 34.5 | 34.5 | |
| Al/Zr ¹⁾ | 1682 | 1554 | 1443 | 1443 | 1682 | |
| Dauer (h) | 0.5 | 0,5 | 0,5 | 0,5 | 0,5 | |
| PP (g) | 16.7 | 14.2 | 25.0 | 24.0 | 33 | |
| Aktivität ²⁾ | 8.4 | 7.1 | 12.5 | 12.0 | 16.5 | |

| | | | | | | |
|---|---|---|---|---|---|---|
| 1) Al/Zr: mmol (AlMeO) / mmol (Zr) | | | | | | |
| 2) Aktivität: g (Polymer) / mol (Zr).h.bar * 105 | | | | | | |

## Patentansprüche

1. Verbindungen der Formel (II), 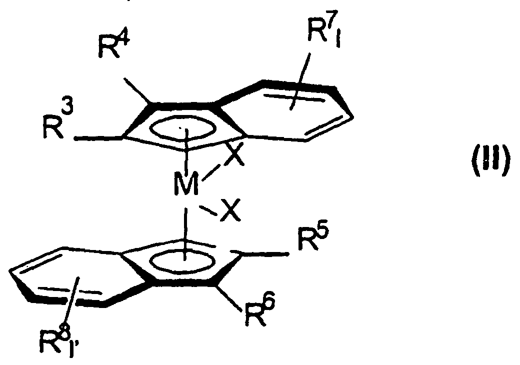 worin
M gleich Ti, Zr oder Hf ist,
R³ und R⁵ oder R⁴ und R⁶ gleich oder verschieden sind und ein Wasserstoffatom, eine C₁-C₂₀ - kohlenstoffhaltige Gruppe, bevorzugt C₁-C₁₈-Alkyl, insbesondere Methyl, Ethyl, n-Butyl, n- Hexyl, Cyclohexyl oder Octyl, C₂-C₁₀-Alkenyl, C₃-C₁₅-Alkylalkenyl, C₆-C₁₆-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist; mit der Maßgabe, daß R³ und R⁵, oder R⁴ und R⁶ C₄-C₂₄-Heteroaryl oder C₄-C₂₄-Alkylheteroaryl sind,
R⁷, R⁸ gleich oder verschieden sind und ein Wasserstoffatom, Halogenatom oder eine C₁-C₂₀ - kohlenstoffhaltige Gruppe bedeuteten, bevorzugt eine lineare oder verzweigte C₁-C₁₈-Alkylgruppe, insbesondere Methyl, Ethyl, tert.-Butyl, Cyclohexyl oder Octyl, C₂-C₁₀-Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl sind, und zwei Reste R⁷ oder R⁸ ein mono- oder polycyclisches Ringssystem bilden können, das seinerseits gegebenenfalls substituiert sein kann,
X ein Halogenatom, insbesondere Chlor, ist,
l, l gleich oder verschieden eine ganze Zahl zwischen Null und 4, bevorzugt 1 oder 2, besonders bevorzugt gleich 1 sind.

2. Verbindungen gemäß Anspruch 1, **dadurch gekennzeichnet, daß**
M gleich Zirkonium ist,
R³ und R⁵, oder R⁴ und R⁶ C₄-C₂₄-Heteroaryl oder C₄-C₂₄-Alkylheteroaryl wie 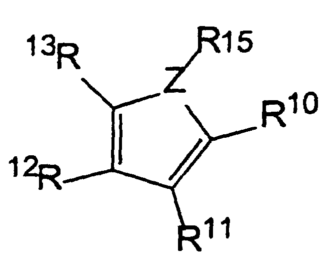
worin
R¹⁰, R¹¹, R¹², R¹³ gleich oder verschieden sind und ein Wasserstoffatom, eine C₁-C₂₀ - kohlenstoffhaltige Gruppe, bevorzugt C₁-C₁₈-Alkyl, insbesondere Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ist
Z ein Heteroatom aus der V- und VI-Hauptgruppe ist,
R¹⁵ wenn Z = Sauerstoff oder Schwefel ist R¹⁵ nicht vorhanden ist, bei Z = Stickstoff ist R¹⁵ ein Wasserstoffatom, eine C₁-C₂₀ - kohlenstoffhaltige Gruppe, bevorzugt C₁-C₁₈-Alkyl, insbesondere Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇₋C₂₀-Alkylaryl ,
oder 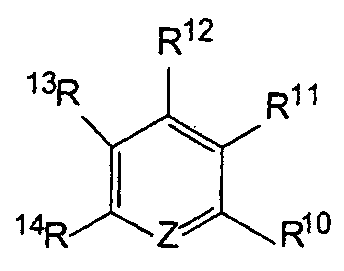 worin,
R¹⁰, R¹¹, R¹², R¹³, R¹⁴ gleich oder verschieden sind und ein Wasserstoffatom, eine C₁-C₂₀-kohlenstoffhaltige Gruppe, bevorzugt C₁-C₁₈-Alkyl, insbesondere Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₄-C₂₄-Heteroaryl, C₄-C₂₄-Alkylheteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl ist,
Z ein Heteroatom aus der V-Hauptgruppe ist.

3. Verbindungen gemäß Anspruch 2, **dadurch gekennzeichnet, daß**
R³ und R⁵, oder R⁴ und R⁶ C₄-C₂₄-Heteroaryl oder C₄-C₂₄-Alkylheteroaryl wie 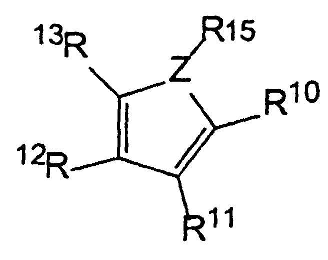
worin
R¹⁰ ein Wasserstoffatom, ein C₁-C₁₈-Alkyl, insbesondere Methyl, Ethyl, n-Butyl, n-Hexyl, Cyclohexyl oder Octyl, Phenyl ist,
R¹¹, R¹² ein Wasserstoffatom ist,
R¹³ das am Metall gebundene Indenylsystem ist,
Z Sauerstoff, Stickstoff oder Schwefel ist,
R¹⁵ wenn Z = Sauerstoff und Schwefel ist R¹⁵ nicht vorhanden, bei Z = Stickstoff ist R¹⁵ ein Wasserstoffatom, Methyl, Ethyl, n-Buthyl, n-Hexyl, Cyclohexyl und Phenyl,
oder 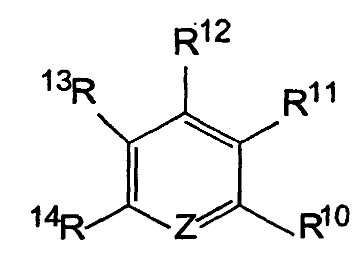 worin,
R¹⁰ ein Wasserstoffatom, ein C₁-C₁₈-Alkyl, wie Methyl, Ethyl, n-Butyl, n-Hexyl, Cyclohexyl oder Octyl, Phenyl ist,
R¹¹, R¹², R¹³ ein Wasserstoffatom ist,
R¹⁴ das am Metall gebundene Indenylsystem ist,
Z Stickstoff ist.

4. Verwendung einer Verbindung der Formel (II) gemäß einem der Ansprüche 1 bis 3 zur Herstellung von Polyolefinen.

5. Katalysatorsystem enthaltend mindestens ein Metallocen der Formel (II) gemäß einem der Ansprüche 1 bis 3, mindestens einen Cokatalysator, mindestens einen Träger.

6. Katalysatorsystem gemäß Anspruch 5, zusätzlich enthaltend mindestens eine weitere Additivkomponente.

7. Verwendung einer Verbindung der Formel (II) gemäß einem der Ansprüche 1 bis 3 zur Herstellung eines Katalysatorsystems gemäß einem der Ansprüche 5 oder 6.

8. Verwendung des Katalysatorsystems gemäß Anspruch 5 oder 6 in der Herstellung von Polyolefinen, insbesondere von ataktischem-isotaktischem Stereoblock-Polypropylen mit elastomeren Eigenschaften.

9. Verfahren zur Herstellung von Polyolefinen durch Polymerisation von einem oder mehreren Olefinen in Gegenwart eines Katalysatorsystems gemäß Anspruch 5 oder 6.

10. Verbindungen nach Anspruch 1, **dadurch gekennzeichnet, daß** in Formel (II) für
Bis(2-(5'-methyl-2'-furyl)-indenyl)zirkaniumdichlorid,
Bis(2-(5'-methyl-2'-furyl)-(4,5-benzoindenyl))hafniumdichlorid,
Bis(2-(5'-methyl-2'-furyl)-(4-isopropyl)indenyl) zirkoniumdichlorid,
Bis (2-(5'-methyl-2'-furyl)-benzo-indenyl) zirkoniumdichlorid,
Bis(2-(5'-methyl-2'-furyl)-4-(1-naphthyl)-indenyl) zirkoniumdichlorid,
Bis(2-(5'-methyl-2'-furyl)-4-(2-naphthyl)-indenyl) zirkoniumdichlorid,
Bis(2-(5'-methyl-2'-furyl)-4-phenyl-indenyl)zirkoniumdichlorid,
Bis(2-(5'-methyl-2'-furyl)-4-t-butyl-indenyl) zirkoniumdichlorid,
Bis(2-(5'-methyl-2'-furyl)-9-isopropyl-indenyl) zirkoniumdichlorid,
Bis(2-(5'-methyl-2'-furyl)-4-ethyl-indenyl)zirkoniumdichlorid,
Bis(2-(5'-methyl-2'-furyl)-4-acenaphth-indenyl) zirkoniumdichlorid,
Bis(2-(5'-methyl-2'-furyl)-4-dimethyl-indenyl) zirkoniumdichlorid,
Bis(2-(5'-methyl-2'-furyl)-4-(tert-butyl-phenyl-indenyl)zirkoniumdichlorid,
Bis(2-(5'-methyl-2'-furyl)-4-(4-methyl-phenyl-indenyl) zirkoniumdichlorid,
Bis(2-(5'-methyl-2'-furyl)-4-(4-ethyl-phenyl-indenyl) zirkoniumdichlorid,
Bis(2-(5'-methyl-2'-furyl)-4-(4-trifluormethyl-phenyl-indenyl) zirkoniumdichlorid,
Bis(2-(5'-methyl-2'-furyl)-4-(4-methoxy-phenyl-indenyl) zirkoniumdichlorid,
Bis(2-(5'-methyl-2'-furyl)-4-(4-tert-butyl-phenyl-indenyl) zirkoniumdimethyl,
Bis(2-(5'-methyl-2'-furyl)-4-(4-methyl-phenyl-indenyl) zirkoniumdimethyl,
Bis(2-(5'-methyl-2'-furyl)-4-(4-ethyl-phenyl-indenyl) zirkoniumdimethyl,
Bis(2-(5'-methyl-2'-furyl)-4-(4-trifluormethyl-phenyl-indenyl) zirkoniumdimethyl,
Bis(2-(5'-methyl-2'-furyl)-4-(4-methoxy-phenyl-indenyl) zirkoniumdimethyl,
Bis (2-(5'-methyl-2'-furyl)-4-(4'-tert.-butyl-phenyl)-indenyl) zirkoniumdichlorid,
Bis(2-(5'-methyl-2'-furyl)-4-(4'-tert.-butyl-phenyl)-indenyl) hafniumdichlorid,
Bis(2-(5'-methyl-2'-furyl)-4-(4'-tert.-butyl-phenyl)-indenyl) titandichlorid,
Bis(2-(5'-methyl-2'-furyl)-4-(4'-methyl-phenyl)-indenyl) zirkoniumdichlorid,
Bis(2-(5'-methyl-2'-furyl)-4-(4'-ethyl-phenyl)-indenyl) zirkoniumdichlorid,
Bis(2-(5'-methyl-2'-furyl)-4-(4'-n-propyl-phenyl)-indenyl) zirkoniumdichlorid,
Bis(2-(5'-methyl-2'-furyl)-4-(4'-iso-propyl-phenyl)-indenyl) zirkoniumdichlorid,
Bis(2-(5'-methyl-2'-furyl)-4-(4'-n-butyl-phenyl)-indenyl) zirkoniumdichlorid,
Bis(2-(5'-methyl-2'-furyl)-4-(4'-hexyl-phenyl)-indenyl) zirkoniumdichlorid,
Bis(2-(5'-methyl-2'-furyl)-4-(4'-sec-butyl-phenyl)-indenyl) zirkoniumdichlorid,
Bis(2-(5'-methyl-2'-furyl)-4-(4'-Trimethylsilyl-phenyl)-indenyl)zirkoniumdichlorid,
Bis(2-(5'-methyl-2'-thiophen)-indenyl)zirkoniumdichlorid,
Bis(2-(5'-methyl-2'-thiophen)-(4,5-benzoindenyl)) hafniumdichlorid,
Bis(2-(5'-methyl-2'-thiophen)-(4-isopropyl)indenyl) zirkoniumdichlorid,
Bis(2-(5'-methyl-2'-thiophen)-benzo-indenyl)zirkoniumdichlorid,
Bis(2-(5'-methyl-2'-thiophen)-4-(1-naphthyl)-indenyl) zirkoniumdichlorid,
Bis(2-(5'-methyl-2'-thiophen)-4-(2-naphthyl)-indenyl) zirkoniumdichlorid,
Bis(2-(5'-methyl-2'-thiophen)-4-phenyl-indenyl) zirkoniumdichlorid,
Bis(2-(5'-methyl-2'-thiophen)-4-t-butyl-indenyl) zirkoniumdichlorid,
Bis(2-(5'-methyl-2'-thiophen)-4-isopropyl-indenyl) zirkoniumdichlorid,
Bis(2-(5'-methyl-2'-thiophen)-4-ethyl-indenyl) zirkoniumdichlorid,
Bis(2-(5'-methyl-2'-thiophen)-4-acenaphth-indenyl) zirkoniumdichlorid,
Bis(2-(5'-methyl-2'-thiophen)-4-dimethyl-indenyl) zirkoniumdichlorid,
Bis(2-(5'-methyl-2'-thiophen)-4-(tert-butyl-phenyl-indenyl)zirkoniumdichlorid,
Bis(2-(5'-methyl-2'-thiophen)-4-(4-methyl-phenyl-indenyl) zirkoniumdichlorid,
Bis(2-(5'-methyl-2'-thiophen)-4-(4-ethyl-phenyl-indenyl) zirkoniumdichlorid,
Bis(2-(5'-methyl-2'-thiophen)-4-(4-trifluormethyl-phenyl-indenyl) zirkoniumdichlorid,
Bis(2-(5'-methyl-2'-thiophen)-4-(4-methoxy-phenyl-indenyl) zirkoniumdichlorid,
Bis(2-(5'-methyl-2'-thiophen)-4-(4-tert-butyl-phenyl-indenyl) zirkoniumdimethyl,
Bis(2-(5'-methyl-2'-thiophen)-4-(4-methyl-phenyl-indenyl) zirkoniumdimethyl,
Bis(2-(5'-methyl-2'-thiophen)-4-(4-ethyl-phenyl-indenyl) zirkoniumdimethyl,
Bis(2-(5'-methyl-2'-thiophen)-4-(4-trifluormethyl-phenyl-indenyl)zirkoniumdimethyl,
Bis(2-(5'-methyl-2'-thiophen)-4-(4-methoxy-phenyl-indenyl) zirkoniumdimethyl,
Bis(2-(5'-methyl-2'-thiophen)-4-(4'-tert.-butyl-phenyl)-indenyl)zirkoniumdichlorid,
Bis(2-(5'-methyl-2'-thiophen)-4-(4'-tert.-butyl-phenyl)-indenyl)hafniumdichlorid,
Bis(2-(5'-methyl-2'-thiophen)-4-(4'-tert.-butyl-phenyl)-indenyl)titandichlorid,
Bis(2-(5'-methyl-2'-thiophen)-4-(4'-methyl-phenyl)-indenyl) zirkoniumdichlorid,
Bis(2-(5'-methyl-2'-thiophen)-4-(4'-ethyl-phenyl)-indenyl) zirkoniumdichlorid,
Bis(2-(5'-methyl-2'-thiophen)-4-(4'-n-propyl-phenyl)-indenyl) zirkoniumdichlorid,
Bis(2-(5'-methyl-2'-thiophen)-4-(4'-iso-propyl-phenyl)-indenyl) zirkoniumdichlorid,
Bis(2-(5'-methyl-2'-thiophen)-4-(4'-n-butyl-phenyl)-indenyl) zirkoniumdichlorid,
Bis(2-(5'-methyl-2'-thiophen)-4-(4'-hexyl-phenyl)-indenyl) zirkoniumdichlorid,
Bis(2-(5'-methyl-2'-thiophen)-4-(4'-sec-butyi-phenyl)-indenyl) zirkoniumdichlorid,
Bis(2-(5'-methyl-2'-thiophen)-4-(4'-Trimethylsilyl-phenyl)-indenyl)zirkoniumdichlorid,
Bis(2-(5'-methyl-2'-N-methylpyrrol)-indenyl)zirkoniumdichlorid,
Bis(2-(5'-methyl-2'-N-methylpyrrol)-(4,5-benzoindenyl)) hafniumdichlorid,
Bis(2-(5'-methyl-2'-N-methylpyrrol)-(4-isopropyl)indenyl) zirkoniumdichlorid,
Bis(2-(5'-methyl-2'-N-methylpyrrol)-benzo-indenyl) zirkoniumdichlorid,
Bis(2-(5'-methyl-2'-N-methylpyrrol)-9-(1-naphthyl)-indenyl) zirkoniumdichlorid,
Bis(2-(5'-methyl-2'-N-methylpyrrol)-4-(2-naphthyl)-indenyl) zirkoniumdichlorid,
Bis(2-(5'-methyl-2'-N-methylpyrrol)-4-phenyl-indenyl) zirkoniumdichlorid,
Bis(2-(5'-methyl-2'-N-methylpyrrol)-4-t-butyl-indenyl) zirkoniumdichlorid,
Bis(2-(5'-methyl-2'-N-methylpyrrol)-4-isopropyl-indenyl) zirkoniumdichlorid,
Bis(2-(5'-methyl-2'-N-methylpyrrol)-4-ethyl-indenyl) zirkoniumdichlorid,
Bis(2-(5'-methyl-2'-N-methylpyrrol)-4-acenaphth-indenyl) zirkoniumdichlorid,
Bis(2-(5'-methyl-2'-N-methylpyrrol)-4-dimethyl-indenyl) zirkoniumdichlorid,
Bis(2-(5'-methyl-2'-N-methylpyrrol)-4-(tert-butyl-phenyl-indenyl)zirkoniumdichlorid,
Bis(2-(5'-methyl-2'-N-methylpyrrol)-4-(4-methyl-phenyl-indenyl) zirkoniumdichlorid,
Bis(2-(5'-methyl-2'-N-methylpyrrol)-4-(4-ethyl-phenyl-indenyl) zirkoniumdichlorid,
Bis(2-(5'-methyl-2'-N-methylpyrrol)-4-(9-trifluormethyl-phenyl-indenyl)zirkoniumdichlorid,
Bis(2-(5'-methyl-2'-N-methylpyrrol)-4-(4-methoxy-phenyl-indenyl)zirkoniumdichlorid,
Bis(2-(5'-methyl-2'-N-methylpyrrol)-4-(4-tert-butyl-phenyl-indenyl)zirkoniumdimethyl,
Bis(2-(5'-methyl-2'-N-methylpyrrol)-4-(4-methyl-phenyl-indenyl) zirkoniumdimethyl,
Bis(2-(5'-methyl-2'-N-methylpyrrol)-4-(4-ethyl-phenyl-indenyl) zirkoniumdimethyl,
Bis(2-(5'-methyl-2'-N-methylpyrrol)-4-(4-trifluormethyl-phenyl-indenyl)zirkoniumdimethyl,
Bis(2-(5'-methyl-2'-N-methylpyrrol)-4-(4-methoxy-phenyl-indenyl)zirkoniumdimethyl,
Bis(2-(5'-methyl-2'-N-methylpyrrol)-4-(4'-tert.-butyl-phenyl)-indenyl)zirkoniumdichlorid,
Bis(2-(5'-methyl-2'-N-methylpyrrol)-4-(4'-tert.-butyl-phenyl)-indenyl)hafniumdichlorid,
Bis(2-(5'-methyl-2'-N-methylpyrrol)-4-(4'-tert.-butyl-phenyl)-indenyl)titandichlorid,
Bis(2-(5'-methyl-2'-N-methylpyrrol)-4-(4'-methyl-phenyl)-indenyl)zirkoniumdichlorid,
Bis(2-(5'-methyl-2'-N-methylpyrrol)-4-(4'-ethyl-phenyl)-indenyl)zirkoniumdichlorid,
Bis(2-(5'-methyl-2'-N-methylpyrrol)-4-(4'-n-propyl-phenyl)-indenyl)zirkoniumdichlorid,
Bis(2-(5'-methyl-2'-N-methylpyrrol)-4-(4'-iso-propyl-phenyl)-indenyl)zirkoniumdichlorid,
Bis(2-(5'-methyl-2'-N-methylpyrrol)-4-(4'-n-butyl-phenyl)-indenyl)zirkoniumdichlorid,
Bis(2-(5'-methyl-2'-N-methylpyrrol)-4-(4'-hexyl-phenyl)-indenyl)zirkoniumdichlorid,
Bis(2-(5'-methyl-2'-N-methylpyrrol)-4-(4'-sec-butyl-phenyl)-indenyl)zirkoniumdichlorid,
Bis(2-(5'-methyl-2'-N-methylpyrrol)-4-(4'-Timethylsilylphenyl)-indenyl)zirkoniumdichlorid,
Bis(1-(5'-methyl-2'-furyl)-indenyl)zirkoniumdichlorid,
Bis(1-(5'-methyl-2'-furyl)-(4,5-benzoindenyl))hafniumdichlorid,
Bis(1-(5'-methyl-2'-furyl)-(4-isopropyl)indenyl) zirkoniumdichlorid,
Bis(1-(5'-methyl-2'-furyl)-benzo-indenyl)zirkoniumdichlorid,
Bis(1-(5'-methyl-2'-furyl)-4-(1-naphthyl)-indenyl) zirkoniumdichlorid,
Bis(1-(5'-methyl-2'-furyl)-4-(2-naphthyl)-indenyl) zirkoniumdichlorid,
Bis(1-(5'-methyl-2'-furyl)-4-phenyl-indenyl)zirkoniumdichlorid,
Bis(1-(5'-methyl-2'-furyl)-4-t-butyl-indenyl) zirkoniumdichlorid,
Bis(1-(5'-methyl-2'-furyl)-4-isopropyl-indenyl) zirkoniumdichlorid,
Bis(1-(5'-methyl-2'-furyl)-4-ethyl-indenyl)zirkoniumdichlorid,
Bis(1-(5'-methyl-2'-furyl)-4-acenaphth-indenyl) zirkoniumdichlorid,
Bis(1-(5'-methyl-2'-furyl)-4-dimethyl-indenyl) zirkoniumdichlorid,
Bis(1-(5'-methyl-2'-furyl)-4-(tert-butyl-phenyl-indenyl)zirkoniumdichlorid,
Bis(1-(5'-methyl-2'-furyl)-4-(4-methyl-phenyl-indenyl) zirkoniumdichlorid,
Bis(1-(5'-methyl-2'-furyl)-4-(4-ethyl-phenyl-indenyl) zirkoniumdichlorid,
Bis(1-(5'-methyl-2'-furyl)-4-(4-trifluormethyl-phenyl-indenyl) zirkoniumdichlorid,
Bis(1-(5'-methyl-2'-furyl)-4-(4-methoxy-phenyl-indenyl) zirkoniumdichlorid,
Bis(1-(5'-methyl-2'-furyl)-4-(4-tert-butyl-phenyl-indenyl) zirkoniumdimethyl,
Bis(1-(5'-methyl-2'-furyl)-4-(4-methyl-phenyl-indenyl) zirkoniumdimethyl,
Bis(1-(5'-methyl-2'-furyl)-4-(4-ethyl-phenyl-indenyl) zirkoniumdimethyl,
Bis (1-(5'-methyl-2'-furyl)-4-(4-trifluormethyl-phenyl-indenyl) zirkoniumdimethyl,
Bis(1-(5'-methyl-2'-furyl)-4-(4-methoxy-phenyl-indenyl) zirkoniumdimethyl,
Bis(1-(5'-methyl-2'-furyl)-4-(4'-tert.-butyl-phenyl)-indenyl) zirkoniumdichlorid,
Bis(1-(5'-methyl-2'-furyl)-4-(4'-tert.-butyl-phenyl)-indenyl) hafniumdichlorid,
Bis(1-(5'-methyl-2'-furyl)-4-(4'-tert.-butyl-phenyl)-indenyl) titandichlorid,
Bis(1-(5'-methyl-2'-furyl)-4-(4'-methyl-phenyl)-indenyl) zirkoniumdichlorid,
Bis(1-(5'-methyl-2'-furyl)-4-(4'-ethyl-phenyl)-indenyl) zirkoniumdichlorid,
Bis(1-(5'-methyl-2'-furyl)-4-(4'-n-propyl-phenyl)-indenyl)zirkoniumdichlorid,
Bis(1-(5'-methyl-2'-furyl)-4-(4'-iso-propyl-phenyl)-indenyl) zirkoniumdichlorid,
Bis(1-(5'-methyl-2'-furyl)-4-(4'-n-butyl-phenyl)-indenyl)zirkoniumdichlorid,
Bis(1-(5'-methyl-2'-furyl)-4-(4'-hexyl-phenyl)-indenyl) zirkoniumdichlorid,
Bis(1-(5'-methyl-2'-furyl)-4-(4'-sec-butyl-phenyl)-indenyl) zirkoniumdichlorid,
Bis(1-(5'-methyl-2'-furyl)-4-(4'-Trimethylsilyl-phenyl)-indenyl)zirkoniumdichlorid,
Bis(1-(5'-methyl-2'-thiophen)-indenyl)zirkoniumdichlorid,
Bis(1-(5'-methyl-2'-thiophen)-(4,5-benzoindenyl)) hafniumdichlorid,
Bis(1-(5'-methyl-2'-thiophen)-(4-isopropyl)indenyl) zirkoniumdichlorid,
Bis(1-(5'-methyl-2'-thiophen)-benzo-indenyl)zirkoniumdichlorid,
Bis(1-(5'-methyl-2'-thiophen)-4-(1-naphthyl)-indenyl) zirkoniumdichlorid,
Bis(1-(5'-methyl-2'-thiophen)-4-(2-naphthyl)-indenyl) zirkoniumdichlorid,
Bis(1-(5'-methyl-2'-thiophen)-4-phenyl-indenyl) zirkoniumdichlorid,
Bis(1-(5'-methyl-2'-thiophen)-4-t-butyl-indenyl) zirkoniumdichlorid,
Bis(1-(5'-methyl-2'-thiophen)-4-isopropyl-indenyl) zirkoniumdichlorid,
Bis(1-(5'-methyl-2'-thiophen)-4-ethyl-indenyl) zirkoniumdichlorid,
Bis(1-(5'-methyl-2'-thiophen)-4-acenaphth-indenyl) zirkoniumdichlorid,
Bis(1-(5'-methyl-2'-thiophen)-4-dimethyl-indenyl) zirkoniumdichlorid,
Bis(1-(5'-methyl-2'-thiophen)-4-(tert-butyl-phenyl-indenyl)zirkoniumdichlorid,
Bis(1-(5'-methyl-2'-thiophen)-4-(4-methyl-phenyl-indenyl) zirkoniumdichlorid,
Bis(1-(5'-methyl-2'-thiophen)-4-(4-ethyl-phenyl-indenyl) zirkoniumdichlorid,
Bis(1-(5'-methyl-2'-thiophen)-4-(4-trifluormethyl-phenyl-indenyl)zirkoniumdichlorid,
Bis(1-(5'-methyl-2'-thiophen)-4-(4-methoxy-phenyl-indenyl) zirkoniumdichlorid,
Bis(1-(5'-methyl-2'-thiophen)-4-(4-tert-butyl-phenyl-indenyl)zirkoniumdimethyl,
Bis(1-(5'-methyl-2'-thiophen)-4-(4-methyl-phenyl-indenyl)zirkoniumdimethyl,
Bis(1-(5'-methyl-2'-thiophen)-4-(4-ethyl-phenyl-indenyl)-zirkoniumdimethyl,
Bis(1-(5'-methyl-2'-thiophen)-4-(4-trifluormethyl-phenyl-indenyl)zirkoniumdimethyl,
Bis(1-(5'-methyl-2'-thiophen)-4-(4-methoxy-phenyl-indenyl) zirkoniumdimethyl,
Bis(1-(5'-methyl-2'-thiophen)-4-(4'-tert.-butyl-phenyl)-indenyl)zirkoniumdichlorid,
Bis(1-(5'-methyl-2'-thiophen)-4-(4'-tert.-butyl-phenyl)-indenyl)hafniumdichlorid,
Bis(1-(5'-methyl-2'-thiophen)-4-(4'-tert.-butyl-phenyl)-indenyl)titandichlorid,
Bis(1-(5'-methyl-2'-thiophen)-4-(4'-methyl-phenyl)-indenyl) zirkoniumdichlorid,
Bis(1-(5'-methyl-2'-thiophen)-4-(4'-ethyl-phenyl)-indenyl) zirkoniumdichlorid,
Bis(1-(5'-methyl-2'-thiophen)-4-(4'-n-propyl-phenyl)-indenyl) zirkoniumdichlorid,
Bis(1-(5'-methyl-2'-thiophen)-4-(4'-iso-propyl-phenyl)-indenyl) zirkoniumdichlorid,
Bis(1-(5'-methyl-2'-thiophen)-4-(4'-n-butyl-phenyl)-indenyl) zirkoniumdichlorid,
Bis(1-(5'-methyl-2'-thiophen)-4-(4'-hexyl-phenyl)-indenyl) zirkoniumdichlorid,
Bis(1-(5'-methyl-2'-thiophen)-4-(4'-sec-butyl-phenyl)-indenyl) zirkoniumdichlorid,
Bis(1-(5'-methyl-2'-thiophen)-4-(4'-Trimethylsilyl-phenyl)-indenyl)zirkoniumdichlorid,
Bis(1-(5'-methyl-2'-N-methylpyrrol)-indenyl)zirkoniumdichlorid,
Bis(1-(5'-methyl-2'-N-methylpyrrol)-(4,5-benzoindenyl)) hafniumdichlorid,
Bis(1-(5'-methyl-2'-N-methylpyrrol)-(4-isopropyl)indenyl) zirkoniumdichlorid,
Bis(1-(5'-methyl-2'-N-methylpyrrol)-benzo-indenyl) zirkoniumdichlorid,
Bis(1-(5'-methyl-2'-N-methylpyrrol)-4-(1-naphthyl)-indenyl) zirkoniumdichlorid,
Bis(1-(5'-methyl-2'-N-methylgyrrol)-4-(2-naphthyl)-indenyl) zirkoniumdichlorid,
Bis(1-(5'-methyl-2'-N-methylpyrrol)-4-phenyl-indenyl) zirkoniumdichlorid,
Bis(1-(5'-methyl-2'-N-methylpyrrol)-4-t-butyl-indenyl) zirkoniumdichlorid,
Bis(1-(5'-methyl-2'-N-methylpyrrol)-4-isopropyl-indenyl) zirkoniumdichlorid,
Bis(1-(5'-methyl-2'-N-methylpyrrol)-4-ethyl-indenyl) zirkoniumdichlorid,
Bis(1-(5'-methyl-2'-N-methylpyrrol)-4-acenaphth-indenyl) zirkoniumdichlorid,
Bis(1-(5'-methyl-2'-N-methylpyrrol)-4-dimethyl-indenyl) zirkoniumdichlorid,
Bis(1-(5'-methyl-2'-N-methylpyrrol)-4-(tert-butyl-phenyl-indenyl)zirkoniumdichlorid,
Bis(1-(5'-methyl-2'-N-methylpyrrol)-4-(4-methyl-phenyl-indenyl) zirkoniumdichlorid,
Bis(1-(5'-methyl-2'-N-methylpyrrol)-4-(4-ethyl-phenyl-indenyl) zirkoniumdichlorid,
Bis(1-(5'-methyl-2'-N-methylpyrrol)-4-(4-trifluormethyl-phenyl-indenyl)zirkoniumdichlorid,
Bis(1-(5'-methyl-2'-N-methylpyrrol)-4-(4-methoxy-phenylindenyl)zirkoniumdichlorid,
Bis(1-(5'-methyl-2'-N-methylpyrrol)-4-(4-tert-butyl-phenyl-indenyl)zirkoniumdimethyl,
Bis(1-(5'-methyl-2'-N-methylpyrrol)-4-(4-methyl-phenyl-indenyl) zirkoniumdimethyl,
Bis(1-(5'-methyl-2'-N-methylpyrrol)-4-(4-ethyl-phenyl-indenyl) zirkoniumdimethyl,
Bis(1-(5'-methyl-2'-N-methylpyrrol)-4-(4-trifluormethyl-phenyl-indenyl)zirkoniumdimethyl,
Bis(1-(5'-methyl-2'-N-methylpyrrol)-4-(4-methoxy-phenyl-indenyl)zirkoniumdimethyl,
Bis(1-(5'-methyl-2'-N-methylpyrrol)-4-(4'-tert.-butyl-phenyl)-indenyl)zirkoniumdichlorid,
Bis(1-(5'-methyl-2'-N-methylpyrrol)-4-(4'-tert.-butyl-phenyl)-indenyl)hafniumdichlorid,
Bis(1-(5'-methyl-2'-N-methylpyrrol)-4-(4'-tert.-butyl-phenyl)-indenyl)titandichlorid,
Bis(1-(5'-methyl-2'-N-methylpyrrol)-4-(4'-methyl-phenyl)-indenyl)zirkoniumdichlorid,
Bis(1-(5'-methyl-2'-N-methylpyrrol)-4-(4'-ethyl-phenyl)-indenyl)zirkoniumdichlorid,
Bis(1-(5'-methyl-2'-N-methylpyrrol)-4-(4'-n-propyl-phenyl)-indenyl)zirkoniumdichlorid,
Bis(1-(5'-methyl-2'-N-methylpyrrol)-4-(4'-iso-propyl-phenyl)-indenyl) zirkoniumdichlorid,
Bis(1-(5'-methyl-2'-N-methylpyrrol)-4-(4'-n-butyl-phenyl)-indenyl)zirkoniumdichlorid,
Bis(1-(5'-methyl-2'-N-methylpyrrol)-4-(4'-hexyl-phenyl)-indenyl)zirkoniumdichlorid,
Bis(1-(5'-methyl-2'-N-methylpyrrol)-4-(4'-sec-butyl-phenyl)-indenyl) zirkoniumdichlorid,
Bis(1-(5'-methyl-2'-N-methylpyrrol)-4-(4'-Trimethylsilylphenyl)-indenyl)zirkoniumdichlorid,
Bis(2-(5'-ethyl-2'-furyl)-indenyl)zirkoniumdichlorid,
Bis(2-(5'-ethyl-2'-furyl)-(4,5-benzoindenyl))hafniumdichlorid,
Bis(2-(5'-ethyl-2'-furyl)-(4-isopropyl)indenyl) zirkoniumdichlorid,
Bis(2-(5'-ethyl-2'-furyl)-benzo-indenyl)zirkoniumdichlorid,
Bis(2-(5'-ethyl-2'-furyl)-4-(1-naphthyl)-indenyl) zirkoniumdichlorid,
Bis(2-(5'-ethyl -2'-furyl)-4-(2-naphthyl)-indenyl) zirkoniumdichlorid,
Bis(2-(5'-ethyl -2'-furyl)-4-phenyl-indenyl)zirkoniumdichlorid,
Bis(2-(5'-ethyl-2'-furyl)-4-t-butyl-indenyl)zirkoniumdichlorid,
Bis(2-(5'-ethyl-2'-furyl)-4-isopropyl-indenyl) zirkoniumdichlorid,
Bis(2-(5'-ethyl-2'-furyl)-4-ethyl-indenyl)zirkoniumdichlorid,
Bis(2-(5'-ethyl-2'-furyl)-4-acenaphth-indenyl) zirkoniumdichlorid,
Bis(2-(5'-ethyl-2'-furyl)-4-dimethyl-indenyl) zirkoniumdichlorid,
Bis(2-(5'-ethyl-2'-furyl)-4-(tert-butyl-phenyl-indenyl)zirkoniumdichlorid,
Bis(2-(5'-ethyl-2'-furyl)-4-(4-methyl-phenyl-indenyl) zirkoniumdichlorid,
Bis(2-(5'-ethyl-2'-furyl)-4-(4-ethyl-phenyl-indenyl) zirkoniumdichlorid,
Bis(2-(5'-ethyl-2'-furyl)-4-(4-trifluormethyl-phenyl-indenyl) zirkoniumdichlorid,
Bis(2-(5'-ethyl-2'-furyl)-4-(4-methoxy-phenyl-indenyl) zirkoniumdichlorid,
Bis(2-(5'-ethyl-2'-furyl)-4-(4-tert-butyl-phenyl-indenyl) zirkoniumdimethyl,
Bis(2-(5'-ethyl-2'-furyl)-4-(4-methyl-phenyl-indenyl) zirkoniumdimethyl,
Bis(2-(5'-ethyl-2'-furyl)-4-(4-ethyl-phenyl-indenyl) zirkoniumdimethyl,
Bis(2-(5'-ethyl-2'-furyl)-4-(4-trifluormethyl-phenyl-indenyl) zirkoniumdimethyl,
Bis(2-(5'-ethyl-2'-furyl)-4-(4-methoxy-phenyl-indenyl) zirkoniumdimethyl,
Bis(2-(5'-ethyl-2'-furyl)-4-(4'-tert.-butyl-phenyl)-indenyl) zirkoniumdichlorid,
Bis(2-(5'-ethyl-2'-furyl)-4-(4'-tert.-butyl-phenyl)-indenyl) hafniumdichlorid,
Bis(2-(5'-ethyl-2'-furyl)-4-(4'-tert.-butyl-phenyl)-indenyl) titandichlorid,
Bis(2-(5'-ethyl-2'-furyl)-4-(4'-methyl-phenyl)-indenyl) zirkoniumdichlorid,
Bis(2-(5'-ethyl-2'-furyl)-4-(4'-ethyl-phenyl)-indenyl) zirkoniumdichlorid,
Bis(2-(5'-ethyl-2'-furyl)-4-(4'-n-propyl-phenyl)-indenyl) zirkoniumdichlorid,
Bis(2-(5'-ethyl-2'-furyl)-4-(4'-iso-propyl-phenyl)-indenyl) zirkoniumdichlorid,
Bis(2-(5'-ethyl-2'-furyl)-4-(4'-n-butyl-phenyl)-indenyl) zirkoniumdichlorid,
Bis(2-(5'-ethyl-2'-furyl)-4-(4'-hexyl-phenyl)-indenyl) zirkoniumdichlorid,
Bis(2-(5'-ethyl-2'-furyl)-4-(4'-sec-butyl-phenyl)-indenyl) zirkoniumdichlorid,
Bis(2-(5'-ethyl-2'-furyl)-4-(4'-trimethylsilyl-phenyl)-indenyl) zirkoniumdichlorid,
Bis(2-(5'-ethyl-2'-thiophen)-indenyl)zirkoniumdichlorid,
Bis(2-(5'-ethyl-2'-thiophen)-(4,5-benzoindenyl)) hafniumdichlorid,
Bis(2-(5'-ethyl-2'-thiophen)-(4-isopropyl)indenyl) zirkoniumdichlorid,
Bis(2-(5'-ethyl-2'-thiophen)-benzo-indenyl)zirkoniumdichlorid,
Bis(2-(5'-ethyl-2'-thiophen)-4-(1-naphthyl)-indenyl) zirkoniumdichlorid,
Bis(2-(5'-ethyl-2'-thiophen)-4-(2-naphthyl)-indenyl) zirkoniumdichlorid,
Bis(2-(5'-ethyl-2'-thiophen)-4-phenyl-indenyl) zirkoniumdichlorid,
Bis(2-(5'-ethyl-2'-thiophen)-4-t-butyl-indenyl) zirkoniumdichlorid,
Bis(2-(5'-ethyl-2'-thiophen)-4-isopropyl-indenyl) zirkoniumdichlorid,
Bis(2-(5'-ethyl-2'-thiophen)-4-ethyl-indenyl) zirkoniumdichlorid,
Bis(2-(5'-ethyl-2'-thiophen)-4-acenaphth-indenyl) zirkoniumdichlorid,
Bis(2-(5'-ethyl-2'-thiophen)-4-dirnethyl-indenyl) zirkoniumdichlorid,
Bis(2-(5'-ethyl-2'-thiophen)-4-(tert-butyl-phenyl-indenyl)zirkoniumdichlorid,
Bis(2-(5'-ethyl-2'-thiophen)-4-(4-methyl-phenyl-indenyl) zirkonium dichlorid,
Bis(2-(5'-ethyl-2'-thiophen)-4-(4-ethyl-phenyl-indenyl) zirkoniumdichlorid,
Bis(2-(5'-ethyl-2'-thiophen)-4-(4-trifluormethyl-phenyl-indenyl)zirkoniumdichlorid,
Bis(2-(5'-ethyl-2'-thiophen)-4-(4-methoxy-phenyl-indenyl) zirkoniumdichlorid,
Bis(2-(5'-ethyl-2'-thiophen)-4-(4-tert-butyl-phenyl-indenyl) zirkoniumdimethyl,
Bis(2-(5'-ethyl-2'-thiophen)-4-(4-methyl-phenyl-indenyl) zirkoniumdimethyl,
Bis(2-(5'-ethyl-2'-thiophen)-4-(4-ethyl-phenyl-indenyl) zirkoniumdimethyl,
Bis(2-(5'-ethyl-2'-thiophen)-4-(4-trifluormethyl-phenyl-indenyl)zirkoniumdimethyl,
Bis(2-(5'-ethyl-2'-thiophen)-4-(4-methoxy-phenyl-indenyl) zirkoniumdimethyl,
Bis(2-(5'-ethyl-2'-thiophen)-4-(9'-tert.-butyl-phenyl)-indenyl) zirkoniumdichlorid,
Bis(2-(5'-ethyl-2'-thiophen)-4-(4'-tert.-butyl-phenyl)-indenyl) hafniumdichlorid,
Bis(2-(5'-ethyl-2'-thiophen)-4-(4'-tert.-butyl-phenyl)-indenyl) titandichlorid,
Bis(2-(5'-ethyl-2'-thiophen)-4-(4'-methyl-phenyl)-indenyl) zirkoniumdichlorid,
Bis(2-(5'-ethyl-2'-thiophen)-4-(4'-ethyl-phenyl)-indenyl) zirkoniumdichlorid,
Bis(2-(5'-ethyl-2'-thiophen)-4-(4'-n-propyl-phenyl)-indenyl) zirkoniumdichlorid,
Bis(2-(5'-ethyl-2'-thiophen)-4-(4'-iso-propyl-phenyl)-indenyl) zirkoniumdichlorid,
Bis(2-(5'-ethyl-2'-thiophen)-4-(4'-n-butyl-phenyl)-indenyl) zirkoniumdichlorid,
Bis(2-(5'-ethyl-2'-thiophen)-4-(4'-hexyl-phenyl)-indenyl) zirkoniumdichlorid,
Bis(2-(5'-ethyl-2'-thiophen)-4-(4'-sec-butyl-phenyl)-indenyl) zirkoniumdichlorid,
Bis(2-(5'-ethyl-2'-thiophen)-4-(4'-Trimethylsilyl-phenyl)-indenyl)zirkoniumdichlorid,
Bis(2-(5'-ethyl-2'-N-methylpyrrol)-indenyl)zirkoniumdichlorid,
Bis(2-(5'-ethyl-2'-N-methylpyrrol)-(4,5-benzoindenyl)) hafniumdichlorid,
Bis(2-(5'-ethyl-2'-N-methylpyrrol)-(9-isopropyl)indenyl) zirkoniumdichlorid,
Bis(2-(5'-ethyl-2'-N-methylpyrrol)-benzo-indenyl) zirkoniumdichlorid,
Bis(2-(5'-ethyl-2'-N-methylpyrrol)-4-(1-naphthyl)-indenyl) zirkoniumdichlorid,
Bis(2-(5'-ethyl-2'-N-methylpyrrol)-4-(2-naphthyl)-indenyl) zirkoniumdichlorid,
Bis(2-(5'-ethyl-2'-N-methylpyrrol)-4-phenyl-indenyl) zirkoniumdichlorid,
Bis(2-(5'-ethyl-2'-N-methylpyrrol)-4-t-butyl-indenyl) zirkoniumdichlorid,
Bis(2-(5'-ethyl-2'-N-methylpyrrol)-4-isopropyl-indenyl) zirkoniumdichlorid,
Bis(2-(5'-ethyl-2'-N-methylpyrrol)-4-ethyl-indenyl) zirkoniumdichlorid,
Bis(2-(5'-ethyl-2'-N-methylpyrrol)-4-acenaphth-indenyl) zirkoniumdichlorid,
Bis(2-(5'-ethyl-2'-N-methylpyrrol)-4-dimethyl-indenyl) zirkoniumdichlorid,
Bis(2-(5'-ethyl-2'-N-methylpyrrol)-4-(tert-butyl-phenyl-indenyl)zirkoniumdichlorid,
Bis(2-(5'-ethyl-2'-N-methylpyrrol)-4-(4-methyl-phenyl-indenyl) zirkoniumdichlorid,
Bis(2-(5'-ethyl-2'-N-methylpyrrol)-4-(4-ethyl-phenyl-indenyl) zirkoniumdichlorid,
Bis(2-(5'-ethyl-2'-N-methylpyrrol)-4-(4-trifluormethyl-phenyl-indenyl)zirkoniumdichlorid,
Bis(2-(5'-ethyl-2'-N-methylpyrrol)-4-(4-methoxy-phenyl-indenyl) zirkoniumdichlorid,
Bis(2-(5'-ethyl-2'-N-methylpyrrol)-4-(4-tert-butyl-phenyl-indenyl)zirkoniumdimethyl,
Bis(2-(5'-ethyl-2'-N-methylpyrrol)-4-(4-methyl-phenyl-indenyl) zirkoniumdimethyl,
Bis(2-(5'-ethyl-2'-N-methylpyrrol)-4-(4-ethyl-phenyl-indenyl) zirkoniumdimethyl,
Bis(2-(5'-ethyl-2'-N-methylpyrrol)-4-(4-trifluormethyl-phenyl-indenyl)zirkoniumdimethyl,
Bis(2-(5'-ethyl-2'-N-methylpyrrol)-4-(4-methoxy-phenyl-indenyl) zirkoniumdimethyl,
Bis(2-(5'-ethyl-2'-N-methylpyrrol)-4-(4'-tert.-butyl-phenyl)-indenyl)zirkoniumdichlorid,
Bis(2-(5'-ethyl-2'-N-methylpyrrol)-4-(4'-tert.-butyl-phenyl)-indenyl)hafniumdichlorid,
Bis(2-(5'-ethyl-2'-N-methylpyrrol)-4-(4'-tert.-butyl-phenyl)-indenyl)titandichlorid,
Bis(2-(5'-ethyl-2'-N-methylpyrrol)-4-(4'-methyl-phenyl)-indenyl)zirkoniumdichlorid,
Bis(2-(5'-ethyl-2'-N-methylpyrrol)-4-(4'-ethyl-phenyl)-indenyl) zirkoniumdichlorid,
Bis(2-(5'-ethyl-2'-N-methylpyrrol)-4-(4'-n-propyl-phenyl)-indenyl)zirkoniumdichlorid,
Bis(2-(5'-ethyl-2'-N-methylpyrrol)-4-(4'-iso-propyl-phenyl)-indenyl)zirkoniumdichlorid,
Bis(2-(5'-ethyl-2'-N-methylpyrrol)-4-(4'-n-butyl-phenyl)-indenyl)zirkoniumdichlorid,
Bis(2-(5'-ethyl-2'-N-methylpyrrol)-4-(4'-hexyl-phenyl)-indenyl) zirkoniumdichlorid,
Bis(2-(5'-ethyl-2'-N-methylpyrrol)-4-(4'-sec-butyl-phenyl)-indenyl)zirkoniumdichlorid,
Bis(2-(5'-ethyl-2'-N-methylpyrrol)-4-(4'-Trimethylsilyl-phenyl) indenyl)zirkoniumdichlorid,
Bis(2-(5'-propyl-2'-furyl)-indenyl)zirkoniumdichlorid,
Bis(2-(5'-propyl-2'-furyl)-(4,5-benzoindenyl))hafniumdichlorid,
Bis(2-(5'-propyl-2'-furyl)-(4-isopropyl)indenyl) zirkoniumdichlorid,
Bis(2-(5'-propyl-2'-furyl)-benzo-indenyl)zirkoniumdichlorid,
Bis(2-(5'-propyl-2'-furyl)-4-(1-naphthyl)-indenyl) zirkoniumdichlorid,
Bis(2-(5'-propyl-2'-furyl)-4-(2-naphthyl)-indenyl) zirkoniumdichlorid,
Bis(2-(5'-propyl-2'-furyl)-4-phenyl-indenyl)zirkoniumdichlorid,
Bis(2-(5'-propyl-2'-furyl)-4-t-butyl-indenyl) zirkoniumdichlorid,
Bis(2-(5'-propyl-2'-furyl)-4-isopropyl-indenyl) zirkoniumdichlorid,
Bis(2-(5'-propyl-2'-furyl)-4-ethyl-indenyl)zirkoniumdichlorid,
Bis(2-(5'-propyl-2'-furyl)-4-acenaphth-indenyl) zirkoniumdichlorid,
Bis(2-(5'-propyl-2'-furyl)-4-dimethyl-indenyl) zirkoniumdichlorid,
Bis(2-(5'-propyl-2'-furyl)-4-(tert-butyl-phenyl-indenyl)zirkoniumdichlorid,
Bis(2-(5'-propyl-2'-furyl)-4-(4-methyl-phenyl-indenyl) zirkoniumdichlorid,
Bis(2-(5'-propyl-2'-furyl)-4-(4-ethyl-phenyl-indenyl) zirkoniumdichlorid,
Bis(2-(5'-propyl-2'-furyl)-4-(4-trifluormethyl-phenyl-indenyl) zirkoniumdichlorid,
Bis(2-(5'-propyl-2'-furyl)-4-(4-methoxy-phenyl-indenyl) zirkoniumdichlorid,
Bis(2-(5'-propyl-2'-furyl)-4-(4-tert-butyl-phenyl-indenyl) zirkoniumdimethyl,
Bis(2-(5'-propyl-2'-furyl)-4-(4-methyl-phenyl-indenyl) zirkoniumdimethyl,
Bis(2-(5'-propyl-2'-furyl)-4-(4-ethyl-phenyl-indenyl) zirkoniumdimethyl,
Bis(2-(5'-propyl-2'-furyl)-4-(4-trifluormethyl-phenyl-indenyl) zirkoniumdimethyl,
Bis(2-(5'-propyl-2'-furyl)-4-(4-methoxy-phenyl-indenyl) zirkoniumdimethyl,
Bis(2-(5'-propyl-2'-furyl)-4-(4'-tert.-butyl-phenyl)-indenyl) zirkoniumdichlorid,
Bis(2-(5'-propyl-2'-furyl)-4-(4'-tert.-butyl-phenyl)-indenyl) hafniumdichlorid,
Bis(2-(5'-propyl-2'-furyl)-4-(4'-tert.-butyl-phenyl)-indenyl) titandichlorid,
Bis(2-(5'-propyl-2'-furyl)-4-(4'-methyl-phenyl)-indenyl) zirkoniumdichlorid,
Bis(2-(5'-propyl-2'-furyl)-4-(4'-ethyl-phenyl)-indenyl) zirkoniumdichlorid,
Bis(2-(5'-propyl-2'-furyl)-4-(4'-n-propyl-phenyl)-indenyl) zirkoniumdichlorid,
Bis(2-(5'-propyl-2'-furyl)-4-(4'-iso-propyl-phenyl)-indenyl) zirkoniumdichlorid,
Bis(2-(5'-propyl-2'-furyl)-4-(4'-n-butyl-phenyl)-indenyl) zirkoniumdichlorid,
Bis(2-(5'-propyl-2'-furyl)-4-(4'-hexyl-phenyl)-indenyl) zirkoniumdichlorid,
Bis(2-(5'-propyl-2'-furyl)-4-(4'-sec-butyl-phenyl)-indenyl) zirkoniumdichlorid,
Bis(2-(5'-propyl-2'-furyl)-4-(4'-Trimethylsilyl-phenyl)-indenyl)zirkoniumdichlorid,
Bis(2-(5'-propyl-2'-thiophen)-indenyl) zirkoniumdichlorid,
Bis(2-(5'-propyl-2'-thiophen)-(4,5-benzoindenyl)) hafniumdichlorid,
Bis(2-(5'-propyl-2'-thiophen)-(4-isopropyl)indenyl) zirkoniumdichlorid,
Bis(2-(5'-propyl-2'-thiophen)-benzo-indenyl)zirkoniumdichlorid,
Bis(2-(5'-propyl-2'-thiophen)-4-(1-naphthyl)-indenyl) zirkoniumdichlorid,
Bis(2-(5'-propyl-2'-thiophen)-4-(2-naphthyl)-indenyl) zirkoniumdichlorid,
Bis(2-(5'-propyl-2'-thiophen)-4-phenyl-indenyl) zirkoniumdichlorid,
Bis(2-(5'-propyl-2'-thiophen)-4-t-butyl-indenyl) zirkoniumdichlorid,
Bis(2-(5'-propyl-2'-thiophen)-4-isopropyl-indenyl) zirkoniumdichlorid,
Bis(2-(5'-propyl-2'-thiophen)-4-ethyl-indenyl) zirkoniumdichlorid,
Bis(2-(5'-propyl-2'-thiophen)-4-acenaphth-indenyl) zirkoniumdichlorid,
Bis(2-(5'-propyl-2'-thiophen)-4-dimethyl-indenyl) zirkoniumdichlorid,
Bis(2-(5'-propyl-2'-thiophen)-4-(tert-butyl-phenyl-indenyl)zirkoniumdichlorid,
Bis(2-(5'-propyl-2'-thiophen)-4-(4-methyl-phenyl-indenyl) zirkoniumdichlorid,
Bis(2-(5'-propyl-2'-thiophen)-4-(4-ethyl-phenyl-indenyl) zirkoniumdichlorid,
Bis(2-(5'-propyl-2'-thiophen)-4-(4-trifluormethyl-phenyl-indenyl)zirkoniumdichlorid,
Bis(2-(5'-propyl-2'-thiophen)-4-(4-methoxy-phenyl-indenyl) zirkoniumdichlorid,
Bis(2-(5'-propyl-2'-thiophen)-4-(4-tert-butyl-phenyl-indenyl) zirkoniumdimethyl,
Bis(2-(5'-propyl-2'-thiophen)-4-(4-methyl-phenyl-indenyl) zirkoniumdimethyl,
Bis(2-(5'-propyl-2'-thiophen)-4-(4-ethyl-phenyl-indenyl) zirkoniumdimethyl,
Bis(2-(5'-propyl-2'-thiophen)-4-(4-trifluonnethyl-phenyl-indenyl)zirkoniumdimethyl,
Bis(2-(5'-propyl-2'-thiophen)-4-(4-methoxy-phenyl-indenyl) zirkoniumdimethyl,
Bis(2-(5'-propyl-2'-thiophen)-4-(4'-tert.-butyl-phenyl)-indenyl)zirkoniumdichlorid,
Bis(2-(5'-propyl-2'-thiophen)-4-(4'-tert.-butyl-phenyl)-indenyl)hafniumdichlorid,
Bis(2-(5'-propyl-2'-thiophen)-4-(4'-tert.-butyl-phenyl)-indenyl)titandichlorid,
Bis(2-(5'-propyl-2'-thiophen)-4-(4'-methyl-phenyl)-indenyl) zirkoniumdichlorid,
Bis(2-(5'-propyl-2'-thiophen)-4-(4'-ethyl-phenyl)-indenyl) zirkoniumdichlorid,
Bis(2-(5'-propyl-2'-thiophen)-4-(4'-n-propyl-phenyl)-indenyl) zirkoniumdichlorid,
Bis(2-(5'-propyl-2'-thiophen)-4-(4'-iso-propyl-phenyl)-indenyl) zirkoniumdichlorid,
Bis(2-(5'-propyl-2'-thiophen)-4-(4'-n-butyl-phenyl)-indenyl) zirkoniumdichlorid,
Bis(2-(5'-propyl-2'-thiophen)-4-(4'-hexyl-phenyl)-indenyl) zirkoniumdichlorid,
Bis(2-(5'-propyl-2'-thiophen)-4-(4'-sec-butyl-phenyl)-indenyl) zirkoniumdichlorid,
Bis(2-(5'-propyl-2'-thiophen)-4-(4'-Trimethylsilyl-phenyl)-indenyl)zirkoniumdichlorid,
Bis(2-(5'-propyl-2'-N-methylpyrrol)-indenyl)zirkoniumdichlorid,
Bis(2-(5'-propyl-2'-N-methylpyrrol)-(4,5-benzoindenyl)) hafniumdichlorid,
Bis(2-(5'-propyl-2'-N-methylpyrrol)-(4-isopropyl)indenyl) zirkoniumdichlorid,
Bis(2-(5'-propyl-2'-N-methylpyrrol)-benzo-indenyl) zirkoniumdichlorid,
Bis(2-(5'-propyl-2'-N-methylpyrrol)-4-(1-naphthyl)-indenyl) zirkoniumdichlorid,
Bis(2-(5'-propyl-2'-N-methylpyrrol)-4-(2-naphthyl)-indenyl) zirkoniumdichlorid,
Bis(2-(5'-propyl-2'-N-methylpyrrol)-4-phenyl-indenyl) zirkoniumdichlorid,
Bis(2-(5'-propyl-2'-N-methylpyrrol)-4-t-butyl-indenyl) zirkoniumdichlorid,
Bis(2-(5'-propyl-2'-N-methylpyrrol)-4-isopropyl-indenyl) zirkoniumdichlorid,
Bis(2-(5'-propyl-2'-N-methylpyrrol)-4-ethyl-indenyl) zirkoniumdichlorid,
Bis(2-(5'-propyl-2'-N-methylpyrrol)-4-acenaphth-indenyl) zirkoniumdichlorid,
Bis(2-(5'-propyl-2'-N-methylpyrrol)-4-dimethyl-indenyl) zirkoniumdichlorid,
Bis(2-(5'-propyl-2'-N-methylpyrrol)-4-(tert-butyl-phenyl-indenyl)zirkoniumdichlorid,
Bis(2-(5'-propyl-2'-N-methylpyrrol)-4-(4-methyl-phenyl-indenyl) zirkoniumdichlorid,
Bis(2-(5'-propyl-2'-N-methylpyrrol)-4-(4-ethyl-phenyl-indenyl) zirkoniumdichlorid,
Bis(2-(5'-propyl-2'-N-methylpyrrol)-4-(4-trifluormethyl-phenyl-indenyl)zirkoniumdichlorid,
Bis(2-(5'-propyl-2'-N-methylpyrrol)-4-(4-methoxy-phenyl-indenyl)zirkoniumdichlorid,
Bis(2-(5'-propyl-2'-N-methylpyrrol)-4-(4-tert-butyl-phenyl-indenyl)zirkoniumdimethyl,
Bis(2-(5'-propyl-2'-N-methylpyrrol)-4-(4-methyl-phenyl-indenyl) zirkoniumdimethyl,
Bis(2-(5'-propyl-2'-N-methylpyrrol)-4-(4-ethyl-phenyl-indenyl) zirkoniumdimethyl,
Bis(2-(5'-propyl-2'-N-methylpyrrol)-4-(4-trifluormethyl-phenyl-indenyl) zirkoniumdimethyl,
Bis(2-(5'-propyl-2'-N-methylpyrrol)-4-(4-methoxy-phenyl-indenyl) zirkoniumdimethyl,
Bis(2-(5'-propyl-2'-N-methylpyrrol)-4-(4'-tert.-butyl-phenyl)-indenyl) zirkoniumdichlorid,
Bis(2-(5'-propyl-2'-N-methylpyrrol)-4-(4'-tert.-butyl-phenyl)-indenyl) hafniumdichlorid,
Bis(2-(5'-propyl-2'-N-methylpyrrol)-4-(4'-tert.-butyl-phenyl)-indenyl)titandichlorid,
Bis(2-(5'-propyl-2'-N-methylpyrrol)-4-(4'-methyl-phenyl)-indenyl)zirkoniumdichlorid,
Bis(2-(5'-propyl-2'-N-methylpyrrol)-4-(4'-ethyl-phenyl)-indenyl)zirkoniumdichlorid,
Bis(2-(5'-propyl-2'-N-methylpyrrol)-4-(4'-n-propyl-phenyl)-indenyl)zirkoniumdichlorid,
Bis(2-(5'-propyl-2'-N-methylpyrrol)-4-(4'-iso-propyl-phenyl)-indenyl)zirkoniumdichlorid,
Bis(2-(5'-propyl-2'-N-methylpyrrol)-4-(4'-n-butyl-phenyl)-indenyl)zirkoniumdichlorid,
Bis(2-(5'-propyl-2'-N-methylpyrrol)-4-(4'-hexyl-phenyl)-indenyl)zirkoniumdichlorid,
Bis(2-(5'-propyl-2'-N-methylpyrrol)-4-(9'-sec-butyl-phenyl)-indenyl)zirkoniumdichlorid,
Bis(2-(5'-propyl-2'-N-methylpyrrol)-4-(4'-Trimethylsilylphenyl)-indenyl)zirkoniumdichlorid,
Bis(2-(5'-phenyl-2'-furyl)-indenyl)zirkoniumdichlorid,
Bis(2-(5'-phenyl-2'-furyl)-(4,5-benzoindenyl))hafniumdichlorid,
Bis(2-(5'-phenyl-2'-furyl)-(4-isopropyl)indenyl) zirkoniumdichlorid,
Bis(2-(5'-phenyl-2'-furyl)-benzo-indenyl)zirkoniumdichlorid,
Bis(2-(5'-phenyl-2'-furyl)-4-(1-naphthyl)-indenyl) zirkoniumdichlorid,
Bis(2-(5'-phenyl-2'-furyl)-4-(2-naphthyl)-indenyl) zirkoniumdichlorid,
Bis(2-(5'-phenyl-2'-furyl)-4-phenyl-indenyl)zirkoniumdichlorid,
Bis(2-(5'-phenyl-2'-furyl)-4-t-butyl-indenyl) zirkoniumdichlorid,
Bis(2-(5'-phenyl-2'-furyl)-4-isopropyl-indenyl) zirkoniumdichlorid,
Bis(2-(5'-phenyl-2'-furyl)-4-ethyl-indenyl)zirkoniumdichlorid,
Bis(2-(5'-phenyl-2'-furyl)-4-acenaphth-indenyl) zirkoniumdichlorid,
Bis(2-(5'-phenyl-2'-furyl)-4-dimethyl-indenyl) zirkoniumdichlorid,
Bis(2-(5'-phenyl-2'-furyl)-4-(tert-butyl-phenyl-indenyl)zirkoniumdichlorid,
Bis(2-(5'-phenyl-2'-furyl)-4-(4-methyl-phenyl-indenyl) zirkoniumdichlorid,
Bis(2-(5'-phenyl-2'-furyl)-4-(4-ethyl-phenyl-indenyl) zirkoniumdichlorid,
Bis(2-(5'-phenyl-2'-furyl)-4-(4-trifluormethyl-phenyl-indenyl) zirkoniumdichlorid,
Bis(2-(5'-phenyl-2'-furyl)-4-(4-methoxy-phenyl-indenyl) zirkoniumdichlorid,
Bis(2-(5'-phenyl-2'-furyl)-4-(4-tert-butyl-phenyl-indenyl) zirkoniumdimethyl,
Bis(2-(5'-phenyl-2'-furyl)-4-(4-methyl-phenyl-indenyl) zirkoniumdimethyl,
Bis(2-(5'-phenyl-2'-furyl)-4-(4-ethyl-phenyl-indenyl)zirkonium dimethyl,
Bis(2-(5'-phenyl-2'-furyl)-4-(4-trifluormethyl-phenyl-indenyl) zirkoniumdimethyl,
Bis(2-(5'-phenyl-2'-furyl)-4-(4-methoxy-phenyl-indenyl) zirkoniumdimethyl,
Bis(2-(5'-phenyl-2'-furyl)-4-(4'-tert.-butyl-phenyl)-indenyl) zirkoniumdichlorid,
Bis(2-(5'-phenyl-2'-furyl)-4-(4'-tert.-butyl-phenyl)-indenyl) hafniumdichlorid,
Bis(2-(5'-phenyl-2'-furyl)-4-(4'-tert.-butyl-phenyl)-indenyl) titandichlorid,
Bis(2-(5'-phenyl-2'-furyl)-4-(4'-methyl-phenyl)-indenyl) zirkoniumdichlorid,
Bis(2-(5'-phenyl-2'-furyl)-4-(4'-ethyl-phenyl)-indenyl) zirkoniumdichlorid,
Bis(2-(5'-phenyl-2'-furyl)-4-(4'-n-propyl-phenyl)-indenyl) zirkoniumdichlorid,
Bis(2-(5'-phenyl-2'-furyl)-4-(4'-iso-propyl-phenyl)-indenyl) zirkoniumdichlorid,
Bis(2-(5'-phenyl-2'-furyl)-4-(4'-n-butyl-phenyl)-indenyl) zirkoniumdichlorid,
Bis(2-(5'-phenyl-2'-furyl)-4-(4'-hexyl-phenyl)-indenyl) zirkoniumdichlorid,
Bis(2-(5'-phenyl-2'-furyl)-4-(4'-sec-butyl-phenyl)-indenyl) zirkoniumdichlorid,
Bis(2-(5'-phenyl-2'-furyl)-4-(4'-Trimethylsilyl-phenyl)-indenyl)zirkoniumdichlorid,
Bis(2-(5'-phenyl-2'-thiophen)-indenyl)zirkoniumdichlorid,
Bis(2-(5'-phenyl-2'-thiophen)-(4,5-benzoindenyl)) hafniumdichlorid,
Bis(2-(5'-phenyl-2'-thiophen)-(4-isopropyl)indenyl) zirkoniumdichlorid,
Bis(2-(5'-phenyl-2'-thiophen)-benzo-indenyl)zirkoniumdichlorid,
Bis(2-(5'-phenyl-2'-thiophen)-4-(1-naphthyl)-indenyl) zirkoniumdichlorid,
Bis (2-(5'-phenyl-2'-thiophen)-4-(2-naphthyl)-indenyl) zirkoniumdichlorid,
Bis(2-(5'-phenyl-2'-thiophen)-4-phenyl-indenyl) zirkoniumdichlorid,
Bis(2-(5'-phenyl-2'-thiophen)-4-t-butyl-indenyl) zirkoniumdichlorid,
Bis(2-(5'-phenyl-2'-thiophen)-4-isopropyl-indenyl) zirkoniumdichlorid,
Bis(2-(5'-phenyl-2'-thiophen)-4-ethyl-indenyl) zirkoniumdichlorid,
Bis(2-(5'-phenyl-2'-thiophen)-4-acenaphth-indenyl) zirkoniumdichlorid,
Bis(2-(5'-phenyl-2-thiophen)-4-dimethyl-indenyl) zirkoniumdichlorid,
Bis(2-(5'-phenyl-2'-thiophen)-4-(tert-butyl-phenyl-indenyl)zirkoniumdichlorid,
Bis(2-(5'-phenyl-2'-thiophen)-4-(4-methyl-phenyl-indenyl) zirkoniumdichlorid,
Bis(2-(5'-phenyl-2'-thiophen)-4-(4-ethyl-phenyl-indenyl) zirkoniumdichlorid,
Bis(2-(5'-phenyl-2'-thiophen)-4-(4-trifluormethyl-phenyl-indenyl)zirkoniumdichlorid,
Bis(2-(5'-phenyl-2'-thiophen)-4-(4-methoxy-phenyl-indenyl) zirkoniumdichlorid,
Bis(2-(5'-phenyl-2'-thiophen)-4-(4-tert-butyl-phenyl-indenyl) zirkoniumdimethyl,
Bis(2-(5'-phenyl-2'-thiophen)-4-(4-methyl-phenyl-indenyl) zirkoniumdimethyl,
Bis(2-(5'-phenyl-2'-thiophen)-4-(4-ethyl-phenyl-indenyl) zirkoniumdimethyl,
Bis(2-(5'-phenyl-2'-thiophen)-4-(4-trifluormethyl-phenyl-indenyl)zirkoniumdimethyl,
Bis(2-(5'-phenyl-2'-thiophen)-4-(4-methoxy-phenyl-indenyl) zirkoniumdimethyl,
Bis(2-(5'-phenyl-2'-thiophen)-4-(4'-tert.-butyl-phenyl)-indenyl)zirkoniumdichlorid,
Bis(2-(5'-phenyl-2'-thiophen)-4-(4'-tert.-butyl-phenyl)-indenyl)hafniumdichlorid,
Bis(2-(5'-phenyl-2'-thiophen)-4-(4'-tert.-butyl-phenyl)-indenyl)titandichlorid,
Bis(2-(5'-phenyl-2'-thiophen)-4-(4'-methyl-phenyl)-indenyl) zirkoniumdichlorid,
Bis(2-(5'-phenyl-2'-thiophen)-4-(4'-ethyl-phenyl)-indenyl) zirkoniumdichlorid,
Bis(2-(5'-phenyl-2'-thiophen)-4-(4'-n-propyl-phenyl)-indenyl) zirkoniumdichlorid,
Bis(2-(5'-phenyl-2'-thiophen)-4-(4'-iso-propyl-phenyl)-indenyl)zirkoniumdichlorid,
Bis(2-(5'-phenyl-2'-thiophen)-4-(4'-n-butyl-phenyl)-indenyl) zirkoniumdichlorid,
Bis(2-(5'-phenyl-2'-thiophen)-4-(4'-hexyl-phenyl)-indenyl) zirkoniumdichlorid,
Bis(2-(5'-phenyl-2'-thiophen)-4-(4'-sec-butyl-phenyl)-indenyl) zirkoniumdichlorid,
Bis(2-(5'-phenyl-2'-thiophen)-4-(4'-Trimethylsilyl-phenyl)-indenyl)zirkoniumdichlorid,
Bis(2-(5'-phenyl-2'-N-methylpyrrol)-indenyl)zirkoniumdichlorid,
Bis(2-(5'-phenyl-2'-N-methylpyrrol)-(4,5-benzoindenyl)) hafniumdichlorid,
Bis(2-(5'-phenyl-2'-N-methylpyrrol)-(4-isopropyl)indenyl) zirkoniumdichlorid,
Bis(2-(5'-phenyl-2'-N-methylpyrrol)-benzo-indenyl) zirkoniumdichlorid,
Bis(2-(5'-phenyl-2'-N-methylpyrrol)-4-(1-naphthyl)-indenyl) zirkoniumdichlorid,
Bis(2-(5'-phenyl-2'-N-methylpyrrol)-4-(2-naphthyl)-indenyl) zirkoniumdichlorid,
Bis(2-(5'-phenyl-2'-N-methylpyrrol)-4-phenyl-indenyl) zirkoniumdichlorid,
Bis(2-(5'-phenyl-2'-N-methylpyrrol)-4-t-butyl-indenyl) zirkoniumdichlorid,
Bis(2-(5'-phenyl-2'-N-methylpyrrol)-4-isopropyl-indenyl) zirkoniumdichlorid,
Bis(2-(5'-phenyl-2'-N-methylpyrrol)-4-ethyl-indenyl) zirkoniumdichlorid,
Bis(2-(5'-phenyl-2'-N-methylpyrrol)-4-acenaphth-indenyl) zirkoniumdichlorid,
Bis(2-(5'-phenyl-2'-N-methylpyrrol)-4-dimethyl-indenyl) zirkoniumdichlorid,
Bis(2-(5'-phenyl-2'-N-methylpyrrol)-4-(tert-butyl-phenyl-indenyl)-zirkoniumdichlorid,
Bis(2-(5'-phenyl-2'-N-methylpyrrol)-4-(4-methyl-phenylindenyl)zirkoniumdichlorid,
Bis(2-(5'-phenyl-2'-N-methylpyrrol)-4-(4-ethyl-phenyl-indenyl)zirkoniumdichlorid,
Bis(2-(5'-phenyl-2'-N-methylpyrrol)-4-(4-trifluormethyl-phenylindenyl)zirkoniumdichlorid,
Bis(2-(5'-phenyl-2'-N-methylpyrrol)-4-(4-methoxy-phenyl-indenyl)zirkoniumdichlorid,
Bis(2-(5'-phenyl-2'-N-methylpyrrol)-4-(4-tert-butyl-phenyl-indenyl)zirkoniumdimethyl,
Bis (2-(5'-phenyl-2'-N-methylpyrrol)-4-(4-methyl-phenyl-indenyl)zirkoniumdimethyl,
Bis(2-(5'-phenyl-2'-N-methylpyrrol)-4-(4-ethyl-phenyl-indenyl)zirkoniumdimethyl,
Bis(2-(5'-phenyl-2'-N-methylpyrrol)-4-(4-trifluormethyl-phenyl-indenyl)zirkoniumdimethyl,
Bis(2-(5'-phenyl-2'-N-methylpyrrol)-4-(4-methoxy-phenyl-indenyl)zirkoniumdimethyl,
Bis(2-(5'-phenyl-2'-N-methylpyrrol)-4-(4'-tert.-butyl-phenyl)-indenyl)zirkoniumdichlorid,
Bis(2-(5'-phenyl-2'-N-methylpyrrol)-4-(4'-tert.-butyl-phenyl)-indenyl)hafniumdichlorid,
Bis(2-(5'-phenyl-2'-N-methylpyrrol)-4-(4'-tert.-butyl-phenyl)-indenyl)titandichlorid,
Bis(2-(5'-phenyl-2'-N-methylpyrrol)-4-(4'-methyl-phenyl)-indenyl)zirkoniumdichlorid,
Bis(2-(5'-phenyl-2'-N-methylpyrrol)-4-(4'-ethyl-phenyl)-indenyl)zirkoniumdichlorid,
Bis(2-(5'-phenyl-2'-N-methylpyrrol)-4-(4'-n-propyl-phenyl)-indenyl)zirkoniumdichlorid,
Bis(2-(5'-phenyl-2'-N-methylpyrrol)-4-(4'-iso-propyl-phenyl)-indenyl)zirkoniumdichlorid,
Bis(2-(5'-phenyl-2'-N-methylpyrrol)-4-(4'-n-butyl-phenyl)-indenyl)zirkoniumdichlorid,
Bis(2-(5'-phenyl-2'-N-methylpyrrol)-4-(4'-hexyl-phenyl)-indenyl)zirkoniumdichlorid,
Bis(2-(5'-phenyl-2'-N-methylpyrrol)-4-(4'-sec-butyl-phenyl)-indenyl)zirkoniumdichlorid,
Bis(2-(5'-phenyl-2'-N-methylpyrrol)-4-(4'-Trimethylsilylphenyl)-indenyl)zirkoniumdichlorid,
Bis(2-(2'-pyridyl)-indenyl)zirkoniumdichlorid,
Bis(2-(2'-pyridyl)-(4,5-benzoindenyl))hafniumdichlorid,
Bis(2-(2'-pyridyl)-(4-isopropyl)indenyl)zirkoniumdichlorid,
Bis(2-(2'-pyridyl)-benzo-indenyl)zirkoniumdichlorid,
Bis(2-(2'-pyridyl)-4-(1-naphthyl)-indenyl)zirkoniumdichlorid,
Bis(2-(2'-pyridyl)-4-(2-naphthyl)-indenyl)zirkoniumdichlorid,
Bis(2-(2'-pyridyl)-4-phenyl-indenyl)zirkoniumdichlorid,
Bis(2-(2'-pyridyl)-4-t-butyl-indenyl)zirkoniumdichlorid,
Bis(2-(2'-pyridyl)-4-isopropyl-indenyl)zirkoniumdichlorid,
Bis(2-(2'-pyridyl)-4-ethyl-indenyl)zirkoniumdichlorid,
Bis(2-(2'-pyridyl)-4-acenaphth-indenyl)zirkoniumdichlorid,
Bis(2-(2'-pyridyl)-4-dimethyl-indenyl)zirkoniumdichlorid,
Bis(2-(2'-pyridyl)-4-(tert-butyl-phenyl-indenyl)zirkoniumdichlorid,
Bis(2-(2'-pyridyl)-4-(4-methyl-phenyl-indenyl) zirkoniumdichlorid,
Bis(2-(2'-pyridyl)-4-(4-ethyl-phenyl-indenyl) zirkoniumdichlorid,
Bis(2-(2'-pyridyl)-9-(4-trifluormethyl-phenyl-indenyl) zirkoniumdichlorid,
Bis(2-(2'-pyridyl)-4-(4-methoxy-phenyl-indenyl) zirkoniumdichlorid,
Bis(2-(2'-pyridyl)-4-(4-tert-butyl-phenyl-indenyl) zirkoniumdimethyl,
Bis(2-(2'-pyridyl)-4-(4-methyl-phenyl-indenyl) zirkoniumdimethyl,
Bis(2-(2'-pyridyl)-4-(4-ethyl-phenyl-indenyl)zirkoniumdimethyl,
Bis(2-(2'-pyridyl)-4-(4-trifluormethyl-phenyl-indenyl) zirkoniumdimethyl,
Bis(2-(2'-pyridyl)-4-(4-methoxy-phenyl-indenyl) zirkoniumdimethyl,
Bis(2-(2'-pyridyl)-4-(4'-tert.-butyl-phenyl)-indenyl) zirkoniumdichlorid,
Bis(2-(2'-pyridyl)-4-(4'-tert.-butyl-phenyl)-indenyl) hafniumdichlorid,
Bis(2-(2'-pyridyl)-4-(4'-tert.-butyl-phenyl)-indenyl) titandichlorid,
Bis(2-(2'-pyridyl)-4-(4'-methyl-phenyl)-indenyl) zirkoniumdichlorid,
Bis(2-(2'-pyridyl)-4-(4'-ethyl-phenyl)-indenyl) zirkoniumdichlorid,
Bis(2-(2'-pyridyl)-4-(4'-n-propyl-phenyl)-indenyl) zirkoniumdichlorid,
Bis(2-(2'-pyridyl)-4-(4'-iso-propyl-phenyl)-indenyl) zirkoniumdichlorid,
Bis(2-(2'-pyridyl)-4-(4'-n-butyl-phenyl)-indenyl) zirkoniumdichlorid,
Bis(2-(2'-pyridyl)-4-(4'-hexyl-phenyl)-indenyl) zirkoniumdichlorid,
Bis(2-(2'-pyridyl)-4-(4'-sec-butyl-phenyl)-indenyl) zirkoniumdichlorid,
Bis(2-(2'-pyridyl)-4-(4'-Trimethylsilyl-phenyl)-indenyl) zirkoniumdichlorid,
Bis(2-(5'-methyl-2'-pyridyl)-indenyl)zirkoniumdichlorid,
Bis(2-(5'-methyl-2'-pyridyl)-(4,5-benzoindenyl)) hafniumdichlorid,
Bis(2-(5'-methyl-2'-pyridyl)-(4-isopropyl)indenyl) zirkoniumdichlorid,
Bis(2-(5'-methyl-2'-pyridyl)-benzo-indenyl)zirkoniumdichlorid,
Bis(2-(5'-methyl-2'-pyridyl)-4-(1-naphthyl)-indenyl) zirkoniumdichlorid,
Bis(2-(5'-methyl-2'-pyridyl)-4-(2-naphthyl)-indenyl) zirkoniumdichlorid,
Bis (2-(5'-methyl-2'-pyridyl)-4-phenyl-indenyl) zirkoniumdichlorid,
Bis(2-(5'-methyl-2'-pyridyl)-4-t-butyl-indenyl) zirkoniumdichlorid,
Bis(2-(5'-methyl-2'-pyridyl)-4-isopropyl-indenyl) zirkoniumdichlorid,
Bis(2-(5'-methyl-2'-pyridyl)-4-ethyl-indenyl) zirkoniumdichlorid,
Bis(2-(5'-methyl-2'-pyridyl)-4-acenaphth-indenyl) zirkoniumdichlorid,
Bis(2-(5'-methyl-2'-pyridyl)-4-dimethyl-indenyl) zirkoniumdichlorid,
Bis(2-(5'-methyl-2'-pyridyl)-4-(tert-butyl-phenyl-indenyl)zirkoniumdichlorid,
Bis(2-(5'-methyl-2'-pyridyl)-4-(4-methyl-phenyl-indenyl) zirkonium dichlorid,
Bis(2-(5'-methyl-2'-pyridyl)-4-(4-ethyl-phenyl-indenyl) zirkoniumdichlorid,
Bis(2-(5'-methyl-2'-pyridyl)-9-(4-trifluormethyl-phenylindenyl)zirkoniumdichlorid,
Bis (2-(5'-methyl-2'-pyridyl)-4-(4-methoxy-phenyl-indenyl) zirkoniumdichlorid,
Bis(2-(5'-methyl-2'-pyridyl)-4-(4-tert-butyl-phenyl-indenyl) zirkoniumdimethyl,
Bis(2-(5'-methyl-2'-pyridyl)-4-(4-methyl-phenyl-indenyl) zirkonium-dimethyl,
Bis(2-(5'-methyl-2'-pyridyl)-4-(4-ethyl-phenyl-indenyl) zirkoniumdimethyl,
Bis (2-(5'-methyl-2'-pyridyl)-4-(4-trifluormethyl-phenylindenyl)zirkoniumdimethyl,
Bis(2-(5'-methyl-2'-pyridyl)-4-(4-methoxy-phenyl-indenyl) zirkoniumdimethyl,
Bis(2-(5'-methyl-2'-pyridyl)-4-(4'-tert.-butyl-phenyl)-indenyl) zirkoniumdichlorid,
Bis(2-(5'-methyl-2'-pyridyl)-4-(4'-tert.-butyl-phenyl)-indenyl) hafniumdichlorid,
Bis(2-(5'-methyl-2'-pyridyl)-4-(4'-tert.-butyl-phenyl)-indenyl) titandichlorid,
Bis(2-(5'-methyl-2'-pyridyl)-4-(4'-methyl-phenyl)-indenyl) zirkoniumdichlorid,
Bis(2-(5'-methyl-2'-pyridyl)-4-(4'-ethyl-phenyl)-indenyl) zirkoniumdichlorid,
Bis(2-(5'-methyl-2'-pyridyl)-4-(4'-n-propyl-phenyl)-indenyl) zirkoniumdichlorid,
Bis(2-(5'-methyl-2'-pyridyl)-4-(4'-iso-propyl-phenyl)-indenyl) zirkoniumdichlorid,
Bis(2-(5'-methyl-2'-pyridyl)-4-(4'-n-butyl-phenyl)-indenyl) zirkoniumdichlorid,
Bis(2-(5'-methyl-2'-pyridyl)-4-(4'-hexyl-phenyl)-indenyl) zirkoniumdichlorid,
Bis(2-(5'-methyl-2'-pyridyl)-4-(4'-sec-butyl-phenyl)-indenyl) zirkoniumdichlorid,
Bis(2-(5'-methyl-2'-pyridyl)-4-(4'-Trimethylsilyl-phenyl)-indenyl)zirkoniumdichlorid,
Bis(1-(2'-pyridyl)-indenyl)zirkoniumdichlorid,
Bis(1-(2'-pyridyl)-(4,5-benzoindenyl))hafniumdichlorid,
Bis(1-(2'-pyridyl)-(4-isopropyl)indenyl) zirkoniumdichlorid,
Bis(1-(2'-pyridyl)-benzo-indenyl)zirkoniumdichlorid,
Bis(1-(2'-pyridyl)-4-(1-naphthyl)-indenyl)zirkoniumdichlorid,
Bis(1-(2'-pyridyl)-4-(2-naphthyl)-indenyl)zirkoniumdichlorid,
Bis(1-(2'-pyridyl)-4-phenyl-indenyl)zirkoniumdichlorid,
Bis (1-(2'-pyridyl)-4-t-butyl-indenyl)zirkoniumdichlorid,
Bis(1-(2'-pyridyl)-4-isopropyl-indenyl)zirkoniumdichlorid,
Bis(1-(2'-pyridyl)-4-ethyl-indenyl)zirkoniumdichlorid,
Bis(1-(2'-pyridyl)-4-acenaphth-indenyl)zirkoniumdichlorid,
Bis(1-(2'-pyridyl)-4-dimethyl-indenyl)zirkoniumdichlorid,
Bis(1-(2'-pyridyl)-4-(tert-butyl-phenyl-indenyl) zirkoniumdichlorid,
Bis(1-(2'-pyridyl)-4-(4-methyl-phenyl-indenyl) zirkoniumdichlorid,
Bis(1-(2'-pyridyl)-4-(4-ethyl-phenyl-indenyl) zirkoniumdichlorid,
Bis(1-(2'-pyridyl)-4-(4-trifluormethyl-phenyl-indenyl) zirkoniumdichlorid,
Bis(1-(2'-pyridyl)-4-(4-methoxy-phenyl-indenyl) zirkoniumdichlorid,
Bis(1-(2'-pyridyl)-4-(4-tert-butyl-phenyl-indenyl)zirkoniumdimethyl,
Bis(1-(2'-pyridyl)-4-(4-methyl-phenyl-indenyl) zirkoniumdimethyl,
Bis(1-(2'-pyridyl)-4-(4-ethyl-phenyl-indenyl)zirkoniumdimethyl
Bis(1-(2'-pyridyl)-4-(4-trifluormethyl-phenyl-indenyl) zirkoniumdimethyl,
Bis(1-(2'-pyridyl)-4-(4-methoxy-phenyl-indenyl) zirkoniumdimethyl,
Bis(1-(2'-pyridyl)-4-(4'-tert.-butyl-phenyl)-indenyl) zirkoniumdichlorid,
Bis(1-(2'-pyridyl)-4-(4'-tert.-butyl-phenyl)-indenyl) hafniumdichlorid,
Bis(1-(2'-pyridyl)-4-(4'-tert.-butyl-phenyl)-indenyl) titandichlorid,
Bis(1-(2'-pyridyl)-4-(4'-methyl-phenyl)-indenyl) zirkoniumdichlorid,
Bis(1-(2'-pyridyl)-4-(4'-ethyl-phenyl)-indenyl) zirkoniumdichlorid,
Bis(1-(2'-pyridyl)-4-(4'-n-propyl-phenyl)-indenyl) zirkoniumdichlorid,
Bis(1-(2'-pyridyl)-4-(4'-iso-propyl-phenyl)-indenyl) zirkoniumdichlorid,
Bis(1-(2'-pyridyl)-4-(4'-n-butyl-phenyl)-indenyl) zirkoniumdichlorid,
Bis(1-(2'-pyridyl)-4-(4'-hexyl-phenyl)-indenyl) zirkoniumdichlorid,
Bis(1-(2'-pyridyl)-4-(4'-sec-butyl-phenyl)-indenyl) zirkoniumdichlorid oder
Bis(1-(2'-pyridyl)-4-(4'-Trimethylsilyl-phenyl)-indenyl) zirkoniumdichlorid steht.

## Claims

1. A compound of the formula (II), 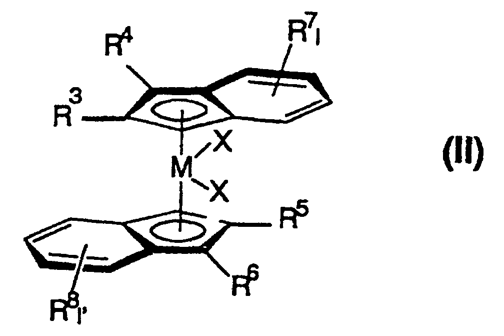 where
M is Ti, Zr or Hf,
R³ and R⁵ or R⁴ and R⁶ are identical or different and are each a hydrogen atom or a C₁-C₂₀ group, preferably C₁-C₁₈-alkyl, in particular methyl, ethyl, n-butyl, n-hexyl, cyclohexyl or octyl, C₂-C₁₀-alkenyl, C₃-C₁₅-alkylalkenyl, C₆-C₁₈-aryl, C₄-C₂₄-heteroaryl, C₄-C₂₄-alkylheteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl; with the proviso that R³ and R⁵ or R⁴ and R⁶ are C₄-C₂₄-heteroaryl or C₄-C₂₄-alkylheteroaryl,
R⁷, R⁸ are identical or different and are each a hydrogen atom, a halogen atom or a C₁-C₂₀ group, preferably a linear or branched C₁-C₁₈-alkyl group, in particular methyl, ethyl, tert-butyl, cyclohexyl or octyl, C₂-C₁₀-alkenyl, C₃-C₁₅-alkylalkenyl, a C₆-C₁₈-aryl group which may be substituted, in particular phenyl, tolyl, xylyl, tert-butylphenyl, ethylphenyl, naphthyl, acenaphthyl, phenanthrenyl or anthracenyl, C₅-C₁₈-heteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, and two radicals R⁷ or R⁸ may form a monocyclic or polycyclic ring system which may in turn be substituted,
X is a halogen atom, in particular chlorine,
l, l' are identical or different and are each an integer from zero to 4, preferably 1 or 2, particularly preferably 1.

2. A compound as claimed in claim 1, wherein
M is zirconium,
R³ and R⁵ or R⁴ and R⁶ are each C₄-C₂₄-heteroaryl or C₄-C₂₄-alkylheteroaryl such as 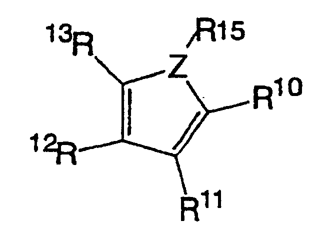
where
R¹⁰, R¹¹, R¹², R¹³ are identical or different and are each a hydrogen atom or a C₁-C₂₀ group, preferably C₁-C₁₈-alkyl, in particular methyl, ethyl, n-butyl, n-hexyl, cyclohexyl or octyl, C₂-C₁₀-alkenyl, C₃-C₁₅-alkylalkenyl, C₆-C₁₈-aryl, C₄-C₂₄-heteroaryl, C₄-C₂₄-alkylheteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl,
Z is a heteroatom from main group V or VI,
R¹⁵ is absent when Z = oxygen or sulfur and when Z = nitrogen is a hydrogen atom, a C₁-C₂₀ group, preferably C₁-C₁₈-alkyl, in particular methyl, ethyl, n-butyl, n-hexyl, cyclohexyl or octyl, C₂-C₁₀-alkenyl, C₃-C₁₅-alkylalkenyl, C₆-C₁₈-aryl, C₄-C₂₄-heteroaryl, C₄-C₂₄-alkylheteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl,
or 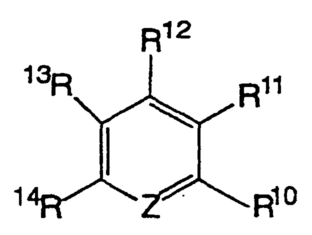 where
R¹⁰, R¹¹, R¹², R¹³, R¹⁴ are identical or different and are each a hydrogen atom or a C₁-C₂₀ group, preferably C₁-C₁₈-alkyl, in particular methyl, ethyl, n-butyl, n-hexyl, cyclohexyl or octyl, C₂-C₁₀-alkenyl, C₃-C₁₅-alkylalkenyl, C₆-C₁₈-aryl, C₄-C₂₄-heteroaryl, C₄-C₂₄-alkylheteroaryl, C₇-C₂₀-arylalkyl, C₇-C₂₀-alkylaryl, fluorinated C₁-C₁₂-alkyl, fluorinated C₆-C₁₈-aryl, fluorinated C₇-C₂₀-arylalkyl or fluorinated C₇-C₂₀-alkylaryl,
Z is a heteroatom from main group V.

3. A compound as claimed in claim 2, wherein
R³ and R⁵ or R⁴ and R⁶ are each C₄-C₂₄-heteroaryl or C₄-C₂₄-alkylheteroaryl such as 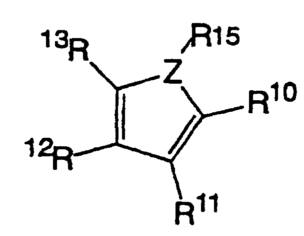
where
R¹⁰ is a hydrogen atom, a C₁-C₁₈-alkyl, in particular methyl, ethyl, n-butyl, n-hexyl, cyclohexyl or octyl, or phenyl,
R¹¹, R¹² are each a hydrogen atom,
R¹³ is the indenyl system bound to the metal,
Z is oxygen, nitrogen or sulfur,
R¹⁵ is absent when Z = oxygen or sulfur and when Z = nitrogen is a hydrogen atom, methyl, ethyl, n-butyl, n-hexyl, cyclohexyl or phenyl,
or 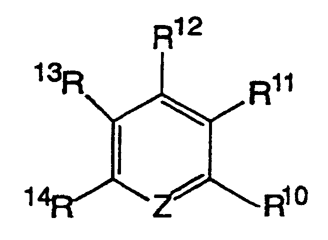 where
R¹⁰ is a hydrogen atom, a C₁-C₁₈-alkyl such as methyl, ethyl, n-butyl, n-hexyl, cyclohexyl or octyl, or phenyl,
R¹¹, R¹², R¹³ are each a hydrogen atom,
R¹⁴ is the indenyl system bound to the metal,
Z is nitrogen.

4. The use of a compound of the formula (II) as claimed in any of claims 1 to 3 for preparing polyolefins.

5. A catalyst system comprising at least one metallocene of the formula (II) as claimed in any of claims 1 to 3, at least one cocatalyst and at least one support.

6. A catalyst system as claimed in claim 5 which further comprises at least one additional additive component.

7. The use of a compound of the formula (II) as claimed in any of claims 1 to 3 for preparing a catalyst system as claimed in claim 5 or 6.

8. The use of the catalyst system as claimed in claim 5 or 6 in the preparation of polyolefins, in particular of atactic-isotactic stereoblock polypropylene having elastomeric properties.

9. A process for preparing polyolefins by polymerization of one or more olefins in the presence of a catalyst system as claimed in claim 5 or 6.

10. A compound as claimed in claim 1 which in the formula (II) is
bis(2-(5'-methyl-2'-furyl)indenyl)zirconium dichloride,
bis(2-(5'-methyl-2'-furyl)(4,5-benzoindenyl))hafnium dichloride,
bis(2-(5'-methyl-2'-furyl)(4-isopropyl)indenyl)zirconium dichloride,
bis(2-(5'-methyl-2'-furyl)benzoindenyl)zirconium dichloride,
bis(2-(5'-methyl-2'-furyl)-4-(1-naphthyl)indenyl)zirconium dichloride,
bis(2-(5'-methyl-2'-furyl)-4-(2-naphthyl)indenyl)zirconium dichloride,
bis(2-(5'-methyl-2'-furyl)-4-phenylindenyl)zirconium dichloride,
bis(2-(5'-methyl-2'-furyl)-4-t-butylindenyl)zirconium dichloride,
bis(2-(5'-methyl-2'-furyl)-4-isopropylindenyl)zirconium dichloride,
bis(2-(5'-methyl-2'-furyl)-4-ethylindenyl)zirconium dichloride,
bis(2-(5'-methyl-2'-furyl)-4-acenaphthindenyl)zirconium dichloride,
bis(2-(5'-methyl-2'-furyl)-4-dimethylindenyl)zirconium dichloride,
bis(2-(5'-methyl-2'-furyl)-4-(tert-butylphenylindenyl)zirconium dichloride,
bis(2-(5'-methyl-2'-furyl)-4-(4-methylphenylindenyl)zirconium dichloride,
bis(2-(5'-methyl-2'-furyl)-4-(4-ethylphenylindenyl)zirconium dichloride,
bis(2-(5'-methyl-2'-furyl)-4-(4-trifluoromethylphenylindenyl)zirconium dichloride,
bis(2-(5'-methyl-2'-furyl)-4-(4-methoxyphenylindenyl)zirconium dichloride,
bis(2-(5'-methyl-2'-furyl)-4-(4-tert-butylphenylindenyl)dimethylzirconium
bis(2-(5'-methyl-2'-furyl)-4-(4-methylphenylindenyl)dimethylzirconium
bis(2-(5'-methyl-2'-furyl)-4-(4-ethylphenylindenyl)dimethylzirconium
bis(2-(5'-methyl-2'-furyl)-4-(4-trifluoromethylphenylindenyl)dimethylzirconium,
bis(2-(5'-methyl-2'-furyl)-4-(4-methoxyphenylindenyl)dimethylzirconium,
bis(2-(5'-methyl-2'-furyl)-4-(4'-tert-butylphenyl)indenyl)zirconium dichloride,
bis(2-(5'-methyl-2'-furyl)-4-(4'-tert-butylphenyl)indenyl)hafnium dichloride,
bis(2-(5'-methyl-2'-furyl)-4-(4'-tert-butylphenyl)indenyl)titanium dichloride,
bis(2-(5'-methyl-2'-furyl)-4-(4'-methylphenyl)indenyl)zirconium dichloride,
bis(2-(5'-methyl-2'-furyl)-4-(4'-ethylphenyl)indenyl)zirconium dichloride,
bis(2-(5'-methyl-2'-furyl)-4-(4'-n-propylphenyl)indenyl)zirconium dichloride,
bis(2-(5'-methyl-2'-furyl)-4-(4'-isopropylphenyl)indenyl)zirconium dichloride,
bis(2-(5'-methyl-2'-furyl)-4-(4'-n-butylphenyl)indenyl)zirconium dichloride,
bis(2-(5'-methyl-2'-furyl)-4-(4'-hexylphenyl)indenyl)zirconium dichloride,
bis(2-(5'-methyl-2'-furyl)-4-(4'-sec-butylphenyl)indenyl)zirconium dichloride,
bis(2-(5'-methyl-2'-furyl)-4-(4'-trimethylsilylphenyl)indenyl)zirconium dichloride,
bis(2-(5'-methyl-2'-thienyl)indenyl)zirconium dichloride,
bis(2-(5'-methyl-2'-thienyl)(4,5-benzoindenyl))hafnium dichloride,
bis(2-(5'-methyl-2'-thienyl)(4-isopropyl)indenyl)zirconium dichloride
bis(2-(5'-methyl-2'-thienyl)benzoindenyl)zirconium dichloride,
bis(2-(5'-methyl-2'-thienyl)-4-(1-naphthyl)indenyl)zirconium dichloride,
bis(2-(5'-methyl-2'-thienyl)-4-(2-naphthyl)indenyl)zirconium dichloride
bis(2-(5'-methyl-2'-thienyl)-4-phenylindenyl)zirconium dichloride,
bis(2-(5'-methyl-2'-thienyl)-4-t-butylindenyl)zirconium dichloride,
bis(2-(5'-methyl-2'-thienyl)-4-isopropylindenyl)zirconium dichloride,
bis(2-(5'-methyl-2'-thienyl)-4-ethylindenyl)zirconium dichloride,
bis(2-(5'-methyl-2'-thienyl)-4-acenaphthindenyl)zirconium dichloride,
bis(2-(5'-methyl-2'-thienyl)-4-dimethylindenyl)zirconium dichloride,
bis(2-(5'-methyl-2'-thienyl)-4-(tert-butylphenyl-indenyl)zirconium dichloride,
bis(2-(5'-methyl-2'-thienyl)-4-(4-methylphenylindenyl)zirconium dichloride,
bis(2-(5'-methyl-2'-thienyl)-4-(4-ethylphenylindenyl)zirconium dichloride,
bis(2-(5'-methyl-2'-thienyl)-4-(4-trifluoromethylphenylindenyl)zirconium dichloride,
bis(2-(5'-methyl-2'-thienyl)-4-(4-methoxyphenylindenyl)zirconium dichloride,
bis(2-(5'-methyl-2'-thienyl)-4-(4-tert-butylphenylindenyl)dimethylzirconium,
bis(2-(5'-methyl-2'-thienyl)-4-(4-methylphenylindenyl)dimethylzirconium,
bis(2-(5'-methyl-2'-thienyl)-4-(4-ethylphenylindenyl)dimethylzirconium,
bis(2-(5'-methyl-2'-thienyl)-4-(4-trifluoromethylphenylindenyl)dimethylzirconium,
bis(2-(5'-methyl-2'-thienyl)-4-(4-methoxyphenylindenyl)dimethylzirconium,
bis(2-(5'-methyl-2'-thienyl)-4-(4'-tert-butylphenyl)indenyl)zirconium dichloride,
bis(2-(5'-methyl-2'-thienyl)-4-(4'-tert-butylphenyl)indenyl)hafnium dichloride,
bis(2-(5'-methyl-2'-thienyl)-4-(4'-tert-butylphenyl)indenyl)titanium dichloride,
bis(2-(5'-methyl-2'-thienyl)-4-(4'-methylphenyl)indenyl)zirconium dichloride,
bis(2-(5'-methyl-2'-thienyl)-4-(4'-ethylphenyl)indenyl)zirconium dichloride,
bis(2-(5'-methyl-2'-thienyl)-4-(4'-n-propylphenyl)indenyl)zirconium dichloride,
bis(2-(5'-methyl-2'-thienyl)-4-(4'-isopropylphenyl)indenyl)zirconium dichloride,
bis(2-(5'-methyl-2'-thienyl)-4-(4'-n-butylphenyl)indenyl)zirconium dichloride,
bis(2-(5'-methyl-2'-thienyl)-4-(4'-hexylphenyl)indenyl) zirconium dichloride,
bis(2-(5'-methyl-2'-thienyl)-4-(4'-sec-butylphenyl)indenyl)zirconium dichloride,
bis(2-(5'-methyl-2'-thienyl)-4-(4'-trimethylsilylphenyl)indenyl)zirconium dichloride,
bis(2-(5'-methyl-2'-N-methylpyrrolyl)indenyl)zirconium dichloride,
bis(2-(5'-methyl-2'-N-methylpyrrolyl)(4,5-benzoindenyl))hafnium dichloride,
bis(2-(5'-methyl-2'-N-methylpyrrolyl)(4-isopropyl)indenyl)zirconium dichloride,
bis(2-(5'-methyl-2'-N-methylpyrrolyl)benzoindenyl)zirconium dichloride,
bis(2-(5'-methyl-2'-N-methylpyrrolyl)-4-(1-naphthyl)indenyl)zirconium dichloride,
bis(2-(5'-methyl-2'-N-methylpyrrolyl)-4-(2-naphthyl)indenyl)zirconium dichloride,
bis(2-(5'-methyl-2'-N-methylpyrrolyl)-4-phenylindenyl)zirconium dichloride,
bis(2-(5'-methyl-2'-N-methylpyrrolyl)-4-t-butylindenyl)zirconium dichloride,
bis(2-(5'-methyl-2'-N-methylpyrrolyl)-4-isopropylindenyl)zirconium dichloride,
bis(2-(5'-methyl-2'-N-methylpyrrolyl)-4-ethylindenyl)zirconium dichloride,
bis(2-(5'-methyl-2'-N-methylpyrrolyl)-4-acenaphthindenyl)zirconium dichloride,
bis(2-(5'-methyl-2'-N-methylpyrrolyl)-4-dimethylindenyl)zirconium dichloride,
bis(2-(5'-methyl-2'-N-methylpyrrolyl)-4-(tert-butylphenylindenyl)zirconium dichloride,
bis(2-(5'-methyl-2'-N-methylpyrrolyl)-4-(4-methylphenylindenyl)zirconium dichloride,
bis(2-(5'-methyl-2'-N-methylpyrrolyl)-4-(4-ethylphenylindenyl)zirconium dichloride,
bis(2-(5'-methyl-2'-N-methylpyrrolyl)-4-(4-trifluoromethylphenylindenyl)zirconium dichloride,
bis(2-(5'-methyl-2'-N-methylpyrrolyl)-4-(4-methoxyphenylindenyl)zirconium dichloride,
bis(2-(5'-methyl-2'-N-methylpyrrolyl)-4-(4-tert-butylphenylindenyl)dimethylzirconium,
bis(2-(5'-methyl-2'-N-methylpyrrolyl)-4-(4-methylphenylindenyl)dimethylzirconium,
bis(2-(5'-methyl-2'-N-methylpyrrolyl)-4-(4-ethylphenylindenyl)dimethylzirconium,
bis(2-(5'-methyl-2'-N-methylpyrrolyl)-4-(4-trifluoromethylphenylindenyl)dimethylzirconium,
bis(2-(5'-methyl-2'-N-methylpyrrolyl)-4-(4-methoxyphenylindenyl)dimethylzirconium,
bis(2-(5'-methyl-2'-N-methylpyrrolyl)-4-(4'-tert-butylphenyl)indenyl)zirconium dichloride,
bis(2-(5'-methyl-2'-N-methylpyrrolyl)-4-(4'-tert-butylphenyl)indenyl)hafnium dichloride,
bis(2-(5'-methyl-2'-N-methylpyrrolyl)-4-(4'-tert-butylphenyl)indenyl)titanium dichloride,
bis(2-(5'-methyl-2'-N-methylpyrrolyl)-4-(4'-methylphenyl)indenyl)zirconium dichloride,
bis(2-(5'-methyl-2'-N-methylpyrrolyl)-4-(4'-ethylphenyl)indenyl)zirconium dichloride,
bis(2-(5'-methyl-2'-N-methylpyrrolyl)-4-(4'-n-propylphenyl)indenyl)zirconium dichloride,
bis(2-(5'-methyl-2'-N-methylpyrrolyl)-4-(4'-isopropylphenyl)indenyl)zirconium dichloride,
bis(2-(5'-methyl-2'-N-methylpyrrolyl)-4-(4'-n-butylphenyl)indenyl)dimethylzirconium,
bis(2-(5'-methyl-2'-N-methylpyrrolyl)-4-(4'-hexylphenyl)indenyl)zirconium dichloride,
bis(2-(5'-methyl-2'-N-methylpyrrolyl)-4-(4'-sec-butylphenyl)indenyl)zirconium dichloride,
bis(2-(5'-methyl-2'-N-methylpyrrolyl)-4-(4'-trimethylsilylphenyl)indenyl)zirconium dichloride,
bis(1-(5'-methyl-2'-furyl)indenyl)zirconium dichloride,
bis(1-(5'-methyl-2'-furyl)(4,5-benzoindenyl))hafnium dichloride,
bis(1-(5'-methyl-2'-furyl)(4-isopropyl)indenyl)zirconium dichloride,
bis(1-(5'-methyl-2'-furyl)benzoindenyl)zirconium dichloride,
bis(1-(5'-methyl-2'-furyl)-4-(1-naphthyl)indenyl)zirconium dichloride,
bis(1-(5'-methyl-2'-furyl)-4-(2-naphthyl)indenyl)zirconium dichloride,
bis(1-(5'-methyl-2'-furyl)-4-phenylindenyl)zirconium dichloride,
bis(1-(5'-methyl-2'-furyl)-4-t-butylindenyl)zirconium dichloride,
bis(1-(5'-methyl-2'-furyl)-4-isopropylindenyl)zirconium dichloride,
bis(1-(5'-methyl-2'-furyl)-4-ethylindenyl)zirconium dichloride,
bis(1-(5'-methyl-2'-furyl)-4-acenaphthindenyl)zirconium dichloride,
bis(1-(5'-methyl-2'-furyl)-4-dimethylindenyl)zirconium dichloride,
bis(1-(5'-methyl-2'-furyl)-4-(tert-butylphenylindenyl)zirconium dichloride,
bis(1-(5'-methyl-2'-furyl)-4-(4-methylphenylindenyl)zirconium dichloride,
bis(1-(5'-methyl-2'-furyl)-4-(4-ethylphenylindenyl)zirconium dichloride,
bis(1-(5'-methyl-2'-furyl)-4-(4-trifluoromethylphenylindenyl)zirconium dichloride,
bis(1-(5'-methyl-2'-furyl)-4-(4-methoxyphenylindenyl)zirconium dichloride,
bis(1-(5'-methyl-2'-furyl)-4-(4-tert-butylphenylindenyl)dimethylzirconium,
bis(1-(5'-methyl-2'-furyl)-4-(4-methylphenylindenyl)dimethylzirconium,
bis(1-(5'-methyl-2'-furyl)-4-(4-ethylphenylindenyl)dimethylzirconium,
bis(1-(5'-methyl-2'-furyl)-4-(4-trifluoromethylphenylindenyl)dimethylzirconium,
bis(1-(5'-methyl-2'-furyl)-4-(4-methoxyphenylindenyl)dimethylzirconium,
bis(1-(5'-methyl-2'-furyl)-4-(4'-tert-butylphenyl)indenyl)zirconium dichloride,
bis(1-(5'-methyl-2'-furyl)-4-(4'-tert-butylphenyl)indenyl)hafnium dichloride,
bis(1-(5'-methyl-2'-furyl)-4-(4'-tert-butylphenyl)indenyl)titanium dichloride,
bis(1-(5'-methyl-2'-furyl)-4-(4'-methylphenyl)indenyl)zirconium dichloride,
bis(1-(5'-methyl-2'-furyl)-4-(4'-ethylphenyl)indenyl)zirconium dichloride,
bis(1-(5'-methyl-2'-furyl)-4-(4'-n-propylphenyl)indenyl)zirconium dichloride,
bis(1-(5'-methyl-2'-furyl)-4-(4'-isopropylphenyl)indenyl)zirconium dichloride,
bis(1-(5'-methyl-2'-furyl)-4-(4'-n-butylphenyl)indenyl)zirconium dichloride,
bis(1-(5'-methyl-2'-furyl)-4-(4'-hexylphenyl)indenyl)zirconium dichloride,
bis(1-(5'-methyl-2'-furyl)-4-(4'-sec-butylphenyl)indenyl)zirconium dichloride,
bis(1-(5'-methyl-2'-furyl)-4-(4'-trimethylsilylphenyl)indenyl)zirconium dichloride,
bis(1-(5'-methyl-2'-thienyl)indenyl)zirconium dichloride
bis(1-(5'-methyl-2'-thienyl)(4,5-benzoindenyl))hafnium dichloride,
bis(1-(5'-methyl-2'-thienyl)(4-isopropyl)indenyl)zirconium dichloride,
bis(1-(5'-methyl-2'-thienyl)benzoindenyl)zirconium dichloride,
bis(1-(5'-methyl-2'-thienyl)-4-(1-naphthyl)indenyl)zirconium dichloride,
bis(1-(5'-methyl-2'-thienyl)-4-(2-naphthyl)indenyl)zirconium dichloride,
bis(1-(5'-methyl-2'-thienyl)-4-phenylindenyl)zirconium dichloride,
bis(1-(5'-methyl-2'-thienyl)-4-t-butylindenyl)zirconium dichloride,
bis(1-(5'-methyl-2'-thienyl)-4-isopropylindenyl)zirconium dichloride,
bis(1-(5'-methyl-2'-thienyl)-4-ethylindenyl)zirconium dichloride,
bis(1-(5'-methyl-2'-thienyl)-4-acenaphthindenyl)zirconium dichloride,
bis(1-(5'-methyl-2'-thienyl)-4-dimethylindenyl)zirconium dichloride,
bis(1-(5'-methyl-2'-thienyl)-4-(tert-butylphenylindenyl)zirconium dichloride,
bis(1-(5'-methyl-2'-thienyl)-4-(4-methylphenylindenyl)zirconium dichloride,
bis(1-(5'-methyl-2'-thienyl)-4-(4-ethylphenylindenyl)zirconium dichloride,
bis(1-(5'-methyl-2'-thienyl)-4-(4-trifluoromethylphenylindenyl)zirconium dichloride,
bis(1-(5'-methyl-2'-thienyl)-4-(4-methoxyphenylindenyl)zirconium dichloride,
bis(1-(5'-methyl-2'-thienyl)-4-(4-tert-butylphenylindenyl)dimethylzirconium,
bis(1-(5'-methyl-2'-thienyl)-4-(4-methylphenylindenyl)dimethylzirconium,
bis(1-(5'-methyl-2'-thienyl)-4-(4-ethylphenylindenyl)dimethylzirconium,
bis(1-(5'-methyl-2'-thienyl)-4-(4-trifluoromethylphenylindenyl)dimethylzirconium,
bis(1-(5'-methyl-2'-thienyl)-4-(4-methoxyphenylindenyl)dimethylzirconium,
bis(1-(5'-methyl-2'-thienyl)-4-(4'-tert-butylphenyl)indenyl)zirconium dichloride,
bis(1-(5'-methyl-2'-thienyl)-4-(4'-tert-butylphenyl)indenyl)hafnium dichloride,
bis(1-(5'-methyl-2'-thienyl)-4-(4'-tert-butylphenyl)indenyl)titanium dichloride,
bis(1-(5'-methyl-2'-thienyl)-4-(4'-methylphenyl)indenyl)zirconium dichloride,
bis(1-(5'-methyl-2'-thienyl)-4-(4'-ethylphenyl)zirconium dichloride,
bis(1-(5'-methyl-2'-thienyl)-4-(4'-n-propylphenyl)indenyl)zirconium dichloride,
bis(1-(5'-methyl-2'-thienyl)-4-(4'-isopropylphenyl)indenyl)zirconium dichloride,
bis(1-(5'-methyl-2'-thienyl)-4-(4'-n-butylphenyl)indenyl)zirconium dichloride,
bis(1-(5'-methyl-2'-thienyl)-4-(4'-hexylphenyl)indenyl)zirconium dichloride,
bis(1-(5'-methyl-2'-thienyl)-4-(4'-sec-butylphenylindenyl)zirconium dichloride,
bis(1-(5'-methyl-2'-thienyl)-4-(4'-trimethylsilylphenyl)indenyl)zirconium dichloride,
bis(1-(5'-methyl-2'-N-methylpyrrolyl)indenyl)zirconium dichloride,
bis(1-(5'-methyl-2'-N-methylpyrrolyl)(4,5-benzoindenyl))hafnium dichloride,
bis(1-(5'-methyl-2'-N-methylpyrrolyl)(4-isopropyl)indenyl)zirconium dichloride,
bis(1-(5'-methyl-2'-N-methylpyrrolyl)benzoindenyl)zirconium dichloride,
bis(1-(5'-methyl-2'-N-methylpyrrolyl)-4-(1-naphthyl)indenyl)zirconium dichloride,
bis(1-(5'-methyl-2'-N-methylpyrrolyl)-4-(2-naphthyl)indenyl)zirconium dichloride,
bis(1-(5'-methyl-2'-N-methylpyrrolyl)-4-phenylindenyl)zirconium dichloride,
bis(1-(5'-methyl-2'-N-methylpyrrolyl)-4-t-butylindenyl)zirconium dichloride,
bis(1-(5'-methyl-2'-N-methylpyrrolyl)-4-isopropylindenyl)zirconium dichloride,
bis(1-(5'-methyl-2'-N-methylpyrrolyl)-4-ethylindenyl)zirconium dichloride,
bis(1-(5'-methyl-2'-N-methylpyrrolyl)-4-acenaphthindenyl)zirconium dichloride,
bis(1-(5'-methyl-2'-N-methylpyrrolyl)-4-dimethylindenyl)zirconium dichloride,
bis(1-(5'-methyl-2'-N-methylpyrrolyl)-4-(tert-butylphenylindenyl)zirconium dichloride,
bis(1-(5'-methyl-2'-N-methylpyrrolyl)-4-(4-methylphenylindenyl)zirconium dichloride,
bis(1-(5'-methyl-2'-N-methylpyrrolyl)-4-(4-ethylphenylindenyl)zirconium dichloride,
bis(1-(5'-methyl-2'-N-methylpyrrolyl)-4-(4-trifluoromethylphenylindenyl)zirconium dichloride,
bis(1-(5'-methyl-2'-N-methylpyrrolyl)-4-(4-methoxyphenylindenyl)zirconium dichloride,
bis(1-(5'-methyl-2'-N-methylpyrrolyl)-4-(4-tert-butylphenylindenyl)dimethylzirconium,
bis(1-(5'-methyl-2'-N-methylpyrrolyl)-4-(4-methylphenylindenyl)dimethylzirconium,
bis(1-(5'-methyl-2'-N-methylpyrrolyl)-4-(4-ethylphenylindenyl)dimethylzirconium,
bis(1-(5'-methyl-2'-N-methylpyrrolyl)-4-(4-trifluoromethylphenylindenyl)dimethylzirconium,
bis(1-(5'-methyl-2'-N-methylpyrrolyl)-4-(4-methoxyphenylindenyl)dimethylzirconium,
bis(1-(5'-methyl-2'-N-methylpyrrolyl)-4-(4'-tert-butylphenylindenyl)zirconium dichloride,
bis(1-(5'-methyl-2'-N-methylpyrrolyl)-4-(4'-tert-butylphenyl)indenyl)hafnium dichloride,
bis(1-(5'-methyl-2'-N-methylpyrrolyl)-4-(4'-tert-butylphenyl)indenyl)titanium dichloride,
bis(1-(5'-methyl-2'-N-methylpyrrolyl)-4-(4'-methylphenyl)indenyl)zirconium dichloride,
bis(1-(5'-methyl-2'-N-methylpyrrolyl)-4-(4'-ethylphenyl)indenyl)zirconium dichloride,
bis(1-(5'-methyl-2'-N-methylpyrrolyl)-4-(4'-n-propylphenyl)indenyl)zirconium dichloride,
bis(1-(5'-methyl-2'-N-methylpyrrolyl)-4-(4'-isopropylphenyl)indenyl)zirconium dichloride,
bis(1-(5'-methyl-2'-N-methylpyrrolyl)-4-(4'-n-butylphenyl)indenyl)zirconium dichloride,
bis(1-(5'-methyl-2'-N-methylpyrrolyl)-4-(4'-hexylphenyl)indenyl)zirconium dichloride,
bis(1-(5'-methyl-2'-N-methylpyrrolyl)-4-(4'-sec-butylphenyl)indenyl)zirconium dichloride,
bis(1-(5'-methyl-2'-N-methylpyrrolyl)-4-(4'-trimethylsilylphenyl)indenyl)zirconium dichloride,
bis(2-(5'-ethyl-2'-furyl)indenyl)zirconium dichloride,
bis(2-(5'-ethyl-2'-furyl)(4,5-benzoindenyl))hafnium dichloride,
bis(2-(5'-ethyl-2'-furyl)(4,5-isopropyl)indenyl)zirconium dichloride,
bis(2-(5'-ethyl-2'-furyl)benzoindenyl)zirconium dichloride,
bis(2-(5'-ethyl-2'-furyl)-4-(1-naphthyl)indenyl)zirconium dichloride,
bis(2-(5'-ethyl-2'-furyl)-4-(2-naphthyl)indenyl)zirconium dichloride,
bis(2-(5'-ethyl-2'-furyl)-4-phenylindenyl)zirconium dichloride,
bis(2-(5'-ethyl-2'-furyl)-4-t-butylindenyl)zirconium dichloride,
bis(2-(5'-ethyl-2'-furyl)-4-isopropylindenyl)zirconium dichloride,
bis(2-(5'-ethyl-2'-furyl)-4-ethylindenyl)zirconium dichloride,
bis(2-(5'-ethyl-2'-furyl)-4-acenaphthindenyl)zirconium dichloride,
bis(2-(5'-ethyl-2'-furyl)-4-dimethylindenyl)zirconium dichloride,
bis(2-(5'-ethyl-2'-furyl)-4-(tert-butylphenylindenyl)zirconium dichloride,
bis(2-(5'-ethyl-2'-furyl)-4-(4-methylphenylindenyl)zirconium dichloride,
bis(2-(5'-ethyl-2'-furyl)-4-(4-ethylphenylindenyl)zirconium dichloride,
bis(2-(5'-ethyl-2'-furyl)-4-(4-trifluoromethylphenylindenyl)zirconium dichloride,
bis(2-(5'-ethyl-2'-furyl)-4-(4-methoxyphenylindenyl)zirconium dichloride,
bis(2-(5'-ethyl-2'-furyl)-4-(4-tert-butylphenylindenyl)dimethylzirconium,
bis(2-(5'-ethyl-2'-furyl)-4-(4-methylphenylindenyl)dimethylzirconium,
bis(2-(5'-ethyl-2'-furyl)-4-(4-ethylphenylindenyl)dimethylzirconium,
bis(2-(5'-ethyl-2'-furyl)-4-(4-trifluoromethylphenylindenyl)dimethylzirconium,
bis(2-(5'-ethyl-2'-furyl)-4-(4-methoxyphenylindenyl)dimethylzirconium,
bis(2-(5'-ethyl-2'-furyl)-4-(4'-tert-butylphenyl)indenyl)zirconium dichloride,
bis(2-(5'-ethyl-2'-furyl)-4-(4'-tert-butylphenyl)indenyl)hafnium dichloride,
bis(2-(5'-ethyl-2'-furyl)-4-(4'-tert-butylphenyl)indenyl)titanium dichloride,
bis(2-(5'-ethyl-2'-furyl)-4-(4'-methylphenyl)indenyl)zirconium dichloride,
bis(2-(5'-ethyl-2'-furyl)-4-(4'-ethylphenyl)indenyl)zirconium dichloride,
bis(2-(5'-ethyl-2'-furyl)-4-(4'-n-propylphenyl)indenyl)zirconium dichloride,
bis(2-(5'-ethyl-2'-furyl)-4-(4'-isopropylphenyl)indenyl)zirconium dichloride,
bis(2-(5'-ethyl-2'-furyl)-4-(4'-n-butylphenyl)indenyl)zirconium dichloride,
bis(2-(5'-ethyl-2'-furyl)-4-(4'-hexylphenyl)indenyl)zirconium dichloride,
bis(2-(5'-ethyl-2'-furyl)-4-(4'-sec-butylphenyl)indenyl)zirconium dichloride,
bis(2-(5'-ethyl-2'-furyl)-4-(4'-trimethylsilylphenyl)indenyl)zirconium dichloride,
bis(2-(5'-ethyl-2'-thienyl)indenyl)zirconium dichloride,
bis(2-(5'-ethyl-2'-thienyl)(4,5-benzoindenyl))hafnium dichloride,
bis(2-(5'-ethyl-2'-thienyl)(4-isopropyl)indenyl)zirconium dichloride,
bis(2-(5'-ethyl-2'-thienyl)benzoindenyl)zirconium dichloride,
bis(2-(5'-ethyl-2'-thienyl)-4-(1-naphthyl)indenyl)zirconium dichloride,
bis(2-(5'-ethyl-2'-thienyl)-4-(2-naphthyl)indenyl)zirconium dichloride,
bis(2-(5'-ethyl-2'-thienyl)-4-phenylindenyl)zirconium dichloride,
bis(2-(5'-ethyl-2'-thienyl)-4-t-butylindenyl)zirconium dichloride,
bis(2-(5'-ethyl-2'-thienyl)-4-isopropylindenyl)zirconium dichloride,
bis(2-(5'-ethyl-2'-thienyl)-4-ethylindenyl)zirconium dichloride,
bis(2-(5'-ethyl-2'-thienyl)-4-acenaphthindenyl)zirconium dichloride,
bis(2-(5'-ethyl-2'-thienyl)-4-dimethylindenyl)zirconium dichloride,
bis(2-(5'-ethyl-2'-thienyl)-4-(tert-butylphenylindenyl)zirconium dichloride,
bis(2-(5'-ethyl-2'-thienyl)-4-(4-methylphenylindenyl)-zirconium dichloride,
bis(2-(5'-ethyl-2'-thienyl)-4-(4-ethylphenylindenyl)-zirconium dichloride,
bis(2-(5'-ethyl-2'-thienyl)-4-(4-trifluoromethylphenylindenyl)zirconium dichloride,
bis(2-(5'-ethyl-2'-thienyl)-4-(4-methoxyphenylindenyl)zirconium dichloride,
bis(2-(5'-ethyl-2'-thienyl)-4-(4-tert-butylphenylindenyl)dimethylzirconium,
bis(2-(5'-ethyl-2'-thienyl)-4-(4-methylphenylindenyl)dimethylzirconium,
bis(2-(5'-ethyl-2'-thienyl)-4-(4-ethylphenylindenyl)dimethylzirconium,
bis(2-(5'-ethyl-2'-thienyl)-4-(4-trifluoromethylphenylindenyl)dimethylzirconium,
bis(2-(5'-ethyl-2'-thienyl)-4-(4-methoxyphenylindenyl)dimethylzirconium,
bis(2-(5'-ethyl-2'-thienyl)-4-(4'-tert-butylphenyl)indenyl)zirconium dichloride,
bis(2-(5'-ethyl-2'-thienyl)-4-(4'-tert-butylphenyl)-indenyl)hafnium dichloride,
bis(2-(5'-ethyl-2'-thienyl)-4-(4'-tert-butylphenyl)indenyl)titanium dichloride,
bis(2-(5'-ethyl-2'-thienyl)-4-(4'-methylphenyl)indenyl)zirconium dichloride,
bis(2-(5'-ethyl-2'-thienyl)-4-(4'ethylphenyl)indenyl)zirconium dichloride,
bis(2-(5'-ethyl-2'-thienyl)-4-(4'-n-propylphenyl)indenyl)zirconium dichloride,
bis(2-(5'-ethyl-2'-thienyl)-4-(4'-isopropylphenyl)indenyl)zirconium dichloride,
bis(2-(5'-ethyl-2'-thienyl)-4-(4'-n-butylphenyl)indenyl)zirconium dichloride,
bis(2-(5'-ethyl-2'-thienyl)-4-(4'-hexylphenyl)indenyl)zirconium dichloride,
bis(2-(5'-ethyl-2'-thienyl)-4-(4'-sec-butylphenyl)indenyl)zirconium dichloride
bis(2-(5'-ethyl-2'-thienyl)-4-(4'-trimethylsilylphenyl)indenyl)zirconium dichloride,
bis(2-(5'-ethyl-2'-N-methylpyrrolyl)indenyl)zirconium dichloride,
bis(2-(5'-ethyl-2'-N-methylpyrrolyl)(4,5-benzoindenyl))hafnium dichloride,
bis(2-(5'-ethyl-2'-N-methylpyrrolyl)(4-isopropyl)indenyl)zirconium dichloride,
bis(2-(5'-ethyl-2'-N-methylpyrrolyl)benzoindenyl)zirconium dichloride,
bis(2-(5'-ethyl-2'-N-methylpyrrolyl)-4-(1-naphthyl)indenyl)zirconium dichloride,
bis(2-(5'-ethyl-2'-N-methylpyrrolyl)-4-(2-naphthyl)indenyl)zirconium dichloride,
bis(2-(5'-ethyl-2'-N-methylpyrrolyl)-4-phenylindenyl)zirconium dichloride,
bis(2-(5'-ethyl-2'-N-methylpyrrolyl)-4-t-butylindenyl)zirconium dichloride,
bis(2-(5'-ethyl-2'-N-methylpyrrolyl)-4-isopropylindenyl)zirconium dichloride,
bis(2-(5'-ethyl-2'-N-methylpyrrolyl)-4-ethylindenyl)zirconium dichloride,
bis(2-(5'-ethyl-2'-N-methylpyrrolyl)-4-acenaphthindenyl)zirconium dichloride,
bis(2-(5'-ethyl-2'-N-methylpyrrolyl)-4-dimethylindenyl)zirconium dichloride,
bis(2-(5'-ethyl-2'-N-methylpyrrolyl)-4-(tert-butylphenylindenyl)zirconium dichloride,
bis(2-(5'-ethyl-2'-N-methylpyrrolyl)-4-(4-methylphenylindenyl)zirconium dichloride,
bis(2-(5'-ethyl-2'-N-methylpyrrolyl)-4-(4-ethylphenylindenyl)zirconium dichloride,
bis(2-(5'-ethyl-2'-N-methylpyrrolyl)-4-(4-trifluoromethylphenylindenyl)zirconium dichloride,
bis(2-(5'-ethyl-2'-N-methylpyrrolyl)-4-(4-methoxyphenylindenyl)zirconium dichloride,
bis(2-(5'-ethyl-2'-N-methylpyrrolyl)-4-(4-tert-butylphenylindenyl)dimethylzirconium,
bis(2-(5'-ethyl-2'-N-methylpyrrolyl)-4-(4-methylphenylindenyl)dimethylzirconium,
bis(2-(5'-ethyl-2'-N-methylpyrrolyl)-4-(4-ethylphenylindenyl)dimethylzirconium,
bis(2-(5'-ethyl-2'-N-methylpyrrolyl)-4-(4-trifluoromethylphenylindenyl)dimethylzirconium,
bis(2-(5'-ethyl-2'-N-methylpyrrolyl)-4-(4-methoxyphenylindenyl)dimethylzirconium,
bis(2-(5'-ethyl-2'-N-methylpyrrolyl)-4-(4'-tert-butylphenyl)indenyl)zirconium dichloride,
bis(2-(5'-ethyl-2'-N-methylpyrrolyl)-4-(4'-tert-butylphenyl)indenyl)hafnium dichloride,
bis(2-(5'-ethyl-2'-N-methylpyrrolyl)-4-(4'-tert-butylphenyl)indenyl)titanium dichloride,
bis(2-(5'-ethyl-2'-N-methylpyrrolyl)-4-(4'-methylphenyl)indenyl)zirconium dichloride,
bis(2-(5'-ethyl-2'-N-methylpyrrolyl)-4-(4'-ethylphenyl)indenyl)zirconium dichloride,
bis(2-(5'-ethyl-2'-N-methylpyrrolyl)-4-(4'-n-propylphenyl)indenyl)zirconium dichloride,
bis(2-(5'-ethyl-2'-N-methylpyrrolyl)-4-(4'-isopropylphenyl)indenyl)zirconium dichloride,
bis(2-(5'-ethyl-2'-N-methylpyrrolyl)-4-(4'-n-butylphenyl)indenyl)zirconium dichloride,
bis(2-(5'-ethyl-2'-N-methylpyrrolyl)-4-(4'-hexylphenyl)indenyl)zirconium dichloride,
bis(2-(5'-ethyl-2'-N-methylpyrrolyl)-4-(4'-sec-butylphenyl)indenyl)zirconium dichloride,
bis(2-(5'-ethyl-2'-N-methylpyrrolyl)-4-(4'-trimethylsilylphenyl)indenyl)zirconium dichloride,
bis(2-(5'-propyl-2'-furyl)indenyl)zirconium dichloride,
bis(2-(5'-propyl-2'-furyl)(4,5-benzoindenyl))hafnium dichloride,
bis(2-(5'-propyl-2'-furyl)(4-isopropyl)indenyl)zirconium dichloride,
bis(2-(5'-propyl-2'-furyl)benzoindenyl)zirconium dichloride,
bis(2-(5'-propyl-2'-furyl)-4-(1-naphthyl)indenyl)zirconium dichloride,
bis(2-(5'-propyl-2'-furyl)-4-(2-naphthyl)indenyl)zirconium dichloride,
bis(2-(5'-propyl-2'-furyl)-4-phenylindenyl)zirconium dichloride,
bis(2-(5'-propyl-2'-furyl)-4-t-butylindenyl)zirconium dichloride,
bis(2-(5'-propyl-2'-furyl)-4-isopropylindenyl)zirconium dichloride,
bis(2-(5'-propyl-2'-furyl)-4-ethylindenyl)zirconium dichloride,
bis(2-(5'-propyl-2'-furyl)-4-acenaphthindenyl)zirconium dichloride,
bis(2-(5'-propyl-2'-furyl)-4-dimethylindenyl)zirconium dichloride,
bis(2-(5'-propyl-2'-furyl)-4-(tert-butylphenylindenyl)zirconium dichloride,
bis(2-(5'-propyl-2'-furyl)-4-(4-methylphenylindenyl)zirconium dichloride,
bis(2-(5'-propyl-2'-furyl)-4-(4-ethylphenylindenyl)zirconium dichloride,
bis(2-(5'-propyl-2'-furyl)-4-(4-trifluoromethylphenylindenyl)zirconium dichloride,
bis(2-(5'-propyl-2'-furyl)-4-(4-methoxyphenylindenyl)zirconium dichloride,
bis(2-(5'-propyl-2'-furyl)-4-(4-tert-butylphenylindenyl)dimethylzirconium,
bis(2-(5'-propyl-2'-furyl)-4-(4-methylphenylindenyl)dimethylzirconium,
bis(2-(5'-propyl-2'-furyl)-4-(4-ethylphenylindenyl)dimethylzirconium,
bis(2-(5'-propyl-2'-furyl)-4-(4-trifluoromethylphenylindenyl)dimethylzirconium,
bis(2-(5'-propyl-2'-furyl)-4-(4-methoxyphenylindenyl)dimethylzirconium,
bis(2-(5'-propyl-2'-furyl)-4-(4'-tert-butylphenyl)indenyl)zirconium dichloride,
bis(2-(5'-propyl-2'-furyl)-4-(4'-tert-butylphenyl)indenyl)hafnium dichloride,
bis(2-(5'-propyl-2'-furyl)-4-(4'-tert-butylphenyl)indenyl)titanium dichloride,
bis(2-(5'-propyl-2'-furyl)-4-(4'-methylphenyl)indenyl)zirconium dichloride,
bis(2-(5'-propyl-2'-furyl)-4-(4'-ethylphenyl)indenyl)zirconium dichloride,
bis(2-(5'-propyl-2'-furyl)-4-(4'-n-propylphenyl)indenyl)zirconium dichloride,
bis(2-(5'-propyl-2'-furyl)-4-(4'-isopropylphenyl)indenyl)zirconium dichloride,
bis(2-(5'-propyl-2'-furyl)-4-(4'-n-butylphenyl)indenyl)zirconium dichloride,
bis(2-(5'-propyl-2'-furyl)-4-(4'-hexylphenyl)indenyl)zirconium dichloride,
bis(2-(5'-propyl-2'-furyl)-4-(4'-sec-butylphenyl)indenyl)zirconium dichloride,
bis(2-(5'-propyl-2'-furyl)-4-(4'-trimethylsilylphenyl)indenyl)zirconium dichloride,
bis(2-(5'-propyl-2'-thienyl)indenyl)zirconium dichloride,
bis(2-(5'-propyl-2'-thienyl)(4,5-benzoindenyl))hafnium dichloride,
bis(2-(5'-propyl-2'-thienyl)(4-isopropyl)indenyl)zirconium dichloride,
bis(2-(5'-propyl-2'-thienyl)benzoindenyl)zirconium dichloride,
bis(2-(5'-propyl-2'-thienyl)-4-(1-naphthyl)indenyl)zirconium dichloride,
bis(2-(5'-propyl-2'-thienyl)-4-(2-naphthyl)indenyl)zirconium dichloride,
bis(2-(5'-propyl-2'-thienyl)-4-phenylindenyl)zirconium dichloride,
bis(2-(5'-propyl-2'-thienyl)-4-t-butylindenyl)zirconium dichloride,
bis(2-(5'-propyl-2'-thienyl)-4-isopropylindenyl)zirconium dichloride,
bis(2-(5'-propyl-2'-thienyl)-4-ethylindenyl)zirconium dichloride,
bis(2-(5'-propyl-2'-thienyl)-4-acenaphthindenyl)zirconium dichloride,
bis(2-(5'-propyl-2'-thienyl)-4-dimethylindenyl)zirconium dichloride,
bis(2-(5'-propyl-2'-thienyl)-4-(tert-butylphenylindenyl)zirconium dichloride,
bis(2-(5'-propyl-2'-thienyl)-4-(4-methylphenylindenyl)zirconium dichloride,
bis(2-(5'-propyl-2'-thienyl)-4-(4-ethylphenylindenyl)zirconium dichloride,
bis(2-(5'-propyl-2'-thienyl)-4-(4-trifluoromethylphenylindenyl)zirconium dichloride,
bis(2-(5'-propyl-2'-thienyl)-4-(4-methoxyphenylindenyl)zirconium dichloride,
bis(2-(5'-propyl-2'-thienyl)-4-(4-tert-butylphenylindenyl)dimethylzirconium,
bis(2-(5'-propyl-2'-thienyl)-4-(4-methylphenylindenyl)dimethylzirconium,
bis(2-(5'-propyl-2'-thienyl)-4-(4-ethylphenylindenyl)dimethylzirconium,
bis(2-(5'-propyl-2'-thienyl)-4-(4-trifluoromethylphenylindenyl)dimethylzirconium,
bis(2-(5'-propyl-2'-thienyl)-4-(4-methoxyphenylindenyl)dimethylzirconium,
bis(2-(5'-propyl-2'-thienyl)-4-(4'-tert-butylphenyl)indenyl)zirconium dichloride,
bis(2-(5'-propyl-2'-thienyl)-4-(4'-tert-butylphenyl)indenyl)hafnium dichloride,
bis(2-(5'-propyl-2'-thienyl)-4-(4'-tert-butylphenyl)indenyl)titanium dichloride,
bis(2-(5'-propyl-2'-thienyl)-4-(4'-methylphenyl)indenyl)zirconium dichloride,
bis(2-(5'-propyl-2'-thienyl)-4-(4'-ethylphenyl)indenyl)zirconium dichloride,
bis(2-(5'-propyl-2'-thienyl)-4-(4'-n-propylphenyl)indenyl)zirconium dichloride,
bis(2-(5'-propyl-2'-thienyl)-4-(4'-isopropylphenyl)indenyl)zirconium dichloride,
bis(2-(5'-propyl-2'-thienyl)-4-(4'-n-butylphenyl)indenyl)zirconium dichloride,
bis(2-(5'-propyl-2'-thienyl)-4-(4'-hexylphenyl)indenyl)zirconium dichloride,
bis(2-(5'-propyl-2'-thienyl)-4-(4'-sec-butylphenyl)indenyl)zirconium dichloride,
bis(2-(5'-propyl-2'-thienyl)-4-(4'-trimethylsilylphenyl)indenyl)zirconium dichloride,
bis(2-(5'-propyl-2'-N-methylpyrrolyl)indenyl)zirconium dichloride,
bis(2-(5'-propyl-2'-N-methylpyrrolyl)(4,5-benzoindenyl))hafnium dichloride,
bis(2-(5'-propyl-2'-N-methylpyrrolyl)(4-isopropyl)indenyl)zirconium dichloride,
bis(2-(5'-propyl-2'-N-methylpyrrolyl)benzoindenyl)zirconium dichloride,
bis(2-(5'-propyl-2'-N-methylpyrrolyl)-4-(1-naphthyl)indenyl)zirconium dichloride,
bis(2-(5'-propyl-2'-N-methylpyrrolyl)-4-(2-naphthyl)indenyl)zirconium dichloride,
bis(2-(5'-propyl-2'-N-methylpyrrolyl)-4-phenylindenyl)zirconium dichloride,
bis(2-(5'-propyl-2'-N-methylpyrrolyl)-4-t-butylindenyl)zirconium dichloride,
bis(2-(5'-propyl-2'-N-methylpyrrolyl)-4-isopropylindenyl)zirconium dichloride,
bis(2-(5'-propyl-2'-N-methylpyrrolyl)-4-ethylindenyl)zirconium dichloride,
bis(2-(5'-propyl-2'-N-methylpyrrolyl)-4-acenaphthindenyl)zirconium dichloride,
bis(2-(5'-propyl-2'-N-methylpyrrolyl)-4-dimethylindenyl)zirconium dichloride,
bis(2-(5'-propyl-2'-N-methylpyrrolyl)-4-(tert-butylphenylindenyl)zirconium dichloride,
bis(2-(5'-propyl-2'-N-methylpyrrolyl)-4-(4-methylphenylindenyl)zirconium dichloride,
bis(2-(5'-propyl-2'-N-methylpyrrolyl)-4-(4-ethylphenylindenyl)zirconium dichloride,
bis(2-(5'-propyl-2'-N-methylpyrrolyl)-4-(4-trifluoromethylphenylindenyl)zirconium dichloride,
bis(2-(5'-propyl-2'-N-methylpyrrolyl)-4-(4-methoxyphenylindenyl)zirconium dichloride,
bis(2-(5'-propyl-2'-N-methylpyrrolyl)-4-(4-tert-butylphenylindenyl)dimethylzirconium,
bis(2-(5'-propyl-2'-N-methylpyrrolyl)-4-(4-methylphenylindenyl)dimethylzirconium,
bis(2-(5'-propyl-2'-N-methylpyrrolyl)-4-(4-ethylphenylindenyl)dimethylzirconium,
bis(2-(5'-propyl-2'-N-methylpyrrolyl)-4-(4-trifluoromethylphenylindenyl)dimethylzirconium,
bis(2-(5'-propyl-2'-N-methylpyrrolyl)-4-(4-methoxyphenylindenyl)dimethylzirconium,
bis(2-(5'-propyl-2'-N-methylpyrrolyl)-4-(4'-tert-butylphenyl)indenyl)zirconium dichloride,
bis(2-(5'-propyl-2'-N-methylpyrrolyl)-4-(4'-tert-butylphenyl)indenyl)hafnium dichloride,
bis(2-(5'-propyl-2'-N-methylpyrrolyl)-4-(4'-tert-butylphenyl)indenyl)titanium dichloride,
bis(2-(5'-propyl-2'-N-methylpyrrolyl)-4-(4'-methylphenyl)indenyl)zirconium dichloride,
bis(2-(5'-propyl-2'-N-methylpyrrolyl)-4-(4'-ethylphenyl)indenyl)zirconium dichloride,
bis(2-(5'-propyl-2'-N-methylpyrrolyl)-4-(4'-n-propylphenyl)indenyl)zirconium dichloride,
bis(2-(5'-propyl-2'-N-methylpyrrolyl)-4-(4'-isopropylphenyl)indenyl)zirconium dichoride,
bis(2-(5'-propyl-2'-N-methylpyrrolyl)-4-(4'-n-butylphenyl)indenyl)zirconium dichloride,
bis(2-(5'-propyl-2'-N-methylpyrrolyl)-4-(4'-hexylphenyl)indenyl)zirconium dichloride,
bis(2-(5'-propyl-2'-N-methylpyrrolyl)-4-(4'-sec-butylphenyl)indenyl)zirconium dichloride,
bis(2-(5'-propyl-2'-N-methylpyrrolyl)-4-(4'-trimethylsilylphenyl)indenyl)zirconium dichloride,
bis(2-(5'-phenyl-2'-furyl)indenyl)zirconium dichloride,
bis(2-(5'-phenyl-2'-furyl)(4,5-benzoindenyl))hafnium dichloride,
bis(2-(5'-phenyl-2'-furyl)(4-isopropyl)indenyl)zirconium dichloride,
bis(2-(5'-phenyl-2'-furyl)benzoindenyl)zirconium dichloride,
bis(2-(5'-phenyl-2'-furyl)-4-(1-naphthyl)indenyl)zirconium dichloride,
bis(2-(5'-phenyl-2'-furyl)-4-(2-naphthyl)indenyl)zirconium dichloride,
bis(2-(5'-phenyl-2'-furyl)-4-phenylindenyl)zirconium dichloride,
bis(2-(5'-phenyl-2'-furyl)-4-t-butylindenyl)zirconium dichloride,
bis(2-(5'-phenyl-2'-furyl)-4-isopropylindenyl)zirconium dichloride,
bis(2-(5'-phenyl-2'-furyl)-4-ethylindenyl)zirconium dichloride,
bis(2-(5'-phenyl-2'-furyl)-4-acenaphthindenyl)zirconium dichloride,
bis(2-(5'-phenyl-2'-furyl)-4-dimethylindenyl)zirconium dichloride,
bis(2-(5'-phenyl-2'-furyl)-4-(tert-butylphenylindenyl)zirconium dichloride,
bis(2-(5'-phenyl-2'-furyl)-4-(4-methylphenylindenyl)zirconium dichloride,
bis(2-(5'-phenyl-2'-furyl)-4-(4-ethylphenylindenyl)zirconium dichloride,
bis(2-(5'-phenyl-2'-furyl)-4-(4-trifluoromethylphenylindenyl)zirconium dichloride,
bis(2-(5'-phenyl-2'-furyl)-4-(4-methoxyphenylindenyl)zirconium dichloride,
bis(2-(5'-phenyl-2'-furyl)-4-(4-tert-butylphenylindenyl)dimethylzirconium,
bis(2-(5'-phenyl-2'-furyl)-4-(4-methylphenylindenyl)dimethylzirconium,
bis(2-(5'-phenyl-2'-furyl)-4-(4-ethylphenylindenyl)dimethylzirconium,
bis(2-(5'-phenyl-2'-furyl)-4-(4-trifluoromethylphenylindenyl)dimethylzirconium,
bis(2-(5'-phenyl-2'-furyl)-4-(4-methoxyphenylindenyl)dimethylzirconium,
bis(2-(5'-phenyl-2'-furyl)-4-(4'-tert-butylphenyl)indenyl)zirconium dichloride,
bis(2-(5'-phenyl-2'-furyl)-4-(4'-tert-butylphenyl)indenyl)hafnium dichloride,
bis(2-(5'-phenyl-2'-furyl)-4-(4'-tert-butylphenyl)indenyl)titanium dichloride,
bis(2-(5'-phenyl-2'-furyl)-4-(4'-methylphenyl)indenyl)zirconium dichloride,
bis(2-(5'-phenyl-2'-furyl)-4-(4'-ethylphenyl)indenyl)zirconium dichloride,
bis(2-(5'-phenyl-2'-furyl)-4-(4'-n-propylphenyl)indenyl)zirconium dichloride,
bis(2-(5'-phenyl-2'-furyl)-4-(4'-isopropylphenyl)indenyl)zirconium dichloride,
bis(2-(5'-phenyl-2'-furyl)-4-(4'-n-butylphenyl)indenyl)zirconium dichloride,
bis(2-(5'-phenyl-2'-furyl)-4-(4'-hexylphenyl)indenyl)zirconium dichloride,
bis(2-(5'-phenyl-2'-furyl)-4-(4'-sec-butylphenyl)indenyl)zirconium dichloride,
bis(2-(5'-phenyl-2'-furyl)-4-(4'-trimethylsilylphenyl)indenyl)zirconium dichloride,
bis(2-(5'-phenyl-2'-thienyl)indenyl)zirconium dichloride,
bis(2-(5'-phenyl-2'-thienyl)(4,5-benzoindenyl))hafnium dichloride,
bis(2-(5'-phenyl-2'-thienyl)(4-isopropyl)indenyl)zirconium dichloride,
bis(2-(5'-phenyl-2'-thienyl)benzoindenyl)zirconium dichloride,
bis(2-(5'-phenyl-2'-thienyl)-4-(1-naphthyl)indenyl)zirconium dichloride,
bis(2-(5'-phenyl-2'-thienyl)-4-(2-naphthyl)indenyl)zirconium dichloride,
bis(2-(5'-phenyl-2'-thienyl)-4-phenylindenyl)zirconium dichloride,
bis(2-(5'-phenyl-2'-thienyl)-4-t-butylindenyl)zirconium dichloride,
bis(2-(5'-phenyl-2'-thienyl)-4-isopropylindenyl)zirconium dichloride,
bis(2-(5'-phenyl-2'-thienyl)-4-ethylindenyl)zirconium dichloride,
bis(2-(5'-phenyl-2'-thienyl)-4-acenaphthindenyl)zirconium dichloride,
bis(2-(5'-phenyl-2'-thienyl)-4-dimethylindenyl)zirconium dichloride,
bis(2-(5'-phenyl-2'-thienyl)-4-(tert-butylphenylindenyl)zirconium dichloride,
bis(2-(5'-phenyl-2'-thienyl)-4-(4-methylphenylindenyl)zirconium dichloride,
bis(2-(5'-phenyl-2'-thienyl)-4-(4-ethylphenylindenyl)zirconium dichloride,
bis(2-(5'-phenyl-2'-thienyl)-4-(4-trifluoromethylphenylindenyl)zirconium dichloride,
bis(2-(5'-phenyl-2'-thienyl)-4-(4-methoxyphenylindenyl)zirconium dichloride,
bis(2-(5'-phenyl-2'-thienyl)-4-(4-tert-butylphenylindenyl)dimethylzirconium,
bis(2-(5'-phenyl-2'-thienyl)-4-(4-methylphenylindenyl)dimethylzirconium,
bis(2-(5'-phenyl-2'-thienyl)-4-(4-ethylphenylindenyl)dimethylzirconium,
bis(2-(5'-phenyl-2'-thienyl)-4-(4-trifluoromethylphenylindenyl)dimethylzirconium,
bis(2-(5'-phenyl-2'-thienyl)-4-(4-methoxyphenylindenyl)dimethylzirconium,
bis(2-(5'-phenyl-2'-thienyl)-4-(4'-tert-butylphenyl)indenyl)zirconium dichloride,
bis(2-(5'-phenyl-2'-thienyl)-4-(4'-tert-butylphenyl)indenyl)hafnium dichloride,
bis(2-(5'-phenyl-2'-thienyl)-4-(4'-tert-butylphenyl)indenyl)titanium dichloride,
bis(2-(5'-phenyl-2'-thienyl)-4-(4'-methylphenyl)indenyl)zirconium dichloride,
bis(2-(5'-phenyl-2'-thienyl)-4-(4'-ethylphenyl)indenyl)zirconium dichloride,
bis(2-(5'-phenyl-2'-thienyl)-4-(4'-n-propylphenyl)indenyl)zirconium dichloride,
bis(2-(5'-phenyl-2'-thienyl)-4-(4'-isopropylphenyl)indenyl)zirconium dichloride,
bis(2-(5'-phenyl-2'-thienyl)-4-(4'-n-butylphenyl)indenyl)zirconium dichloride,
bis(2-(5'-phenyl-2'-thienyl)-4-(4'-hexylphenyl)indenyl)zirconium dichloride,
bis(2-(5'-phenyl-2'-thienyl)-4-(4'-sec-butylphenyl)indenyl)zirconium dichloride,
bis(2-(5'-phenyl-2'-thienyl)-4-(4'-trimethylsilylphenyl)indenyl)zirconium dichloride,
bis(2-(5'-phenyl-2'-N-methylpyrrolyl)indenyl)zirconium dichloride,
bis(2-(5'-phenyl-2'-N-methylpyrrolyl)(4,5-benzoindenyl))hafnium dichloride,
bis(2-(5'-phenyl-2'-N-methylpyrrolyl)(4-isopropyl)indenyl)zirconium dichloride,
bis(2-(5'-phenyl-2'-N-methylpyrrolyl)benzoindenyl)zirconium dichloride,
bis(2-(5'-phenyl-2'-N-methylpyrrolyl)-4-(1-naphthyl)indenyl)zirconium dichloride,
bis(2-(5'-phenyl-2'-N-methylpyrrolyl)-4-(2-naphthyl)indenyl)zirconium dichloride,
bis(2-(5'-phenyl-2'-N-methylpyrrolyl)-4-phenylindenyl)zirconium dichloride,
bis(2-(5'-phenyl-2'-N-methylpyrrolyl)-4-t-butylindenyl)zirconium dichloride,
bis(2-(5'-phenyl-2'-N-methylpyrrolyl)-4-isopropylindenyl)zirconium dichloride,
bis(2-(5'-phenyl-2'-N-methylpyrrolyl)-4-ethylindenyl)zirconium dichloride,
bis(2-(5'-phenyl-2'-N-methylpyrrolyl)-4-acenaphthindenyl)zirconium dichloride,
bis(2-(5'-phenyl-2'-N-methylpyrrolyl)-4-dimethylindenyl)zirconium dichloride,
bis(2-(5'-phenyl-2'-N-methylpyrrolyl)-4-(tert-butylphenylindenyl)zirconium dichloride,
bis(2-(5'-phenyl-2'-N-methylpyrrolyl)-4-(4-methylphenylindenyl)zirconium dichloride,
bis(2-(5'-phenyl-2'-N-methylpyrrolyl)-4-(4-ethylphenylindenyl)zirconium dichloride,
bis(2-(5'-phenyl-2'-N-methylpyrrolyl)-4-(4-trifluoromethylphenylindenyl)zirconium dichloride,
bis(2-(5'-phenyl-2'-N-methylpyrrolyl)-4-(4-methoxyphenylindenyl)zirconium dichloride,
bis(2-(5'-phenyl-2'-N-methylpyrrolyl)-4-(4-tert-butylphenylindenyl)dimethylzirconium,
bis(2-(5'-phenyl-2'-N-methylpyrrolyl)-4-(4-methylphenylindenyl)dimethylzirconium,
bis(2-(5'-phenyl-2'-N-methylpyrrolyl)-4-(4-ethylphenylindenyl)dimethylzirconium,
bis(2-(5'-phenyl-2'-N-methylpyrrolyl)-4-(4-trifluoromethylphenylindenyl)dimethylzirconium,
bis(2-(5'-phenyl-2'-N-methylpyrrolyl)-4-(4-methoxyphenylindenyl)dimethylzirconium,
bis(2-(5'-phenyl-2'-N-methylpyrrolyl)-4-(4'-tert-butylphenyl)indenyl)zirconium dichloride,
bis(2-(5'-phenyl-2'-N-methylpyrrolyl)-4-(4'-tert-butylphenyl)indenyl)hafnium dichloride,
bis(2-(5'-phenyl-2'-N-methylpyrrolyl)-4-(4'-tert-butylphenyl)indenyl)titanium dichloride,
bis(2-(5'-phenyl-2'-N-methylpyrrolyl)-4-(4'-methylphenyl)indenyl)zirconium dichloride,
bis(2-(5'-phenyl-2'-N-methylpyrrolyl)-4-(4'-ethylphenyl)indenyl)zirconium dichloride,
bis(2-(5'-phenyl-2'-N-methylpyrrolyl)-4-(4'-n-propylphenyl)indenyl)zirconium dichloride,
bis(2-(5'-phenyl-2'-N-methylpyrrolyl)-4-(4'-isopropylphenyl)indenyl)zirconium dichloride,
bis(2-(5'-phenyl-2'-N-methylpyrrolyl)-4-(4'-n-butylphenyl)indenyl)zirconium dichloride,
bis(2-(5'-phenyl-2'-N-methylpyrrolyl)-4-(4'-hexylphenyl)indenyl)zirconium dichloride,
bis(2-(5'-phenyl-2'-N-methylpyrrolyl)-4-(4'-sec-butylphenyl)indenyl)zirconium dichloride,
bis(2-(5'-phenyl-2'-N-methylpyrrolyl)-4-(4'-trimethylsilylphenyl)indenyl)zirconium dichloride,
bis(2-(2'-pyridyl)indenyl)zirconium dichloride,
bis(2-(2'-pyridyl)(4,5-benzoindenyl))hafnium dichloride,
bis(2-(2'-pyridyl)(4-isopropyl)indenyl)zirconium dichloride,
bis(2-(2'-pyridyl)benzoindenyl)zirconium dichloride,
bis(2-(2'-pyridyl)-4-(1-naphthyl)indenyl)zirconium dichloride,
bis(2-(2'-pyridyl)-4-(2-naphthyl)indenyl)zirconium dichloride,
bis(2-(2'-pyridyl)-4-phenylindenyl)zirconium dichloride,
bis(2-(2'-pyridyl)-4-t-butylindenyl)zirconium dichloride,
bis(2-(2'-pyridyl)-4-isopropylindenyl)zirconium dichloride,
bis(2-(2'-pyridyl)-4-ethylindenyl)zirconium dichloride,
bis(2-(2'-pyridyl)-4-acenaphthindenyl)zirconium dichloride,
bis(2-(2'-pyridyl)-4-dimethylindenyl)zirconium dichloride,
bis(2-(2'-pyridyl)-4-(tert-butylphenylindenyl)zirconium dichloride,
bis(2-(2'-pyridyl)-4-(4-methylphenylindenyl)zirconium dichloride,
bis(2-(2'-pyridyl)-4-(4-ethylphenylindenyl)zirconium dichloride,
bis(2-(2'-pyridyl)-4-(4-trifluoromethylphenylindenyl)zirconium dichloride,
bis(2-(2'-pyridyl)-4-(4-methoxyphenylindenyl)zirconium dichloride,
bis(2-(2'-pyridyl)-4-(4-tert-butylphenylindenyl)dimethylzirconium,
bis(2-(2'-pyridyl)-4-(4-methylphenylindenyl)dimethylzirconium,
bis(2-(2'-pyridyl)-4-(4-ethylphenylindenyl)dimethylzirconium,
bis(2-(2'-pyridyl)-4-(4-trifluoromethylphenylindenyl)dimethylzirconium,
bis(2-(2'-pyridyl)-4-(4-methoxyphenylindenyl)dimethylzirconium,
bis(2-(2'-pyridyl)-4-(4'-tert-butylphenyl)indenyl)zirconium dichloride,
bis(2-(2'-pyridyl)-4-(4'-tert-butylphenyl)indenyl)hafnium dichloride,
bis(2-(2'-pyridyl)-4-(4'-tert-butylphenyl)indenyl)titanium dichloride,
bis(2-(2'-pyridyl)-4-(4'-methylphenyl)indenyl)zirconium dichloride,
bis(2-(2'-pyridyl)-4-(4'-ethylphenyl)indenyl)zirconium dichloride,
bis(2-(2'-pyridyl)-4-(4'-n-propylphenyl)indenyl)zirconium dichloride,
bis(2-(2'-pyridyl)-4-(4'-isopropylphenyl)indenyl)zirconium dichloride,
bis(2-(2'-pyridyl)-4-(4'-n-butylphenyl)indenyl)zirconium dichloride,
bis(2-(2'-pyridyl)-4-(4'-hexylphenyl)indenyl)zirconium dichloride,
bis(2-(2'-pyridyl)-4-(4'-sec-butylphenyl)indenyl)zirconium dichloride,
bis(2-(2'-pyridyl)-4-(4'-trimethylsilylphenyl)indenyl)zirconium dichloride,
bis(2-(5'-methyl-2'-pyridyl)indenyl)zirconium dichloride,
bis(2-(5'-methyl-2'-pyridyl)(4,5-benzoindenyl))hafnium dichloride,
bis(2-(5'-methyl-2'-pyridyl)(4-isopropyl)indenyl)zirconium dichloride,
bis(2-(5'-methyl-2'-pyridyl)benzoindenyl)zirconium dichloride,
bis(2-(5'-methyl-2'-pyridyl)-4-(1-naphthyl)indenyl)zirconium dichloride,
bis(2-(5'-methyl-2'-pyridyl)-4-(2-naphthyl)indenyl)zirconium dichloride,
bis(2-(5'-methyl-2'-pyridyl)-4-phenylindenyl)zirconium dichloride,
bis(2-(5'-methyl-2'-pyridyl)-4-t-butylindenyl)zirconium dichloride,
bis(2-(5'-methyl-2'-pyridyl)-4-isopropylindenyl)zirconium dichloride,
bis(2-(5'-methyl-2'-pyridyl)-4-ethylindenyl)zirconium dichloride,
bis(2-(5'-methyl-2'-pyridyl)-4-acenaphthindenyl)zirconium dichloride,
bis(2-(5'-methyl-2'-pyridyl)-4-dimethylindenyl)zirconium dichloride,
bis(2-(5'-methyl-2'-pyridyl)-4-(tert-butylphenylindenyl)zirconium dichloride,
bis(2-(5'-methyl-2'-pyridyl)-4-(4-methylphenylindenyl)zirconium dichloride,
bis(2-(5'-methyl-2'-pyridyl)-4-(4-ethylphenyl)indenyl)zirconium dichloride,
bis(2-(5'-methyl-2'-pyridyl)-4-(4-trifluoromethylphenylindenyl)zirconium dichloride,
bis(2-(5'-methyl-2'-pyridyl)-4-(4-methoxyphenylindenyl)zirconium dichloride,
bis(2-(5'-methyl-2'-pyridyl)-4-(4-tert-butylphenylindenyl)dimethylzirconium,
bis(2-(5'-methyl-2'-pyridyl)-4-(4-methylphenylindenyl)dimethylzirconium,
bis(2-(5'-methyl-2'-pyridyl)-4-(4-ethylphenylindenyl)dimethylzirconium,
bis(2-(5'-methyl-2'-pyridyl)-4-(4-trifluoromethylphenylindenyl)dimethylzirconium,
bis(2-(5'-methyl-2'-pyridyl)-4-(4-methoxyphenylindenyl)dimethylzirconium,
bis(2-(5'-methyl-2'-pyridyl)-4-(4'-tert-butylphenyl)indenyl)zirconium dichloride,
bis(2-(5'-methyl-2'-pyridyl)-4-(4'-tert-butylphenylindenyl)hafnium dichloride,
bis(2-(5'-methyl-2'-pyridyl)-4-(4'-tert-butylphenyl)indenyl)titanium dichloride,
bis(2-(5'-methyl-2'-pyridyl)-4-(4'-methylphenyl)indenyl)zirconium dichloride,
bis(2-(5'-methyl-2'-pyridyl)-4-(4'-ethylphenyl)indenyl)zirconium dichloride,
bis(2-(5'-methyl-2'-pyridyl)-4-(4'-n-propylphenyl)indenyl)zirconium dichloride,
bis(2-(5'-methyl-2'-pyridyl)-4-(4'-isopropylphenylindenyl)zirconium dichloride,
bis(2-(5'-methyl-2'-pyridyl)-4-(4'-n-butylphenyl)indenyl)zirconium dichloride,
bis(2-(5'-methyl-2'-pyridyl)-4-(4'-hexylphenyl)indenyl)zirconium dichloride,
bis(2-(5'-methyl-2'-pyridyl)-4-(4'-sec-butylphenyl)indenyl)zirconium dichloride,
bis(2-(5'-methyl-2'-pyridyl)-4-(4'-trimethylsilylphenyl)indenyl)zirconium dichloride,
bis(1-(2'-pyridyl)indenyl)zirconium dichloride,
bis(1-(2'-pyridyl)(4,5-benzoindenyl)hafnium dichloride,
bis(1-(2'-pyridyl)(4-isopropyl)indenyl)zirconium dichloride,
bis(1-(2'-pyridyl)benzoindenyl)zirconium dichloride,
bis(1-(2'-pyridyl)-4-(1-naphthyl)indenyl)zirconium dichloride,
bis(1-(2'-pyridyl)-4-(2-naphthyl)indenyl)zirconium dichloride,
bis(1-(2'-pyridyl)-4-phenylindenyl)zirconium dichloride,
bis(1-(2'-pyridyl)-4-t-butylindenyl)zirconium dichloride,
bis(1-(2'-pyridyl)-4-isopropylindenyl)zirconium dichloride,
bis(1-(2'-pyridyl)-4-ethylindenyl)zirconium dichloride,
bis(1-(2'-pyridyl)-4-acenaphthindenyl)zirconium dichloride,
bis(1-(2'-pyridyl)-4-dimethylindenyl)zirconium dichloride,
bis(1-(2'-pyridyl)-4-(tert-butylphenylindenyl)zirconium dichloride,
bis(1-(2'-pyridyl)-4-(4-methylphenylindenyl)zirconium dichloride,
bis(1-(2'-pyridyl)-4-(4-ethylphenylindenyl)zirconium dichloride,
bis(1-(2'-pyridyl)-4-(4-trifluoromethylphenylindenyl)zirconium dichloride,
bis(1-(2'-pyridyl)-4-(4-methoxyphenylindenyl)zirconium dichloride,
bis(1-(2'-pyridyl)-4-(4-tert-butylphenylindenyl)dimethyl-zirconium,
bis(2-(2'-pyridyl)-4-(4-methylphenylindenyl)dimethylzirconium,
bis(1-(2'-pyridyl)-4-(4-ethylphenylindenyl)dimethylzirconium,
bis(1-(2'-pyridyl)-4-(4-trifluoromethylphenylindenyl)dimethylzirconium,
bis(1-(2'-pyridyl)-4-(4-methoxyphenylindenyl)dimethylzirconium,
bis(1-(2'-pyridyl)-4-(4'-tert-butylphenyl)indenyl)zirconium dichloride,
bis(1-(2'-pyridyl)-4-(4'-tert-butylphenyl)indenyl)hafnium dichloride,
bis(1-(2'-pyridyl)-4-(4'-tert-butylphenyl)indenyl)titanium dichloride,
bis(1-(2'-pyridyl)-4-(4'-methylphenyl)indenyl)zirconium dichloride,
bis(1-(2'-pyridyl)-4-(4'-ethylphenyl)indenyl)zirconium dichloride,
bis(1-(2'-pyridyl)-4-(4'-n-propylphenyl)indenyl)zirconium dichloride,
bis(1-(2'-pyridyl)-4-(4'-isopropylphenyl)indenyl)zirconium dichloride,
bis(1-(2'-pyridyl)-4-(4'-n-butylphenyl)indenyl)zirconium dichloride,
bis(1-(2'-pyridyl)-4-(4'-hexylphenyl)indenyl)zirconium dichloride,
bis(1-(2'-pyridyl)-4-(4'-sec-butylphenyl)indenyl)zirconium dichloride or
bis(1-(2'-pyridyl)-4-(4'-trimethylsilylphenyl)indenyl)zirconium dichloride.

## Revendications

1. Composés de formule (II), 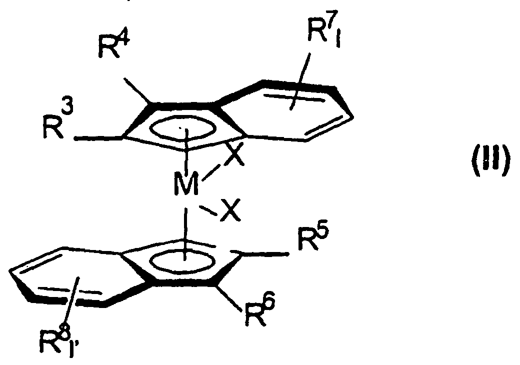 où
M désigne Ti, Zr ou Hf,
R³ et R⁵ ou R⁴ et R⁶ sont identiques ou différents et sont un atome d'hydrogène, un groupe carboné en C₁-C₂₀, de préférence un alkyle en C₁-C₁₈, en particulier méthyle, éthyle, n-butyle, n-hexyle, cyclohexyle ou octyle, un alcényle en C₂-C₁₀, un alkylalcényle en C₃-C₁₅, un aryle en C₆-C₁₈, un hétéroaryle en C₄-C₂₄, un alkylhétéroaryle en C₄-C₂₄, un arylalkyle en C₇-C₂₀, un alkylaryle en C₇-C₂₀, un alkyle en C₁-C₁₂ contenant du fluor, un aryle en C₆-C₁₈ contenant du fluor, un arylalkyle en C₇-C₂₀ contenant du fluor ou un alkylaryle en C₇-C₂₀ contenant du fluor; avec pour condition que R³ et R⁵, ou R⁴ et R⁶ sont un hétéroaryle en C₄-C₂₄ ou un alkylhétéroaryle en C₄-C₂₄,
R⁷, R⁸ sont identiques ou différents et sont un atome d'hydrogène, un atome d'halogène ou un groupe carboné en C₁-C₂₀, de préférence un groupe alkyle en C₁-C₁₈ linéaire ou ramifié, en particulier méthyle, éthyle, tert-butyle, cyclohexyle ou octyle, un alcényle en C₂-C₁₀, un alkylalcényle en C₃-C₁₅, un groupe aryle en C₆-C₁₈, qui peut être éventuellement substitué, en particulier phényle, tolyle, xylyle, tert-butylphényle, éthylphényle, naphtyle, acénaphtyle, phénanthrényle, ou anthracényle, un hétéroaryle en C₅-C₁₈, un arylalkyle en C₇-C₂₀, un alkylaryle en C₇-C₂₀, un alkyle en C₁-C₁₂ contenant du fluor, un aryle en C₆-C₁₈ contenant du fluor, un arylalkyle en C₇-C₂₀ contenant du fluor ou un alkylaryle en C₇-C₂₀ contenant du fluor, et deux restes R⁷ ou R⁸ peuvent former un système mono- ou polycyclique, qui à son tour peut être éventuellement substitué,
X est un atome d'halogène, en particulier du chlore,
l,l' identiques ou différents, sont un nombre entier entre 0 et 4, de préférence 1 ou 2, particulièrement préférablement égaux à 1.

2. Composés selon la revendication 1, **caractérisés par le fait que**
M désigne le zirconium,
R³ et R⁵, ou R⁴ et R⁶ sont un hétéroaryle en C₄-C₂₄ ou un alkylhétéroaryle en C₄-C₂₄ tel que 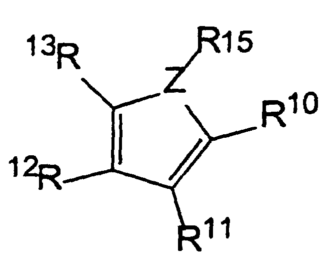
où
R¹⁰, R¹¹, R¹², R¹³ sont identiques ou différents et désignent un atome d'hydrogène, un groupe carboné en C₁-C₂₀, de préférence un alkyle en C₁-C₁₈, en particulier méthyle, éthyle, n-butyle, n-hexyle, cyclohexyle ou octyle, un alcényle en C₂-C₁₀, un alkylalcényle en C₃-C₁₅, un aryle en C₆-C₁₈, un hétéroaryle en C₄-C₂₄, un alkylhétéroaryle en C₄-C₂₄, un arylalkyle en C₇-C₂₀, un alkylaryle en C₇-C₂₀, un alkyle en C₁-C₁₂ contenant du fluor, un aryle en C₆-C₁₈ contenant du fluor, un arylalkyle en C₇-C₂₀ contenant du fluor ou un alkylaryle en C₇-C₂₀ contenant du fluor,
Z est un hétéroatome choisi dans le groupe principal V et VI,
R¹⁵ lorsque Z = oxygène ou soufre, R¹⁵ n'est pas présent, tandis que pour Z = azote R¹⁵ est un atome d'hydrogène, un groupe carboné en C₁-C₂₀, de préférence un alkyle en C₁-C₁₈, en particulier méthyle, éthyle, n-butyle, n-hexyle, cyclohexyle ou octyle, un alcényle en C₂-C₁₀, un alkylalcényle en C₃-C₁₅, un aryle en C₆-C₁₈, un hétéroaryle en C₄-C₂₄, un alkylhétéroaryle en C₄-C₂₄, un arylalkyle en C₇-C₂₀, un alkylaryle en C₇-C₂₀, un alkyle en C₁-C₁₂, contenant du fluor, un aryle en C₆-C₁₈ contenant du fluor, un arylalkyle en C₇-C₂₀ contenant du fluor ou un alkylaryle en C₇-C₂₀ contenant du fluor,
ou 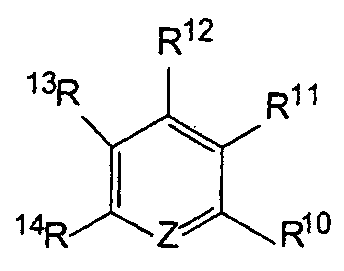 où
R¹⁰, R¹¹, R¹², R¹³, R¹⁴ sont identiques ou différents et sont un atome d'hydrogène, un groupe carboné en C₁-C₂₀, de préférence un alkyle en C₁-C₁₈, en particulier méthyle, éthyle, n-butyle, n-hexyle, cyclohexyle ou octyle, un alcényle en C₂-C₁₀, un alkylalcényle en C₃-C₁₅, un aryle en C₆-C₁₈, un hétéroaryle en C₄-C₂₄, un alkylhétéroaryle en C₄-C₂₄, un arylalkyle en C₇-C₂₀, un alkylaryle en C₇-C₂₀, un alkyle en C₁-C₁₂ contenant du fluor, un aryle en C₆-C₁₈ contenant du fluor, un arylalkyle en C₇-C₂₀ contenant du fluor ou un alkylaryle en C₇-C₂₀ contenant du fluor,
Z est un hétéroatome choisi dans le groupe principal V.

3. Composés selon la revendication 2, **caractérisés par le fait que**
R³ et R⁵, ou R⁴ et R⁶ représentent un hétéroaryle en C₄-C₂₄ ou un alkylhétéroaryle en C₄-C₂₄, tel que 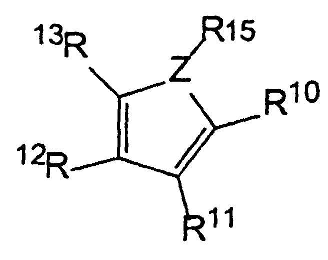
où
R¹⁰ est un atome d'hydrogène, un alkyle en C₁-C₁₈, en particulier méthyle, éthyle, n-butyle, n-hexyle, cyclohexyle ou octyle, un phényle,
R¹¹, R¹² est un atome d'hydrogène,
R¹³ est le système indényle lié au métal,
Z est l'oxygène, l'azote ou le soufre,
R¹⁵ lorsque Z = oxygène et soufre R¹⁵ n'est pas présent, tandis que pour Z = azote R¹⁵ est un atome d'hydrogène, un méthyle, un éthyle, un n-butyle, un n-hexyle, un cyclohexyle et un phényle,
ou 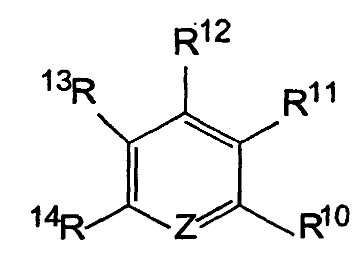 où,
R¹⁰ est un atome d'hydrogène, un alkyle en C₁-C₁₈, tel que méthyle, éthyle, n-butyle, n-hexyle, cyclohexyle ou octyle, un phényle,
R¹¹, R¹², R¹³ est un atome d'hydrogène,
R¹⁴ est le système indényle lié au métal,
Z est l'azote.

4. Utilisation d'un composé de formule (II) selon l'une des revendications 1 à 3 pour la préparation de polyoléfines.

5. Système de catalyseur contenant au moins un métallocène de formule (II) selon l'une des revendications 1 à 3, au moins un cocatalyseur, et au moins un support.

6. Système catalyseur selon la revendication 5, contenant en outre au moins un autre composant en tant qu'additif.

7. Utilisation d'un composé de formule (II) selon l'une des revendications 1 à 3 pour la préparation d'un système catalyseur selon l'une des revendications 5 ou 6.

8. Utilisation du système catalyseur selon la revendication 5 ou 6 dans la préparation de polyoléfines, en particulier de polypropylène stéréoséquencé atactique-isotactique ayant des propriétés d'élastomère.

9. Procédé pour la préparation de polyoléfines par polymérisation d'une ou plusieurs oléfines en présence d'un système catalyseur selon la revendication 5 ou 6.

10. Composés selon la revendication, **caractérisés par le fait que** la formule (II) désigne les composés suivants:
dichlorure de bis(2-(5'-méthyl-2'-furyl)-indényl)zirconium,
dichlorure de bis(2-(5'-méthyl-2'-furyl)-(4,5-benzoindényl))hafhium,
dichlorure de bis(2-(5'-méthyl-2'-furyl)-(4-isopropyl)-indényl)-zirconium,
dichlorure de bis(2-(5'-méthyl-2'-furyl)-benzo-indényl)zirconium,
dichlorure de bis(2-(5'-méthyl-2'-furyl)-4-(1-naphtyl)-indényl)-zirconium,
dichlorure de bis(2-(5'-méthyl-2'-furyl)-4-(2-naphtyl)-indényl)-zirconium,
dichlorure de bis(2-(5'-méthyl-2'-furyl)-4-phényl-indényl)zirconium,
dichlorure de bis(2-(5'-méthyl-2'-fmyl)-4-tert-butyl-indényl)-zirconium,
dichlorure de bis(2-(5'-méthyl-2'-furyl)-4-isopropyl-indényl)-zirconium,
dichlorure de bis(2-(5'-méthyl-2'-furyl)-4-éthyl-indényl)zirconium,
dichlorure de bis(2-(5'-méthyl-2'-furyl)-4-acénapht-indényl)zirconium,
dichlorure de bis(2-(5'-méthyl-2'-furyl)-4-diméthyl-indényl)zirconium,
dichlorure de bis(2-(5'-méthyl-2'-furyl)-4-(tert-butyl-phényl-indényl)-zirconium,
dichlorure de bis(2-(5'-méthyl-2'-furyl)-4-(4-méthyl-phényl-indényl)-zirconium,
dichlorure de bis(2-(5'-méthyl-2'-furyl)-4-(4-éthyl-phényl-indényl)-zirconium,
dichlorure de bis(2-(5'-méthyl-2'-furyl)-4-(4-trifluorométhyl-phényl-indényl)zirconium,
dichlorure de bis(2-(5'-méthyl-2'-furyl)-4-(4-méthoxy-phényl-indényl)-zirconium,
diméthyl-bis(2-(5'-méthyl-2'-furyl)-4-(tert-butyl-phényl-indényl)-zirconium,
diméthyl-bis(2-(5'-méthyl-2'-furyl)-4-(4-méthyl-phényl-indényl)-zirconium,
diméthyl-bis(2-(5'-méthyl-2'-furyl)-4-(4-éthyl-phényl-indényl)-zirconium,
diméthyl-bis(2-(5'-méthyl-2'-furyl)-4-(4-trifluorométhyl-phényl-indényl)zirconium,
diméthyl-bis(2-(5'-méthyl-2'-furyl)-4-(4-méthoxy-phényl-indényl)-zirconium,
dichlorure de bis(2-(5'-méthyl-2'-furyl)-4-(4'-tert-butyl-phényl)-indényl)zirconium,
dichlorure de bis(2-(5'-méthyl-2'-furyl)-4-(4'-tert-butyl-phényl)-indényl)hafnium,
dichlorure de bis(2-(5'-méthyl-2'-furyl)-4-(4'-tert-butyl-phényl)-indényl)titane,
dichlorure de bis(2-(5'-méthyl-2'-furyl)-4-(4'-méthyl-phényl)-indényl)-zirconium,
dichlorure de bis(2-(5'-méthyl-2'-furyl)-4-(4'-éthyl-phényl)-indényl)-zirconium,
dichlorure de bis(2-(5'-méthyl-2'-furyl)-4-(4'-n-propyl-phényl)-indényl)zirconium,
dichlorure de bis(2-(5'-méthyl-2'-furyl)-4-(4'-iso-propyl-phényl)-indényl)zirconium,
dichlorure de bis(2-(5'-méthyl-2'-furyl)-4-(4'-n-butyl-phényl)-indényl)-zirconium,
dichlorure de bis(2-(5'-méthyl-2'-furyl)-4-(4'-hexyl-phényl)-indényl)-zirconium,
dichlorure de bis(2-(5'-méthyl-2'-furyl)-4-(4'-sec-butyl-phényl)-indényl)zirconium,
dichlorure de bis(2-(5'-méthyl-2-furyl)-4-(4'-triméthylsilyl-phényl)-indényl)zirconium,
dichlorure de bis(2-(5'-méthyl-2'-thiophène)-indényl)zirconium,
dichlorure de bis(2-(5'-méthyl-2'-thiophène)-(4,5-benzoindényl))-hafnium,
dichlorure de bis(2-(5'-méthyl-2'-thiophène)-(4-isopropyl)indényl)-zirconium,
dichlorure de bis(2-(5'-méthyl-2'-thiophène)-benzo-indényl)zirconium,
dichlorure de bis(2-(5'-méthyl-2'-thiophène)-4-(1-naphtyl)-indényl)-zirconium,
dichlorure de bis(2-(5'-méthyl-2'-thiophène)-4-(2-naphtyl)-indényl)-zirconium,
dichlorure de bis(2-(5'-méthyl-2'-thiophène)-4-phényl-indényl)-zirconium,
dichlorure de bis(2-(5'-méthyl-2'-thiophène)-4-tert-butyl-indényl)-zirconium,
dichlorure de bis(2-(5'-méthyl-2'-thiophène)-4-isopropyl-indényl)-zirconium,
dichlorure de bis(2-(5'-méthyl-2'-thiophène)-4-éthyl-indényl)-zirconium,
dichlorure de bis(2-(5'-méthyl-2'-thiophène)-4-acénapht-indényl)-zirconium,
dichlorure de bis(2-(5'-méthyl-2'-thiophène)-4-diméthyl-indényl)-zirconium,
dichlorure de bis(2-(5'-méthyl-2'-thiophène)-4-(tert-butyl-phényl-indényl)zirconium,
dichlorure de bis(2-(5'-méthyl-2'-thiophène)-4-(4-méthyl-phényl-indényl)zirconium,
dichlorure de bis(2-(5'-méthyl-2'-thiophène)-4-(4-éthyl-phényl-indényl)zirconium,
dichlorure de bis(2-(5'-méthyl-2'-thiophène)-4-(4-trifluorométhyl-phényl-indényl)zirconium,
dichlorure de bis(2-(5'-méthyl-2'-thiophène)-4-(4-méthoxy-phényl-indényl)zirconium,
diméthyl-bis(2-(5'-méthyl-2'-thiophène)-4-(tert-butyl-phényl-indényl)-zirconium,
diméthyl-bis(2-(5'-méthyl-2'-thiophène)-4-(4-méthyl-phényl-indényl)-zirconium,
diméthyl-bis(2-(5'-méthyl-2'-thiophène)-4-(4-éthyl-phényl-indényl)-zirconium,
diméthyl-bis(2-(5'-méthyl-2'-thiophène)-4-(4-trifluorométhyl-phényl-indényl)zirconium,
diméthyl-bis(2-(5'-méthyl-2'-thiophène)-4-(4-méthoxy-phényl-indényl)zirconium,
dichlorure de bis(2-(5'-méthyl-2'-thiophène)-4-(4'-tert-butyl-phényl)-indényl)zirconium,
dichlorure de bis(2-(5'-méthyl-2'-thiophène)-4-(4'-tert-butyl-phényl)-indényl)hafnium,
dichlorure de bis(2-(5'-méthyl-2'-thiophène)-4-(4'-tert-butyl-phényl)-indényl)titane,
dichlorure de bis(2-(5'-méthyl-2'-thiophène)-4-(4'-méthyl-phényl)-indényl)zirconium,
dichlorure de bis(2-(5'-méthyl-2'-thiophène)-4-(4'-éthyl-phényl)-indényl)zirconium,
dichlorure de bis(2-(5'-méthyl-2'-thiophène)-4-(4'-n-propyl-phényl)-indényl)zirconium,
dichlorure de bis(2-(5'-méthyl-2'-thiophène)-4-(4'-iso-propyl-phényl)-indényl)zirconium,
dichlorure de bis(2-(5'-méthyl-2'-thiophène)-4-(4'-n-butyl-phényl)-indényl)zirconium,
dichlorure de bis(2-(5'-méthyl-2'-thiophène)-4-(4'-hexyl-phényl)-indényl)zirconium,
dichlorure de bis(2-(5'-méthyl-2'-thiophène)-4-(4'-sec-butyl-phényl)-indényl)zirconium,
dichlorure de bis(2-(5'-méthyl-2'-thiophène)-4-(4'-triméthylsilyl-phényl)-indényl)zirconium,
dichlorure de bis(2-(5'-méthyl-2'-N-méthylpyrrol)-indényl)zirconium,
dichlorure de bis(2-(5'-méthyl-2'-N-méthylpyrrol)-(4,5-benzo-indényl))hafnium,
dichlorure de bis(2-(5'-méthyl-2'-N-méthylpyrrol)-(4-isopropyl)-indényl)zirconium,
dichlorure de bis(2-(5'-méthyl-2'-N-méthylpyrrol)-benzo-indényl)-zirconium,
dichlorure de bis(2-(5'-méthyl-2'-N-méthylpyrrol)-4-(1-naphtyl)-indényl)zirconium,
dichlorure de bis(2-(5'-méthyl-2'-N-méthylpyrrol)-4-(2-naphtyl)-indényl)zirconium,
dichlorure de bis(2-(5'-méthyl-2'-N-méthylpyrrol)-4-phényl-indényl)-zirconium,
dichlorure de bis(2-(5'-méthyl-2'-N-méthylpyrrol)-4-tert-butyl-indényl)zirconium,
dichlorure de bis(2-(5'-méthyl-2'-N-méthylpyrrol)-4-isopropyl-indényl)zirconium,
dichlorure de bis(2-(5'-méthyl-2'-N-méthylpyrrol)-4-éthyl-indényl)-zirconium,
dichlorure de bis(2-(5'-méthyl-2'-N-méthylpyrrol)-4-acénapht-indényl)zirconium,
dichlorure de bis(2-(5'-méthyl-2'-N-méthylpyrrol)-4-diméthyl-indényl)zirconium,
dichlorure de bis(2-(5'-méthyl-2'-N-méthylpyrrol)-4-(tert-butyl-phényl-indényl)zirconium,
dichlorure de bis(2-(5'-méthyl-2'-N-méthylpyrrol)-4-(4-méthyl-phényl-indényl)zirconium,
dichlorure de bis(2-(5'-méthyl-2'-N-méthylpyrrol)-4-(4-éthyl-phényl-indényl)zirconium,
dichlorure de bis(2-(5'-méthyl-2'-N-méthylpyrrol)-4-(4-trifluoro-méthyl-phényl-indényl)zirconium,
dichlorure de bis(2-(5'-méthyl-2'-N-méthylpyrrol)-4-(4-méthoxy-phényl-indényl)zirconium,
diméthyl-bis(2-(5'-méthyl-2'-N-méthylpyrrol)-4-(tert-butyl-phényl-indényl)zirconium,
diméthyl-bis(2-(5'-méthyl-2'-N-méthylpyrrol)-4-(4-méthyl-phényl-indényl)zirconium,
diméthyl-bis(2-(5'-méthyl-2'-N-méthylpyrrol)-4-(4-éthyl-phényl-indényl)zirconium,
diméthyl-bis(2-(5'-méthyl-2'-N-méthylpyrrol)-4-(4-trifluorométhyl-phényl-indényl)zirconium,
diméthyl-bis(2-(5'-méthyl-2'-N-méthylpyrrol)-4-(4-méthoxy-phényl-indényl)zirconium,
dichlorure de bis(2-(5'-méthyl-2'-N-méthylpyrrol)-4-(4'-tert-butyl-phényl)-indényl)zirconium,
dichlorure de bis(2-(5'-méthyl-2'-N-méthylpyrrol)-4-(4'-tert-butyl-phényl)-indényl)hafnium,
dichlorure de bis(2-(5'-méthyl-2'-N-méthylpyrrol)-4-(4'-tert-butyl-phényl)-indényl)titane,
dichlorure de bis(2-(5'-méthyl-2'-N-méthylpyrrol)-4-(4'-méthyl-phényl)-indényl)zirconium,
dichlorure de bis(2-(5'-méthyl-2'-N-méthylpyrrol)-4-(4'-éthyl-phényl)-indényl)zirconium,
dichlorure de bis(2-(5'-méthyl-2'-N-méthylpyrrol)-4-(4'-n-propyl-phényl)-indényl)zirconium,
dichlorure de bis(2-(5'-méthyl-2'-N-méthylpyrrol)-4-(4'-iso-propyl-phényl)-indényl)zirconium,
dichlorure de bis(2-(5'-méthyl-2'-N-méthylpyrrol)-4-(4'-n-butyl-phényl)-indényl)zirconium,
dichlorure de bis(2-(5'-méthyl-2'-N-méthylpyrrol)-4-(4'-hexyl-phényl)-indényl)zirconium,
dichlorure de bis(2-(5'-méthyl-2'-N-méthylpyrrol)-4-(4-sec-butyl-phényl)-indényl)zirconium,
dichlorure de bis(2-(5'-méthyl-2'-N-méthylpyrrol)-4-(4'-triméthylsilylphényl)-indényl)zirconium,
dichlorure de bis(1-(5'-méthyl-2'-furyl)-indényl)zirconium,
dichlorure de bis(1-(5'-méthyl-2'-furyl)-(4,5-benzoindényl))hafnium,
dichlorure de bis(2-(5'-méthyl-2'-furyl)-(4-isopropyl)indényl)-zirconium,
dichlorure de bis(1-(5'-méthyl-2'-furyl)-benzo-indényl)zirconium,
dichlorure de bis(1-(5'-méthyl-2'-furyl)-4-(1-naphtyl)-indényl)-zirconium,
dichlorure de bis(1-(5'-méthyl-2'-furyl)-4-(2-naphtyl)-indényl)-zirconium,
dichlorure de bis(1-(5'-méthyl-2'-furyl)-4-phényl-indényl)zirconium,
dichlorure de bis(1-(5'-méthyl-2'-furyl)-4-tert-butyl-indényl)-zirconium,
dichlorure de bis(1-(5'-méthyl-2'-furyl)-4-isopropyl-indényl)-zirconium,
dichlorure de bis(1-(5'-méthyl-2'-furyl)-4-éthyl-indényl)zirconium,
dichlorure de bis(1-(5'-méthyl-2'-furyl)-4-acénapht-indényl)-zirconium,
dichlorure de bis(1-(5'-méthyl-2'-furyl)-4-diméthyl-indényl)zirconium,
dichlorure de bis(1-(5'-méthyl-2'-furyl)-4-(tert-butyl-phényl-indényl)-zirconium,
dichlorure de bis(1-(5'-méthyl-2'-furyl)-4-(4-méthyl-phényl-indényl)-zirconium,
dichlorure de bis(1-(5'-méthyl-2'-furyl)-4-(4-éthyl-phényl-indényl)-zirconium,
dichlorure de bis(1-(5'-méthyl-2'-furyl)-4-(4-trifluorométhyl-phényl-indényl)zirconium,
dichlorure de bis(1-(5'-méthyl-2'-furyl)-4-(4-méthoxy-phényl-indényl)-zirconium,
diméthyl-bis(1-(5'-méthyl-2'-furyl)-4-(tert-butyl-phényl-indényl)-zirconium,
diméthyl-bis(1-(5'-méthyl-2'-furyl)-4-(4-méthyl-phényl-indényl)-zirconium,
diméthyl-bis(1-(5'-méthyl-2'-furyl)-4-(4-éthyl-phényl-indényl)-zirconium,
diméthyl-bis(1-(5'-méthyl-2'-furyl)-4-(4-trifluorométhyl-phényl-indényl)zirconium,
diméthyl-bis(1-(5'-méthyl-2'-furyl)-4-(4-méthoxy-phényl-indényl)-zirconium,
dichlorure de bis(1-(5'-méthyl-2'-furyl)-4-(4'-tert-butyl-phényl)-indényl)zirconium,
dichlorure de bis(1-(5'-méthyl-2'-furyl)-4-(4'-tert-butyl-phényl)-indényl)hafnium,
dichlorure de bis(1-(5'-méthyl-2'-furyl)-4-(4'-tert-butyl-phényl)-indényl)titane,
dichlorure de bis(1-(5'-méthyl-2'-furyl)-4-(4'-méthyl-phényl)-indényl)-zirconium,
dichlorure de bis(1-(5'-méthyl-2'-furyl)-4-(4'-éthyl-phényl)-indényl)-zirconium,
dichlorure de bis(1-(5'-méthyl-2'-furyl)-4-(4'-n-propyl-phényl)-indényl)zirconium,
dichlorure de bis(1-(5'-méthyl-2'-furyl)-4-(4'-iso-propyl-phényl)-indényl)zirconium,
dichlorure de bis(1-(5'-méthyl-2'-furyl)-4-(4'-n-butyl-phényl)-indényl)-zirconium,
dichlorure de bis(1-(5'-méthyl-2'-furyl)-4-(4'-hexyl-phényl)-indényl)-zirconium,
dichlorure de bis(1-(5'-méthyl-2'-furyl)-4-(4'-sec-butyl-phényl)-indényl)zirconium,
dichlorure de bis(1-(5'-méthyl-2'-furyl)-4-(4'-triméthylsilyl-phényl)-indényl)zirconium,
dichlorure de bis(1-(5'-méthyl-2'-thiophène)-indényl)zirconium,
dichlorure de bis(1-(5'-méthyl-2'-thiophène)-(4,5-benzoindényl))-hafnium,
dichlorure de bis(1-(5'-méthyl-2'-thiophène)-(4-isopropyl)indényl)-zirconium,
dichlorure de bis(1-(5'-méthyl-2'-thiophène)-benzo-indényl)zirconium,
dichlorure de bis(1-(5'-méthyl-2'-thiophène)-4-(1-naphtyl)-indényl)-zirconium,
dichlorure de bis(1-(5'-méthyl-2'-thiophène)-4-(2-naphtyl)-indényl)-zirconium,
dichlorure de bis(1-(5'-méthyl-2'-thiophène)-4-phényl-indényl)-zirconium,
dichlorure de bis(1-(5'-méthyl-2'-thiophène)-4-tert-butyl-indényl)-zirconium,
dichlorure de bis(1-(5'-méthyl-2'-thiophène)-4-isopropyl-indényl)-zirconium,
dichlorure de bis(1-(5'-méthyl-2'-thiophène)-4-éthyl-indényl)-zirconium,
dichlorure de bis(1-(5'-méthyl-2'-thiophène)-4-acénapht-indényl)-zirconium,
dichlorure de bis(1-(5'-méthyl-2'-thiophène)-4-diméthyl-indényl)-zirconium,
dichlorure de bis(1-(5'-méthyl-2'-thiophène)-4-(tert-butyl-phényl-indényl)zirconium,
dichlorure de bis(1-(5'-méthyl-2'-thiophène)-4-(4-méthyl-phényl-indényl)zirconium,
dichlorure de bis(1-(5'-méthyl-2'-thiophène)-4-(4-éthyl-phényl-indényl)zirconium,
dichlorure de bis(1-(5'-méthyl-2'-thiophène)-4-(4-trifluorométhyl-phényl-indényl)zirconium,
dichlorure de bis(1-(5'-méthyl-2'-thiophène)-4-(4-méthoxy-phényl-indényl)zirconium,
diméthyl-bis(1-(5'-méthyl-2'-thiophène)-4-(tert-butyl-phényl-indényl)-zirconium,
diméthyl-bis(1-(5'-méthyl-2'-thiophène)-4-(4-méthyl-phényl-indényl)-zirconium,
diméthyl-bis(1-(5'-méthyl-2'-thiophène)-4-(4-éthyl-phényl-indényl)-zirconium,
diméthyl-bis(1-(5'-méthyl-2'-thiophène)-4-(4-trifluorométhyl-phényl-indényl)zirconium,
diméthyl-bis(1-(5'-méthyl-2'-thiophène)-4-(4-méthoxy-phényl-indényl)zirconium,
dichlorure de bis(1-(5'-méthyl-2'-thiophène)-4-(4'-tert-butyl-phényl)-indényl)zirconium,
dichlorure de bis(1-(5'-méthyl-2'-thiophène)-4-(4'-tert-butyl-phényl)-indényl)hafnium,
dichlorure de bis(1-(5'-méthyl-2'-thiophène)-4-(4'-tert-butyl-phényl)-indényl)titane,
dichlorure de bis(1-(5'-méthyl-2'-thiophène)-4-(4'-méthyl-phényl)-indényl)zirconium,
dichlorure de bis(1-(5'-méthyl-2'-thiophène)-4-(4'-éthyl-phényl)-indényl)zirconium,
dichlorure de bis(1-(5'-méthyl-2'-thiophène)-4-(4'-n-propyl-phényl)-indényl)zirconium,
dichlorure de bis(1-(5'-méthyl-2'-thiophène)-4-(4'-iso-propyl-phényl)-indényl)zirconium,
dichlorure de bis(1-(5'-méthyl-2'-thiophène)-4-(4'-n-butyl-phényl)-indényl)zirconium,
dichlorure de bis(1-(5'-méthyl-2'-thiophène)-4-(4'-hexyl-phényl)-indényl)zirconium,
dichlorure de bis(1-(5'-méthyl-2'-thiophène)-4-(4'-sec-butyl-phényl)-indényl)zirconium,
dichlorure de bis(1-(5'-méthyl-2'-thiophène)-4-(4'-triméthylsilyl-phényl)-indényl)zirconium,
dichlorure de bis(1-(5'-méthyl-2'-N-méthylpyrrol)-indényl)zirconium,
dichlorure de bis(1-(5'-méthyl-2'-N-méthylpyrrol)-(4,5-benzo-indényl))hafnium,
dichlorure de bis(1-(5'-méthyl-2'-N-méthylpyrrol)-(4-isopropyl)-indényl)zirconium,
dichlorure de bis(1-(5'-méthyl-2'-N-méthylpyrrol)-benzo-indényl)-zirconium,
dichlorure de bis(1-(5'-méthyl-2'-N-méthylpyrrol)-4-(1-naphtyl)-indényl)zirconium,
dichlorure de bis(1-(5'-méthyl-2'-N-méthylpyrrol)-4-(2-naphtyl)-indényl)zirconium,
dichlorure de bis(1-(5'-méthyl-2'-N-méthylpyrrol)-4-phényl-indényl)-zirconium,
dichlorure de bis(1-(5'-méthyl-2'-N-méthylpyrrol)-4-tert-butyl-indényl)zirconium,
dichlorure de bis(1-(5'-méthyl-2'-N-méthylpyrrol)-4-isopropyl-indényl)zirconium,
dichlorure de bis(1-(5'-méthyl-2'-N-méthylpyrrol)-4-éthyl-indényl)-zirconium,
dichlorure de bis(1-(5'-méthyl-2'-N-méthylpyrrol)-4-acénapht-indényl)zirconium,
dichlorure de bis(1-(5'-méthyl-2'-N-méthylpyrrol)-4-diméthyl-indényl)zirconium,
dichlorure de bis(1-(5'-méthyl-2'-N-méthylpyrrol)-4-(tert-butyl-phényl-indényl)zirconium,
dichlorure de bis(1-(5'-méthyl-2'-N-méthylpyrrol)-4-(4-méthyl-phényl-indényl)zirconium,
dichlorure de bis(1-(5'-méthyl-2'-N-méthylpyrrol)-4-(4-éthyl-phényl-indényl)zirconium,
dichlorure de bis(1-(5'-méthyl-2'-N-méthylpyrrol)-4-(4-trifluoro-méthyl-phényl-indényl)zirconium,
dichlorure de bis(1-(5'-méthyl-2'-N-méthylpyrrol)-4-(4-méthoxy-phényl-indényl)zirconium,
diméthyl-bis(1-(5'-méthyl-2'-N-méthylpyrrol)-4-(tert-butyl-phényl-indényl)zirconium,
diméthyl-bis(1-(5'-méthyl-2'-N-méthylpyrrol)-4-(4-méthyl-phényl-indényl)zirconium,
diméthyl-bis( 1-(5'-méthyl-2'-N-méthylpyrrol)-4-(4-éthyl-phényl-indényl)zirconium,
diméthyl-bis(1-(5'-méthyl-2'-N-méthylpyrrol)-4-(4-trifluorométhyl-phényl-indényl)zirconium,
diméthyl-bis(1-(5'-méthyl-2'-N-méthylpyrrol)-4-(4-méthoxy-phényl-indényl)zirconium,
dichlorure de bis(1-(5'-méthyl-2'-N-méthylpyrrol)-4-(4'-tert-butyl-phényl)-indényl)zirconium,
dichlorure de bis(1-(5'-méthyl-2'-N-méthylpyrrol)-4-(4'-tert-butyl-phényl)-indényl)hafnium,
dichlorure de bis(1-(5'-méthyl-2'-N-méthylpyrrol)-4-(4'-tert-butyl-phényl)-indényl)titane,
dichlorure de bis(1-(5'-méthyl-2'-N-méthylpyrrol)-4-(4'-méthyl-phényl)-indényl)zirconium,
dichlorure de bis(1-(5'-méthyl-2'-N-méthylpyrrol)-4-(4'-éthyl-phényl)-indényl)zirconium,
dichlorure de bis(1-(5'-méthyl-2'-N-méthylpyrrol)-4-(4'-n-propyl-phényl)-indényl)zirconium,
dichlorure de bis(1-(5'-méthyl-2'-N-méthylpyrrol)-4-(4'-iso-propyl-phényl)-indényl)zirconium,
dichlorure de bis(1-(5'-méthyl-2'-N-méthylpyrrol)-4-(4'-n-butyl-phényl)-indényl)zirconium,
dichlorure de bis(1-(5'-méthyl-2'-N-méthylpyrrol)-4-(4'-hexyl-phényl)-indényl)zirconium,
dichlorure de bis(1-(5'-méthyl-2'-N-méthylpyrrol)-4-(4'-sec-butyl-phényl)-indényl)zirconium,
dichlorure de bis(1-(5'-méthyl-2'-N-méthylpyrrol)-4-(4'-triméthylsilyl-phényl)-indényl)zirconium,
dichlorure de bis(2-(5'-éthyl-2'-furyl)-indényl)zirconium,
dichlorure de bis(2-(5'-éthyl-2'-furyl)-(4,5-benzoindényl))hafnium,
dichlorure de bis(2-(5'-méthyl-2'-furyl)-(4-isopropyl)indényl)-zirconium,
dichlorure de bis(2-(5'-méthyl-2'-furyl)-benzo-indényl)zirconium,
dichlorure de bis(2-(5'-éthyl-2'-furyl)-4-(1-naphtyl)-indényl)zirconium,
dichlorure de bis(2-(5'-éthyl-2'-furyl)-4-(2-naphtyl)-indényl)zirconium,
dichlorure de bis(2-(5'-éthyl-2'-furyl)-4-phényl-indényl)zirconium,
dichlorure de bis(2-(5'-éthyl-2'-furyl)-4-tert-butyl-indényl)zirconium,
dichlorure de bis(2-(5'-éthyl-2'-furyl)-4-isopropyl-indényl)zirconium,
dichlorure de bis(2-(5'-éthyl-2'-furyl)-4-éthyl-indényl)zirconium,
dichlorure de bis(2-(5'-éthyl-2'-furyl)-4-acénapht-indényl)zirconium,
dichlorure de bis(2-(5'-éthyl-2'-furyl)-4-diméthyl-indényl)zirconium,
dichlorure de bis(2-(5'-éthyl-2'-furyl)-4-(tert-butyl-phényl-mdényl)-zirconium,
dichlorure de bis(2-(5'-éthyl-2'-furyl)-4-(4-méthyl-phényl-indényl)-zirconium,
dichlorure de bis(2-(5'-éthyl-2'-furyl)-4-(4-éthyl-phényl-indényl)-zirconium,
dichlorure de bis(2-(5'-éthyl-2'-furyl)-4-(4-trifluorométhyl-phényl-indényl)zirconium,
dichlorure de bis(2-(5'-éthyl-2'-furyl)-4-(4-méthoxy-phényl-indényl)-zirconium,
diméthyl-bis(2-(5'-éthyl-2'-furyl)-4-(tert-butyl-phényl-indényl)-zirconium,
diméthyl-bis(2-(5'-éthyl-2'-furyl)-4-(4-méthyl-phényl-indényl)-zirconium,
diméthyl-bis(2-(5'-éthyl-2'-furyl)-4-(4-éthyl-phényl-indényl)zirconium,
diméthyl-bis(2-(5'-éthyl-2'-furyl)-4-(4-trifluorométhyl-phényl-indényl)zirconium,
diméthyl-bis(2-(5'-éthyl-2'-furyl)-4-(4-méthoxy-phényl-indényl)-zirconium,
dichlorure de bis(2-(5'-éthyl-2'-furyl)-4-(4'-tert-butyl-phényl)-indényl)-zirconium,
dichlorure de bis(2-(5'-éthyl-2'-furyl)-4-(4'-tert-butyl-phényl)-indényl)-hafnium,
dichlorure de bis(2-(5'-éthyl-2'-furyl)-4-(4'-tert-butyl-phényl)-indényl)-titane,
dichlorure de bis(2-(5'-éthyl-2'-furyl)-4-(4'-méthyl-phényl)-indényl)-zirconium,
dichlorure de bis(2-(5'-éthyl-2'-furyl)-4-(4'-éthyl-phényl)-indényl)-zirconium,
dichlorure de bis(2-(5'-éthyl-2'-furyl)-4-(4'-n-propyl-phényl)-indényl)-zirconium,
dichlorure de bis(2-(5'-éthyl-2'-furyl)-4-(4'-iso-propyl-phényl)-indényl)zirconium,
dichlorure de bis(2-(5'-éthyl-2'-furyl)-4-(4'-n-butyl-phényl)-indényl)-zirconium,
dichlorure de bis(2-(5-éthyl-2'-furyl)-4-(4'-hexyl-phényl)-indényl)-zirconium,
dichlorure de bis(2-(5'-éthyl-2'-furyl)-4-(4'-sec-butyl-phényl)-indényl)-zirconium,
dichlorure de bis(2-(5'-éthyl-2'-furyl)-4-(4'-triméthylsilyl-phényl)-indényl)zirconium,
dichlorure de bis(2-(5'-éthyl-2'-thiophène)-indényl)zirconium,
dichlorure de bis(2-(5'-éthyl-2'-thiophène)-(4,5-benzoindényl))-hafnium,
dichlorure de bis(2-(5'-éthyl-2'-thiophène)-(4-isopropyl)indényl)-zirconium,
dichlorure de bis(2-(5'-éthyl-2'-thiophène)-benzo-indényl)zirconium,
dichlorure de bis(2-(5'-éthyl-2'-thiophène)-4-(1-naphtyl)-indényl)-zirconium,
dichlorure de bis(2-(5'-éthyl-2'-thiophène)-4-(2-naphtyl)-indényl)-zirconium,
dichlorure de bis(2-(5'-éthyl-2'-thiophène)-4-phényl-indényl)-zirconium,
dichlorure de bis(2-(5'-éthyl-2'-thiophène)-4-tert-butyl-indényl)-zircanium,
dichlorure de bis(2-(5'-éthyl-2'-thiophène)-4-isopropyl-indényl)-zirconium,
dichlorure de bis(2-(5'-éthyl-2'-thiophène)-4-éthyl-indényl)zirconium,
dichlorure de bis(2-(5'-éthyl-2'-thiophène)-4-acénapht-indényl)-zirconium,
dichlorure de bis(2-(5'-éthyl-2'-thiophène)-4-diméthyl-indényl)-zirconium,
dichlorure de bis(2-(5'-éthyl-2'-thiophène)-4-(tert-butyl-phényl-indényl)zirconium,
dichlorure de bis(2-(5'-éthyl-2'-thiophène)-4-(4-méthyl-phényl-indényl)zirconium,
dichlorure de bis(2-(5'-éthyl-2'-thiophène)-4-(4-éthyl-phényl-indényl)-zirconium,
dichlorure de bis(2-(5'-éthyl-2'-thiophène)-4-(4-trifluorométhyl-phényl-indényl)zirconium,
dichlorure de bis(2-(5'-éthyl-2'-thiophène)-4-(4-méthoxy-phényl-indényl)zirconium,
diméthyl-bis(2-(5'-éthyl-2'-thiophène)-4-(tert-butyl-phényl-indényl)-zirconium,
diméthyl-bis(2-(5'-éthyl-2'-thiophène)-4-(4-méthyl-phényl-indényl)-zirconium,
diméthyl-bis(2-(5'-éthyl-2'-thiophène)-4-(4-éthyl-phényl-indényl)-zirconium,
diméthyl-bis(2-(5'-éthyl-2'-thiophène)-4-(4-trifluorométhyl-phényl-indényl)zirconium,
diméthyl-bis(2-(5'-éthyl-2'-thiophène)-4-(4-méthoxy-phényl-indényl)-zirconium,
dichlorure de bis(2-(5'-éthyl-2'-thiophène)-4-(4'-tert-butyl-phényl)-indényl)zirconium,
dichlorure de bis(2-(5'-éthyl-2'-thiophène)-4-(4'-tert-butyl-phényl)-indényl)hafnium,
dichlorure de bis(2-(5'-éthyl-2'-thiophène)-4-(4'-tert-butyl-phényl)-indényl)titane,
dichlorure de bis(2-(5'-éthyl-2'-thiophène)-4-(4'-méthyl-phényl)-indényl)zirconium,
dichlorure de bis(2-(5'-éthyl-2'-thiophène)-4-(4'-éthyl-phényl)-indényl)zirconium,
dichlorure de bis(2-(5'-éthyl-2'-thiophène)-4-(4'-n-propyl-phényl)-indényl)zirconium,
dichlorure de bis(2-(5'-éthyl-2'-thiophène)-4-(4'-iso-propyl-phényl)-indényl)zirconium,
dichlorure de bis(2-(5'-éthyl-2'-thiophène)-4-(4'-n-butyl-phényl)-indényl)zirconium,
dichlorure de bis(2-(5'-éthyl-2'-thiophène)-4-(4'-hexyl-phényl)-indényl)zirconium,
dichlorure de bis(2-(5'-éthyl-2'-thiophène)-4-(4'-sec-butyl-phényl)-indényl)zirconium,
dichlorure de bis(2-(5'-éthyl-2'-thiophène)-4-(4'-triméthylsilyl-phényl)-indényl)zirconium,
dichlorure de bis(2-(5'-éthyl-2'-N-méthylpyrrol)-indényl)zirconium,
dichlorure de bis(2-(5'-éthyl-2'-N-méthylpyrrol)-(4,5-benzoindényl))-hafnium,
dichlorure de bis(2-(5'-éthyl-2'-N-méthylpyrrol)-(4-isopropyl)-indényl)zirconium,
dichlorure de bis(2-(5'-éthyl-2'-N-méthylpyrrol)-benzo-indényl)-zirconium,
dichlorure de bis(2-(5'-éthyl-2'-N-méthylpyrrol)-4-(1-naphtyl)-indényl)zirconium,
dichlorure de bis(2-(5'-éthyl-2'-N-méthylpyrrol)-4-(2-naphtyl)-indényl)zirconium,
dichlorure de bis(2-(5'-éthyl-2'-N-méthylpyrrol)-4-phényl-indényl)-zirconium,
dichlorure de bis(2-(5'-éthyl-2'-N-méthylpyrrol)-4-tert-butyl-indényl)-zirconium,
dichlorure de bis(2-(5'-éthyl-2'-N-méthylpyrrol)-4-isopropyl-indényl)-zirconium,
dichlorure de bis(2-(5'-éthyl-2'-N-méthylpyrrol)-4-éthyl-indényl)-zirconium,
dichlorure de bis(2-(5'-éthyl-2'-N-méthylpyrrol)-4-acénapht-indényl)zirconium,
dichlorure de bis(2-(5'-éthyl-2'-N-méthylpyrrol)-4-diméthyl-indényl)-zirconium,
dichlorure de bis(2-(5'-éthyl-2'-N-méthylpyrrol)-4-(tert-butyl-phényl-indényl)zirconium,
dichlorure de bis(2-(5'-éthyl-2'-N-méthylpyrrol)-4-(4-méthyl-phényl-indényl)zirconium,
dichlorure de bis(2-(5'-éthyl-2'-N-méthylpyrrol)-4-(4-éthyl-phényl-indényl)zirconium,
dichlorure de bis(2-(5'-éthyl-2'-N-méthylpyrrol)-4-(4-trifluorométhyl-phényl-indényl)zirconium,
dichlorure de bis(2-(5'-éthyl-2'-N-méthylpyrrol)-4-(4-méthoxy-phényl-indényl)zirconium,
diméthyl-bis(2-(5'-éthyl-2'-N-méthylpyrrol)-4-(tert-butyl-phényl-indényl)zirconium,
diméthyl-bis(2-(5'-éthyl-2'-N-méthylpyrrol)-4-(4-méthyl-phényl-indényl)zirconium,
diméthyl-bis(2-(5'-éthyl-2'-N-méthylpyrrol)-4-(4-éthyl-phényl-indényl)zirconium,
diméthyl-bis(2-(5'-éthyl-2'-N-méthylpyrrol)-4-(4-trifluorométhyl-phényl-indényl)zirconium,
diméthyl-bis(2-(5'-éthyl-2'-N-méthylpyrrol)-4-(4-méthoxy-phényl-indényl)zirconium,
dichlorure de bis(2-(5'-éthyl-2'-N-méthylpyrrol)-4-(4'-tert-butyl-phényl)-indényl)zirconium,
dichlorure de bis(2-(5'-éthyl-2'-N-méthylpyrrol)-4-(4'-tert-butyl-phényl)-indényl)hafnium,
dichlorure de bis(2-(5'-éthyl-2'-N-méthylpyrrol)-4-(4'-tert-butyl-phényl)-indényl)titane,
dichlorure de bis(2-(5'-éthyl-2'-N-méthylpyrrol)-4-(4'-méthyl-phényl)-indényl)zirconium,
dichlorure de bis(2-(5'-éthyl-2'-N-méthylpyrrol)-4-(4'-éthyl-phényl)-indényl)zirconium,
dichlorure de bis(2-(5'-éthyl-2'-N-méthylpyrrol)-4-(4'-n-propyl-phényl)-indényl)zirconium,
dichlorure de bis(2-(5'-éthyl-2'-N-méthylpyrrol)-4-(4'-iso-propyl-phényl)-indényl)zirconium,
dichlorure de bis(2-(5'-éthyl-2'-N-méthylpyrrol)-4-(4'-n-butyl-phényl)-indényl)zirconium,
dichlorure de bis(2-(5'-éthyl-2'-N-méthylpyrrol)-4-(4'-hexyl-phényl)-indényl)zirconium,
dichlorure de bis(2-(5'-éthyl-2'-N-méthylpyrrol)-4-(4'-sec-butyl-phényl)-indényl)zirconium,
dichlorure de bis(2-(5'-éthyl-2'-N-méthylpyrrol)-4-(4'-triméthylsilyl-phényl)-indényl)zirconium,
dichlorure de bis(2-(5'-propyl-2'-furyl)-indényl)zirconium,
dichlorure de bis(2-(5'-propyl-2'-furyl)-(4,5-benzoindényl))hafnium,
dichlorure de bis(2-(5'-propyl-2'-furyl)-(4-isopropyl)indényl)-zirconium,
dichlorure de bis(2-(5'-propyl-2'-furyl)-benzo-indényl)zirconium,
dichlorure de bis(2-(5'-Propyl-2'-furyl)-4-(1-naphtyl)-indényl)-zirconium,
dichlorure de bis(2-(5'-propyl-2'-furyl)-4-(2-naphtyl)-indényl)-zirconium,
dichlorure de bis(2-(5'-propyl-2'-furyl)-4-phényl-indényl)zirconium,
dichlorure de bis(2-(5'-propyl-2'-furyl)-4-tert-butyl-indényl)zirconium,
dichlorure de bis(2-(5'-propyl-2'-furyl)-4-isopropyl-indényl)zirconium,
dichlorure de bis(2-(5'-propyl-2'-furyl)-4-éthyl-indényl)zirconium,
dichlorure de bis(2-(5'-propyl-2'-furyl)-4-acénapht-indényl)-zirconium,
dichlorure de bis(2-(5'-propyl-2'-furyl)-4-diméthyl-indényl)zirconium,
dichlorure de bis(2-(5'-propyl-2'-furyl)-4-(tert-butyl-phényl-indényl)-zirconium,
dichlorure de bis(2-(5'-propyl-2'-furyl)-4-(4-méthyl-phényl-indényl)-zirconium,
dichlorure de bis(2-(5'-propyl-2'-furyl)-4-(4-éthyl-phényl-indényl)-zirconium,
dichlorure de bis(2-(5'-propyl-2'-furyl)-4-(4-trifluorométhyl-phényl-indényl)zirconium,
dichlorure de bis(2-(5'-propyl-2'-furyl)-4-(4-méthoxy-phényl-indényl)-zirconium,
diméthyl-bis(2-(5'-propyl-2'-furyl)-4-(tert-butyl-phényl-indényl)-zirconium,
diméthyl-bis(2-(5'-propyl-2'-furyl)-4-(4-méthyl-phényl-indényl)-zirconium,
diméthyl-bis(2-(5'-propyl-2'-furyl)-4-(4-éthyl-phényl-indényl)-zirconium,
diméthyl-bis(2-(5'-propyl-2'-furyl)-4-(4-trifluorométhyl-phényl-indényl)zirconium,
diméthyl-bis(2-(5'-propyl-2'-furyl)-4-(4-méthoxy-phényl-indényl)-zirconium,
dichlorure de bis(2-(5'-propyl-2'-furyl)-4-(4'-tert-butyl-phényl)-indényl)zirconium,
dichlorure de bis(2-(5'-propyl-2'-furyl)-4-(4'-tert-butyl-phényl)-indényl)hafnium,
dichlorure de bis(2-(5'-propyl-2'-furyl)-4-(4'-tert-butyl-phényl)-indényl)titane,
dichlorure de bis(2-(5'-propyl-2'-furyl)-4-(4'-méthyl-phényl)-indényl)-zirconium,
dichlorure de bis(2-(5'-propyl-2'-furyl)-4-(4'-éthyl-phényl)-indényl)-zirconium,
dichlorure de bis(2-(5'-propyl-2'-furyl)-4-(4'-n-propyl-phényl)-indényl)zirconium,
dichlorure de bis(2-(5'-propyl-2'-furyl)-4-(4'-iso-propyl-phényl)-indényl)zirconium,
dichlorure de bis(2-(5'-propyl-2'-furyl)-4-(4'-n-butyl-phényl)-indényl)-zirconium,
dichlorure de bis(2-(5'-propyl-2'-furyl)-4-(4'-hexyl-phényl)-indényl)-zirconium,
dichlorure de bis(2-(5'-propyl-2'-furyl)-4-(4'-sec-butyl-phényl)-indényl)zirconium,
dichlorure de bis(2-(5'-propyl-2'-furyl)-4-(4'-triméthylsilyl-phényl)-indényl)zirconium,
dichlorure de bis(2-(5'-propyl-2'-thiophène)-indényl)zirconium,
dichlorure de bis(2-(5'-propyl-2'-thiophène)-(4,5-benzoindényl))-hafnium,
dichlorure de bis(2-(5'-propyl-2'-thiophène)-(4-isopropyl)indényl)-zirconium,
dichlorure de bis(2-(5'-propyl-2'-thiophène)-benzo-indényl)zirconium,
dichlorure de bis(2-(5'-propyl-2'-thiophène)-4-(1-naphtyl)-indényl)-zirconium,
dichlorure de bis(2-(5'-propyl-2'-thiophène)-4-(2-naphtyl)-indényl)-zirconium,
dichlorure de bis(2-(5'-propyl-2'-lhiophène)-4-phényl-indényl)-zircomum,
dichlorure de bis(2-(5'-propyl-2'-thiophène)-4-tert-butyl-indényl)-zirconium,
dichlorure de bis(2-(5'-propyl-2'-thiophène)-4-isopropyl-mdényl)-zirconium,
dichlorure de bis(2-(5'-propyl-2'-thiophène)-4-éthyl-indényl)-zirconium,
dichlorure de bis(2-(5'-propyl-2'-thiophène)-4-acénaphtyl-indényl)-zirconium,
dichlorure de bis(2-(5'-propyl-2'-thiophène)-4-diméthyl-indényl)-zirconium,
dichlorure de bis(2-(5'-propyl-2'-thiophène)-4-(tert-butyl-phényl-indényl)zirconium,
dichlorure de bis(2-(5'-propyl-2'-thiophène)-4-(4-méthyl-phényl-indényl)zirconium,
dichlorure de bis(2-(5'-propyl-2'-thiophène)-4-(4-éthyl-phényl-indényl)zirconium,
dichlorure de bis(2-(5'-propyl-2'-thiophène)-4-(4-trifluorométhyl-phényl-indényl)zirconium,
dichlorure de bis(2-(5'-propyl-2'-thiophène)-4-(4-méthoxy-phényl-indényl)zirconium,
diméthyl-bis(2-(5'-propyl-2'-thiophène)-4-(tert-butyl-phényl-indényl)-zirconium,
diméthyl-bis(2-(5'-propyl-2'-thiophène)-4-(4-méthyl-phényl-indényl)-zirconium,
diméthyl-bis(2-(5'-propyl-2'-thiophène)-4-(4-éthyl-phényl-indényl)-zirconium,
diméthyl-bis(2-(5'-propyl-2'-thiophène)-4-(4-trifluorométhyl-phényl-indényl)zirconium,
diméthyl-bis(2-(5'-propyl-2'-thiophène)-4-(4-méthoxy-phényl-indényl)zirconium,
dichlorure de bis(2-(5'-propyl-2'-thiophène)-4-(4'-tert-butyl-phényl)-indényl)zirconium,
dichlorure de bis(2-(5'-propyl-2'-thiophène)-4-(4'-tert-butyl-phényl)-indényl)hafnium,
dichlorure de bis(2-(5'-propyl-2'-thiophène)-4-(4'-tert-butyl-phényl)-indényl)titane,
dichlorure de bis(2-(5'-propyl-2'-thiophène)-4-(4'-méthyl-phényl)-indényl)zirconium,
dichlorure de bis(2-(5'-propyl-2'-thiophène)-4-(4'-éthyl-phényl)-indényl)zirconium,
dichlorure de bis(2-(5'-propyl-2'-thiophène)-4-(4'-n-propyl-phényl)-indényl)zirconium,
dichlorure de bis(2-(5'-propyl-2'-thiophène)-4-(4'-iso-propyl-phényl)-indényl)zirconium,
dichlorure de bis(2-(5'-propyl-2'-thiophène)-4-(4'-n-butyl-phényl)-indényl)zirconium,
dichlorure de bis(2-(5'-propyl-2'-thiophène)-4-(4'-hexyl-phényl)-indényl)zirconium,
dichlorure de bis(2-(5'-propyl-2'-thiophène)-4-(4'-sec-butyl-phényl)-indényl)zirconium,
dichlorure de bis(2-(5'-propyl-2'-thiophène)-4-(4'-triméthylsilyl-phényl)-indényl)zirconium,
dichlorure de bis(2-(5'-propyl-2'-N-méthylpyrrol)-indényl)zirconium,
dichlorure de bis(2-(5'-propyl-2'-N-méthylpyrrol)-(4,5-benzoindényl))-hafnium,
dichlorure de bis(2-(5'-propyl-2'-N-méthylpyrrol)-(4-isopropyl)-indényl)zirconium,
dichlorure de bis(2-(5'-propyl-2'-N-méthylpyrrol)-benzo-indényl)-zirconium,
dichlorure de bis(2-(5'-propyl-2'-N-méthylpyrrol)-4-(1-naphtyl)-indényl)zirconium,
dichlorure de bis(2-(5'-propyl-2'-N-méthylpyrrol)-4-(2-naphtyl)-indényl)zirconium,
dichlorure de bis(2-(5'-propyl-2'-N-méthylpyrrol)-4-phényl-indényl)-zirconium,
dichlorure de bis(2-(5'-propyl-2'-N-méthylpyrrol)-4-tert-butyl-indényl)zirconium,
dichlorure de bis(2-(5'-propyl-2'-N-méthylpyrrol)-4-isopropyl-indényl)zirconium,
dichlorure de bis(2-(5'-propyl-2'-N-méthylpyrrol)-4-éthyl-indényl)-zirconium,
dichlorure de bis(2-(5'-propyl-2'-N-méthylpyrrol)-4-acénapht-indényl)zirconium,
dichlorure de bis(2-(5'-propyl-2'-N-méthylpyrrol)-4-diméthyl-indényl)zirconium,
dichlorure de bis(2-(5'-propyl-2'-N-méthylpyrrol)-4-(tert-butyl-phényl-indényl)zirconium,
dichlorure de bis(2-(5'-propyl-2'-N-méthylpyrrol)-4-(4-méthyl-phényl-indényl)zirconium,
dichlorure de bis(2-(5'-propyl-2'-N-méthylpyrrol)-4-(4-éthyl-phényl-indényl)zirconium,
dichlorure de bis(2-(5'-propyl-2'-N-méthylpyrrol)-4-(4-trifluoro-méthyl-phényl-indényl)zirconium,
dichlorure de bis(2-(5'-propyl-2'-N-méthylpyrrol)-4-(4-méthoxy-phényl-indényl)zirconium,
diméthyl-bis(2-(5'-propyl-2'-N-méthylpyrrol)-4-(tert-butyl-phényl-indényl)zirconium,
diméthyl-bis(2-(5'-propyl-2'-N-méthylpyrrol)-4-(4-méthyl-phényl-indényl)zirconium,
diméthyl-bis(2-(5'-propyl-2'-N-méthylpyrrol)-4-(4-éthyl-phényl-indényl)zirconium,
diméthyl-bis(2-(5'-propyl-2'-N-méthylpyrrol)-4-(4-trifluorométhyl-phényl-indényl)zirconium,
diméthyl-bis(2-(5'-propyl-2'-N-méthylpyrrol)-4-(4-méthoxy-phényl-indényl)zirconium,
dichlorure de bis(2-(5'-propyl-2'-N-méthylpyrrol)-4-(4'-tert-butyl-phényl)-indényl)zirconium,
dichlorure de bis(2-(5'-propyl-2'-N-méthylpyrrol)-4-(4'-tert-butyl-phényl)-indényl)hafnium,
dichlorure de bis(2-(5'-propyl-2'-N-méthylpyrrol)-4-(4'-tert-butyl-phényl)-indényl)titane,
dichlorure de bis(2-(5'-propyl-2'-N-méthylpyrrol)-4-(4'-méthyl-phényl)-indényl)zirconium,
dichlorure de bis(2-(5'-propyl-2'-N-méthylpyrrol)-4-(4'-éthyl-phényl)-indényl)zirconium,
dichlorure de bis(2-(5'-propyl-2'-N-méthylpyrrol)-4-(4'-n-propyl-phényl)-indényl)zirconium,
dichlorure de bis(2-(5'-propyl-2'-N-méthylpyrrol)-4-(4'-iso-propyl-phényl)-indényl)zirconium,
dichlorure de bis(2-(5'-propyl-2'-N-méthylpyrrol)-4-(4'-n-butyl-phényl)-indényl)zirconium,
dichlorure de bis(2-(5'-propyl-2'-N-méthylpyrrol)-4-(4'-hexyl-phényl)-indényl)zirconium,
dichlorure de bis(2-(5'-propyl-2'-N-méthylpyrrol)-4-(4'-sec-butyl-phényl)-indényl)zirconium,
dichlorure de bis(2-(5'-propyl-2'-N-méthylpyrrol)-4-(4'-triméthylsilylphényl)-indényl)zirconium,
dichlorure de bis(2-(5'-phényl-2'-furyl)-indényl)zirconium,
dichlorure de bis(2-(5'-phényl-2'-furyl)-(4,5-benzoindényl))hafnium,
dichlorure de bis(2-(5'-phényl-2'-furyl)-(4-isopropyl)indényl)-zirconium,
dichlorure de bis(2-(5'-phényl-2'-furyl)-benzo-indényl)zirconium,
dichlorure de bis(2-(5'-phényl-2'-furyl)-4-(1-naphtyl)-indényl)-zirconium,
dichlorure de bis(2-(5'-phényl-2'-furyl)-4-(2-naphtyl)-indényl)-zirconium,
dichlorure de bis(2-(5'-phényl-2'-furyl)-4-phényl-indényl)zirconium,
dichlorure de bis(2-(5'-phényl-2'-furyl)-4-tert-butyl-indényl)-zirconium,
dichlorure de bis(2-(5'-phényl-2'-furyl)-4-isopropyl-indényl)-zirconium,
dichlorure de bis(2-(5'-phényl-2'-furyl)-4-éthyl-indényl)zirconium,
dichlorure de bis(2-(5'-phényl-2'-furyl)-4-acénapht-indényl)-zirconium,
dichlorure de bis(2-(5'-phényl-2'-furyl)-4-diméthyl-indényl)zirconium,
dichlorure de bis(2-(5'-phényl-2'-furyl)-4-(tert-butyl-phényl-indényl)-zirconium,
dichlorure de bis(2-(5'-phényl-2'-furyl)-4-(4-méthyl-phényl-indényl)-zirconium,
dichlorure de bis(2-(5'-phényl-2'-furyl)-4-(4-éthyl-phényl-indényl)-zirconium,
dichlorure de bis(2-(5'-phényl-2'-furyl)-4-(4-trifluorométhyl-phényl-indényl)zirconium,
dichlorure de bis(2-(5'-phényl-2'-furyl)-4-(4-méthoxy-phényl-indényl)-zirconium,
diméthyl-bis(2-(5'-phényl-2'-furyl)-4-(tert-butyl-phényl-indényl)-zirconium,
diméthyl-bis(2-(5'-phényl-2'-furyl)-4-(4-méthyl-phényl-indényl)-zirconium,
diméthyl-bis(2-(5'-phényl-2'-furyl)-4-(4-éthyl-phényl-indényl)-zirconium,
diméthyl-bis(2-(5'-phényl-2'-furyl)-4-(4-trifluorométhyl-phényl-indényl)zirconium,
diméthyl-bis(2-(5'-phényl-2'-furyl)-4-(4-méthoxy-phényl-indényl)-zirconium,
dichlorure de bis(2-(5'-phényl-2'-furyl)-4-(4'-tert-butyl-phényl)-indényl)zirconium,
dichlorure de bis(2-(5'-phényl-2'-furyl)-4-(4'-tert-butyl-phényl)-indényl)hafnium,
dichlorure de bis(2-(5'-phényl-2'-furyl)-4-(4'-tert-butyl-phényl)-indényl)titane,
dichlorure de bis(2-(5'-phényl-2'-furyl)-4-(4'-méthyl-phényl)-indényl)-zirconium,
dichlorure de bis(2-(5'-phényl-2'-furyl)-4-(4'-éthyl-phényl)-indényl)-zirconium,
dichlorure de bis(2-(5'-phényl-2'-furyl)-4-(4'-n-propyl-phényl)-indényl)zirconium,
dichlorure de bis(2-(5'-phényl-2'-furyl)-4-(4'-iso-propyl-phényl)-indényl)zirconium,
dichlorure de bis(2-(5'-phényl-2'-furyl)-4-(4'-n-butyl-phényl)-indényl)-zirconium,
dichlorure de bis(2-(5'-phényl-2'-furyl)-4-(4'-hexyl-phényl)-indényl)-zirconium,
dichlorure de bis(2-(5'-phényl-2'-furyl)-4-(4'-sec-butyl-phényl)-indényl)zirconium,
dichlorure de bis(2-(5'-phényl-2'-furyl)-4-(4'-triméthylsilyl-phényl)-indényl)zirconium,
dichlorure de bis(2-(5'-phényl-2'-thiophène)-indényl)zirconium,
dichlorure de bis(2-(5'-phényl-2'-thiophène)-(4,5-benzoindényl))-hafnium,
dichlorure de bis(2-(5'-phényl-2'-thiophène)-(4-isopropyl)indényl)-zirconium,
dichlorure de bis(2-(5'-phényl-2'-thiophène)-benzo-indényl)zirconium,
dichlorure de bis(2-(5'-phényl-2'-thiophène)-4-(1-naphtyl)-indényl)-zirconium,
dichlorure de bis(2-(5'-phényl-2'-thiophène)-4-(2-naphtyl)-indényl)-zirconium,
dichlorure de bis(2-(5'-phényl-2'-thiophène)-4-phényl-indényl)-zirconium,
dichlorure de bis(2-(5'-phényl-2'-thiophène)-4-tert-butyl-indényl)-zirconium,
dichlorure de bis(2-(5'-phényl-2'-thiophène)-4-isopropyl-indényl)-zirconium,
dichlorure de bis(2-(5'-phényl-2'-thiophène)-4-éthyl-indényl)-zirconium,
dichlorure de bis(2-(5'-phényl-2'-thiophène)-4-acénapht-indényl)-zirconium,
dichlorure de bis(2-(5'-phényl-2'-thiophène)-4-diméthyl-indényl)-zirconium,
dichlorure de bis(2-(5'-phényl-2'-thiophène)-4-(tert-butyl-phényl-indényl)zirconium,
dichlorure de bis(2-(5'-phényl-2'-thiophène)-4-(4-méthyl-phényl-indényl)zirconium,
dichlorure de bis(2-(5'-phényl-2'-thiophène)-4-(4-éthyl-phényl-indényl)zirconium,
dichlorure de bis(2-(5'-phényl-2'-thiophène)-4-(4-trifluorométhyl-phényl-indényl)zirconium,
dichlorure de bis(2-(5'-phényl-2'-thiophène)-4-(4-méthoxy-phényl-indényl)zirconium,
diméthyl-bis(2-(5'-phényl-2'-thiophène)-4-(tert-butyl-phényl-indényl)-zirconium,
diméthyl-bis(2-(5'-phényl-2'-thiophène)-4-(4-méthyl-phényl-indényl)-zirconium,
diméthyl-bis(2-(5'-phényl-2'-thiophène)-4-(4-éthyl-phényl-indényl)-zirconium,
diméthyl-bis(2-(5'-phényl-2'-thiophène)-4-(4-trifluorométhyl-phényl-indényl)zirconium,
diméthyl-bis(2-(5'-phényl-2'-thiophène)-4-(4-méthoxy-phényl-indényl)zirconium,
dichlorure de bis(2-(5'-phényl-2'-thiophène)-4-(4'-tert-butyl-phényl)-indényl)zirconium,
dichlorure de bis(2-(5'-phényl-2'-thiophène)-4-(4'-tert-butyl-phényl)-indényl)hafnium,
dichlorure de bis(2-(5'-phényl-2'-thiophène)-4-(4'-tert-butyl-phényl)-indényl)titane,
dichlorure de bis(2-(5'-phényl-2'-thiophène)-4-(4'-méthyl-phényl)-indényl)zirconium,
dichlorure de bis(2-(5'-phényl-2'-thiophène)-4-(4'-éthyl-phényl)-indényl)zirconium,
dichlorure de bis(2-(5'-phényl-2'-thiophène)-4-(4'-n-propyl-phényl)-indényl)zirconium,
dichlorure de bis(2-(5'-phényl-2'-thiophène)-4-(4'-iso-propyl-phényl)-indényl)zirconium,
dichlorure de bis(2-(5'-phényl-2'-thiophène)-4-(4'-n-butyl-phényl)-indényl)zirconium,
dichlorure de bis(2-(5'-phényl-2'-thiophène)-4-(4'-hexyl-phényl)-indényl)zirconium,
dichlorure de bis(2-(5'-phényl-2'-thiophène)-4-(4'-sec-butyl-phényl)-indényl)zirconium,
dichlorure de bis(2-(5'-phényl-2'-thiophène)-4-(4'-triméthylsilyl-phényl)-indényl)zirconium,
dichlorure de bis(2-(5'-phényl-2'-N-méthylpyrrol)-indényl)zirconium,
dichlorure de bis(2-(5'-phényl-2'-N-méthylpyrrol)-(4,5-benzo-indényl))hafnium,
dichlorure de bis(2-(5'-phényl-2'-N-méthylpyrrol)-(4-isopropyl)-indényl)zirconium,
dichlorure de bis(2-(5'-phényl-2'-N-méthylpyrrol)-benzo-indényl)-zirconium,
dichlorure de bis(2-(5'-phényl-2'-N-méthylpyrrol)-4-(1-naphtyl)-indényl)zirconium,
dichlorure de bis(2-(5'-phényl-2'-N-méthylpyrrol)-4-(2-naphtyl)-indényl)zirconium,
dichlorure de bis(2-(5'-phényl-2'-N-méthylpyrrol)-4-phényl-indényl)-zirconium,
dichlorure de bis(2-(5'-phényl-2'-N-méthylpyrrol)-4-tert-butyl-indényl)zirconium,
dichlorure de bis(2-(5'-phényl-2'-N-méthylpyrrol)-4-isopropyl-indényl)zirconium,
dichlorure de bis(2-(5'-phényl-2'-N-méthylpyrrol)-4-éthyl-indényl)-zirconium,
dichlorure de bis(2-(5'-phényl-2'-N-méthylpyrrol)-4-acénapht-indényl)zirconium,
dichlorure de bis(2-(5'-phényl-2'-N-méthylpyrrol)-4-diméthyl-indényl)zirconium,
dichlorure de bis(2-(5'-phényl-2'-N-méthylpyrrol)-4-(tert-butyl-phényl-indényl)zirconium,
dichlorure de bis(2-(5'-phényl-2'-N-méthylpyrrol)-4-(4-méthyl-phényl-indényl)zirconium,
dichlorure de bis(2-(5'-phényl-2'-N-méthylpyrrol)-4-(4-éthyl-phényl-indényl)zirconium,
dichlorure de bis(2-(5'-phényl-2'-N-méthylpyrrol)-4-(4-trifluoro-méthyl-phényl-indényl)zirconium,
dichlorure de bis(2-(5'-phényl-2'-N-méthylpyrrol)-4-(4-méthoxy-phényl-indényl)zirconium,
diméthyl-bis(2-(5'-phényl-2'-N-méthylpyrrol)-4-(tert-butyl-phényl-indényl)zirconium,
diméthyl-bis(2-(5'-phényl-2'-N-méthylpyrrol)-4-(4-méthyl-phényl-indényl)zirconium,
diméthyl-bis(2-(5'-phényl-2'-N-méthylpyrrol)-4-(4-éthyl-phényl-indényl)zirconium,
diméthyl-bis(2-(5'-phényl-2'-N-méthylpyrrol)-4-(4-trifluorométhyl-phényl-indényl)zirconium,
diméthyl-bis(2-(5'-phényl-2'-N-méthylpyrrol)-4-(4-méthoxy-phényl-indényl)zirconium,
dichlorure de bis(2-(5'-phényl-2'-N-méthylpyrrol)-4-(4'-tert-butyl-phényl)-indényl)zirconium,
dichlorure de bis(2-(5'-phényl-2'-N-méthylpyrrol)-4-(4'-tert-butyl-phényl)-indényl)hafnium,
dichlorure de bis(2-(5'-phényl-2'-N-méthylpyrrol)-4-(4'-tert-butyl-phényl)-indényl)titane,
dichlorure de bis(2-(5'-phényl-2'-N-méthylpyrrol)-4-(4'-méthyl-phényl)-indényl)zirconium,
dichlorure de bis(2-(5'-phényl-2'-N-méthylpyrrol)-4-(4'-éthyl-phényl)-indényl)zirconium,
dichlorure de bis(2-(5'-phényl-2'-N-méthylpyrrol)-4-(4'-n-propyl-phényl)-indényl)zirconium,
dichlorure de bis(2-(5'-phényl-2'-N-méthylpyrrol)-4-(4'-iso-propyl-phényl)-indényl)zirconium,
dichlorure de bis(2-(5'-phényl-2'-N-méthylpyrrol)-4-(4'-n-butyl-phényl)-indényl)zirconium,
dichlorure de bis(2-(5'-phényl-2'-N-méthylpyrrol)-4-(4'-hexyl-phényl)-indényl)zirconium,
dichlorure de bis(2-(5'-phényl-2'-N-méthylpyrrol)-4-(4'-sec-butyl-phényl)-indényl)zirconium,
dichlorure de bis(2-(5'-phényl-2'-N-méthylpyrrol)-4-(4'-triméthylsilylphényl)-indényl)zirconium,
dichlorure de bis(2-(2'-pyridyl)-indényl)zirconium,
dichlorure de bis(2-(2'-pyridyl)-(4,5-benzoindényl))hafnium,
dichlorure de bis(2-(2'-pyridyl)-(4-isopropyl)indényl)zirconium,
dichlorure de bis(2-(2'-pyridyl)-benzo-indényl)zirconium,
dichlorure de bis(2-(2'-pyridyl)-4-(1-naphtyl)-indényl)zirconium,
dichlorure de bis(2-(2'-pyridyl)-4-(2-naphtyl)-indényl)zirconium,
dichlorure de bis(2-(2'-pyridyl)-4-phényl-indényl)zirconium,
dichlorure de bis(2-(2'-pyridyl)-4-tert-butyl-indényl)zirconium,
dichlorure de bis(2-(2'-pyridyl)-4-isopropyl-indényl)zirconium,
dichlorure de bis(2-(2'-pyridyl)-4-éthyl-indényl)zirconium,
dichlorure de bis(2-(2'-pyridyl)-4-acénapht-indényl)zirconium,
dichlorure de bis(2-(2'-pyridyl)-4-diméthyl-indényl)zirconium,
dichlorure de bis(2-(2'-pyridyl)-4-(tert-butyl-phényl-indényl)-zirconium,
dichlorure de bis(2-(2'-pyridyl)-4-(4-méthyl-phényl-indényl)-zirconium,
dichlorure de bis(2-(2'-pyridyl)-4-(4-éthyl-phényl-indényl)zirconium,
dichlorure de bis(2-(2'-pyridyl)-4-(4-trifluorométhyl-phényl-indényl)-zirconium,
dichlorure de bis(2-(2'-pyridyl)-4-(4-méthoxy-phényl-indényl)-zirconium,
diméthyl-bis(2-(2'-pyridyl)-4-(tert-butyl-phényl-indényl)zirconium,
diméthyl-bis(2-(2'-pyridyl)-4-(4-méthyl-phényl-indényl)zirconium,
diméthyl-bis(2-(2'-pyridyl)-4-(4-éthyl-phényl-indényl)zirconium,
diméthyl-bis(2-(2'-pyridyl)-4-(4-trifluorométhyl-phényl-indényl)-zirconium,
diméthyl-bis(2-(2'-pyridyl)-4-(4-méthoxy-phényl-indényl)zirconium,
dichlorure de bis(2-(2'-pyridyl)-4-(4'-tert-butyl-phényl)-indényl)-zirconium,
dichlorure de bis(2-(2'-pyrydyl)-4-(4'-tert-butyl-phényl)-indényl)-hafnium,
dichlorure de bis(2-(2'-pyridyl)-4-(4'-tert-butyl-phényl)-indényl)titane,
dichlorure de bis(2-(2'-pyridyl)-4-(4'-méthyl-phényl)-indényl)-zirconium,
dichlorure de bis(2-(2'-pyridyl)-4-(4'-éthyl-phényl)-indényl)zirconium,
dichlorure de bis(2-(2'-pyridyl)-4-(4'-n-propyl-phényl)-indényl)-zirconium,
dichlorure de bis(2-(2'-pyridyl)-4-(4'-iso-propyl-phényl)-indényl)-zirconium,
dichlorure de bis(2-(2'-pyridyl)-4-(4'-n-butyl-phényl)-indényl)-zirconium,
dichlorure de bis(2-(2'-pyridyl)-4-(4'-hexyl-phényl)-indényl)-zirconium,
dichlorure de bis(2-(2'-pyridyl)-4-(4'-sec-butyl-phényl)-indényl)-zirconium,
dichlorure de bis(2-(2'-pyridyl)-4-(4'-triméthylsilyl-phényl)-indényl)-zirconium,
dichlorure de bis(2-(5'-méthyl-2'-pyridyl)-indényl)zirconium,
dichlorure de bis(2-(5'-méthyl-2'-pyridyl)-(4,5-benzoindényl))hafnium,
dichlorure de bis(2-(5'-méthyl-2'-pyridyl)-(4-isopropyl)indényl)-zirconium,
dichlorure de bis(2-(5'-méthyl-2'-pyridyl)-benzo-indényl)zirconium,
dichlorure de bis(2-(5'-méthyl-2'-pyridyl)-4-(1-naphtyl)-indényl)-zirconium,
dichlorure de bis(2-(5'-méthyl-2'-pyridyl)-4-(2-naphtyl)-indényl)-zirconium,
dichlorure de bis(2-(5'-méthyl-2'-pyridyl)-4-phényl-indényl)-zirconium,
dichlorure de bis(2-(5'-méthyl-2'-pyridyl)-4-tert-butyl-indényl)-zirconium,
dichlorure de bis(2-(5'-méthyl-2'-pyridyl)-4-isopropyl-indényl)-zirconium,
dichlorure de bis(2-(5'-méthyl-2'-pyridyl)-4-éthyl-indényl)zirconium,
dichlorure de bis(2-(5'-méthyl-2'-pyridyl)-4-acénapht-indényl)-zirconium,
dichlorure de bis(2-(5'-méthyl-2'-pyridyl)-4-diméthyl-indényl)-zirconium,
dichlorure de bis(2-(5'-méthyl-2'-pyridyl)-4-(tert-butyl-phényl-indényl)zirconium,
dichlorure de bis(2-(5'-méthyl-2'-pyridyl)-4-(4-méthyl-phényl-indényl)zirconium,
dichlorure de bis(2-(5'-méthyl-2'-pyridyl)-4-(4-éthyl-phényl-indényl)-zirconium,
dichlorure de bis(2-(5'-méthyl-2'-pyridyl)-4-(4-trifluorométhyl-phényl-indényl)zirconium,
dichlorure de bis(2-(5'-méthyl-2'-pyridyl)-4-(4-méthoxy-phényl-indényl)zirconium,
diméthyl-bis(2-(5'-méthyl-2'-pyridyl)-4-(tert-butyl-phényl-indényl)-zirconium,
diméthyl-bis(2-(5'-méthyl-2'-pyridyl)-4-(4-méthyl-phényl-indényl)-zirconium,
diméthyl-bis(2-(5'-méthyl-2'-pyridyl)-4-(4-éthyl-phényl-indényl)-zirconium,
diméthyl-bis(2-(5'-méthyl-2'-pyridyl)-4-(4-trifluorométhyl-phényl-indényl)zirconium,
diméthyl-bis(2-(5'-méthyl-2'-pyridyl)-4-(4-méthoxy-phényl-indényl)-zirconium,
dichlorure de bis(2-(5'-méthyl-2'-pyridyl)-4-(4'-tert-butyl-phényl)-indényl)zirconium,
dichlorure de bis(2-(5'-méthyl-2'-pyrydyl)-4-(4'-tert-butyl-phényl)-indényl)hafnium,
dichlorure de bis(2-(5'-méthyl-2'-pyridyl)-4-(4'-tert-butyl-phényl)-indényl)titane,
dichlorure de bis(2-(5'-méthyl-2'-pyridyl)-4-(4'-méthyl-phényl)-indényl)zirconium,
dichlorure de bis(2-(5'-méthyl-2'-pyridyl)-4-(4'-éthyl-phényl)-indényl)-zirconium,
dichlorure de bis(2-(5'-méthyl-2'-pyridyl)-4-(4'-n-propyl-phényl)-indényl)zirconium,
dichlorure de bis(2-(5'-méthyl-2'-pyridyl)-4-(4'-iso-propyl-phényl)-indényl)zirconium,
dichlorure de bis(2-(5'-méthyl-2'-pyridyl)-4-(4'-n-butyl-phényl)-indényl)zirconium,
dichlorure de bis(2-(5'-méthyl-2'-pyridyl)-4-(4'-hexyl-phényl)-indényl)zirconium,
dichlorure de bis(2-(5'-méthyl-2'-pyridyl)-4-(4'-sec-butyl-phényl)-indényl)zirconium,
dichlorure de bis(2-(5'-méthyl-2'-pyridyl)-4-(4'-triméthylsilyl-phényl)-indényl)zirconium,
dichlorure de bis(1-(2'-pyridyl)-indényl)zirconium,
dichlorure de bis(1-(2'-pyridyl)-(4,5-benzoindényl))hafnium,
dichlorure de bis(1-(2'-pyridyl)-(4-isopropyl)indényl)zirconium,
dichlorure de bis(1-(2'-pyridyl)-benzo-indényl)zirconium,
dichlorure de bis(1-(2'-pyridyl)-4-(1-naphtyl)-indényl)zirconium,
dichlorure de bis(1-(2'-pyridyl)-4-(2-naphtyl)-indényl)zirconium,
dichlorure de bis(1-(2'-pyridyl)-4-phényl-indényl)zirconium,
dichlorure de bis(1-(2'-pyridyl)-4-tert-butyl-indényl)zirconium,
dichlorure de bis(1-(2'-pyridyl)-4-isopropyl-indényl)zirconium,
dichlorure de bis(1-(2'-pyridyl)-4-éthyl-indényl)zirconium,
dichlorure de bis(1-(2'-pyridyl)-4-acénapht-indényl)zirconium,
dichlorure de bis(1-(2'-pyridyl)-4-diméthyl-indényl)zirconium,
dichlorure de bis(1-(2'-pyridyl)-4-(tert-butyl-phényl-indényl)-zirconium,
dichlorure de bis(1-(2'-pyridyl)-4-(4-méthyl-phényl-indényl)-zirconium,
dichlorure de bis(1-(2'-pyridyl)-4-(4-éthyl-phényl-indényl)zirconium,
dichlorure de bis(1-(2'-pyridyl)-4-(4-trifluorométhyl-phényl-indényl)-zirconium,
dichlorure de bis(1-(2'-pyridyl)-4-(4-méthoxy-phényl-indényl)-zirconium,
diméthyl-bis(1-(2'-pyridyl)-4-(tert-butyl-phényl-indényl)zirconium,
diméthyl-bis(1-(2'-pyridyl)-4-(4-méthyl-phényl-indényl)zirconium,
diméthyl-bis(1-(2'-pyridyl)-4-(4-éthyl-phényl-indényl)zirconium,
diméthyl-bis(1-(2'-pyridyl)-4-(4-trifluorométhyl-phényl-indényl)-zirconium,
diméthyl-bis(1-(2'-pyridyl)-4-(4-méthoxy-phényl-indényl)zirconium,
dichlorure de bis(1-(2'-pyridyl)-4-(4'-tert-butyl-phényl)-indényl)-zirconium,
dichlorure de bis(1-(2'-pyrydyl)-4-(4'-tert-butyl-phényl)-indényl)-hafnium,
dichlorure de bis(1-(2'-pyridyl)-4-(4'-tert-butyl-phényl)-indényl)titane,
dichlorure de bis(1-(2'-pyridyl)-4-(4'-méthyl-phényl)-indényl)-zirconium,
dichlorure de bis(1-(2'-pyridyl)-4-(4'-éthyl-phényl)-indényl)zirconium,
dichlorure de bis(1-(2'-pyridyl)-4-(4'-n-propyl-phényl)-indényl)-zirconium,
dichlorure de bis(1-(2'-pyridyl)-4-(4'-iso-propyl-phényl)-indényl)-zirconium,
dichlorure de bis(1-(-2'-pyridyl)-4-(4'-n-butyl-phényl)-indényl)-zirconium,
dichlorure de bis(1-(2'-pyridyl)-4-(4'-hexyl-phényl)-indényl)-zirconium,
dichlorure de bis(1-(2'-pyridyl)-4-(4'-sec-butyl-phényl)-indényl)-zirconium,
dichlorure de bis(1-(2'-pyridyl)-4-(4'-triméthylsilyl-phényl)-indényl)-zirconium.
